(19) Europäisches Patentamt
European Patent Office
Office européen des brevets

(11) **EP 2 680 488 B1**

(12) **EUROPEAN PATENT SPECIFICATION**

(45) Date of publication and mention
of the grant of the patent:
**21.08.2019 Bulletin 2019/34**

(51) Int Cl.:
***H04L 9/32*** (2006.01)   ***H04L 9/30*** (2006.01)

(21) Application number: **11859252.6**

(22) Date of filing: **22.02.2011**

(86) International application number:
**PCT/JP2011/053797**

(87) International publication number:
**WO 2012/114452 (30.08.2012 Gazette 2012/35)**

(54) **SIMILARITY CALCULATION SYSTEM, SIMILARITY CALCULATION DEVICE, COMPUTER PROGRAM, AND SIMILARITY CALCULATION METHOD**

ÄHNLICHKEITSBERECHNUNGSSYSTEM, ÄHNLICHKEITSBERECHNUNGSVORRICHTUNG, COMPUTERPROGRAMM UND ÄHNLICHKEITSBERECHNUNGSVERFAHREN

SYSTÈME DE CALCUL DE SIMILITUDE, DISPOSITIF DE CALCUL DE SIMILITUDE, PROGRAMME INFORMATIQUE ET PROCÉDÉ DE CALCUL DE SIMILITUDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.01.2014 Bulletin 2014/01**

(73) Proprietor: **Mitsubishi Electric Corporation Tokyo 100-8310 (JP)**

(72) Inventors:
• **HIRANO, Takato**
  **Tokyo 100-8310 (JP)**
• **MATSUDA, Nori**
  **Tokyo 100-8310 (JP)**
• **ITO, Takashi**
  **Tokyo 100-8310 (JP)**
• **HATTORI, Mitsuhiro**
  **Tokyo 100-8310 (JP)**
• **MORI, Takumi**
  **Tokyo 100-8310 (JP)**

(74) Representative: **Pfenning, Meinig & Partner mbB Patent- und Rechtsanwälte Theresienhöhe 11a 80339 München (DE)**

(56) References cited:
EP-A1- 2 237 474       EP-A1- 2 278 750
EP-A1- 2 495 908       WO-A1-2005/015462
WO-A1-2006/054208      JP-A- 2009 129 292

• **HATTORI M ET AL: "Secure Biometric Authentication Using 2-DNF Homomorphic Encryption", IEICE TECHNICAL RE, DENSHI JOUHOU TSUUSHIN GAKKAI, JP, vol. 109, no. 272, 5 November 2009 (2009-11-05), pages 113-120, XP008171585, ISSN: 0913-5685**
• **ANTHONY VETRO ET AL: "Securing Biometric Data TR2009-002", MITSUBISHI ELECTRIC RESEARCH LABORATORIES, 1 April 2009 (2009-04-01), XP055127638,**
• **MANEESH UPMANYU ET AL: "Blind Authentication: A Secure Crypto-Biometric Verification Protocol", IEEE TRANSACTIONS ON INFORMATION FORENSICS AND SECURITY, IEEE, PISCATAWAY, NJ, US, vol. 5, no. 2, 1 June 2010 (2010-06-01), pages 255-268, XP011328956, ISSN: 1556-6013, DOI: 10.1109/TIFS.2010.2043188**
• **JUN SAKUMA: 'Privacy-Preserving Scalar Product Comparison Protocol' IPSJ SIG NOTES vol. 2006, no. 81, 21 July 2006, pages 257 - 264, XP008170895**

**EP 2 680 488 B1**

## Description

Technical Field

The present invention relates to a similarity degree calculation system for calculating a similarity degree between encrypted data.

Background Art

There is a technology in which confidential data such as biometric information is stored in an encrypted state, and then a similarity degree indicating to what degree the data in the encrypted state is similar to different data is calculated. If an additive homomorphic encryption system is used, for example, an arithmetic operation using data that is kept encrypted becomes possible. As the additive homomorphic encryption system, the Okamoto-Takashima encryption system (in Patent Literature 3 and Non-Patent Literature 1), the BGN encryption system (in Non-Patent Literature 2), the Gentry encryption system (in Non-Patent Literature 3), the Paillier encryption system, or the like is known. The BGN encryption system and the Gentry encryption algorithm are multiplicative homomorphic as well as additive homomorphic. Thus, these systems are referred to as doubly homomorphic encryption. In the Gentry encryption system, the number of multiplications is not limited. Thus, the Gentry encryption system is referred to as fully homomorphic encryption or ring-homomorphic encryption. There is also an encryption system having only a multiplicative homomorphism such as the RSA (trade mark) encryption system.

EP2237474A1 discloses a method for verifying a similarity between a first signal and a second signal is described. The first and the second signals are encrypted homomorphically using a key. First, we acquire a set of error patterns determined by a similarity constraint. Then, each error pattern is homomorphically encrypted using the key and presented to a verifier in the setup phase. The verifier declares the first signal similar to the second signal, if any error pattern in the set of error patterns satisfies a homomorphic relationship between the first encrypted signal and the second encrypted signal.

EP2278750A1 describes a system and a method for determining securely a result of applying a function to a first encrypted signal and a second encrypted signal resulted from encrypting a first signal and a second signal respectively, The method expresses the function as a linear combination of homomorphic components, wherein a homomorphic component is an algebraic combination of the first signals and the second signal such that an encrypted result of the algebraic combination is suitable to be calculated directly from the first encrypted signal and the second encrypted signal using homomorphic properties. Next, the method determines encrypted results of the homomorphic components from the first encrypted signal and the second encrypted signal, and combines the encrypted results of the homomorphic components according to the linear combination to produce the encrypted result of the function. The method is executed by a plurality of processors.

WO2006054208A1 relates to a method and a system of securely computing a measure of similarity for at least two sets of data. A basic idea of the present invention is to securely compare two sets of encrypted data to determine whether the two sets of data resemble each other to a sufficient extent. If the measure of similarity complies with predetermined criteria, the two sets of data from which the encrypted sets of data originate are considered to be identical.

WO2005015462A1 relates to a method of processing data, the method comprising steps of enabling to encrypt first data for a first source, and encrypt second data for a second source, provide the encrypted first and second data to a server that is precluded from decrypting the encrypted first and second data, and from revealing identities of the first and second sources to each other, perform a computation on the encrypted first and second data to obtain a similarity value between the first and second data so that the first and second data is anonymous to the second and first sources respectively, the similarity value. providing an indication of a similarity between the first and second data. The method may further comprise a step of using the similarity value to obtain a recommendation of a content item for the first or second source. The first or second data may comprises a user profile or user ratings of content items.

"Secure Biometric Authentication Using 2-DNF Homomorphic Encryption" (HATTORI M ET AL, IEICE TECHNICAL RE, DENSHI JOUHOU TSUUSHIN GAKKAI, JP, (20091105), vol. 109, no. 272, ISSN 0913-5685) focuses on a secure biometric authentication protocol that can authenticate users using encrypted biometric information. The system is a three party model which consists of a user, an authentication server and a decryption center. Previously, a similar protocol was known which uses conventional homomorphic encryption schemes such as Paillier encryption scheme. In that protocol, however, an interaction was required between the user and the server. it proposes a new protocol which uses 2-DNF homomorphic encryption schemes without the interaction using Okamoto-Takashima homomorphic encryption scheme that provides 2-DNF homomorphism. The protocol is proved secure in the semi-honest model.

"Securing Biometric Data TR2009-002" (ANTHONY VETRO ET AL, MITSUBISHI ELECTRIC RESEARCH LABORATORIES, (20090401), XP055127638) discusses the application of distributed source coding techniques to biometric security. A Slepian-Wolf coding system is used to provide a secure means of storing biometric data that provides robust biometric authentication for genuine users and guards against attacks from imposters. A formal quantification of the trade off between security and robustness is provided as a function of the Slepian-Wolf coding rate. Prototype secure biometric designs are presented for both iris and fingerprint modalities. These designs demonstrate that it is feasible to achieve information-theoretic security while not significantly compromising authentication performance (measured in terms of false-rejection and false-acceptance rates) when compared to conventional biometric systems. The methods described can be applied to various architectures, including secure biometric authentication for access control and biometric-based key generation for encryption.

"Blind Authentication: A Secure Crypto-Biometric Verification Protocol" (MANEESH UPMANYU ET AL, IEEE TRANSACTIONS ON INFORMATION FORENSICS AND SECURITY, IEEE, PISCATAWAY, NJ, US, (20100601), vol. 5, no. 2, doi:10.1109/TIFS.2010.2043188, ISSN 1556-6013) concerns on widespread use of biometric authentication systems are primarily centered around template security, revocability, and privacy. The use of cryptographic primitives to bolster the authentication process can alleviate some of these concerns as shown by biometric cryptosystems. In this paper, we propose a provably secure and blind biometric authentication protocol, which addresses the concerns of user's privacy, template protection, and trust issues. The protocol is blind in the sense that it reveals only the identity, and no additional information about the user or the biometric to the authenticating server or vice-versa. As the protocol is based on asymmetric encryption of the biometric data, it captures the advantages of biometric authentication as well as the security of public key cryptography. The authentication protocol can run over public networks and provide nonrepudiable identity verification. The encryption also provides template protection, the ability to revoke enrolled templates, and alleviates the concerns on privacy in widespread use of biometrics. The proposed approach makes no restrictive assumptions on the biometric data and is hence applicable to multiple biometrics. Such a protocol has significant advantages over existing biometric cryptosystems, which use a biometric to secure a secret key, which in turn is used for authentication. We analyze the security of the protocol under various attack scenarios. Experimental results on four biometric datasets (face, iris, hand geometry, and fingerprint) show that carrying out the authentication in the encrypted domain does not affect the accuracy, while the encryption key acts as an additional layer of security.

Citation List

Patent Literature

Patent Literature 1: JP 2008-521025
Patent Literature 2: JP 2009-129210
Patent Literature 3: JP 2010-54875
Patent Literature 4: JP 2006-262333
Patent Literature 5: JP 2001-7802

Non Patent Literature

Non-Patent Literature 1: Mitsuhiro Hattori, Yoichi Shibata, Takashi Ito, Nori Matsuda, Katsuyuki Takashima, Takeshi Yoneda, "Secure Biometric Authentication Using 2-DNF Homomorphic Encryption", IEICE Technical report 109(272), pp. 113-120, 2009.
Non-Patent Literature 2: D. Boneh, E. -J. Goh, K, Nissim, "Evaluating 2-DNF Fomulas on Ciphertests", Theory of Cryptography Conference, Lecture Notes in Computer Science, Vol. 3378, pp. 325-341, 2005.
Non-Patent Literature 3: C. Genrty, "Fully Homomorphic Encryption Using Ideal Lattices", ACM Symposium on Theory of Computing, pp. 169-178, 2009.
Non-Patent Literature 4: M. Upmanyu, A. M. Namboodiri, K. Srinathan, C. V. Jawahar, "Blind Authentication: A Secure Crypto-Biometric Verification Protocol", IEEE Transactions on Information Forensics and Security, Vol. 5, No. 2, 2010.

Summary of Invention

Technical Problem

When using an encryption system such as the additive homomorphic encryption system where an arithmetic operation using data that is kept encrypted is possible, a homomorphism is applied to information to be exchanged between apparatuses in a system or information stored in each apparatus. By doing so, the system may suffer an unexpected attack.

In an authentication system for authenticating a user in particular, it is unsatisfactory to keep secret of original data alone. It is necessary to prevent leakage of information, with which it is possible to spoof a user, from the information to be exchanged between the apparatuses in the system and the information stored in each apparatus.

The present invention has been made to solve the problem as mentioned above, for example. An object of the present invention is to calculate a similarity degree between data that is kept encrypted while preventing leakage of information on original data and information to be used for spoofing.

Solution to Problem

A similarity degree calculation apparatus according to the present invention is a similarity degree calculation apparatus that calculates a similarity degree between comparison data and target data. The similarity degree calculation apparatus may include:

a storage device that stores data, a processing device that processes the data, a comparison ciphertext storage unit, a target ciphertext acquisition unit, a temporary key generation unit, an interim similarity degree ciphertext calculation unit, an interim similarity degree ciphertext notification unit, an interim similarity degree decrypted text acquisition unit, and a similarity degree calculation unit;

using the storage device, the comparison ciphertext storage unit storing a comparison ciphertext obtained by transforming the comparison data by encryption transformation using a public key corresponding to a secret key stored by a decryption apparatus;

using the processing device, the target ciphertext acquisition unit acquiring a target ciphertext obtained by transforming the target data by the encryption transformation using the public key;

using the processing device, the temporary key generation unit generating a temporary key;

using the processing device, based on the comparison ciphertext stored by the comparison ciphertext storage unit, the target ciphertext acquired by the target ciphertext acquisition unit, and the temporary key generated by the temporary key generation unit, the interim similarity degree ciphertext calculation unit performing calculation for calculating the similarity degree in a first stage with the comparison ciphertext and the target ciphertext kept encrypted, and then calculating an interim similarity degree ciphertext by encrypting a result of the calculation with the temporary key;

using the processing device, the interim similarity degree ciphertext notification unit notifying to the decryption apparatus the interim similarity degree ciphertext calculated by the interim similarity degree ciphertext calculation unit;

using the processing device, the interim similarity degree decrypted text acquisition unit acquiring an interim similarity degree decrypted text calculated and notified by the decryption apparatus, based on the interim similarity degree ciphertext notified by the interim similarity degree ciphertext notification unit; and

using the processing device, the similarity degree calculation unit decrypting the interim similarity degree decrypted text with the temporary key, based on the temporary key generated by the temporary key generation unit and the interim similarity degree decrypted text acquired by the interim similarity degree decrypted text acquisition unit, thereby calculating the similarity degree between the comparison data and the target data. Advantageous Effects of Invention

According to the similarity calculation system of the present invention, a similarity degree between data may be calculated with the data kept encrypted, and leakage of information on the original data and leakage of information to be used for spoofing may also be prevented during the course of the calculation of the similarity degree.

Brief Description of Drawings

[Fig. 1] is a system configuration diagram showing an example of an overall configuration of a biometric authentication system 100 in a first embodiment.
[Fig. 2] is a diagram showing an example of a hardware configuration of each of a certification apparatus 101, an authentication apparatus 102, a decryption apparatus 103, and a registration apparatus 104 in the first embodiment.
[Fig. 3] is a block configuration diagram showing an example of a functional block configuration of the registration apparatus 104 in the first embodiment.
[Fig. 4] is a block configuration diagram showing an example of a functional block configuration of the certification apparatus 101 in the first embodiment.
[Fig. 5] is a block configuration diagram showing an example of a functional block configuration of the authentication apparatus 102 in the first embodiment.
[Fig. 6] is a block configuration diagram showing an example of a functional block configuration of the decryption apparatus 103 in the first embodiment.
[Fig. 7] is a flow chart diagram showing an example of an overall operation of the biometric authentication system 100 in the first embodiment.
[Fig. 8] is a flow chart diagram showing an example of a flow of a setup process S500 in the first embodiment.
[Fig. 9] is a flow chart diagram showing an example of a flow of a registration process S600 in the first embodiment.
[Fig. 10] is a flow chart diagram showing an example of a flow of an authentication process S700 in the first embodiment.
[Fig. 11] is a flow chart diagram showing an example of a flow of a vector decomposition process S540 for solving a vector decomposition problem using a regular matrix X.
[Fig. 12] is a detailed block diagram showing an example of a configuration of a key generation unit 401 in the first embodiment.
[Fig. 13] is a flow chart diagram showing an example of a flow of processes of a key generation step S501 in the first embodiment.
[Fig. 14] is a flow chart diagram showing an example of a flow of processes of a feature vector encryption step S603 in the first embodiment.
[Fig. 15] is a flow chart diagram showing an example of a flow of processes of a first challenge generation step S701 in the first embodiment.
[Fig. 16] is a detailed block diagram showing an example of a configuration of an encrypted data embedding unit 217 in the first embodiment.

[Fig. 17] is a flow chart diagram showing an example of a flow of processes of a first response generation step S707 in the first embodiment.

[Fig. 18] is a detailed block diagram showing an example of a configuration of an encrypted data extraction unit 305 in the first embodiment.

[Fig. 19] is a flow chart diagram showing an example of a flow of processes of an encrypted biometric information extraction step S710 in the first embodiment.

[Fig. 20] is a detailed block diagram showing an example of a configuration of an encrypted random similarity degree calculation unit 314 in the first embodiment.

[Fig. 21] is a flow chart diagram showing an example of a flow of processes of a second challenge generation step S712 in the first embodiment.

[Fig. 22] is a detailed block diagram showing an example of a configuration of a decryption unit 404 in the first embodiment.

[Fig. 23] is a flow chart diagram showing an example of a flow of proces of a second response generation step S716 in the first embodiment.

[Fig. 24] is a detailed block diagram showing an example of a configuration of a plaintext similarity degree extraction unit 315 in the first embodiment.

[Fig. 25] is a flow chart diagram showing an example of a flow of processes of a plaintext similarity degree calculation step S719 in the first embodiment.

[Fig. 26] is a flow chart diagram showing a calculation procedure for calculating a similarity degree in the biometric authentication system 100 in the first embodiment.

[Fig. 27] is a system configuration diagram showing an example of an overall configuration of the biometric authentication system 100 in a second embodiment.

[Fig. 28] is a flow chart diagram showing an example of a flow of processes of the second challenge generation step S712 in a third embodiment.

[Fig. 29] is a flow chart diagram showing an example of a flow of processes of the second response generation step S716 in the third embodiment.

[Fig. 30] is a flow chart diagram showing a calculation procedure for calculating a similarity degree in the biometric authentication system 100 in the third embodiment.

[Fig. 31] is a detailed block diagram showing an example of a configuration of the key generation unit 401 in a fourth embodiment.

[Fig. 32] is a flow chart diagram showing an example of a flow of processes of the key generation step S501 in the fourth embodiment.

[Fig. 33] is a flow chart diagram showing an example of a flow of processes of the feature vector encryption step S603 in the fourth embodiment.

[Fig. 34] is a flow chart diagram showing an example of a flow of proceses of the first challenge generation step S701 in the fourth embodiment.

[Fig. 35] is a detailed block diagram showing an example of a configuration of the encrypted data embedding unit 217 in the fourth embodiment.

[Fig. 36] is a flow chart diagram showing an example of a flow of processes of the first response generation step S707 in the fourth embodiment.

[Fig. 37] is a detailed block diagram showing an example of a configuration of the encrypted data extraction unit 305 in the fourth embodiment.

[Fig. 38] is a flow chart diagram showing an example of a flow of processes of the encrypted biometric information extraction step S710 in the fourth embodiment.

[Fig. 39] is a detailed block diagram showing an example of a configuration of the encrypted random similarity degree calculation unit 314 in the fourth embodiment.

[Fig. 40] is a flow chart diagram showing an example of a flow of processes of the second challenge generation step S712 in the fourth embodiment.

[Fig. 41] is a detailed block diagram showing another example of the configuration of the encrypted random similarity degree calculation unit 314 in the fourth embodiment.

[Fig. 42] is a flow chart diagram showing another example of the flow of processes of the second challenge generation step S712 in the fourth embodiment.

[Fig. 43] is a flow chart diagram showing an example of a flow of processes of the second response generation step S716 in the fourth embodiment.

[Fig. 44] is a flow chart diagram showing an example of a flow of processes of the second response generation step S716 in the fourth embodiment.

[Fig. 45] is a flow chart diagram showing a calculation procedure for calculating a similarity degree in the biometric authentication system 100 in the fourth embodiment.

[Fig. 46] is a detailed block diagram showing an example of a configuration of the encrypted random similarity degree calculation unit 314 in a fifth embodiment.

[Fig. 47] is a flow chart diagram showing an example of a flow of processes of the second challenge generation step S712 in the fifth embodiment.

[Fig. 48] is a flow chart diagram showing a calculation procedure for calculating a similarity degree in the biometric authentication system 100 in the fifth embodiment.

[Fig. 49] is a detailed block diagram showing an example of a configuration of the key generation unit 401 in a sixth embodiment.

[Fig. 50] is a flow chart diagram showing an example of a flow of processes of the key generation step S501 in the sixth embodiment.

[Fig. 51] is a flow chart diagram showing an example of a flow of processes of the feature vector encryption step S603 in the sixth embodiment.

[Fig. 52] is a flow chart diagram showing an example of a flow of processes of the first challenge generation step S701 in the sixth embodiment.

[Fig. 53] is a detailed block diagram showing an example of a configuration of the encrypted data embedding unit 217 in the sixth embodiment.

[Fig. 54] is a flow chart diagram showing an example of a flow of processes of the first response generation step S707 in the sixth embodiment.

[Fig. 55] is a flow chart diagram showing an example of a flow of processes of the encrypted biometric information extraction step S710 in the sixth embodiment.

[Fig. 56] is a detailed block diagram showing an example of a configuration of the encrypted random similarity degree calculation unit 314 in the sixth embodiment.

[Fig. 57] is a flow chart diagram showing an example of a flow of processes of the second challenge generation step S712 in the sixth embodiment.

[Fig. 58] is a detailed block diagram showing an example of a configuration of the decryption unit 404 in the sixth embodiment.

[Fig. 59] is a flow chart diagram showing an example of a flow of processes of the second response generation step S716 in the sixth embodiment.

[Fig. 60] is a flow chart diagram showing an example of a flow of processes of the plaintext similarity degree calculation step S719 in the sixth embodiment.

[Fig. 61] is a flow chart diagram showing a calculation procedure for calculating a similarity degree in the biometric authentication system 100 in the sixth embodiment.

[Fig. 62] is a detailed block diagram showing an example of a configuration of an encrypted random number generation unit 304 in a seventh embodiment.

[Fig. 63] is a flow chart diagram showing an example of a flow of processes of the first challenge generation step S701 in the seventh embodiment.

[Fig. 64] is a detailed block diagram showing an example of a configuration of the encrypted random similarity degree calculation unit 314 in the seventh embodiment.

[Fig. 65] is a flow chart diagram showing an example of a flow of processes of the second challenge generation step S712 in the seventh embodiment.

[Fig. 66] is a detailed block diagram showing an example of a configuration of the decryption unit 404 in the seventh embodiment.

[Fig. 67] is a flow chart diagram showing an example of a flow of processes of the second response generation step S716 in the seventh embodiment.

[Fig. 68] is a flow chart diagram showing a calculation procedure for calculating a similarity degree in the biometric authentication system 100 in the seventh embodiment.

[Fig. 69] is a detailed block diagram showing an example of the encrypted random similarity degree calculation unit 314 in an eighth embodiment.

[Fig. 70] is a flow chart diagram showing an example of a flow of processes the second challenge generation step S712 in the eighth embodiment.

[Fig. 71] is a flow chart diagram showing an example of a flow of processes of the second response generation step S716.

[Fig. 72] is a flow chart diagram showing a calculation procedure for calculating a similarity degree in the biometric authentication system 100 in the eighth embodiment.

[Fig. 73] is a detailed block diagram showing an example of a configuration of the encrypted random similarity degree calculation unit 314 in a ninth embodiment.

[Fig. 74] is a flow chart diagram showing an example of a flow of processes of the second challenge generation step S712 in a ninth embodiment.

[Fig. 75] is a detailed block diagram showing an example of a configuration of the decryption unit 404 in the ninth embodiment.

[Fig. 76] is a flow chart diagram showing an example of a flow of processes of the second response generation step S716 in the ninth embodiment.

[Fig. 77] is a flow chart diagram showing a calculation procedure for calculating a similarity degree in the biometric authentication system 100 in the ninth embodiment.

[Fig. 78] is a system configuration diagram showing an example of an overall configuration of the image search system 100 in a tenth embodiment.

[Fig. 79] is a block configuration diagram showing an example of a functional block configuration of the registration apparatus 104 in the tenth embodiment.

[Fig. 80] is a block configuration diagram showing an example of a functional block configuration of the terminal apparatus 111 in the tenth embodiment.

[Fig. 81] is a block configuration diagram showing an example of a functional block configraution of the search apparatus 112 in the tenth

The invention is defined by the independent claims. Preferred embodiments are set out in the dependent claims.

Description of the aspects of the invention

First aspect.

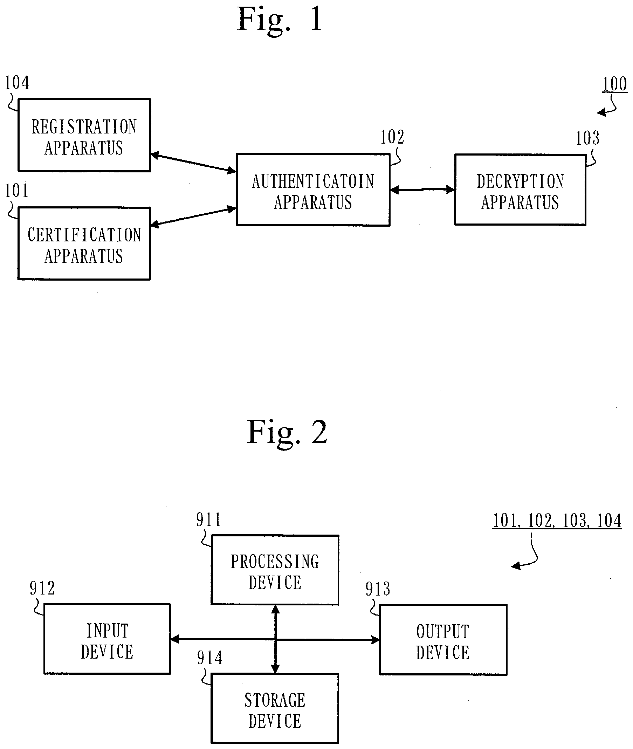

A first aspect will be described using Figs. 1 to 26.

Fig. 1 is a system configuration diagram showing an example of an overall configuration of a biometric authentication system 100 in this embodiment.

The biometric authentication system 100 is a system in which biometric information such as a fingerprint of a user is input and the input information is matched against biometric information registered in advance, thereby authenticating the user.

The biometric authentication system 100 (similarity degree calculation system) includes a certification apparatus 101, an authentication apparatus 102, a decryption apparatus 103, and a registration apparatus 104, for example.

The registration apparatus 104 extracts biometric information from each user, encrypts the extracted biometric information, and registers the encrypted biometric information in the authentication apparatus 102.

The certification apparatus 101 (encryption apparatus) extracts biometric information from a user and then encrypts the extracted biometric information. The certification apparatus 101 also communicates with the authentication apparatus 102 to perform authentication.

The authentication apparatus 102 (similarity degree calculation apparatus) stores the encrypted biometric information of each user registered by the registration apparatus 104. The authentication apparatus 102 communicates with each of the certification apparatus 101 and the decryption apparatus 103 to perform the authentication.

The decryption apparatus 103 communicates with the authentication apparatus 102 and decrypts encrypted data related to a similarity degree transmitted from the authentication apparatus.

A plurality of the certification apparatuses 101 and a plurality of the registration apparatuses 104 may be provided. Physically, the certification apparatus 101 and the registration apparatus 104 may be one apparatus. Physically, the certification apparatus 101 and the decryption apparatus 103 may be one apparatus. Physically, the authentication apparatus 102 and the registration apparatus 104 may be one apparatus.

Fig. 2 is a diagram showing an example of a hardware configuration of each of the certification apparatus 101, the authentication apparatus 102, the decryption apparatus 103, and the registration apparatus 104 in this aspect.

Each of the certification apparatus 101, the authentication apparatus 102, the decryption apparatus 103, and the registration apparatus 104 is a computer, for example, and includes a processing device 911, an input device 912, an output device 913, and a storage device 914.

The storage device 914 stores a program executed by the processing device 911 and data processed by the processing device 911. To take an example, the storage device 914 is a volatile memory, a non-volatile memory, a hard disk drive, or the like.

The processing device 911 executes the program stored in the storage device 914, thereby processing data and controlling the apparatus as a whole.

The input device 912 converts information from an outside into data capable of being processed by the processing device 911. The data obtained by the conversion by the input device 912 may be directly processed by the processing device 911, or may be stored by the storage device 914. To take an example, the input device 912 is an operation input device such as a keyboard, mouse, or the like for inputting a user operation, a biometric information input device for extracting and inputting biometric information such as a user's fingerprint or iris, a receiving device (communication device) for receiving a signal transmitted by a different device, or a reading device for reading data from a recording medium.

The output device 913 is a device for converting the data processed by the processing device 911 and the data stored by the storage device 914 and then outputting the converted data to the outside. To take an example, the output device 913 is a display device for displaying an image, a transmitting device (communication device) for transmitting a signal to a different device, a writing device for writing data into a recording medium, or the like.

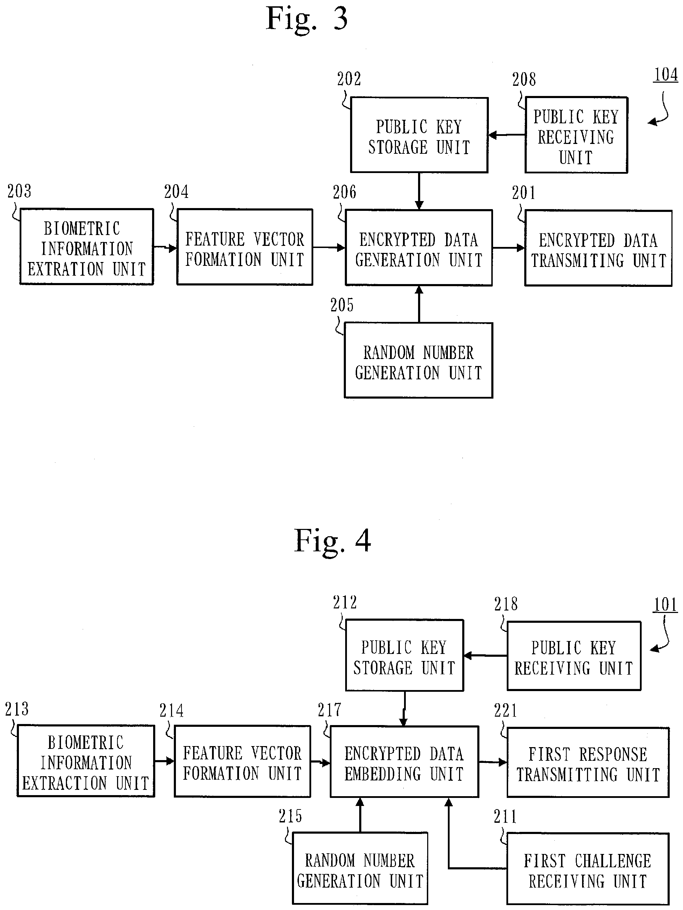

Fig. 3 is a block configuration diagram showing an example of a functional block configuration of the registration device 104 in this embodiment.

The registration apparatus 104 includes a public key receiving unit 208, a public key storage unit 202, a biometric information extraction unit 203, a feature vector formation unit 204, a random number generation unit 205, an encrypted data generation unit 206, and an encrypted data transmitting unit 201.

The public key receiving unit 208 (public key acquisition unit) receives a public key generated by the decryption apparatus 103 using the input device 912 such as the communication device. The communication device (communication unit) exchanges data with a different device such as the authentication apparatus 102 or the decryption apparatus 103.

The encrypted data transmitting unit 201 (comparison ciphertext notification unit) transmits the encrypted biometric information (comparison ciphertext) to the authentication device 102, using the output device 913 such as the communication device.

The public key storage unit 202 stores the public key received by the public key receiving unit 208, using the storage device 914. The storage device 914 (storage unit) stores various data such as the public key transmitted from the decryption device 103.

The biometric information extraction unit 203 extracts the biometric information necessary for performing individual identification from each user, using the input device 912 such as an optical camera, an infrared camera, or the other variety of sensor.

The feature vector formation unit 204 (comparison data acquisition unit) forms a feature vector (comparison data) indicating a personal feature from the biometric information extracted by the biometric information extraction unit 203, using the processing device 911.

The random number generation unit 205 generates random numbers, based on a part of the public key stored by the public key storage unit 202 or the like, using the processing device 911. The random numbers generated by the random number generation unit 205 are used by the encrypted data generation unit 206 or the like.

The encrypted data generation unit 206 (encryption unit, comparison ciphertext generation unit) encrypts the feature vector formed by the feature vector forming device 204, based on the random numbers generated by the random number generation unit 205, thereby generating encrypted biometric information (encrypted feature vector), using the processing device 911.

Fig. 4 is a block configuration diagram showing an example of a functional block of the certification apparatus 101 in this embodiment.

The certification apparatus 101 includes a public key receiving unit 218, a public key storage unit 212, a biometric information extraction unit 213, a feature vector formation unit 214, a random number generation unit 215, a first challenge receiving unit 211, an encrypted data embedding unit 217, and a first response transmitting unit 221, for example.

The public key receiving unit 218 (public key acquisition unit) receives the public key generated by the decryption apparatus 103, using the input device 912 such as the communication device. The communication device (communication unit) exchanges data with a different device such as the authentication apparatus 102 or the decryption apparatus 103.

The first challenge receiving unit 211 (temporary public key acquisition unit) receives a first challenge (temporary public key) from the authentication apparatus 102, using the input device 102 such as the communication device.

The first response transmitting unit 221 (target dual encryption text notification unit) returns a first response (target dual encryption text) corresponding to the first challenge to the authentication apparatus 102, using the input device 912 such as the communication device.

The public key storage unit 212 stores the public key received by the public key receiving unit 218, using the storage device 914. The storage device 914 (storage unit) stores various data such as the public key transmitted from the decryption apparatus 103.

The biometric information extraction unit 213 extracts from the user the biometric information necessary for performing individual identification, using the input device 912 such as an optical camera, an infrared camera, or the other variety of sensor.

The feature vector formation unit 214 (target data acquisition unit) forms a feature vector (target data) indicating a personal feature from the biometric information extracted by the biometric information extraction unit 213, using the processing device 911.

The random number generation unit 215 generates random numbers, based on a part of the public key stored by the public key storage unit 212, using the processing device 911. The random numbers generated by the random number generation unit 215 are used by the encrypted data embedding unit 217 or the like.

The encrypted data embedding unit 217 (response generation unit, target dual encryption text calculation unit) processes the first challenge transmitted from the authentication apparatus 102, according to the value of the feature vector formed by the feature vector formation unit 214, using the processing device 911. That is, the encrypted data embedding unit 217 embeds the encrypted biometric information into the first challenge. The encrypted data embedding unit 217 calculates the first response to be returned to the authentication apparatus 102.

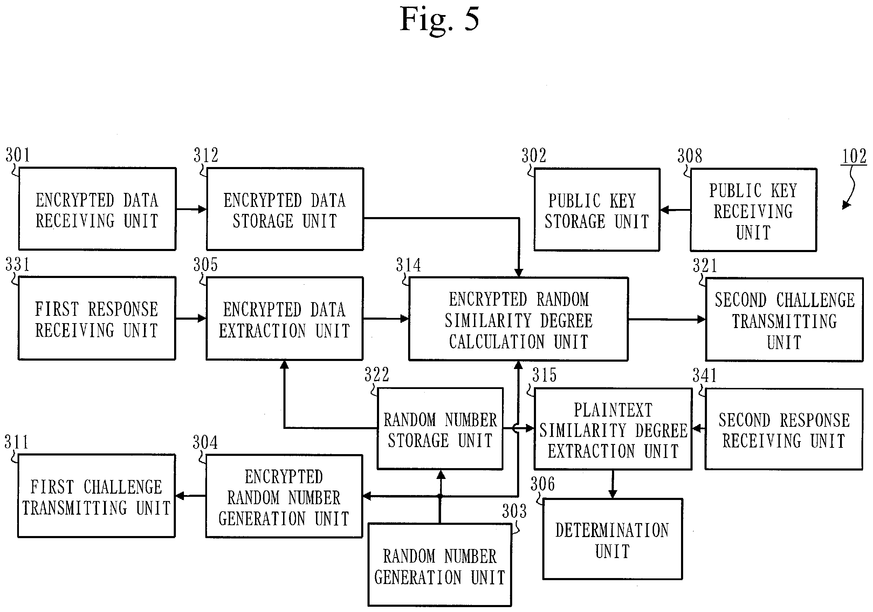

Fig. 5 is a block configuration diagram showing an example of a functional block configuration of the authentication apparatus 102 in this embodiment.

The authentication apparatus 102 includes a public key receiving unit 308, a public key storage unit 302, an encrypted data receiving unit 301, an encrypted data storage unit 312, a random number generation unit 303, a random number storage unit 322, an encrypted random number generation unit 304, a first challenge transmitting unit 311, a first response receiving unit 331, an encrypted data extraction unit 305, an encrypted random similarity degree calculation unit 314, a second challenge transmitting unit 321, a second response receiving unit 341, a plaintext similarity degree extraction unit 315, and a determination unit 306, for example.

The public key receiving unit 308 (public key acquisition unit) receives the public key generated by the decryption apparatus 103, using the input device 912 such as the communication device (communication unit).

The encrypted data receiving unit 301 (comparison ciphertext acquisition unit) receives the encrypted feature vector (comparison ciphertext) from the certification apparatus 101, using the input device 912 such as the communication device.

The first challenge transmitting unit 311 (temporary public key notification unit) transmits the first challenge (temporary public key) to the certification apparatus 101, using the output device 913 such as the communication device.

The first response receiving unit 331 (target dual encryption text acquisition unit) receives the first response (target dual encryption text) corresponding to the first challenge from the certification apparatus 101, using the input device 912 such as the communication device.

The second challenge transmitting unit 321 (interim similarity degree ciphertext notification unit) transmits a second challenge (interim similarity degree ciphertext) to the decryption apparatus 103, using the output device 913 such as the communication device.

The second response receiving unit 341 (interim similarity degree decrypted text acquisition unit) receives a second response (interim similarity degree decrypted text) from the decryption apparatus 103, using the input device 912 such as the communication device.

The public key storage unit 302 stores the public key transmitted from the decryption apparatus 103, using the storage device 914 (storage unit).

The encrypted data storage unit 312 (comparison ciphertext storage unit) stores the encrypted feature vector transmitted from the certification apparatus 101, using the storage device 914. The encrypted data storage unit 312 stores a plurality of the encrypted feature vectors associated with user identifiers, for example.

The random number storage unit 322 (temporary secret key storage unit, temporary key storage unit) stores a part of random numbers (temporary secret key, temporary key) out of the random numbers generated by the random number generation unit 303, using the storage device 914.

The random number generation unit 303 (temporary secret key generation unit, temporary key generation unit) generates the random numbers, based on a part of the public key stored by the public key storage unit 302, using the processing device 911. The random numbers generated by the random number generation unit 303 are used by the encrypted random number generation unit 304, the encrypted data extraction unit 305, the encrypted random similarity degree calculation unit 314, the plaintext similarity degree extraction unit 315, and the like.

Using the processing device 911, the encrypted random number generation unit 304 (challenge generation unit, temporary public key calculation unit) generates the first challenge (encrypted random numbers) in order to communicate with the certification apparatus 101.

Using the processing device 911, the encrypted data extraction unit 305 (random number removal unit, target ciphertext acquisition unit) removes random numbers included in the first response transmitted from the certification apparatus 101, employing the random numbers (stored in the random number storage unit 322) used in the first challenge corresponding to the first response. The encrypted data extraction unit 305 removes a part of the random numbers used in the first challenge from the first response, thereby extracting an encrypted feature vector.

Using the processing device 911, the encrypted random similarity degree calculation unit 314 (challenge generation unit, interim similarity degree ciphertext calculation unit) generates the second challenge (encrypted random similarity degree) in order to communicate with the decryption apparatus 103. The encrypted random similarity degree calculation unit 314 generates the second challenge, based on the encrypted feature vector extracted by the encrypted data extraction unit 305 and the encrypted feature vectors stored by the encrypted data storage unit 312. The encrypted random similarity degree calculation unit 314 acquires the encrypted feature vector whose user identifier matches the user identifier of the first response received by the first response receiving unit 331 from among the encrypted feature vectors stored by the encrypted data storage unit 312, thereby generating the second challenge.

The plaintext similarity degree extraction unit 315 (random number removal unit, similarity degree calculation unit) removes random numbers included in the second response from the second response transmitted to the decryption apparatus 103, employing the random numbers (stored in the random number storage unit 322) used in the second challenge corresponding to the second response. The plaintext similarity degree extraction unit 315 removes the random numbers from the second response, thereby calculating a plaintext similarity degree.

Using the processing device 911, the determination unit 306 (similarity degree determination unit) performs individual identification by employing the plaintext similarity degree generated by the plaintext similarity degree extraction unit 315, thereby determining whether or not the user is the correct user. That is, the determination unit 306 analyzes the plaintext similarity degree to determine the generator element of the feature vector for authentication is valid or not.

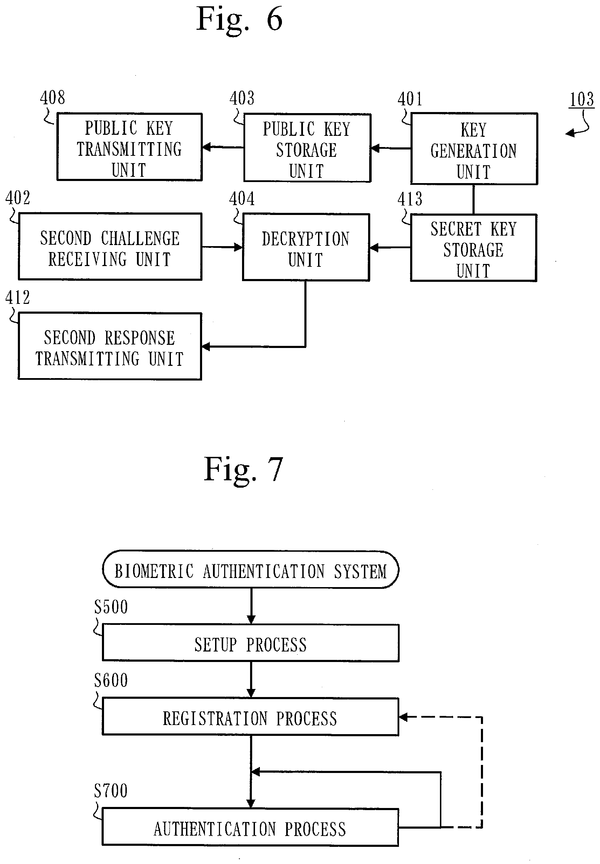

Fig. 6 is a block configuration diagram showing an example of a functional block configuration of the decryption apparatus 103 in this embodiment.

The decryption apparatus 103 includes a key generation unit 401, a secret key storage unit 413, a public key storage unit 403, a public key transmitting unit 408, a second challenge receiving unit 402, a decryption unit 404, and a second response transmitting unit 412, for example.

The key generation unit 401 (a parameter generation unit, a secret key generation unit, a public key calculation unit) generates parameters necessary for encryption and decryption, the public key, a secret key, and the like, using the processing device 911.

The public key transmitting unit 408 (public key notification unit) transmits the public key generated by the key generation unit 401 to the certification apparatus 101 and the authentication apparatus 102 using the output device 913 such as the communication device (communication unit).

The second challenge receiving unit 402 (interim similarity degree ciphertext acquisition unit) receives the second challenge (interim similarity degree ciphertext) from the authentication apparatus 102, using the input device 912 such as the communication device.

The second response transmitting unit 412 (interim similarity degree decrypted text notification unit) transmits the second response (interim similarity degree decrypted text) corresponding to the second challenge to the authentication apparatus 102, using the output device 913 such as the communication device.

The public key storage unit 403 stores various data such as the public key generated by the key generation unit 401, using the storage device 914 (storage unit).

The secret key storage unit 413 stores the secret key generated by the key generation unit 401, using the storage device 914.

The decryption unit 404 (a response generation unit, an interim similarity degree decrypted text calculation unit) generates the second response corresponding to the second challenge transmitted from the authentication apparatus 102, using the processing device 911. The decryption unit 404 decrypts the second challenge (encrypted random similarity degree) to calculate the second response.

Fig. 7 is a flow chart diagram showing an example of an overall operation of the biometric authentication system 100 in this embodiment.

The operation of the biometric authentication system 100 is constituted from three processes, which are a setup process S500, a registration process S600, and an authentication process S700, for example.

In the setup process S500 (setting process), the decryption apparatus 103 generates the parameters, the public key, the secret key necessary, and the like for encryption and decryption.

In the registration process S600, the registration apparatus 104 encrypts the biometric information (comparison data) of each user, and then transmits the encrypted biometric information to the authentication apparatus 102. The authentication apparatus 102 stores the encrypted biometric information (comparison ciphertext).

In the authentication process S700, the authentication apparatus 102 first communicates with the certification apparatus 101 to extract the encrypted biometric information (target ciphertext) from the data (first challenge and first response) used in that communication.

Next, the authentication apparatus 102 communicates with the decryption apparatus 103 to extract a random similarity degree from the data (second challenge and second response) used in that communication based on the extracted encrypted biometric information and the encrypted biometric information registered in advance in the registration process S600.

Finally, the authentication apparatus 102 extracts the plaintext similarity degree from the random similarity, and then compares the similarity degree of the plaintext with a threshold value, thereby determining whether the user is the correct user. The threshold value herein may be a common value set in advance in the system, or a value that is different for each user.

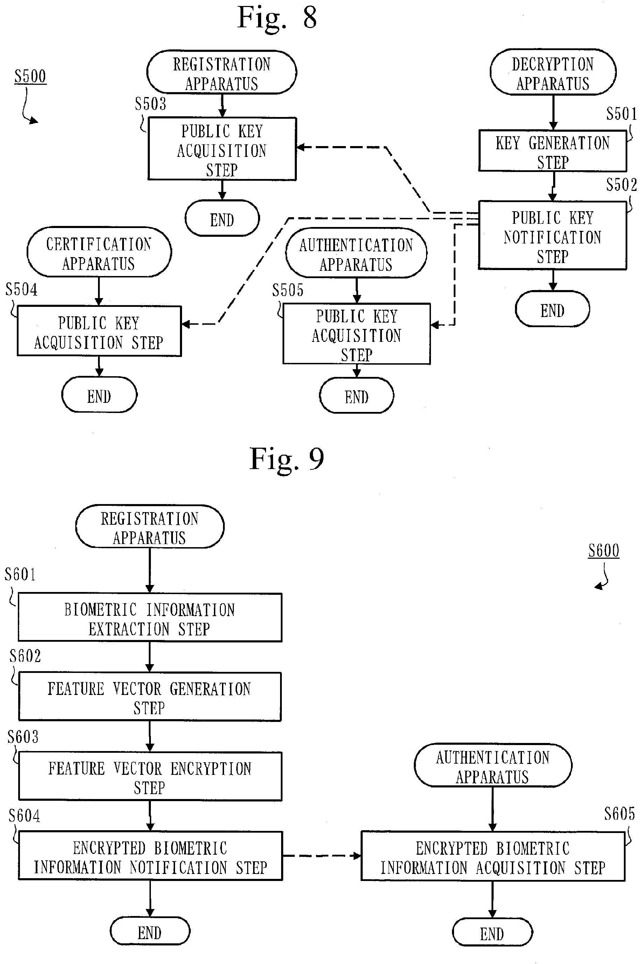

Fig. 8 is a flowchart diagram showing an example of a flow of the setup process S500 in this aspect.

The setup process S500 includes a key generation step S501, a public key notification step S502, and public key acquisition steps S503 to S505.

First, in the key generation step S501, using the processing device 911, the key generation unit 401 of the decryption apparatus 103 generates a secret key sk and a public key pk, based on the key generation system of the homomorphic encryption system. As the homomorphic encryption system, there is the Okamoto-Takashima encryption system, the BGN encryption system, the Paillier encryption system, or the like, for example.

Next, in the public key notification process S502, the public key storage unit 403 of the decryption apparatus 103 stores the public key pk, using the storage device 914. The secret key storage unit 413 of the decryption apparatus 103 stores the secret key sk, using the storage device 914. The public key transmitting unit 408 of the decryption apparatus 103 transmits the public key pk to each of the registration apparatus 104, the certification apparatus 101, the authentication apparatus 102, and the like, using the output device 913.

In the public key acquisition process S503, the public key receiving unit 208 of the registration apparatus 104 receives the public key pk transmitted by the decryption apparatus 103, using the input device 912. The public key storage unit 202 of the registration apparatus 104 stores the public key pk received by the public key receiving unit 208, using the storage device 914.

In the public key acquisition step S504, the public key receiving unit 218 of the certification apparatus 101 receives the public key pk transmitted by the decryption apparatus 103, using the input device 912. The public key storage unit 212 of the certification apparatus 101 stores the public key pk received by the public key receiving unit 218, using the storage device 914.

In the public key acquisition step S505, the public key receiving unit 308 of the authentication apparatus 102 receives the public key pk transmitted by the decryption apparatus 103, using the input device 912. The public key storage unit 302 of the authentication apparatus 102 stores the public key pk received by the public key receiving unit 308, using the storage device 914.

It may be so configured that the public key pk is transmitted and received through a network or the like, and that the public key pk is distributed to the certification apparatus 101 or the like, using a different method. It may be so configured that, for example, the decryption apparatus 103 stores the public key pk in a recording medium (such as a hard disk drive or an optical disk), the certification apparatus 101 or the like accesses the recording medium through the network or the like, or physically moves the recording medium itself to read the public key pk from the recording medium and then store the read public key pk.

Fig. 9 is a flowchart diagram showing an example of a flow of the registration process S600 in this aspect.

The registration process S600 includes a biometric information extraction step S601, a feature vector generation step S602, a feature vector encryption step S603, an encrypted biometric information notification step S604, and an encrypted biometric information acquisition step S605, for example.

First, in the biometric information extraction step S601, the biometric information extraction unit 203 of the registration apparatus 104 extracts biometric information of each user, using the input device 912.

In the feature vector generation step S602, the feature vector formation unit 204 of the registration apparatus 104 generates a feature vector b of the biometric information extracted by the biometric information extraction unit 203 in the biometric information extraction step S601, using the processing device 911.

In the feature vector encryption step S603, the random number generation unit 205 of the registration apparatus 104 generates the random numbers, based on the part of the public key pk or the like, using the processing device 911. The encrypted data generation unit 206 of the registration apparatus 104 reads the public key pk stored by the public key storage unit 202, using the processing device 911. The encrypted data generation unit 206 of the registration apparatus 104 generates an encrypted feature vector C, based on the read public key pk and the random numbers generated by the random number generation unit 205, using the processing device 911. The encrypted feature vector C is the one obtained by encrypting the feature vector b.

In the encrypted biometric information notification step S604, the encrypted data transmitting unit 201 of the registration apparatus 104 transmits to the authentication apparatus 102 the encrypted feature vector C generated by the encrypted data generation unit 206 in the feature vector encryption step S603, using the output device 913.

In the encrypted biometric information acquisition step S605, the encrypted data receiving unit 301 of the authentication apparatus 102 receives the encrypted feature vector C transmitted by the registration apparatus 104 in the encrypted biometric information notification step S604, using the input device 912. The encrypted data storage unit 312 of the authentication apparatus 102 stores the encrypted feature vector C received by the encrypted data receiving unit 301, using the storage device 914.

The biometric information of the user and the feature vector b become unnecessary after generation of the encrypted feature vector C. Thus, it is desirable that the biometric information of the user and the feature vector b be erased after generation of the encrypted feature vector C. By doing so, theft of the biometric information of the user and the feature vector by an unauthorized person from the storage device 914 of the registration apparatus 104 may be prevented.

The encrypted feature vector C is encrypted with the public key generated by the decryption apparatus. Thus, even if the unauthorized person has obtained the encrypted feature vector C by intercepting communication between the registration apparatus 104 and the authentication apparatus 102 or stealing the encrypted feature vector C from the storage device 914 of the authentication apparatus 102, the biometric information of the user and the feature vector cannot be known unless the unauthorized person uses the secret key of the decryption apparatus.

Further, as will be described later, the first response including information on the feature vector at a time of authentication can be generated by the feature vector alone, and cannot be generated from the encrypted feature vector. Even if the unauthorized person has obtained the encrypted feature vector C, the unauthorized person cannot generate the first response, so that the unauthorized person cannot spoof the authorized user.

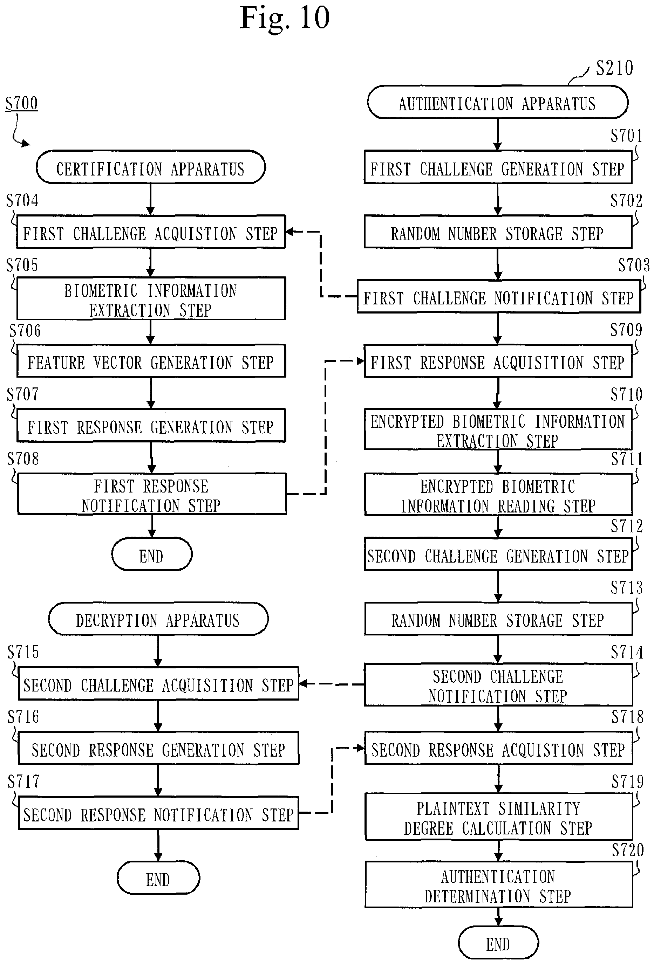

Fig. 10 is a flow chart diagram showing an example of a flow of the authentication process S700 in this aspect.

The authentication process S700 includes a first challenge generation step S701, a random number storage step S702, a first challenge notification step S703, a first challenge acquisition step S704, a biometric information extraction step S705, a feature vector generation step S706, a first response generation step S707, a first response notification step S708, a first response acquisition step S709, an encrypted biometric information extraction step S710, an encrypted biometric information reading step S711, a second challenge generation step S712, a random storage step S713, a second challenge notification step S714, a second challenge acquisition step S715, a second response generation step S716, a second response notification step S717, a second response acquisition step S718, a plaintext similarity degree calculation step S719, and an authentication determination step S720, for example.

First, in the first challenge generation step S701, using the processing device 911, the random number generation unit 303 of the authentication apparatus 102 reads the public key pk from the public key storage unit 302 to generate the random numbers. The encrypted random number generation unit 304 of the authentication apparatus 102 reads the public key pk from the public key storage unit 302 and encrypts the random numbers generated by the random number generation unit 303, thereby generating the first challenge (encrypted random numbers), using the processing device 911.

In the random storage step S702, the random number storage unit 322 of the authentication apparatus 102 stores the random numbers generated by the random number generation unit 303 in the first challenge generation step S701, using the storage device 914.

In the first challenge notification step S703, the first challenge transmitting unit 311 of the authentication apparatus 102 transmits the first challenge generated by the encrypted random number generation unit 304 in the first challenge generation step S701 to the certification apparatus 101, using the output device 913.

In the first challenge acquisition step S704, the first challenge receiving unit 211 of the certification apparatus 101 receives the first challenge transmitted by the authentication apparatus 102 in the first challenge notification step S703, using the input device 912.

In the biometric information extraction step S705, the biometric information extraction unit 213 of the certification apparatus 101 extracts the biometric information of the user, using the input device 912.

In the feature vector generation step S706, the feature vector formation unit 214 of the certification apparatus 101 forms a feature vector b' of the biometric information extracted by the biometric information extraction unit 213 in the biometric information extraction step S705, using the processing device 911.

In the first response generation step S707, using the processing device 911, the random number generation unit 215 of the certification apparatus 101 reads the public key pk stored by the public key storage unit 212 to generate the random numbers. The encrypted data embedding unit 217 of the certification apparatus 101 reads the public key pk from the public key storage unit 212, processes the first challenge according to the value of the feature vector b' formed by the feature vector formation unit 214 in the feature vector generation step S706, based on the random numbers generated by the random number generation unit 215, thereby generating the first response. The first response is the one obtained by embedding an encrypted feature vector C' in the first challenge.

In the first response notification step S708, the first response transmitting unit 221 of the certification apparatus 101 transmits the first response generated by the encrypted data embedding unit 217 in the first response generation step S707 to the authentication device 102, using the output device 913.

In the first response acquisition step S709, the first response receiving unit 331 of the authentication apparatus 102 receives the first response transmitted by the certification apparatus 101 in the first response notification step S708, using the input device 912.

In the encrypted biometric information extraction step S710, the encrypted data extraction unit 305 of the authentication apparatus 102 extracts from the random number storage unit 322 the random numbers generated by the random number generation unit 303 in the first challenge generation step S701, removes the random numbers from the first response, and then extracts the encrypted feature vector C', using the processing device 911.

In the encrypted biometric information reading step S711, the encrypted random similarity degree calculation unit 314 of the authentication apparatus 102 extracts the encrypted feature vector C from the encrypted data storage unit 312, using the processing device 911.

In the second challenge generation step S712, the random number generation unit 303 of the authentication apparatus 102 reads the public key pk stored by the public key storage unit 302 to generate the random numbers, using the processing device 911. Using the processing device 911, the encrypted random number generation unit 304 of the authentication apparatus 102 reads the public key pk from the public key storage unit 302 and generates the second challenge (encrypted random similarity degree), based on the encrypted feature vector C' extracted from the first response by the encrypted data extraction unit 305 in the encrypted biometric information extraction step S710, the encrypted feature vector C extracted in the encrypted biometric information reading step S711, the read public key pk, and the random numbers generated by the random number generation unit 303.

In the random number storage step S713, the random number storage unit 322 of the authentication apparatus 102 stores the random numbers generated by the random number generation unit 303 in the second challenge generation step S712, using the storage device 914.

In the second challenge notification step S714, the second challenge transmitting unit 321 of the authentication apparatus 102 transmits the second challenge generated by the encrypted random similarity degree calculation unit 314 in the second challenge generation step S712 to the decryption apparatus 103, using the output device 913.

In the second challenge acquisition step S715, the second challenge receiving unit 402 of the decryption apparatus 103 receives the second challenge transmitted by the authentication apparatus 102 in the second challenge notification step S714, using the input device 912.

In the second response generation step S716, using the processing device 911, the decryption unit 404 of the decryption apparatus 103 reads the secret key sk from the secret key storage unit 413, performs decryption processing using the secret key sk on the second challenge (encrypted random similarity degree) received by the second receiving unit 402 in the second challenge acquisition step S715, thereby generating the second response (deriving the random similarity degree).

In the second response notification step S717, the second response transmitting unit 412 of the decryption apparatus 103 transmits the second response generated by the decryption unit 404 in the second response generation step S716 to the authentication apparatus 102, using the output device 913.

In the second response acquisition step S718, the second response receiving unit 341 of the authentication apparatus 102 receives the second response transmitted by the decryption apparatus 103 in the second response notification step S717, using the input device 912.

In the plaintext similarity degree calculation step S719, using the processing device 911, the plaintext similarity degree extraction unit 315 of the authentication apparatus 102 extracts from the random number storage unit 322 the random numbers generated by the random number generation unit 303 in the second challenge generation step S712, removes the random numbers from the second response (random similarity degree) received by the second response receiving unit 341 in the second response acquisition step S718, thereby extracting the plaintext similarity degree.

In the authentication determination step S720, using the processing device 911, the determination unit 306 of the authentication apparatus 102 performs identity authentication, based on the plaintext similarity degree extracted in the plaintext similarity degree calculation step S719 and the predetermined threshold value.

The authentication process S700 is started upon receipt of a request for authentication from the certification apparatus 101, for example. It may be so configured, however, that advance preparation of the protocol is performed before the request for the authentication is received so as to reduce the communication cost or the like. To take an example, it may be so configured that the steps from the first challenge generation step S701 to the first challenge acquisition step S704 are executed in advance. That is, before receipt of the request for the authentication from the certification apparatus 101, the authentication apparatus 102 generates the first challenge (encrypted random numbers), and transmits the generated first challenge to the certification apparatus 101. Then, the encrypted data embedding unit 217 of the certification apparatus 101 stores the received first challenge, using the storage device 914. The random numbers used when the first challenge is generated are stored by the random number storage unit 322 of the authentication apparatus 102, using the storage device 914. The random numbers stored by the random number storage unit 322 must not be released to the other apparatus.

As the random numbers generated by the random number generation unit 303 of the authentication apparatus 102 in the first challenge generation step S701 and to be used for generating the first challenge by the encrypted random generation unit 304, there are two types of the random numbers, which are the random numbers as plaintexts and the random numbers to be used for encrypting the plaintexts. Only the random numbers as the plaintexts out of these random numbers should be used as the random numbers stored by the random number storage unit 322 of the authentication apparatus 102 in the random number storage step S702.

In the first response generation step S707, the certification apparatus 101 generates the first response, based on the first challenge and the value of the feature vector, using additive homomorphism of encryption. The first challenge is obtained by encrypting the random numbers as the plaintexts. On the other hand, the value of the feature vector is a plaintext before encryption. The value of the encrypted feature vector is embedded in the first response.

Assume that ciphertexts $E(m1)$ and $E(m2)$ are combined by a group arithmetic operation on a finite group having elements of ciphertexts. Then, a ciphertext $E(ml + m2)$ is derived due to additive homomorphism of encryption. The ciphertext $E(m1 + m2)$ is obtained by encrypting a plaintext $m1 + m2$ which is a combination of original plaintexts $m1$ and $m2$ by a group arithmetic operation on a finite group having elements of plaintexts. Herein, $m1$ and $m2$ indicate the plaintexts. E indicates encryption transformation. "+" indicates the group arithmetic operation on the finite group having the elements of plaintexts or ciphertexts.

Assume that an element obtained by combining n pieces of elements a (n being an integer) of a finite group by a group arithmetic operation on the finite group is described as "n·a". Then, $n \cdot E(m) = E(n \cdot m)$ holds. Herein, m indicates a plaintext. This operation is called "scalar multiplication". Herein, the group arithmetic operation on the finite group is described as addition. When a group arithmetic operation on the finite group is described as multiplication, the same operation is called "exponentiation", and is described as "$n^a$".

Assume that each plaintext is an integer modulo a predetermined number. Then, the finite group having the elements of plaintexts forms a ring (or a field). Addition and multiplication are performed as the arithmetic operations of the ring. The addition on the finite ring having the elements of plaintexts is associated with the group arithmetic operation on the finite group having the elements of ciphertexts. The multiplication on the finite ring having the element of the integer modulo the predetermined number is equivalent to scalar multiplication. That is, the multiplication on the finite ring having the elements of plaintexts is associated with the scalar multiplication of the element on the finite group having the elements of the ciphertexts.

The inverse element of an element a in multiplication on the finite ring having the elements of plaintexts is described as "$a^{-1}$". Assume that an inverse element $m^{-1}$ of the plaintext m is present. Then, when $m^{-1}$ pieces of $E(n \cdot m)$ are combined by a group arithmetic operation on the finite group having the elements of ciphertexts, a ciphertext $E(n)$ obtained by encrypting a plaintext n is derived.

The biometric authentication system 100 makes use of this matter.

Assume that the feature vector is a T-dimensional vector $(y_1, y_2, ... y_T)$ (T being an integer not less than 1) having components of integers not less than 0 and less than q. It is assumed, however, that q is an order of a finite ring and is not less than 2. Actual components of the feature vector may be 0 or 1, for example, and may assume only a limited value.

In the first challenge generation step S701, the random number generation unit 303 sets the integers randomly selected from among the integers not less than 0 and less than q as the random numbers as the plaintexts. The random number generation unit 303 generates T pieces of random numbers $x_1, x_2, ...,$ and $x_T$ as the plaintexts. These random numbers are regarded as a vector $(x_1, x_2, ..., x_T)$ of T dimensions that are the same as the feature vector.

The encrypted random number generation unit 304 generates a T-dimensional vector $(E(x_1), E(x_2), ..E(X_T))$ obtained by encryption transforming each component of the T-dimensional vector $(x_1, x_2, ..., x_T)$. This is the first challenge.

In the first response generation step S707, the encrypted data embedding unit 217 scalar multiplies each component of the first challenge ($E(x_1)$, $E(x_2)$, ...$E(x_T)$) by a corresponding component of the feature vector ($y_1$, $y_2$, ... $y_T$), thereby calculating a T-dimensional vector ($y_1 \cdot (E(x_1)$, $y_2 \cdot E(x_2)$, ...$y_T \cdot E(x_T)$). Due to the additive homomorphism of encryption, each component $y_i \cdot E(x_i)$ (i being each integer not less than 1 and less than T) of the calculated T-dimensional vector forms a ciphertext $E(y_i \cdot x_i)$ obtained by encryption transforming a product $y_i \cdot x_i$ of a component $y_i$ of the feature vector and a random number $x_i$.

Theoretically, this ciphertext may be set to the first response without alternation. However, by doing so, the value of the feature vector may be able to be calculated, based on the relationship between the first challenge and the first response.

The encrypted data embedding unit 217 performs randomization processing using the random numbers generated by the random number generation unit 215 in order to prevent this calculation of the value of the feature vector. The random numbers to be generated by the random number generation unit 215 are random numbers to be used for encrypting a plaintext. The encrypted data embedding unit 217 generates T ciphertexts $E(0)$ obtained by encrypting a plaintext "0", using the random numbers generated by the random number generation unit 215. In the encryption system used by the biometric authentication system 100, a plurality of ciphertexts corresponding to one plaintext are present. Then, by randomly selecting one of the ciphertexts from among the plurality of ciphertexts, leakage of information on the plaintext from the ciphertexts is prevented. Accordingly, the plurality of ciphertexts $E(0)$ corresponding to the plaintext "0" are also present. Usually, the T ciphertexts $E(0)$ generated by the encrypted data embedding unit 217 are different to one another. Then, the T ciphertexts $E(0)$ are respectively described as $E0_1$, $E0_2$, ..., and $E0_T$. The encrypted data embedding unit 217 respectively combines the components of the calculated T-dimensional vector ($y_1 \cdot (E(x_1)$, $y_2 \cdot E(x_2)$, ...$y_T \cdot E(x_T)$) and the calculated ciphertexts $E0_1$, $E0_2$, ..., and $E0_T$ by the group arithmetic operation on the finite group having the elements of ciphertexts, thereby calculating a T-dimensional vector ($y_1 \cdot E(x_1) + E0_1$, ($y_2 \cdot E(x_2) + E0_2$, .., ($y_T \cdot E(x_T) + E0_T$). Due to the additive homomorphism of encryption, each component $y_i \cdot E(x_i) + E0_i$ (i being each integer not less than 1 and less than T) of the calculated T-dimensional vector forms a ciphertext $E(y_i \cdot X_i)$ obtained by encryption transforming the product $y_i \cdot x_i$ of the component $y_i$ of the feature vector and the random number $x_i$. This ciphertext is, however, different from the ciphertext before combining the ciphertext $E0_i$.

This T-dimensional vector ($y_1 \cdot E(x_1) + E0_1$, $y_2 \cdot E(x_2) + E0_2$, .., $y_T \cdot E(x_T) + E0_T$) = ($E(y_1 \cdot x_1)$, $E(y_2 \cdot x_2)$, ...$E(y_T \cdot x_T)$) is set to the first response.

In the encrypted biometric information extraction step S710, the encrypted data extraction unit 305 respectively calculates inverse elements (inverse numbers) of $x_1^{-1}$, $x_2^{-1}$, ..., $X_T^{-1}$ in multiplication of integers modulo q for the T pieces of random numbers $x_1$, $x_2$, ..., and $x_T$ stored by the random number storage unit 322. When q is a prime number, a finite ring having elements of the integers modulo q forms a field. Thus, the inverse elements are surely present. When q is not the prime number, the inverse elements in the multiplication may not be present. When q is sufficiently large, the possibility that the inverse elements are not present is extremely low, so that the possibility should be ignored.

The encrypted data extraction unit 305 respectively scalar multiplies components of the first response of ($E(y_1 \cdot x_1)$, $E(y_2 \cdot x_2)$, ...$E(y_T \cdot x_T)$) by the calculated inverse elements, thereby calculating a T-dimensional vector ($x_1^{-1} \cdot E(y_1 \cdot x_1)$, $x_2^{-1} \cdot E(y_2 \cdot x_2)$, ...$x_T^{-1} \cdot E(y_T \cdot x_T)$). Due to the additive homomorphism of encryption, each component $x_i^{-1} \cdot E(y_i \cdot x_i)$ of the calculated T-dimensional vector (i being each integer not less than 1 and less than T) forms a ciphertext $E(y_i)$ obtained by encryption transforming a component $y_i$ of the feature vector.

With this arrangement, the authentication apparatus 102 calculates the encrypted feature vector C'.

The inverse elements in the multiplication of the integers modulo q can be readily calculated. Accordingly, when the random number $x_i$ is known, the inverse element $x_i^{-1}$ can be readily calculated. Consequently, it is easy to calculate the encrypted feature vector C' from the first response. However, when the random number $x_i$ is not known, it is virtually impossible to calculate the encrypted feature vector C' from the first response. That is, the random numbers as the plaintexts generated by the random number generation unit 303 in the first challenge generation step S701 constitute a secret key (temporary secret key) known by the authentication apparatus 102 alone. The first challenge obtained by encrypting the random numbers as the plaintexts constitute a public key (temporary public key) for generating the first response from the feature vector.

The first response is herein the one obtained by encrypting the feature vector with the public key of the authentication apparatus 102 and is also the one obtained by encrypting the feature vector with the public key pk of the decryption apparatus 103. It may be said that the first response is obtained by dually encrypting the feature vector. The authentication apparatus 102 can decrypt the first response with the secret key. However, the encrypted feature vector obtained by encrypting the feature vector with the public key pk of the decryption apparatus 103 is obtained as the result of the decryption. The secret key sk of the decryption apparatus 103 is needed in order to obtain the feature vector by further decrypting the encrypted feature vector. The authentication apparatus 102 does not know the secret key sk associated with the public key pk. Thus, the authentication device 102 cannot decrypt the encrypted feature vector C and the encrypted feature vector C'.

Even if a device that has spoofed the authentication apparatus 102 has generated a set of a secret key sk' and a public key pk' and has generated the first challenge by encryption transformation using the generated public key pk' rather than generating the first challenge by encryption transformation using the public key pk of the decryption apparatus 103, the device cannot decrypt the encrypted feature vector C' from the first response. The ciphertext $E0_i$ is combined with each component of the first response by encryption transformation using the public key pk of the decryption apparatus 103. Thus, the first response becomes insignificant data that cannot be decrypted with any secret key when the encryption transformation is performed. That is, it is necessary that the public key stored by the certification apparatus 101 be the same as the public key stored by the authentication apparatus 102 in order for the first response to become significant data.

As the random numbers as well generated by the random number generation unit 303 of the authentication apparatus 102 in the second challenge generation step S712, there are two types of the random numbers, which are the random numbers as plaintexts and the random numbers to be used for encryption. The random numbers to be stored by the random number storage unit 322 of the authentication apparatus 102 in the random number storage step S713 should be only the random numbers as the plaintexts out of the two types of the random numbers.

The random numbers as the plaintexts generated by the random number generation unit 303 in the first challenge generation step S701 constitute the key (temporary secret key) for decrypting the first response. Similarly, the random numbers as the plaintexts generated by the random number generation unit 303 in the second challenge generation step S712 constitute a key (temporary key) for decrypting the second response.

The relationship between the second challenge and the second response is, however, different from the relationship between the first challenge and the first response. The first challenge is the public key to be used only once by the authentication apparatus 102. The certification apparatus 101 dually encrypts the feature vector with the public key of the authentication apparatus 102 and the public key of the decryption apparatus 103, thereby generating the first response. On contrast therewith, the second challenge is encrypted data. The second challenge is data obtained by further encrypting data encrypted with the public key of the decryption apparatus 103 using the key of the authentication apparatus 102. That is, the second challenge is dually encrypted data. The decryption apparatus 103 decrypts the second challenge with the secret key of the decryption apparatus 103, thereby generating the second response. The decryption apparatus 103 decrypts the dually encrypted second challenge, thereby generating data encrypted with the key of the authentication apparatus 102 alone. The authentication apparatus 102 decrypts the second response with the key of the authentication apparatus 102, thereby obtaining the plaintext similarity degree.

Calculation for calculating the plaintext similarity degree is divided into some stages. The stages are respectively executed in the second challenge generation step S712, the second response generation step S716, and the like, for example. In the second challenge generation step S712, the authentication apparatus 102 executes a portion of the calculation for calculating the similarity degree with the feature vectors kept encrypted. Accordingly, the authentication apparatus 102 cannot know the feature vectors in this stage. The second challenge is obtained by dually encrypting data in a state where the portion of the calculation has already been finished. Since the portion of the calculation is already finished, all of information on the original feature vectors is not included in the second challenge. Only information necessary for calculating the similarity degree is included in the second challenge. In the second response generation step S716, the decryption apparatus 103 decrypts the second challenge to derive data obtained by encrypting the information necessary for the calculation of the similarity degree with the key of the authentication apparatus 102. The decryption apparatus 103 executes a portion of the calculation for calculating the similarity degree with the data kept encrypted with the key of the authentication apparatus 102. Accordingly, the decryption apparatus 103 cannot know the feature vectors and the plaintext similarity degree in this stage. The second response is the one obtained by encrypting data in a state where almost all of the calculation has already been finished. Since almost all of the calculation is already finished, the information on the original feature vectors is not included in the second response. In the plaintext similarity degree calculation step S719, the authentication apparatus 102 decrypts the second response to calculate the similarity degree. The plaintext similarity degree itself is not derived before the plaintext similarity degree calculation step S719.

The plaintext similarity degree is information only indicating to what degree the feature vector b for registration is similar to the feature vector b' for authentication. Thus, it is difficult to calculate the feature vectors and the biometric information from the plaintext similarity degree.

Next, a description will be given about an example where a specific encryption system has been used for details of processing in each stage. In this embodiment, the description will be directed to the example where the Okamoto-Takashima encryption system has been used.

First, the Okamoto-Takashima encryption system will be outlined.

Assume that q is a prime number not less than 2. Assume that G and $G_T$ are finite groups each having an order q. A group arithmetic operation on each of the finite groups G and $G_T$ will be described as multiplication. Assume that $F_q$ is a finite field having elements of integers not less than 0 and less than q. Assume that e is a pairing $G \times G \rightarrow G_T$ that maps a set of two elements of the finite group G to an element of the finite group $G_T$. The pairing e satisfies bilinearity and non-degenerateness. The biliniearity is a property with which $e(u^a, v^b) = e(u, v)^{ab}$ is established for two arbitrary elements u, v in the finite group G and two arbitrary elements a,b in the finite group $F_q$. The non-degerateness is a property with which at least one element g that satisfies $e(g, g) \neq 1$ exists in elements of the finite group G. The pairing e may be an asymmetric pairing.

Assume that V is a direct product set G × G × ... G constituted from n pieces of the finite groups G.

With respect to addition "+" on the direct product set V, an element $(g^{x1 + y1}, g^{x2 + y2}, ..., g^{xn + yn})$ of the direct product set V is defined as a coupling x + y by addition "+" of two arbitrary elements $x = (g^{x1}, g^{x2}, ..., g^{xn})$ and $y = (g^{y1}, g^{y2}, ..., g^{yn})$ on the direct product set V.

With respect to scalar multiplication on the direct product set V, an element $(g^{ax1}, g^{ax2} ..., g^{axn})$ on the direct product set V is defined as an element $\alpha x$ obtained by scalar multiplying an arbitrary element $x = (g^{x1}, g^{x2}, .., g^{xn})$ on the direct product set V by an arbitrary element $\alpha$ on the definite field $F_q$.

In this case, the direct product set V constitutes a vector space. Each element in the vector space V is called a "vector".

With respect to a pairing e: V × V → $G_T$ of the vector spaces V, an element $\Pi_i [e(u_i, v_i)$ (in which $i \in \{1, 2, ..., n\})$ on the finite group $G_T$ is defined as a pairing e (u, v) of two arbitrary vectors of $u = (u_1, u_2, ..., u_n)$ and $v = (v_1, v_2, ..., v_n)$ in the vector spaces V.

Further, "A" is defined as a sequence of n vectors $(a_1, a_2, ..., a_n)$ in the vector space V. Then, a vector $a_i = (a_{i1}, a_{i2}, ..., a_{in})$ is so defined that, when i= j, $a_{ij} = g$ , and when $i \neq j$, $a_{ij} = 1$ (1 is a unit element of the finite group G).

In this case, the "A" constitutes the base of the vector space V. The base A is called a canonical base.

With respect to a distortion map $\phi_{ij}$: V → V in the vector space V, a vector $x_j a_i$ is defined as a distortion map $\phi_{ij}(x)$ of an arbitrary vector x in the vector space V, assuming that the vector $x = x_1 a_1 + x_2 a_2 + ... + x_n a_n$ and i and j are two arbitrary integers not less than 1 and less than n. It is also assumed that the distortion map $\phi_{ij}$ can be efficiently calculated using a computer.

In the vector spaces V, there are the canonical bases, a pairing of the vector spaces is defined, and the distortion map that can be calculated is defined. The vector spaces as mentioned above are called bilinear pairing vector spaces.

Assume that "X" is an n-dimensional i-row, j-column square matrix having elements of $n^2$ values of $\chi_{ij}$ (each of i, j being each integer not less than 1 and less than n) uniform randomly selected from the finite field $F_q$. When the value of q is sufficiently large, the square matrix X will be a regular matrix at a very high probability.

"B" is defined to be a sequence of n vectors $(b_1, b_2, ..., b_n)$ in the vector space V, and it is defined that b; $= \Sigma_j [\chi_{i, j} a_i]$ (in which i and j are each the integer not less than 1 and less than n). When the square matrix X is the regular matrix, "B" constitutes the base of the vector space V, like "A". The base B is called a random base.

In this case, the following property is established.

When elements $(x_1, x_2, ..., x_n)$ of a direct product $F_q^n$ of n pieces of the definite fields $F_q$ are given, a vector $x = x_1 b_1 + x_2 b_2 + ... + x_n b_n$ in the vector space V can be easily calculated. When a vector $x = x_1 b_1 + x_2 b_2 + ... + x_L b_L$ (L being an integer not less than 2 and less than n) in the vector V is given, a vector $y = x_1 b_1 + x_2 b_2 + x_1 b_1$ (1 being an integer not less than 1 and less than L) in the vector space V can be calculated, using the regular matrix X. However, when the regular matrix X is not used, it is difficult to calculate the vector y, which is as difficult as to perform a generalized Diffie-Hellman calculation.

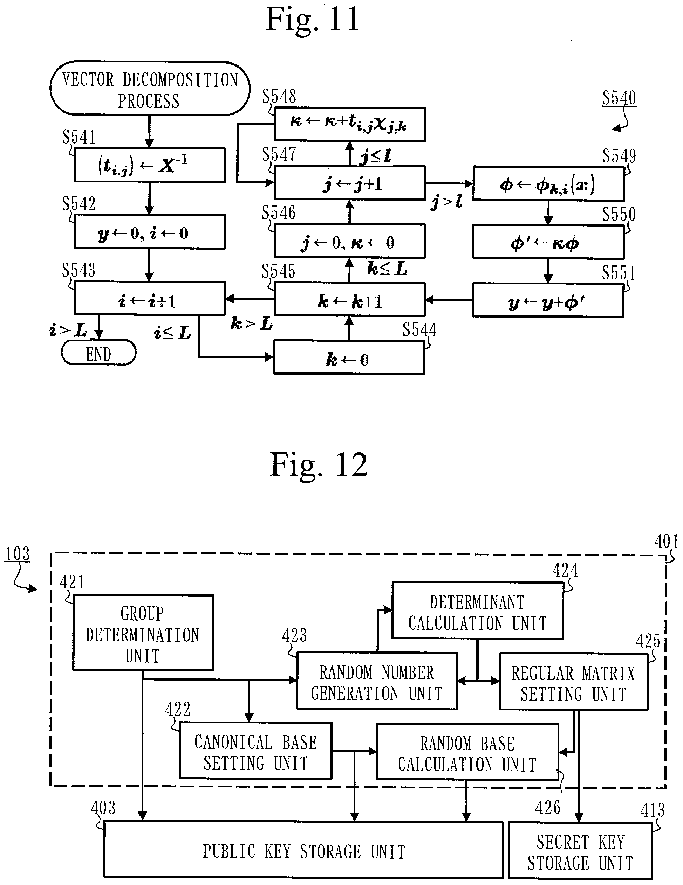

Fig. 11 is a flowchart diagram showing an example of a flow of a vector decomposition process S540 to solve the problem of vector decomposition, using the regular matrix X.

In the vector decomposition process S540, the vector x in the vector space V, vector components <$b_1$, $b_2$, ..., $b_1$> to be extracted from the vector x, the regular matrix X of n dimensions, and the random base B are input, and a vector $y = \Sigma_i \Sigma_j \Sigma_k [t_{i, j} \chi_{j, k} \phi_{k, i}(x)]$ in the vector space V (in which i is an integer not less than 1 and not more than L, j is an integer not less than 1 and not more than 1, k is an integer not less than 1 and not more than L, and $t_{i,j}$ is a component in the ith column and the jth row of an inverse matrix $T = X^{-1}$ of the regular matrix X) is output. The vector decomposition process S540 includes an inverse matrix calculation step S541, a first initialization step S542, a first repetition step S543, a second initialization step S544, a second repetition step S545, a third initialization step S546, a third repetition step S547, a factor summation step S548, a map calculation step S549, a scalar multiplication step S550, and a vector summation step S551.

First, the inverse matrix $X^{-1}$ of the regular matrix X is calculated in the inverse matrix calculation step S541.

In the first initialization step S542, the element y of the vector space V is initialized to 0. The integer i is initialized to 0.

In the first repetition step S543, the integer i is incremented by 1. When the integer i is larger than the integer L, the element y is output, and the vector decomposition process S540 is finished. When the integer i is not more than L, the process proceeds to the second initialization step S544.

In the second initialization step S544, the integer k is initialized to 0.

In the second repetition step S545, the integer k is incremented by 1. When the integer k is larger than the integer L, the process returns to the first repetition step S543. When the integer k is not more than the integer L, the process proceeds to the third initialization step S546.

In the third initialization step S546, the integer j is initialized to 0, and a factor $\kappa$ is initialized to 0.

In the third repetition step S547, the integer j is incremented by 1. When the integer j is larger than the integer l, the process proceeds to the map calculation step S549. When the integer j is not more than the integer l, the process proceeds to the factor summation step S548.

In the factor summation step S548, the product of the component $t_{i,j}$ in the ith row and the jth column of the inverse matrix $X^{-1}$ calculated in the inverse matrix calculation step S541 and a component $\chi_{j,k}$ in the j-th row and the k-th column of the regular matrix X is calculated. The calculated product is added to the factor $\kappa$, and then the process returns to the third repetition step S547.

In the map calculation step S549, a distortion map $\phi_{k,i}(x)$ of the vector x in the vector space V is calculated, and is then set to a vector $\phi$.

In the scalar multiplication step S550, a vector $\phi' = \kappa\phi$ obtained by multiplying the vector $\phi = \phi_{k,i}(x)$ in the map calculation step S549 by $\kappa$ is calculated.

In the vector summation step S551, the vector $\phi' = \kappa\phi_{k,i}(x)$ calculated in the scalr multiplication step S550 is added to the vector y, and then the process returns to the second repetition step S545.

In the Okamoto-Takashima encryption system, the regular matrix X is used as a secret key, thereby realizing a trap door function.

Assume, for example, that an element m of the finite field $F_q$ is set to a plaintext and a vector $mb_1 + r_2b_2 + ...+r_nb_n$ in the vector space V is set to a ciphertext E(m) obtained by encrypting the plaintext m. Assume that $r_i$ (i being an integer not less than 2 and notmore than n) is set to an element uniform randomly selected from the finite field $F_q$. When performing decryption, the vector decomposition process S540 is performed to calculate a vector $mb_1$ in the vector space V from the ciphertext E(m), using the regular matrix X that is the secret key, thereby erasing $r_i$, which is a randomization element.

Fig. 12 is a detailed block diagram showing an example of a configuration of the key generation unit 401 in this embodiment.

The key generation unit 401 of the decryption apparatus 103 includes a group determination unit 421, a canonical base setting unit 422, a random number generation unit 423, a determinant calculation unit 424, a regular matrix setting unit 425, and a random base calculation unit 426, for example.

Using the processing device 911, the group determination unit 421 generates the prime number q, based on the size (number of bits) defined according to the security level. The larger the prime number q is, the higher safety is obtained. However, the ciphertext size increases, so that it takes time to perform encryption processing and decryption processing. The size of the prime number q is 200 bits, 1024 bits, or the like, for example. The group determination unit 421 determines the finite group G and the finite group $G_T$ based on the generated prime number q. Each of the finite group G and the finite group $G_T$ determined by the group determination unit 421 has the order of q, and the finite group G and the finite group $G_T$ have the pairing e: $G \times G \rightarrow G_T$. The group determination unit 421 calculates a generator element g of the finite group G. The order of setting may be different. It may be so configured, for example, that the finite group G is first determined, the order of the finite group G is calculated, and then it is determined whether the order of the finite group G is the prime number having a size that satisfies the security level.

Using the processing device 911, the canonical base setting unit 422 sets the vector space V of n dimensions, based on a dimension n defined according to the security level, thereby setting the canonical base A of the vector space V. The larger the dimension n is, the higher security is provided. However, the ciphertext size increases, so that it takes time to perform encryption processing and decryption processing. The dimension n is, for example, 3 or the like.

Using the processing device 911, the random number generation unit 423 generates $n^2$ pieces of random numbers $\chi_{i,j}$ (each of i and j being each integer not less than 1 and not more than n) based on the order q of the finite group G determined by the group determination unit 421. The random numbers $\chi_{i,j}$ generated by the random number generation unit 423 are integers uniform randomly selected from among integers not less than 0 and less than q.

Using the processing device 911, the determinant calculation unit 424 generates the square matrix X of n dimensions based on the $n^2$ pieces of random numbers $\chi_{i,j}$ generated by the random number generation unit 423. The square matrix X generated by the determinant calculation unit 424 is a matrix of i rows and j columns each having elements of the random numbers $\chi_{i,j}$. The determinant calculation unit 424 calculates a determinant |X| of the generated square matrix X, using the processing device 911.

When the determinant |X| calculated by the determinant calculation unit 424 is not 0, the regular matrix setting unit 425 sets the square matrix X generated by the determinant calculation unit 424 to a regular matrix X, using the processing device 911.

Using the processing device 911, the random base calculation unit 426 calculates the random base B based on the canonical base A set by the canonical base setting unit 422 and the regular matrix X set by the regular matrix setting unit 425. Each vector $b_i$ (i being each integer not less than 1 and not more than n) of the random base B calculated by the random base calculation unit 426 is given by $b_i = \sum_j[\chi_{i,j}a_j]$ (j being each integer not less than 1 and not more than n). The random base calculation unit 426 calculates the ith vector $b_i$ of the random base B in the following manner, for example. The random base calculation unit 426 calculates a vector $\chi_{i,j}a_j$ obtained by scalar multiplying the vector $a_j$ by $\chi_{j,i}$; in the vector space V for each integer j not less than 1 and not more than n, based on the element $\chi_{i,j}$ in the ith row and the jth column of the regular matrix X and the jth vector $a_j$ of the canonical base A. The random base calculation unit 426 calculates a vector $\Sigma_j[\chi_{i,\ j}a_j]$ obtained by combining calculated n vectors $\chi_{i,\ j}a_j$, by addition in the vector space V.

The public key storage unit 403 of the decryption apparatus 103 stores as the public key pk, a set (q, V, e, $G_T$, A, and B) of the order q, the pairing e, and the finite group $G_T$ set by the group setting unit 421, the vector space V and the canonical base A set by the canonical base setting unit 422, and the random base B set by the random base calculation unit 426.

Using the storage device 914, the secret key storage unit 413 of the decryption apparatus 103 stores the regular matrix X set by the regular matrix setting unit 425, as the secret key sk.

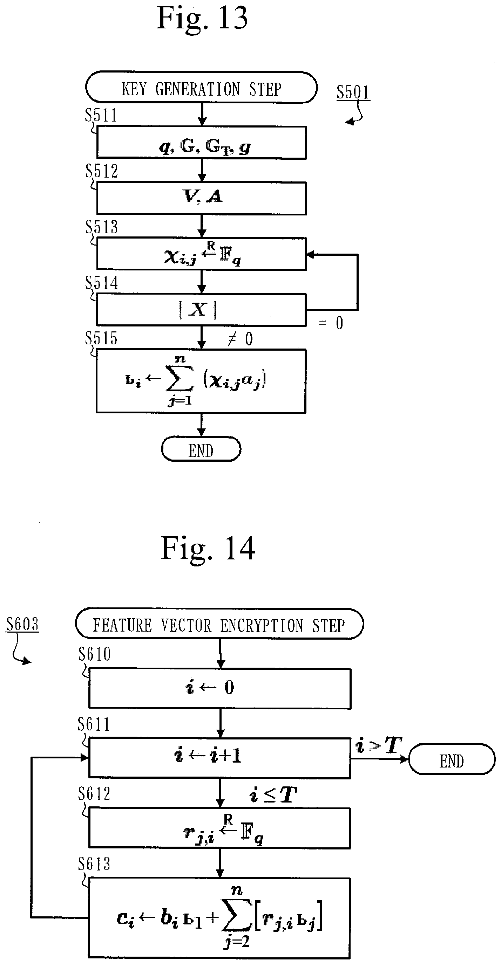

Fig. 13 is a flow chart diagram showing an example of a flow of processes of the key generation step S501 in this aspect.

In the key generation step S501, the decryption apparatus 103 generates a set of the public key pk and the secret key sk. It may be so configured that a different set of the public key pk and the secret key sk is generated for each user. Alternatively, one set of the public key pk and the secret key sk may be generated for the overall system.

The key generation step S501 includes a group determination step S511, a canonical base setting step S512, a matrix generation step S513, a regular matrix determination step S514, and a random base calculation step S515, for example.

First, in the group determination step S511, the group determination unit 421 determines the order q, the finite group G and the finite group $G_T$ each having the order q, and the generator element g of the finite group G, using the processing device 911. The public key storage unit 403 stores the order q and the finite group $G_T$ determined by the group determination unit 421, as a part of the public key pk, using the storage device 914.

In the canonical base setting step S512, the canonical base setting unit 422 sets the vector space V and the canonical base A of the vector space V, based on the finite group G determined by the group determination unit 421 in the group determination step S511, using the processing device 911. The public key storage unit 403 stores the vector space V and the canonical base A set by the canonical base setting unit 422, as a part of the public key pk, using the storage device 914.

In the matrix generation step S513, the random number generation unit 423 generates the $n^2$ random numbers $\chi_{i,\ j}$, using the processing device 911. The determinant calculation unit 424 generates the n-dimensional square matrix X, based on the $n^2$ random numbers $\chi_{i,\ j}$, generated by the random number generation unit 423.

In the regular matrix determination step S514, the determinant calculation unit 424 calculates the determinant |X| of the square matrix X generated in the matrix generation step S513, using the processing device 911.

When the determinant |X| calculated by the matrix calculation unit 424 is 0, the determinant calculation unit 424 causes the process to return to the matrix generation step S513, and the random number generation unit 423 generates random numbers again.

When the determinant |X| calculated by the matrix calculation unit 424 is not 0, the regular matrix setting unit 425 sets the square matrix X as the regular matrix X, using the processing device 911. The secret key storage unit 413 stores the regular matrix X set by the regular matrix setting unit 425 as the secret key sk, using the storage device 914.

In the random base calculation step S515, using the processing device 911, the random base calculation unit 426 calculates the random base B, based on the canonical base A set by the canonical base setting unit 422 in the canonical base setting step S512 and the regular matrix X set by the regular matrix setting unit 425 in the regular matrix determination step S514. Using the storage device 914, the public key storage unit 403 stores the random base B calculated by the random base calculation unit 426, as a part of the public key pk.

The public key pk = (q, V, e, $G_T$, A, B) stored by the public key storage unit 403 in this manner is transmitted to each of the authentication apparatus 102 and the like by the public key transmitting unit 408. Each of the authentication apparatus 102 and the like receives and then stores the transmitted public key.

Fig. 14 is a flow chart diagram showing an example of a flow of processes of the feature vector encryption step S603 in this aspect.

In the feature vector encryption step S603, the registration apparatus 104 encrypts the feature vector b to generate the encrypted feature vector C. The feature vector encryption step S603 includes an initialization step S610, a repetition step S611, a random number generation step S612, and a vector calculation step S613, for example.

The feature vector b formed by the feature vector formation unit 204 of the registration apparatus 104 and then encrypted by the encryption data generation unit 206 is a T-dimensional vector $(b_1, b_2, ..., b_T)$ (T being an integer not less than 1) having components of integers, for example. Each component $b_i$ (i being each integer not less than 1 and not more than T) is one of two values of 0 and 1, for example, and indicates whether or not the biometric information has a feature corresponding to the component. The feature vector formation unit 204 divides an image (indicating biometric information) obtained by applying light to the fingerprint to shoot the pattern by the biometric information extraction unit 203 into T regions, and then determines whether or not a feature point (such as an end point or a branch point of the pattern) is present in each of the divided regions, for example. The feature vector formation unit 204 sets 0 or 1 to the feature vector component corresponding to the region. 0 indicates that the feature point exists. 1 indicates that the feature point does not exist

The encrypted feature vector C is a T-dimensional vector $(c_1, c_2, ..., c_T)$ having components of vectors in the vector space V.

First, in the initialization step S610, the encrypted data generation unit 206 initializes the integer i to 0, using the processing device 911.

In the repetition step 611, the encrypted data generation unit 206 adds 1 to the integer i, using the processing device 911. When the integer i is larger than T, the encrypted data generation unit 206 finishes the feature vector encryption step S603. When the integer i is not more than T, the encrypted data generation unit 206 causes the process to proceed to the random number generation step S612 to generate an ith component $c_i$ of the encrypted feature vector C.

In the random number generation step S612, the random number generation unit 205 generates (n - 1) pieces of random numbers $r_{j, i}$ (j being each integer not less than 2 and not more than n), based on the order q which is a part of the public key pk stored by the public key storage unit 202. The random numbers $r_{j, i}$ generated by the random number generation unit 205 are integers uniform randomly selected from among integers not less than 0 and less than q.

In the vector calculation step S613, using the processing device 911, the encrypted data generation unit 206 calculates the ith component $c_i$ of the encrypted feature vector C, based on the random base B which is the part of the public key pk stored by the public key storage unit 202, an ith component $b_i$ of the feature vector b generated by the feature vector formation unit 204, and the (n - 1) pieces of random numbers $r_{j, i}$ generated by the random number generation unit 205 in the random number generation step S612. The ith component $c_i$ of the encrypted feature vector C calculated by the encrypted data generation unit 206 is a vector $b_i b_1 + \sum_j [r_{j,i} b_j]$ (j being each integer not less than 2 and not more than n) obtained by combining a vector $b_i b_1$ and (n - 1) vectors $r_{j,i} b_j$ by addition in the vector space V. The vector $b_i b_1$ is obtained by scalar multiplying a first vector $b_1$ of the random base B by an integer $b_i$ using scalar multiplication in the vector space V. The (n - 1) vectors $r_{j,i} b_j$ are each obtained by scalar multiplying a vector $b_j$ (j being each integer not less than 2 and not more than n) of the second and subsequent vectors of the random base B by the random number $r_{j,i}$ by scalar multiplication in the vector space V. To take an example, the encrypted data generation unit 206 calculates the vector $b_i b_1$ by scalar multiplying the first vector $b_1$ of the random base B by the integer $b_i$ using scalar multiplication in the vector space V, based on the first vector $b_1$ of the random base B and ith component $b_i$ of the feature vector b. Based on a jth vector $b_j$ of the random base B and a (j - 1)th random number $r_{j, i}$ of the (n - 1) pieces of random numbers generated by the random number generation unit 205, the encrypted data generation unit 206 calculates the vector $r_{j,i} b_j$ by scalar multiplying the vector $b_j$ by the random number $r_{j,i}$ by scalar multiplication in the vector space V, for each integer j not less than 2 and not more than n. The encrypted data generation unit 206 calculates the vector $b_i b_1 + \sum_j [r_{j,i} b_j]$ (j being each integer not less than 2 and not more than n) by combining the calculated vector $b_i b_1$ and all of the calculated (n - 1) vectors $r_{j,i} b_j$, by addition in the vector space V.

The encrypted data generation unit 206 causes the process to return to the repetition process S611 to generate the subsequent component of the encrypted feature vector C.

The encrypted feature vector C generated by the encrypted data generation unit 206 in this manner is transmitted to the authentication apparatus 102 by the encrypted data transmitting unit 201. The authentication apparatus 102 receives and then stores the encrypted feature vector C.

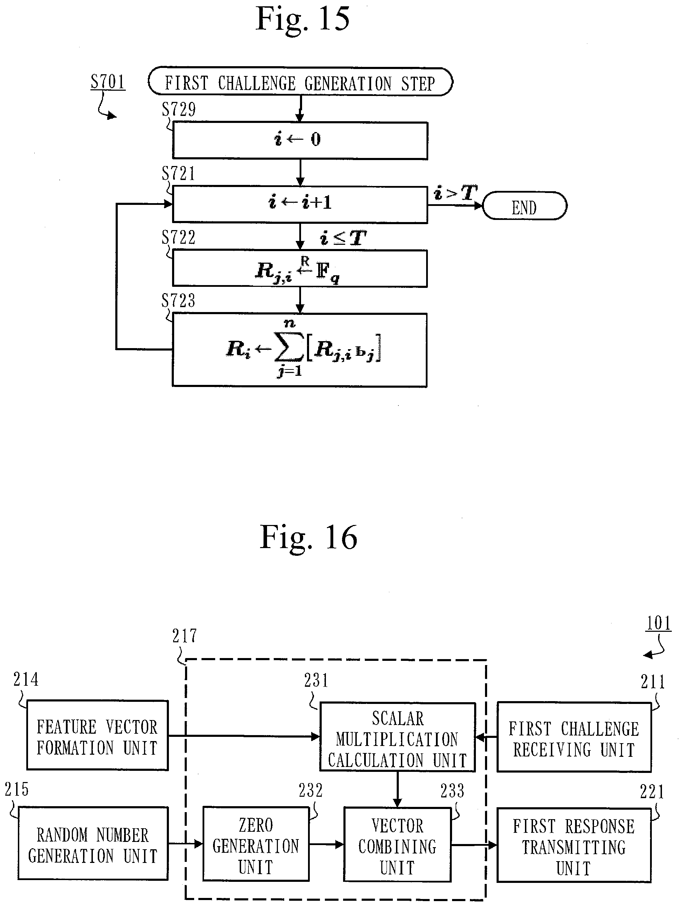

Fig. 15 is a flow chart diagram showing an example of a flow of processes of the first challenge generation step S701 in this aspect.

In the first challenge generation step S701, the authentication apparatus 102 generates a first challenge R. The first challenge generation step S701 includes an initialization step S729, a repetition step S721, a random number generation step S722, and a vector calculation step S723, for example.

The first challenge R generated by the encrypted random number generation unit 304 of the authentication apparatus 102 is a T-dimensional vector $(R_1, R_2, ..., R_T)$ having components of vectors in the vector space V.

First, in the initialization step S729, the encrypted random number generation unit 304 initializes the integer i to 0, using the processing device 911.

In the repetition step S721, the encrypted random number generation unit 304 adds 1 to the integer i, using the processing device 911. When the integer i is larger than T, the encrypted random number generation unit 304 finishes the first challenge generation step S701. When the integer i is not more than T, the encrypted random number generation unit 304 causes the process to proceed to the random generation step S722 to generate an ith component $R_i$ of the first challenge R.

In the random number generation step S722, the random number generation unit 303 generates n pieces of random numbers $R_{j, i}$ (j being each integer not less than 1 and not more than n), based on the order q which is the part of the public key pk stored by the public key storage unit 302. The random numbers $R_{j, i}$ generated by the random number generation unit 303 are integers uniform randomly selected from among integers not less than 0 and less than q. The random number storage unit 322 stores a first random number $R_{1, j}$ of the n pieces of random numbers $R_{j, i}$ generated by the random number generation unit 303, using the storage device 914.

In the vector calculation step S723, using the processing device 911, the encrypted random number generation unit 304 calculates the ith component $R_i$ of the first challenge R, based on the random base B which is the part of the public key pk stored by the public key storage unit 302 and the n pieces of random numbers $R_{j,i}$ generated by the random number generation unit 303 in the random number generation step S722. The ith component $R_i$ of the first challenge R calculated by the encrypted random number generation unit 304 is a vector $\Sigma_j[R_{j,i}b_j]$(j being each integer not less than 1 and not more than n) obtained by combining n vectors $R_{j,i}b_j$ by addition in the vector space V. The n vectors $R_{j,i}b_j$ are each obtained by scalar multiplying each vector $b_j$ (j being each integer not less than 1 and not more than n) by the random number $R_{j,i}$ by scalar multiplication in the vector space C. To take an example, based on the jth vector $b_j$ of the random base B and a jth random number $R_{j,i}$ of the n pieces of random numbers generated by the random number generation unit 205, the encrypted random number generation unit 304 calculates the vector $R_{j,i}b_j$ by scalar multiplying the vector $b_j$ by the random number $R_{j,i}$ by scalar multiplication in the vector space V, for each integer j not less than 1 and not more than n. The encrypted random number generation unit 304 calculates the vector $\Sigma_j[R_{j,i}b_j]$(j being each integer not less than 1 and not more than n) by combining the calculated n vectors $R_{j,i}b_j$ by addition in the vector space V.

The encrypted random number generation unit 304 causes the process to return to the repetition process S721 to generate the subsequent component of the first challenge R.

The first challenge R generated by the encrypted random number generation unit 304 in this manner is transmitted to the certification apparatus 101 by the first challenge transmitting unit 311. The certification apparatus 101 receives and then stores the first challenge R.

The number of the random numbers $R_{j,i}$ (i being each integer not less than 1 and not more than T. j being each integer not less than 1 and not more than n) generated by the random number generation unit 303 in the first challenge generation step S701 is nT in total. Out of these nT pieces of random numbers, T pieces of random numbers $R_{1,i}$ (i being each integer not less than 1 and not more than T) are stored by the random number storage unit 322. The T pieces of random numbers $R_{1,i}$ stored by the random number storage unit 322 are random numbers as plaintexts, and the remaining (n - 1) T pieces of random numbers $R_{j,i}$ (i being each integer not less than 1 and not more than T. j being each integer not less than 2 and not more than n) are random numbers for encryption. Each component $R_i$ of the first challenge R is obtained by encrypting the random number $R_{1,i}$ as a plaintext.

Fig. 16 is a detailed block diagram showing an example of a configuration of the encrypted data embedding unit 217 in this aspect.

The encrypted data embedding unit 217 of the certification apparatus 101 includes a scalar multiplication calculation unit 231, zero generation unit 232, and a vector combining unit 233, for example.

The feature vector b' generated by the feature vector formation unit 314 and encrypted by the encrypted data embedding unit 217 is a T-dimensional vector ($b'_1$, $b'_2$, ..., $b'_T$) having components of integers, like the feature vector b generated by the feature vector formation unit 204 of the registration apparatus 104.

Using the processing device 911, the random number generation unit 215 generates (n - 1) T pieces of random numbers $R'_{j,i}$ (i being each integer not less than 1 and not more than T, j being each integer not less than 2 and not more than n) based on the order q which is the part of the public key pk stored by the public key storage unit 212. The random numbers $R'_{j,i}$ generated by the random number generation unit 215 are integers random uniformly selected from among integers not less than 0 and less than q.

Using the processing device 911, the scalar multiplication calculation unit 231 calculates a scalar multiplication vector $\mathcal{A}$ based on the first challenge R received by the first challenge receiving unit 211 and the feature vector b' formed by the feature vector formation unit 214. The scalar multiplication vector is a T-dimensional vector having components of vectors ($\mathcal{A}_1$, $\mathcal{A}_2$, ..., $\mathcal{A}_T$) in the vector space V, like the first challenge R. An ith component $\mathcal{A}_i$ (i being the integer not less than 1 and not more than T) of the scalar multiplication vector calculated by the scalar multiplication calculation unit 231 is a vector $b'_iR_i$ obtained by scalar multiplying the ith component $R_i$ of the first challenge R by an ith component $b'_i$ of the feature vector b' by scalar multiplication in the vector space V. Each component of the scalar multiplication vector $\mathcal{A}$ is obtained by encrypting the product of the component $b'_i$ of the feature vector b' and the random number $R_{1,i}$ as the plaintexts generated by the authentication apparatus 102.

Using the processing device 911, the zero generation unit 232 generates an encrypted zero vector O, based on the random base B which is the part of the public key pk stored by the public key storage unit 202 and the (n - 1) pieces of random numbers $R'_{j,i}$ generated by the random number generation unit 215. The encrypted zero vector O is a T-dimensional vector ($o_1$, $o_2$, ..., $o_T$) having components of vectors in the vector space V. An ith component $o_i$ of the encrypted zero vector O (i being the integer not less than 1 and not more than T) is a vector $\Sigma_j[R'_{j,i}b_j]$(j being each integer not less than 2 and not more than n) obtained by combining (n - 1) vectors $R'_{j,i}b_j$ by addition in the vector space V. The (n - 1) vectors $R'_{j,i}b_i$ are obtained by respectively scalar multiplying second to nth vectors $b'_j$ (j being each integer not less than 2 and not more than n) of the random base B by the random numbers $R'_{j,i}$ by scalar multiplication in the vector space V. Each component of the encrypted zero vector O is obtained by encrypting 0.

Using the processing device 911, the vector combining unit 233 calculates a first response R', based on the scalar multiplication vector $Я$ calculated by the scalar multiplication calculation unit 231 and the encrypted zero vector O generated by the zero generation unit 232. The first response R' is a T-dimensional vector (R'$_1$, R'$_2$, ..., R'$_T$) having components of vectors in the vector space V. An ith component R'$_i$ (i being the integer not less than 1 and not more than T) of the first response R' is a vector obtained by combining the ith component $Я_i$ of the scalar multiplication vector $Я$ and the ith component $o_i$ of the encrypted zero vector O by addition in the vector space V. Each component R'$_i$ of the first response R' is obtained by encrypting the product of the random number $R_{1, j}$ as the plaintext encrypted in the component R$_i$ of the first challenge R and the component b'$_i$ of the feature vector b'.

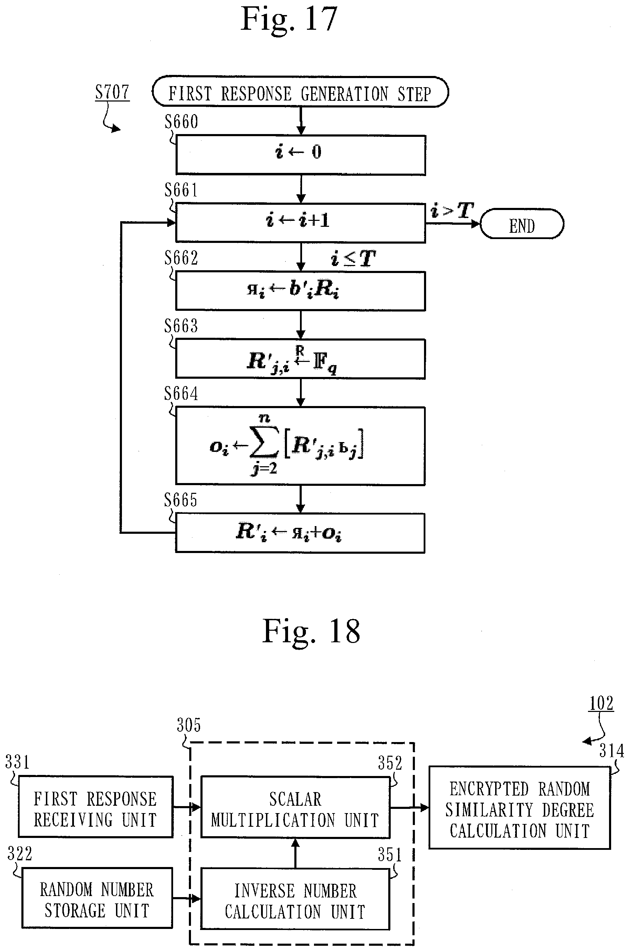

Fig. 17 is a flowchart diagram showing an example of a flow of processes of the first response generation step S707 in this aspect.

In the first response generation step S707, the certification apparatus 101 generates the first response R', based on the feature vector b' and the first challenge R. The first response generation step S707 includes an initialization step S660, a repetition step S661, a scalar multiplication step S662, a random number generation step S663, a zero generation step S664, and a vector combining step S665, for example.

First, in the initialization step S660, the vector combining unit 233 initializes the integer i to 0, using the processing device 911.

In the repetition step 661, the vector combining unit 233 adds 1 to the integer i, using the processing device 911. When the integer i is larger than T, the vector combining unit 233 finishes the first response generation step S707. When the integer i is not more than T, the vector combining unit 233 causes the process to proceed to the scalar multiplication step S662 to generate the ith component R'$_i$ of the first response R'.

In the scalar multiplication step S662, using the processing device 911, the scalar multiplication calculation unit 231 calculates the ith component $Я_i$ of the scalar multiplication vector $Я$, which is expressed by $Я_i = b'_i R_i$, based on the ith component b'$_i$ of the feature vector b' generated by the feature vector formation unit 214 and the ith vector R$_i$ of the first challenge R received by the first challenge receiving unit 211.

In the zero generation step S663, using the processing device 911, the random number generation unit 215 generates (n - 1) pieces of random numbers R'$_{j, i}$ (j being each integer not less than 2 and not more than n).

In the zero generation step S664, using the processing device 911, the zero generation unit 232 calculates the ith component $o_i$ of the encrypted zero vector O, which is expressed by $o_i = \sum_j [R'_{j,i} b_j]$ (j being each integer not less than 2 and not more than n), based on the (n - 1) pieces of random numbers R'$_{j,i}$ generated by the random number generation unit 215 in the random number generation step S663. To take an example, based on the vector b$_j$ of the random base B and the (j - 1)th random number R'$_{j,i}$ of the (n - 1) pieces of random numbers generated by the random number generation unit 215, the zero generation unit 232 calculates the vector R'$_{j,i} b_j$ by scalar multiplying the vector b$_j$ by the random number R'$_{j,i}$ by scalar multiplication in the vector space V, for each integer j not less than 2 and not more than n. The zero generation unit 232 calculates the vector $\sum_j [R'_{j,i} b_j]$ by combining the calculated (n - 1) vectors R'$_{j,i} b_j$ by addition in the vector space V.

In the vector combining step S665, the vector combining unit 233 calculates the ith component R'$_i$ of the first response, which is expressed by

$$ R'_i = Я_i + o_i = b'_i R_i + \sum_j [R'_{j,i} b_j], $$

based on the ith component of the scalar multiplication vector $Я_i$ given by $Я_i = b'_i R_i$ calculated by the scalar multiplication calculation unit 231 in the scalar multiplication step S662 and the ith component $o_i$ of the encrypted zero vector O given by $o_i = \sum_j [R'_{j,i} b_j]$ (j being each integer not less than 2 and not more than n) calculated by the zero generation unit 232 in the zero generation step S664.

The vector combining unit 233 causes the process to return to the repetition process S611 to generate the subsequent component of the first response R'.

The first response R' generated by the encrypted data embedding unit 217 in this manner is transmitted to the authentication apparatus 102 by the first response transmitting unit 221, and the authentication apparatus 102 receives and then processes the first response R'.

When the component b'$_i$ of the feature vector b' takes only one of two values of 1 and 0, processing in the first response generation step S707 may be simplified as follows, for example.

First, there is no need for scalar multiplication. Thus, the scalar multiplication calculation unit 231 is not provided, so that the scalar multiplication step S662 is not executed.

In the vector combining step S665, the vector combining unit 233 determines whether or not the value of the ith component b'$_i$ of the feature vector b' is 0 or 1, using the processing device 911. When the value of the ith component b'$_i$ of the feature vector b' is 0, the vector combining unit 233 sets the ith component $o_i$ of the encrypted zero vector given by $o_i = \sum_j [R'_{j,i} b_j]$ calculated by the zero generation unit 232 in the zero generation step S664 to the ith component R'$_i$ of the first response R', using the processing device 911. When the value of the ith component $b'_i$ of the feature vector $b'$ is 1, the vector combining unit 233 calculates a vector $o_i + R_i = R_i + \sum_j[R'_{j,i}b_j]$ by combining the ith component $o_i$ of the encrypted zero vector O given by $o_i = \sum_j[R'_{j,i}b_j]$ calculated by the zero generation unit 232 in the zero generation step S664 and the ith component $R_i$ of the first challenge R received by the first challenge receiving unit 211 and sets the calculated vector to the ith component $R'_i$ of the first response $R'$.

Since the ith component $R_i$ of the first challenge R is $\sum_j[R_{j,i}b_j]$ (j being each integer not less than 1 and not more than n), the ith component $R'_i$ of the first response $R'$ is expressed by $R'_i = b'_i\sum_k[R_{k,i}b_j] + \sum_j[R'_{j,i}b_j]$ (j being each integer not less than 2 and less than n, and k being each integer not less than 1 and less than n) $= b'_iR_{1,i}b_1 + \sum_j[b'_iR_{j,i} + R'_{j,i})b_j]$ (j being each integer not less than 2 and not more than n). That is, the ith component $R'_i$ of the first response $R'$ is obtained by encrypting the product of the ith component $b'_i$ of the feature vector $b'$ and the random number $R_{1,i}$.

Fig. 18 is a detailed block diagram showing an example of a configuration of the encrypted data extraction unit 305 in this embodiment.

The encrypted data extraction unit 305 of the authentication apparatus 102 includes an inverse number calculation unit 351 and a scalar multiplication calculation unit 352, for example.

The encrypted feature vector $C'$ generated by the encrypted data extraction unit 305 of the authentication apparatus 102 is a T-dimensional vector $(c'_1, c'_2, ..., c'_T)$ having components of vectors in the vector space V, like the encrypted feature vector C generated by the encrypted data generation unit 206 of the registration apparatus 104.

Based on the T pieces of random numbers $R_{1,i}$ (i being each integer not less than 1 and not more than T) stored by the random number storage unit 322, the inverse number calculation unit 351 calculates an inverse element $\kappa_i = R_{1,i}^{-1}$ of each of the T pieces of random numbers $R_{1,i}$, by multiplication on the finite field $F_q$, using the processing device 911. The inverse element $\kappa_i$ is an integer where, when the product of the random number $R_{1,i}$ and the inverse element $\kappa_i$ is divided by q, the remainder is 1. The encrypted data extraction unit 305 calculates the inverse element $\kappa_i$ by computing the reminder by dividing the (q - 2)th power of the random number $R_{1,i}$ by q, for example.

Using the processing device 911, the scalar multiplication calculation unit 352 calculates the encrypted feature vector $C'$, based on the first response $R'$ received by the first response receiving unit 331 and T pieces of the inverse elements $\kappa_i$ calculated by the inverse number calculation unit 351. An ith component $c'_i$ (i being the integer not less than 1 and not more than T) of the encrypted feature vector $C'$ calculated by the scalar multiplication calculation unit 352 is a vector $\kappa_iR'_i$ obtained by scalar multiplying the ith component $R'_i$ of the first

response $R'$ by the ith inverse element $\kappa_i$ by scalar multiplication in the vector space V. Each component $c'_i$ of the encrypted feature vector $C'$ is obtained by encrypting the component $b'_i$ of the feature vector $b'$.

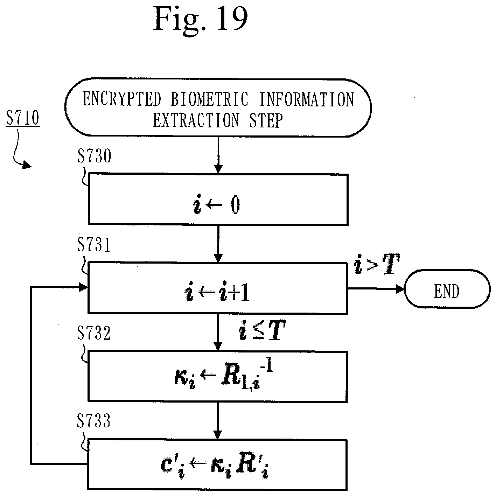

Fig. 19 is a flow chart diagram showing an example of a flow of processes of the encrypted biometric information extraction step S710 in this aspect.

In the encrypted biometric information extraction step S710, the authentication apparatus 102 generates the encrypted feature vector $C'$, based on the first response $R'$. The encrypted biometric information extraction step S710 includes an initialization step S730, a repetition step S731, an inverse number calculation step S732, and a scalar multiplication step S773, for example.

First, in the initialization step S730, using the processing device 911, the scalar multiplication calculation unit 352 initializes the integer i to 0.

In the repetition step S731, the scalar multiplication calculation unit 352 adds 1 to the integer i, using the processing device 911. When the integer i is larger than T, the scalar multiplication calculation unit 352 finishes the encrypted biometric information extraction step S710. When the integer i is not more than T, the scalar multiplication calculation unit 352 causes the process to proceed to the inverse number calculation step S732 to generate the ith component $c'_i$ of the encrypted feature vector $C'$.

In the inverse number calculation step S732, using the processing device 911, the inverse number calculation unit 351 calculates the inverse element $\kappa_i = R_{1,i}^{-1}$ of the ith random number $R_{1,i}$ out of the T pieces of random numbers stored by the random number storage unit 322 in the first challenge generation step S701, based on the random number $R_{1,i}$ and using multiplication on the finite field $F_q$.

In the scalar multiplication step S733, using the processing device 911, the scalar multiplication calculation unit 352 calculates the ith component $c'_i = \kappa_iR'_i$ of the encrypted feature vector $C'$, based on the ith component $R'_i$ of the first response $R'$ received by the first response receiving unit 331 and the inverse element $\kappa_i$ calculated in the inverse number calculation step S732.

The scalar multiplication calculation unit 253 causes the process to return to the repetition step S731 to generate the subsequent component of the encrypted feature vector $C'$.

The encrypted feature vector $C'$ generated by the encrypted data extraction unit 305 in this manner is used in the second challenge generation step S712.

The ith component $R'_i$ of the first response $R'$ is expressed by $R'_i = b'_iR_{1,i}b_1 + \sum[(b'_iR_{j,i} + R'_{j,i}) b_j]$ (j being each integer not less than 2 and not more than n). Thus, the ith component $c'_i$ of the encrypted feature vector $C'$ is given by $c'_i = R_{1,i}^{-1}b'_iR_{1,i}b_1 + R_{1,i}^{-1}\sum[(b'_iR_{j,i} + R'_{j,i})b_j]$ (j being each integer not less than 2 and not more than n). Since $R_{1,i}R_{1,i}^{-1} \equiv 1(\mathrm{mod}\ q)$, $c'_i = b'_ib_1 + R_{1,i}^{-1}\sum[(b'_iR_{j,i} + R'_{j,i})b_j]$ (j being each integer not less than 2 and not more than n) holds. That is, the ith component

$c'_i$ of the encrypted feature vector C' is obtained by encrypting the ith component $b'_i$ of the feature vector b'.

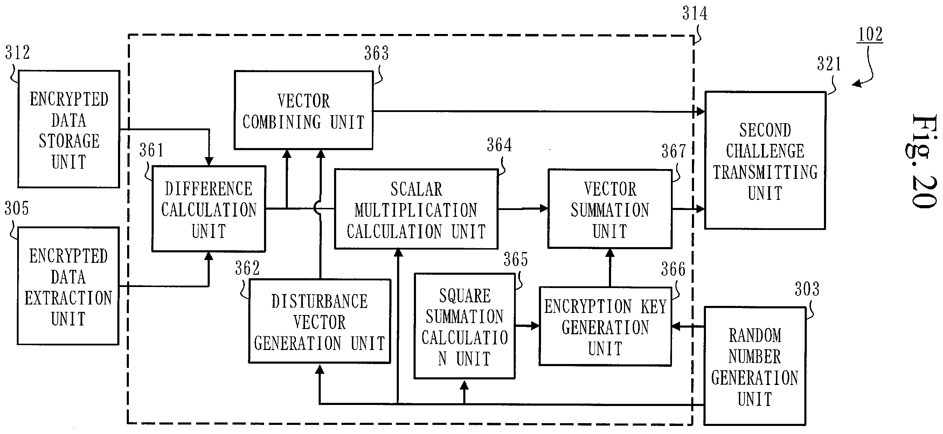

Fig. 20 is a detailed block diagram showing an example of a configuration of the encrypted random similarity degree calculation unit 314 in this aspect.

The encrypted random similarity degree calculation unit 314 of the authentication apparatus 102 includes a difference calculation unit 361, a disturbance vector generation unit 362, a vector combining unit 363, a scalar multiplication calculation unit 364, a square summation calculation unit 365, an encryption key generation unit 366, and a vector summation unit 367, for example.

Using the processing device 911, the random number generation unit 303 generates $n(T + 1)$ pieces of random numbers $t_{j,i}$, and $u_j$ (i being each integer not less than 1 and not more than T, and j being each integer not less than 1 and not more than n), based on the order q which is the part of the public key pk stored by the public key storage unit 302. The random numbers $t_{j,i}$, and $u_j$ generated by the random number generation unit 303 are integers uniform randomly selected from among integers not less than 0 and less than q.

The random number storage unit 322 stores one random number $u_1$ out of the random numbers generated by the random number generation unit 303, using the storage device 914.

Using the processing device 911, the difference calculation unit 361 calculates an encrypted difference vector $\Delta C$, based on the encrypted feature vector C stored by the encrypted data storage unit 312 and the encrypted feature vector C' extracted by the encrypted data extraction unit 305. The encrypted difference vector C is a T-dimensional vector $(\Delta c_1, \Delta c_2, ..., \Delta c_T)$ having components of vectors in the vector space V. An ith component $\Delta c_i$ (i being the integer not less than 1 and not more than T) of the encrypted difference vector C is a vector $c_i - c'_i$ obtained by combining an ith component $c_i$ of the encrypted feature vector C and an inverse vector $-c'_i$ of an ith component $c'_i$ of the encrypted feature vector C' by addition in the vector space V. Each component $\Delta c_i$ of the encrypted difference vector $\Delta C$ is obtained by encrypting a difference $b_i - b'_i$ between the component $b_i$ of the feature vector b and the component $b'_i$ of the feature vector b'.

The ith component $\Delta c_i$ of the encrypted difference vector C may be a vector $c'_i - c_i$ obtained by combining an inverse vector $-c_i$ of the ith component $c_i$ of the encrypted feature vector C and the ith component $c'_i$ of the encrypted feature vector C' by addition in the vector space V. The component $\Delta c_i$ of the encrypted difference vector $\Delta C$ may be a randomly selected one of the vector $c_i - c'_i$ and the vector $c'_i - c_i$.

Using the processing device 911, the disturbance vector generation unit 362 generates a disturbance vector T, based on the random base B which is the part of the public key pk stored by the public key storage unit 302 and nT pieces of random numbers $t_{j,i}$ of the random numbers generated by the random number generation unit 303. The disturbance vector T is a T-dimensional vector $(t_1, t_2, ..., t_T)$ having components of vectors in the vector space V. Each component $t_i$ (i being each integer not less than 1 and not more than T) of the disturbance vector T is a vector $\sum_j [t_{j,i} b_j]$ (j being each integer not less than 1 and not more than n) obtained by combining n vectors $t_{j,i} b_j$ by addition in the vector space V. The n vectors $t_{j,i} b_j$ are each obtained by scalar multiplying each vector $b_j$ (j being each integer not less than 1 and not more than n) of the random base B by the random number $t_{j,i}$, by scalar multiplication in the vector space V. Each component $t_i$ of the disturbance vector T is obtained by encrypting the random number $t_{1, i}$ as a plaintext.

Using the processing device 911, the vector combining unit 363 calculates T vectors $c^\wedge_i$ (i being each integer not less than 1 and not more than T) which are a part of a second challenge $C^\wedge$, based on the encrypted difference vector $\Delta C$ calculated by the difference calculation unit 361 and the disturbance vector T calculated by the disturbance vector generation unit 362. The vectors $c^\wedge_i$ are vectors in the vector space V. The ith vector $c^\wedge_i$ is a vector $\Delta c_i + t_i$ obtained by combining the ith component $\Delta c_i$ of the encrypted difference vector C and the ith component $t_i$ of the disturbance vector T, by addition in the vector space V. The vector $c^\wedge_i$ is obtained by encrypting a sum of $(b_i - b'_i) + t_{1, i}$ of a difference between the component $b_i$ of the feature vector b and the component $b'_i$ of the feature vector b' and the random number $t_{1, i}$ as the plaintext.

Using the processing device 911, the scalar multiplication calculation unit 364 calculates a scalar multiplication vector $\mathbb{C}$, based on the encrypted difference vector $\Delta C$ calculated by the difference calculation unit 361 and the T pieces of random numbers $t_{1,i}$ as the plaintexts out of the random numbers generated by the random number generation unit 303. The scalar multiplication vector is a T-dimensional vector $(\mathbb{C}_1, \mathbb{C}_2, ..., \mathbb{C}_T)$ having components of vectors in the vector space V. The ith component $\mathbb{C}_i$ (i being the integer not less than 1 and not more than T) of the scalar multiplication vector calculated by the scalar multiplication calculation unit 364 is a vector $2t_{1,i} \Delta c_i$ obtained by scalar multiplying the ith component $c_i$ of the encrypted difference vector $\Delta C$ by twice the ith random number $t_{1,i}$ of the T pieces of random numbers as the plaintexts, by scalar multiplication in the vector space V. Each component $\mathbb{C}_i$ of the scalar multiplication vector $\mathbb{C}$ calculated by the scalar multiplication calculation unit 364 is obtained by encrypting a product $2t_{1,i} (b - b')$ of $2t_{1,i}$ and the difference between the component $b_i$ of the feature vector b and the component $b'_i$ of the feature vector b'.

Using the processing device 911, the square summation calculation unit 365 calculates a square sum-

mation $\Sigma$, based on the T pieces of random numbers $T_{1,i}$ as the plaintexts out of the random numbers generated by the random number generation unit 303. The square summation $\Sigma$ is a value $\Sigma_i[t_{1,i}{}^2]$ (i being each integer not less than 1 and not more than T) obtained by summating the squares of the T pieces of random numbers $t_{1,i}$.

Using the processing device 911, the encryption key generation unit 366 calculates an encryption key Ц, based on the random base B which is the part of the public key pk stored by the public key storage unit 302 and the n pieces of random numbers $u_j$ of the random numbers generated by the random number generation unit 303. The encryption key Ц is a vector in the vector space V. The encryption key Ц is a vector $(u_1 + \Sigma)b_1 + \Sigma_j[u_jb_j]$ (j being each integer not less than 1 and not more than n) obtained by combining a vector $(u_1 + \Sigma)b_1$ and (n - 1) vectors $u_jb_j$ by addition in the vector space V. The vector $(u_1 + \Sigma)b_1$ is obtained by scalar multiplying the first vector $b_1$ of the random base B by the sum of the first random number $u_1$ of the n pieces of random numbers $u_1$ and the square summation $\Sigma$, by scalar multiplication in the vector space V. The (n - 1) vectors $u_jb_j$ are obtained by respectively scalar multiplying the second and subsequent vectors $b_j$ (j being each integer not less than 2 and not more than n) of the random base B by the second and subsequent random numbers $u_j$ of the n pieces of random numbers $u_j$, by scalar multiplication in the vector space V. To take an example, the encryption key generation unit 366 calculates a sum $u_1 + \Sigma$ of the random number $u_1$ generated by the random number generation unit 303 and the square summation $\Sigma$ calculated by the square summation calculation unit 365. The encryption key generation unit 366 calculates a vector $(u_1 + \Sigma)b_1$ by scalar multiplying the first vector $b_1$ of the random base B by the calculated sum $u_1 + \Sigma$ by scalar multiplication in the vector space V. The encryption key generation unit 366 calculates the vector $u_jb_j$ by scalar multiplying the ith vector $b_j$ of the random base B by the random number $u_j$ generated by the random number generation unit 303, by scalar multiplication in the vector space V, for each integer j not less than 2 and not more than n. The encryption key generation unit 366 calculates the vector $(u_1 + \Sigma)b_1 + \Sigma_j[u_jb_j]$ (j being each integer not less than 1 and not more than n) by combining the calculated vector $(u_1 + \Sigma)b_1$ and the calculated (n - 1) vectors $u_jb_j$, by addition in the vector space V.

Using the processing device 911, the vector summation unit 367 calculates one vector c^ which is a part of the second challenge C^, based on the scalar multiplication vector C calculated by the scalar multiplication calculation unit 364 and the encryption key Ц calculated by the encryption key generation unit 366. The vector c^ is a vector $\Sigma_i[2t_{1,i} \Delta c_i] + (u_1 + \Sigma)b_1 + \Sigma_j[u_jb_j]$ (i

being each integer not less than 1 and not more than T, and j being each integer not less than 1 and not more than n) by combining the T vectors $\mathbb{C}_i = 2t_{1,i}\Delta c_i$ (i being each integer not less than 1 and not more than T) which are the components of the scalar multiplication vector calculated by the scalar multiplication calculation unit 364 and the encryption key

$$ ц = (u_1 + \Sigma)b_1 + $$

$$ \Sigma_j[u_jb_j] $$

(j being each integer not less than 1 and not more than n). The vector c^ is obtained by encrypting an inclusive sum $u_1 + \Sigma_i[2t_{1,i}(b_i - b'_i) + t_{1,i}{}^2]$ which is the inclusive sum of the random number $u_1$ and a summation of the square of $t_{1,i}$ and the product of $2t_{1,i}$ and the difference between the component $b_i$ of the feature vector b and the component $b'_j$ of the feature vector b'. The random number $u_1$ of these components of the vector c^ is a random number as a temporary key for encrypting and decrypting a similarity degree. $\Sigma_i[2t_{1,i}(b_i - b'_i) + t_{1,i}{}^2]$, which is the component other than the random number $u_1$ is information for removing disturbance by the random numbers $t_{1,i}$ as the plaintexts to enable calculation of an encrypted similarity degree.

The second challenge C^ generated by the encrypted random similarity degree calculation unit 314 is constituted from (T + 1) vectors obtained by combining T vectors $c^_i$ (i being each integer not less than 1 and not more than T) calculated by the vector combining unit 363 and one vector c^ calculated by the vector summation unit 367.

The sequence of the first T vectors $c^_i$ of the second challenge C^ may be different from the sequence of the components of the feature vectors b and b'.

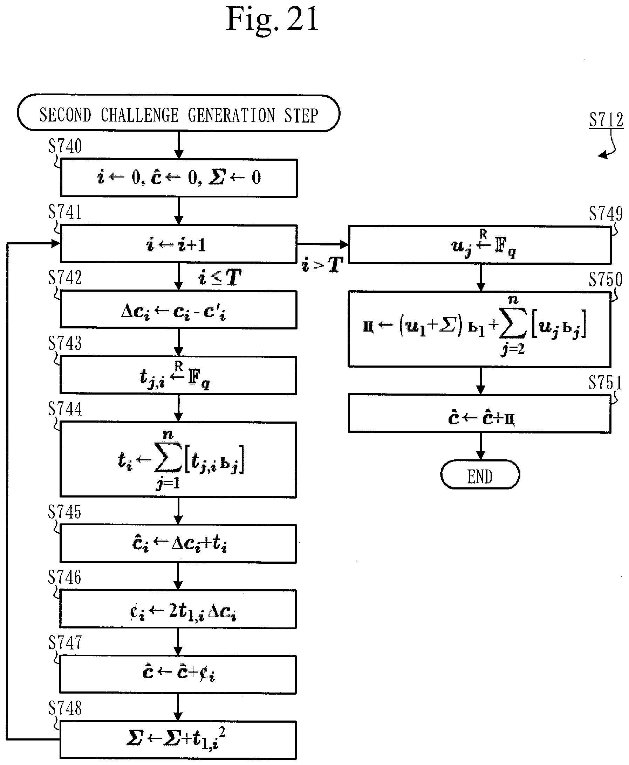

Fig. 21 is a flow chart diagram showing an example of a flow of processes of the second challenge generation step S712 in this aspect.

In the second challenge generation step S712, the authentication apparatus 102 generates the second challenge C^, based on two encrypted feature vectors C and C'. The second challenge generation step S712 includes an initialization step S740, a repetition step S741, a difference calculation step S742, a random number generation step S743, a disturbance vector generation step S744, a vector combining step S745, a scalar multiplication step S746, a vector summation step S747, a square summation step S748, a random number generation step S749, an encryption key generation step S750, and a vector summation step S751, for example.

First, in the initialization step S740, using the processing device 911, the vector combining unit 363 initializes the integer i to 0 and initializes the vector c^ to 0 (zero vector in the vector space V). The square summation calculation unit 365 initializes the square summation $\Sigma$ to 0, using the processing device 911.

In the repetition step S741, using the processing device 911, the vector combining unit 363 adds 1 to the integer i. When the integer i is larger than T, the vector combining unit 363 causes the process to proceed to the random number generation step S749. When the integer i is not more than T, the vector combining unit 363 causes the process to the difference calculation step S742, thereby generating the ith vector $c^{\wedge}_i$ of the second challenge $C^{\wedge}$.

In the difference calculation step S742, using the processing device 911, the difference calculation unit 361 calculates the ith component $\Delta c_i$ of the encrypted difference vector $\Delta C$ based on the ith component $c_i$ of the encrypted feature vector C stored by the encrypted data storage unit 312 and the ith component $c'_i$ of the encrypted feature vector C' extracted by the encrypted data extraction unit 305.

In the random number generation step S743, the random number generation unit 303 generates n pieces of random numbers $t_{j,i}$ (j is the integer not less than 1 and not more than n), using the processing device 911.

In the disturbance vector generation step S744, using the processing device 911, the disturbance vector generation unit 362 calculates the ith component $t_i = \Sigma_j[t_{j,i}b_j]$ (j being each integer not less than 1 and not more than n) of the disturbance T, based on the n pieces of random numbers $t_{j,i}$ generated by the random number generation unit 303 in the random generation step S743.

In the vector combining step S745, using the processing device 911, the vector combining unit 363 calculates an ith vector $c^{\wedge}_i = \Delta c_i + t_i$, based on the ith component of $\Delta c_i$ of the encrypted difference vector $\Delta C$ calculated by the difference calculation unit 361 in the difference calculation step S742 and the ith component $t_i$ of the disturbance vector T calculated by the disturbance vector generation unit 362 in the disturbance vector generation step S744.

When the order of the first T vectors $c^{\wedge}_i$ of the second challenge $C^{\wedge}$ and the order of the components of the feature vectors b and b' are configured to be different, the vector combining unit 363 performs the following operations, for example. The vector combining unit 363 generates a sequence where the integers not less than 1 and not more than T are randomly rearranged, in the initialization step S740. In the vector combining step S745, the vector combining unit 363 obtains an ith integer in that sequence and sets the ith integer to the integer j, and sets the calculated vector $c_i + t_i$ to the j th vector $c^{\wedge}_i$ of the second challenge $C^{\wedge}$.

In the scalar multiplication step S746, using the processing device 911, the scalar multiplication calculation unit 364 calculates the ith component $\mathbb{C}_i = t_{1,i}\Delta c_i$ of

the scalar multiplication vector $\mathbb{C}$, based on the ith component $\Delta c_i$ of the encrypted difference vector C calculated by the difference calculation unit 361 in the difference calculation step S742 and the first random number $t_{1,i}$ of the n pieces of random numbers $t_{j,i}$ generated by the random number generation unit 303 in the random number generation step S743.

In the vector summation step S747, using the processing device 911, the vector summation unit 367 combines the vector $\mathbb{C}_i$ with the vector $c^{\wedge}$, based on the ith component $\mathbb{C}_i = t_{1,i}\Delta c_i$ of the scalar multiplication vector $\mathbb{C}$ calculated by the scalar multiplication calculation unit 364 in the scalar multiplication step S746, by addition in the vector space V.

In the square summation step S748, using the processing device 911, based on the first $t_{1,i}$ of the n pieces of random numbers $t_{j,i}$ generated by the random number generation unit 303 in the random number generation step S743, the square summation calculation unit 365 calculates the square $t_{1,i}^2$ of the random number $t_{1,i}$ by multiplication on the finite field $F_{q,}$. Then, the square summation calculation unit 365 combines the calculated square $t_{1,i}^2$ with the square summation $\Sigma$, by addition on the finite filed $F_q$.

The vector combining unit 363 causes the process to return to the repetition step S741 to generate the subsequent vector of the second challenge C'.

In the random number generation step S749, using the processing device 911, the random number generation unit 303 generates the n pieces of random numbers $u_j$ (j being each integer not less than 1 and not more than n). The random number storage unit 322 stores the random number $u_1$ which is the random number out of the n pieces of random numbers generated by the random number generation unit 303, as the temporary key.

In the encryption key generation step S750, using the processing device 911, the encryption key generation unit 366 generates the encryption key $Ц$, based on the square summation $\Sigma$ summated by the square summation calculation unit 365 in the square summation step S748 and the n pieces of random numbers $u_j$ generated by the random number generation unit 303 in the random number generation step S749.

In the vector summation step S751, using the processing device 911, the vector summation unit 367 combines the encryption key u with the vector $c^{\wedge}$ by addition in the vector space V, based on the encryption key $Ц$ generated by the encryption key generation unit 366 in the encryption key generation step S750. With this arrangement, the (T + 1)th vector $c^{\wedge}$ of the second challenge $C^{\wedge}$ is completed, and the second challenge $C^{\wedge}$ is also completed.

The second challenge $C^{\wedge}$ calculated by the en-

crypted random similarity degree calculation unit 314 in this manner is transmitted to the decryption apparatus 103 by the second challenge transmitting unit 321, and the decryption apparatus 103 receives and then processes the transmitted second challenge $C^\wedge$.

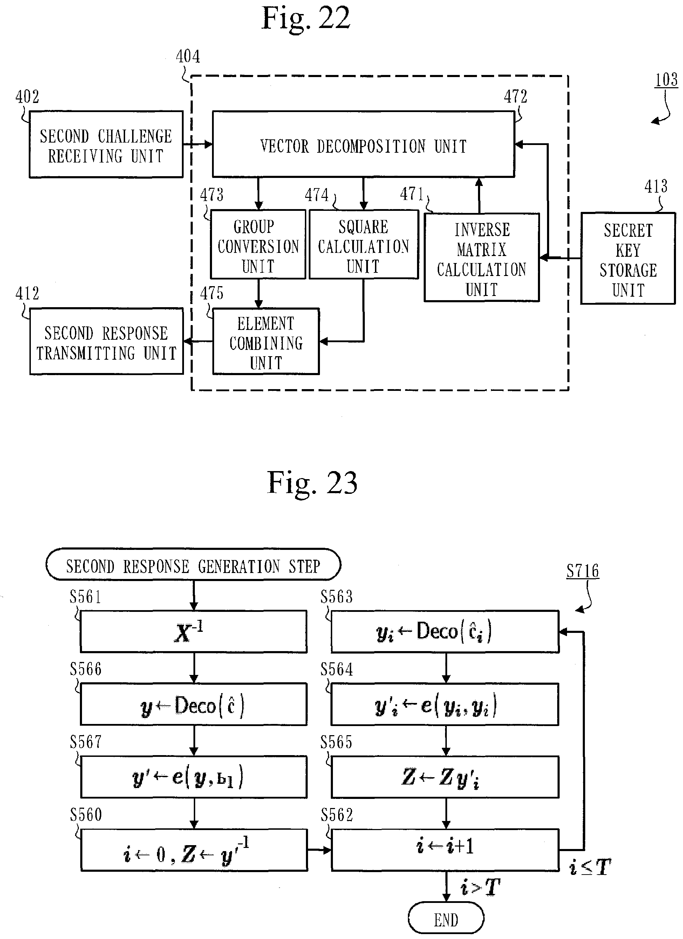

Fig. 22 is a detailed block diagram of a configuration of the decryption apparatus 404 in this aspect.

The decryption unit 404 of the decryption apparatus 103 includes an inverse matrix calculation unit 471, a vector decomposition unit 472, a square calculation unit 473, a group conversion unit 474, and an element combining unit 475, for example.

Using the processing device 911, the inverse matrix calculation unit 471 calculates the inverse matrix $X^{-1}$ of the regular matrix X in the finite field $F_q$, based on the order q which is the part of the public key pk stored by the public key storage unit 403 and the regular matrix X which is the secret key sk stored by the secret key storage unit 413.

Using the processing device 911, the vector decomposition unit 472 calculates (T + 1) decryption vectors $y_i$ and y (i being each integer not less than 1 and not more than T), based on the regular mateix X which is the secret key sk stored by the secret key storage unit 413, the second challenge $C^\wedge$ received by the second challenge receiving unit 402, and the inverse matrix $X^{-1}$ calcualted by the inverse matrix calculation unit 471. The decryption vectors $y_i$ and y are vectors in the vector space. An ith decryption vector $y_i$ (i being the integer not less than 1 and not more than T) is a vector obtained by decomposing the ith vector $c^\wedge_i$ of the second challenge $C^\wedge$ into a linear combination of the random base B, and then removing a component applied to each of the second and subsequent vectors $b_j$ (j being each integer not less than 2 and not more than n) to be the vector scalar multiplied by the first vector $b_1$ of the random base B. The decryption vector y is a vector obtained by decomposing the (T + 1)th vector $c^\wedge$ of the second challenge $C^\wedge$ into a linear combination of the random base B, and then removing a component applied to each of the second and subsequent vectors $b_j$ (j being each integer not less than 2 and not more than n) to be the vector scalar multiplied by the first vector $b_1$ of the random base B. The vector decomposition unit 472 calculates the decryption vectors $y_i$ and y by the vector decomposition process S540 shown in Fig. 11, for example. Since the ith vector $c^\wedge_i$ (i being the integer not less than 1 and not more than T) of the second challenge $C^\wedge$ is $\Delta c_i + t_i$, the ith decryption vector $y_i$ becomes $(b_i - b'_i + t_{1,i})b_1$. Since the (T + 1)th vector $c^\wedge$ of the second challenge $C^\wedge$ is $\sum_i[2t_{1,i}\Delta c_i] + (\sum_i[t_{1,i}^2])b_1 + \sum_j[u_jb_j]$ (i being each integer not less than 1 and not more than T, and j being each integer not less than 1 and not more than n), the decryption vector y becomes $(u_j + \sum_i[2t_{1,i}(b_i - b'_i) + t_{1,i}^2])b_1$.

Using the processing device 911, the square calculation unit 473 calculates T pieces of square elements $y'_i$ (i being each integer not less than 1 and not more than T), based on the pairing e which is a part of the public key pk stored by the public key storage unit 403 and the T decryption vectors $y_i$ calculated by the vector decomposition unit 472. The square elements $y'_i$ are elements of the finite group $G_T$. The ith square element $y'_i$ (i being the integer not less than 1 and not more than T) is an element $e(y_i, y_i)$ obtained by translation of a set of the ith decryption vectors $y_i$ by the pairing e. Since the ith decryption vector $y_i$ is $(b_i - b'_i + t_{1,i})b_1$, the ith square element $y'_i$ is an element obtained by exponentiating the element $e(b_1, b_1)$ of the finite group $G_T$ by the square of $(b_i - b'_i + t_{1,i})$, by exponentiation on the finite group $G_T$, due to bilinearity of the pairing e. The element $e(b_1, b_1)$ of the finite group $G_T$ is obtained by translation of a set of the first vectors $b_1$ of the random base B by the pairing e.

Using the processing device 911, the group conversion unit 474 calculates a translation element y', based on the pairing e and the random base B which are the parts of the public key pk stored by the public key storage unit 403 and decryption vector y calculated by the vector decomposition unit 472. The translation element y' is an element of the finite group $G_T$. The translation element y' is an element $e(y, b_1)$ obtained by translation of a set of the decryption vector y and the first vector $b_1$ of the random base B by the pairing e. The decryption vector y is expressed by $(u_1 + \sum_i[2t_{1,i}(b_i - b'_i) + t_{1,i}^2])b_1$. Thus, the translation element y' is an element obtained by exponentiating the element $e(b_1, b_1)$ of the finite group $G_T$ by $(u_1 + \sum_i[2t_{1,i}(b_i - b'_i) + t_{1,i}^2])$ (i being each integer not less than 1 and not more than T) by exponentiation in the unite group $G_T$, due to binearlity of the pairing e .

Using the processing device 911, the element combining unit 475 calculates a second response Z based on the finite group $G_T$ which is a part of the public key pk stored by the public key storage unit 403, the T pieces of square elements $y'_i$ calculated by the square calculation unit 473, and the translation element y' calculated by the group conversion unit 474. The second response Z is an element of the finite group $G_T$. The second response Z calculated by the element combining unit 475 is an element obtained by combining the T pieces of square elements $y'_i$ and an inverse element $y'^{-1}$ of the translation element y' by multiplication on the finite group $G_T$. The second response Z is an element obtained by exponentiating the element$(b_1, b_1)$ of the finite group $G_T$ by $(\sum_i[(b_i - b'_i)^2] - u_1)$ (i being each integer not less than 1 and not more than T) by exponentiation on the finite group $G_T$. That is, the second response Z is the one obtained by encrypting the square of the Euclidean distance between the feature vector b and the feature vector b', which is given by $\sum_i[(b_i - b'_i)^2]$, by the random number $u_1$ as the temporary key.

Fig. 23 is a flowchart diagram showing a flow of processes of the second response generation step S716 in this aspect.

In the second response generation step S716, the decryption apparatus 103 generates the second response Z from the second challenge $C^\wedge$. The second

response generation step S716 includes an inverse matrix calculation step S561, a vector decomposition step S566, a group conversion step S567, an initialization step S560, a repetition step S562, a vector decomposition step S563, a square calculation step S564, and an element combining step S565, for example.

First, in the inverse matrix calculation step S561, using the processing device 911, the inverse matrix calculation unit 471 calculates the inverse matrix $X^{-1}$ of the regular matrix X which is the secret key sk stored by the secret key storage unit 413. It may be so configured that, using the processing device 911, the inverse matrix calculation unit 471 calculates the inverse matrix $X^{-1}$ in advance (e.g., in the setup process S500), and stores the calculated inverse matrix $X^{-1}$, using the storage device 914.

In the vector decomposition step S566, using the processing device 911, the vector decomposition unit 472 vector-decomposes the last vector c^ of the second challenge C^ received by the second challenge receiving unit 402, based on the inverse matrix $X^{-1}$ calculated by the inverse matrix calculation unit 471 in the inverse matrix calculation step S561 and the like, thereby calculating the decryption vector y.

In the group conversion step S567, using the processing device 911, the group conversion unit 474 calculates the translation element y', based on the decryption vector y calculated by the vector decomposition unit 472 in the vector decomposition step S566.

In the initialization step S560, using the processing device 911, the element combining unit 475 initializes the integer i to 0, and initializes the second response Z to the inverse element $y'^{-1}$ of the translation element y' by multiplication on the finite group $G_T$.

In the repetition step S562, using the processing device 911, the element combining unit 475 adds 1 to the integer i. When the integer i is larger than T, the second response Z has been completed. Thus, the element combining unit 475 finishes the second response generation step S716. When the integer i is not more than T, the element combining unit 475 causes the process to proceed to the vector decomposition step S563.

In the vector decomposition step S563, using the processing device 911, the vector decomposition unit 472 vector-decomposes the ith vector $c^{\wedge}_i$ of the second challenge C^ received by the second challenge receiving unit 402 based on the inverse matrix $X^{-1}$ calculated by the inverse matrix calculation unit 471 in the inverse matrix calculation step S561, thereby calculating the ith decryption vector $y_i$.

In the square calculation step S564, using the processing device 911, the square calculation unit 473 calculates the ith square element $y'_i = e(y_i, y_i)$, based on the ith decryption vector $y_i$ calculated by the vector decomposition unit 472 in the vector decomposition step S563.

In the element combining step S565, using the processing device 911, the element combining unit 475 combines the ith square element $y'_i$ with the second response Z, by multiplication on the finite group $G_T$, based on the ith square element $y'_i$ calculated by the square calculation unit 473 in the square calculation step S564.

The element combining unit 475 causes the process to return to the repetition step S562 to process the subsequent vector of the second challenge C'.

The second response Z generated by the decryption unit 404 in this manner is transmitted to the authentication apparatus 102 by the second response transmitting unit 412. Then, the authentication apparatus 102 receives and then processes the second response Z.

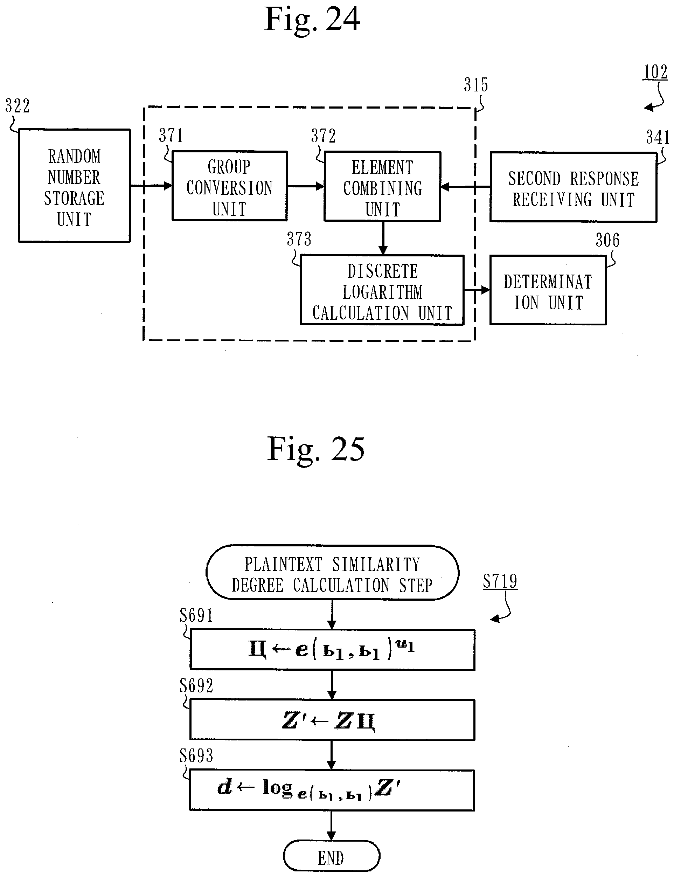

Fig. 24 is a detailed block diagram showing an example of a configuration of the plaintext similarity degree extraction unit 315 in this aspect.

The plaintext similarity degree extraction unit 315 of the authentication apparatus 102 includes a group conversion unit 371, an element combining unit 372, and a discrete logarithm calculation unit 373, for example.

Using the processing device 911, the group conversion unit 371 calculates a decryption key Ц based on the pairing e and the random base B which are the parts of the public key pk stored by the public key storage unit 302 and the random number $u_1$ as the temporary key stored by the random storage unit 322. The decryption key Ц is an element of the finite group $G_T$.

The decryption key Ц calculated by the group conversion unit 371 is an element $e(b_1, b_1)^{u1}$ obtained by expotentiating the element $e(b_1, b_1)$ by the random number $u_1$ by expotentiation on the finite group $G_T$. The element $e(b_1, b_1)^{u1}$ is obtained by translation of the set of the first vectors $b_1$ of the random base B by the pairing e.

Using the processing device 911, the element combining unit 372 calculates a decrypted similarity degree element Z', based on the finite group $G_T$ which is the part of the public key pk stored by the public key storage unit 302, the second response Z received by the second response receiving unit 341, and the decryption key Ц calculated by the group conversion unit 371. The decrypted similarity degree element Z' is an element of the finite group $G_T$. The decrypted similarity degree element Z' is an element obtained by combining the second response Z and the decryption key Ц, by multiplication on the finite group $G_T$. The second response Z is an element obtained by exponentiating the element $e(b_1, b_1)$ of the finite group $G_T$ by $[\sum_i(b_i - b'_i)^2] - u_1)$ (i being each integer not less than 1 and not more than T). Thus, the decrypted similarity degree element Z' is an element obtained by expotentiating the element $e(b_1, b_1)$ of the finite group $G_T$ by $[\sum_i(b_i - b'_i)^2] - u_1)$ (i being each integer not less than 1 and not more than T), using exponentiation on the finite group $G_T$.

Using the processing device 911, the discrete logarithm calculation unit 373 calculates a similarity degree d, based on the pairing e and the random base B which are the parts of the public key pk stored by the public key storage unit 302 and the decrypted similarity degree element Z' calculated by the element combining unit 372. The similarity degree d is an element of the finite field $F_q$. The similarity degree d calculated by the discrete logarithm calculation unit 373 determines to what power the element e $(b_1, b_1)$ of the finite group $G_T$ is raised to be equal to the decrypted similarity degree element Z' by exponentiation on the finite group $G_T$.

Calculation of the similarity degree d from the decrypted similarity degree element Z' by the discrete logarithm calculation unit 373 is to solve a so-called discrete logarithm problem. Thus, it is generally difficult to calculate the similarity degree d. However, when the range of the similarity degree d is limited in advance, it becomes possible to calculate the similarity degree d. To take an example, it should be so arranged that, for each integer d in this range, an element e$(b_1, b_1)^d$ obtained by exponentiating the e$(b_1, b_1)$ by the integer d is calculated in advance, and then, it is determined which integer d causes the element e$(b_1, b_i)^d$ to be equal to the decrypted similarity degree element Z'.

The similarity degree d is the square of the Euclidean distance between the two feature vectors b and b'. Thus, it indicates that the smaller the similarity degree d is, the more the two feature vectors b and b' are similar. To take an example, the determination unit 306 compares the similarity degree d with a predetermined threshold value $d_0$, and then determines that the two feature vectors b and b' are similar when the similarity degree d is smaller than the threshold value $d_0$. For this reason, it is not necessary to know the specific value of the similarity degree d. It should be known whether the similarity degree d is larger or smaller than the threshold value $d_0$.

The threshold value $d_0$ is an integer far smaller than the order q, and is on the order of several hundreds to several ten thousands, for example.

When each component of each of the feature vectors b and b' is 0 or 1, the square of the Euclidean distance between the two feature vectors b and b' becomes an integer not less than 0 and not more than T. In this case, unless the threshold value $d_0$ is an integer smaller than the order T of each feature vector, it is determined that the two feature vectors b and b' are similar in all cases. Thus, the determination using this comparison does not make sense.

It is easy to calculate the element e$(b_1, b_1)^d$ in advance, for each integer d not less than 0 and not more than $d_0$. By doing so, the discrete logarithm unit 373 can calculate the similarity degree d when the similarity degree d is not more than $d_0$. When the similarity degree d is larger than $d_0$, the discrete logarithm unit 373 cannot calculate the similarity degree d, but can determine that the similarity degree d is larger than $d_0$.

Fig. 25 is a flow chart diagram showing an example of a flow of processes of the plaintext similarity degree calculation step S719 in this embodiment.

In the plaintext similarity degree calculation step S719, the authentication apparatus 102 calculates the similarity degree d from the second response Z. The plaintext similarity degree calculation step S719 includes a group conversion step S691, an element combining step S692, and a discrete logarithm calculation step S693, for example.

First, in the group conversion step S691, using the processing device 911, the group conversion unit 371 calculates the decryption key $Ц = e(b_1, b_1)^{u1}$, based on the random number $u_1$ as the temporary key, stored by the random number storage unit 322.

In the element combining step S692, using the processing device 911, the element combining unit 372 calculates the decrypted similarity degree element $Z' = Z Ц$, based on the second response Z received by the second response receiving unit 341 and the decryption key $Ц$ calculated by the group conversion unit 371 in the group conversion step S691.

In the discrete logarithm calculation step S693, using the processing device 911, the discrete logarithm calculation unit 373 calculates the similarity d, based on the decrypted similarity degree element Z' calculated by the element combining unit 372 in the element combining unit 372.

The determination unit 306 determines whether or not the two feature vectors b and b' are similar, based on the similarity degree d calculated by the plaintext similarity degree extraction unit 315, thereby determining whether or not a person having the biometric information represented by the feature vector b and a person having the biometric information represented by the feature vector b' are the same person. As described above, the determination unit 306 determines that the two feature vectors b and b' are similar when the similarity degree d is smaller than the threshold value $d_0$.

As described above, the biometric authentication system 100 calculates the square of the Euclidean distance between the two feature vectors b and b', as the similarity degree between the two feature vectors b and b'. The procedure for calculating the similarity degree is divided into some stages. Then, the authentication apparatus 102 and the decryption apparatus 103 perform calculations in the respective stages, thereby preventing the authentication apparatus 102 from obtaining information on the feature vectors b and b' and preventing the decryption apparatus 103 from obtaining the information on the feature vectors b and b' and information on the similarity degree d.

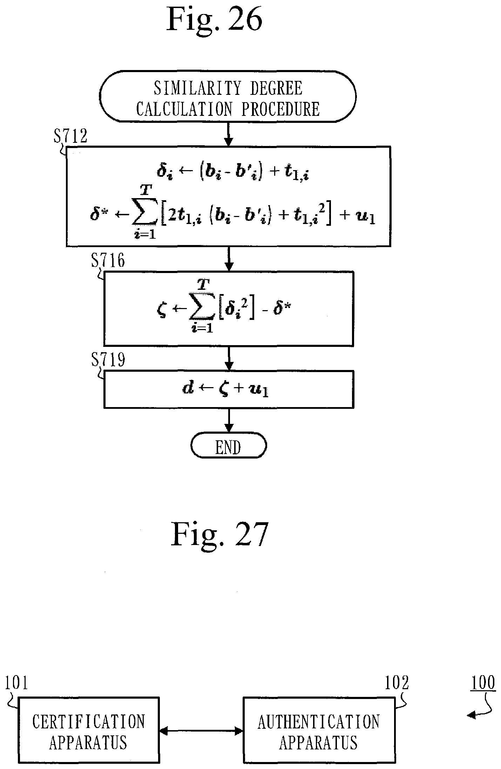

Fig. 26 is a flow chart diagram showing a procedure for calculating a similarity degree in the biometric authentication system 100 in this aspect.

In this diagram, a portion related to the procedure for calculating the similarity degree is extracted from the authentication process S700. $\delta_i$ and $\delta^*$ indicate information encrypted in the second challenge $C^{\wedge}$, and $\xi$ indicates information represented by the second response Z.

As a first stage, the authentication apparatus 102 calculates the second challenge $C^{\wedge}$ from the two encrypted feature vectors C and C', thereby calculating T pieces of $\delta_i = (b_i - b'_i) + t_{1,i}$ (i being each integer not less than 1 and not more than T) and one $\delta^* = \sum_i[2t_{1,i}(b_i - b'_i) + t_{1,i}^2] + u_1$ (i being each integer not less than 1 and less than T). This calculation is performed with the encrypted feature vectors C and C' kept encrypted with the key of the decryption apparatus 103. Thus, the authentication apparatus 102 cannot obtain the information on the feature vectors b and b'.

As a second stage, in the second response generation step S716, the decryption apparatus 103 calculates the second response Z from the second challenge $C^{\wedge}$, thereby calculating $\xi = \sum_i[\delta_i^2] - \delta^*$ (i being each integer not less than 1 and not more than T). This calculation is performed with the second challenge $C^{\wedge}$ decrypted with the secret key sk of the decryption apparatus 103. The decryption apparatus 103 does not know the temporary key $u_1$. Thus, the decryption apparatus 103 cannot obtain the information on the feature vectors b and b' and information on the similarity degree d. That is, this calculation is performed with a result of the decryption encrypted with the temporary key $u_1$.

As a third stage, in the plaintext similarity degree calculation step S719, the authentication apparatus 102 calculates the similarity degree $d = \xi + u_1$ from the second response Z. With this arrangement, the authentication apparatus 102 can obtain the similarity degree d, but cannot obtain the information on the feature vectors b and b'.

In the biometric system 100 (data collation apparatus) in this embodiment, the key generation unit (401) generates the public key and the secret key, based on the key generation system of an additive homomorphic scheme.

A data extraction apparatus (authentication apparatus 102) includes the public key storage unit (302) that holds the public key distributed from the key generation unit; the encrypted data storage unit (312) that stores as encrypted first data (encrypted feature vector C) first data (feature vector b) encrypted with the public key and held by a data processing apparatus (registration apparatus 104) that holds the public key distributed from the key generation unit; the random number generation unit (303) that generates a first random number and a second random number using at least a part of the public key; the random number storage unit (322) that stores the first random number and the second random number; the encrypted random number generation unit (304) that encrypts the first random number, thereby generating the first challenge; the encrypted data extraction unit (305) that calculates, from the first response generated by a data processing apparatus (certification apparatus 101) by an arithmetic operation on second data (feature vector b') using the first challenge, encrypted second data (encrypted feature vector C') that is encryption of second data by processing with the first random number stored in the random number storage unit; the encrypted random similarity degree calculation unit (314) that generates the second challenge using the encrypted second data and the second random number; and the plaintext similarity degree extraction unit (315) that processes the second response using the second random number stored in the random number storage unit to calculate the plaintext similarity degree. The second response is obtained by processing the second challenge by the decryption apparatus or the data processing apparatus, using the secret key stored in the secret key storage unit (413).

The data processing apparatus (certification apparatus 101) includes the encrypted data embedding unit (217) that generates the first response by an arithmetic operation on the second data using the first challenge.

The decryption apparatus (103) or a data processing apparatus includes the key generation unit (401) that generates the public key and the secret key, based on the key generation system of the additive homomorphic scheme; the secret key storage unit (413) that stores the secret key; and the decryption unit (404) that processes the second challenge using the secret key stored in the secret key storage unit, thereby generating the second response.

With this arrangement, even if an attacker holds information (such as a set of the first challenge R and the first response R' and a set of the second challenge $C^{\wedge}$ and the second response Z) being exchanged on the network among the certification apparatus 101, the authentication apparatus 102, the decryption apparatus 103, and the registration apparatus 104, it is difficult for the attacker to spoof an authorized user. That is, information that is critical for spoofing is never leaked from the information being exchanged among the apparatuses.

As a first reason for this prevention of leakage of the critical information for spoofing is that values of the random numbers $R_{1,i}$, and $u_i$ as the plaintexts to be used for the first challenge R and the second challenge $C^{\wedge}$ generated by the authentication apparatus 102, the first response R', and the second response Z change each time authentication is performed. Thus, a replay attack reusing these data without alteration cannot be performed.

As a second reason for this prevention of leakage of the critical information for spoofing is that the Okamoto-Takashima encryption system described in this embodiment, the BGN encryption, and the Paillier encryption have security where a cypertext cannot be identified. For this reason, even if the attacker uses homomorphism, the feature vectors b and b' as plaintexts, the random numbers $R_{1,i}$ and $u_1$ as the plaintexts, and the secret key sk will not leak from the first challenge R and the second challenge C^, and the first response R' and the second response Z respectively corresponding to the first challenge R and the second challenge C^.

A third reason for this prevention of leakage of the critical information for spoofing is that the authentication apparatus 102 generates the first challenge R using the information not known by the certification apparatus 101, and the certification apparatus 101 generates the first response R' using the information not known by the authentication apparatus 102. That is, the authentication apparatus 101 holds the random numbers $R_{1,i}$ used for the first challenge R, and the certification apparatus 101 holds the user feature vector b' as the plaintext. The attacker cannot obtain the feature vector b' and information on the random numbers $R_{1,i}$ as the plaintexts from the first challenge R and the first response R' without knowing these secret information. Further, the authentication apparatus 102 cannot obtain the feature vector b as the plaintext even if the authentication apparatus 102 knows the random numbers $R_{1,i}$. The certification apparatus 101 cannot obtain the information on the random numbers $R_{1,i}$ even if the certification apparatus 101 knows the feature vector b.

A similar relationship holds between the second challenge C^ and the second response Z. The authentication apparatus 102 generates the second challenge C^ using the information not known by the decryption apparatus 103, and the decryption apparatus 103 generates the second response Z using the information not known by the authentication apparatus 102. That is, the authentication apparatus 102 holds the random number $u_1$ used for the second challenge C^, and the decryption apparatus 103 holds the secret key sk. The attacker cannot obtain information on the random number $u_1$ and information on the secret key sk from the second challenge C^ and the second response Z, without knowing these secret information. Further, the authentication apparatus 102 cannot obtain the secret key sk even if the authentication apparatus 102 knows the random number $u_1$. The decryption apparatus 103 cannot obtain the information on the random number $u_1$ even if the decryption apparatus 103 knows the secret key sk.

In the biometric information registration process S600 in this embodiment, each user (registration apparatus 104) transmits the encrypted feature vector C itself to the authentication apparatus 102, and then the authentication apparatus 102 just stores the transmitted encrypted feature vector C. Communication using the feature vector b does not need to be performed. Thus, a trusted registration processing apparatus is not needed.

The random numbers in this aspect are uniformly generated from a random number space. For this reason, there is no correlation among the random numbers, so that there is no possibility that some information leaks from the correlation among the random numbers.

The feature vector b is held in the authentication apparatus 102 in an encrypted state, rather than being held without alteration. For this reason, the risk of the feature b, which is privacy information of the user, being peeped by the manager of the authentication apparatus 102 may be reduced.

Even if the encrypted feature vector C has leaked, the original feature vector b itself does not leak from the authentication apparatus 102. Thus, compared with holding of the feature vector b itself, the time and effort of data management for the authentication apparatus 102 may be reduced.

Further, according to the procedure in this aspect, the decryption apparatus 103 can decrypt only the index value of a random similarity degree. The decryption apparatus 103 cannot decrypt the feature vectors b and b'. Thus, the feature vectors b and b' do not come out during the process of authentication. Thus, biometric authentication with the biometric information kept secret is possible.

According to this aspect, the biometric information is extracted so as to transmit the first response R' from the certification apparatus 101 to the authentication apparatus 102 when authentication is performed. When generation of the first response R' is finished, there is no process using the biometric information as the plaintext. For this reason, the biometric information can be immediately deleted on the certification apparatus 101. Accordingly, an opportunity where the biometric information is stolen from the certification apparatus 101 may be reduced.

The encryption system is not limited to the Okamoto-Takashima encryption system. It may be also so configured that a different additive homomorphic encryption system, such as the BGN encryption system, the Gentry encryption system, or the Paillier encryption system is employed.

The first response R' to be transmitted from the certification apparatus 101 to the authentication apparatus 102 is obtained by encrypting the encrypted feature vector C'. The encrypted feature vector C' is obtained by decrypting the first response R' by the certification apparatus 101. The biometric authentication system 100 may be configured to use a different encryption system for this encryption system used for encryption and decryption. The encryption system in that case may be configured to use a standard public key encryption system rather than the additive homomorphic encryption system.

To take an example, the authentication apparatus 102 generates a set of the public key and the secret key, using the second encryption system, and then transmits the public key to the certification apparatus 101, as the first challenge R. The certification apparatus 101 encrypts the feature vector b' using the public key of the decryption apparatus and according to the first addictive homomorphic encryption system, thereby generating the encrypted feature vector C'. Then, the certification apparatus 101 encrypts the generated encrypted feature vector C' as the first response R', using the public key received from the authentication apparatus 102 as the first challenge R and according to the second encryption system, and transmits the encrypted feature vector C' to the authentication apparatus 102, as the first response R'. The authentication apparatus 102 decrypts the received first response R' using the secret key generated by the authentication apparatus 102 and according to the second encryption system, thereby obtaining the encrypted feature vector C'.

However, when the first challenge R is the public key in the second encryption system and when the encrypted feature vector C' encrypted with that public key is set to the first response R', the first response R' can be generated from the first challenge R and the encrypted feature vector C'. On contrast therewith, in the method described in this embodiment, the first response R' is generated from the first challenge R and the original feature vector b' without alteration. Thus, the first response R' cannot be generated from the first challenge R and the encrypted feature vector C'. For this reason, even if a third party has obtained the encrypted feature vector C transmitted from the registration apparatus 104 to the authentication apparatus 102 in the registration process S600 by eavesdropping of the third party, the third party cannot be authenticated by spoofing the certification apparatus 101.

Second aspect.

A second aspect will be described, using Fig. 27.

Same reference signs are given to components that are common to those in the first aspect, thereby omitting description of the components that are common to those in the first embodiment.

Fig. 27 is a system configuration diagram showing an example of an overall configuration of the biometric authentication system 100 in this aspect.

The biometric authentication system 100 includes the certification apparatus 101 and the authentication apparatus 102. The certification apparatus 101 combines the function of the certification apparatus 101, the function of the decryption apparatus 103, and the function of the registration apparatus 104, all of which have been described in the first aspect.

The certification apparatus 101 generates a set of the public key pk and the secret key sk, discloses the public key pk, and holds the secret key sk in secret. The authentication apparatus 102 performs an encryption process, using the public key pk disclosed by the certification apparatus 101.

The biometric authentication system 100 may include a plurality of the certification apparatuses 101. To take an example, assume that each user to be authenticated by the biometric authentication system 100 has his own certification apparatus 101. The user connects his certification apparatus 101 to a network or the like. The certification apparatus 101 communicates with the authentication apparatus 102 through the network or the like.

The authentication apparatus 102 stores the public key pk of each certification apparatus 101. The authentication apparatus 102 selects the public key pk of the certification apparatus 101 from among the stored public keys pk, based on the ID of the certification apparatus 101 or the ID of the user for which authentication has been demanded, and then performs encryption processing using the selected public key pk.

The public key pk of each certification apparatus 101 is transmitted to the authentication apparatus 102 by the certification apparatus 101 together with the encrypted feature vector C, in the registration process S600, for example. The authentication apparatus 102 then associates and stores the received public key pk and the encrypted feature vector C.

In the authentication process S700, the authentication apparatus 102 generates the first challenge R, based on the public key pk of the certification apparatus 101, and then transmits the first challenge R to the certification apparatus 101. The certification apparatus 101 generates the first response R', based on the public key pk of the certification apparatus 101, the received first challenge R, and the feature vector b', and transmits the first response R' to the authentication apparatus 102. The authentication apparatus 102 generates the encrypted feature vector C', based on the public key pk of the certification apparatus 101 and the received first response R'. The authentication apparatus 102 generates the second challenge C^, based on the public key pk of the certification apparatus 101, the generated encrypted feature vector C', and the encrypted feature vector C stored in the registration process S600, and then transmits the generated second challenge C^ to the certification apparatus 101. The certification apparatus 101 generates the second response Z, based on the secret key sk of the certification apparatus 101 and the received second challenge C^, and transmits the generated second response Z to the authentication apparatus 102. The authentication apparatus 102 calculates the similarity degree d, based on the received second response.

When a third party spoofs the certification apparatus 101, the third party tries to generate the second response Z indicating that the feature vector b and the feature vector b' are similar. The third party, however, does not know the temporary key $u_1$ generated by the certification apparatus 101. Thus, the third party does not know what kind of the second response Z indicates that the feature vector b and the feature vector b' are similar. If the third party has decrypted the second challenge C^ by stealing the secret key of the certification apparatus 101, the third party cannot know the temporary key $u_1$. Thus, the third party cannot generate the second response Z indicating that the feature vector b and the feature vector b' are similar.

Third aspect.

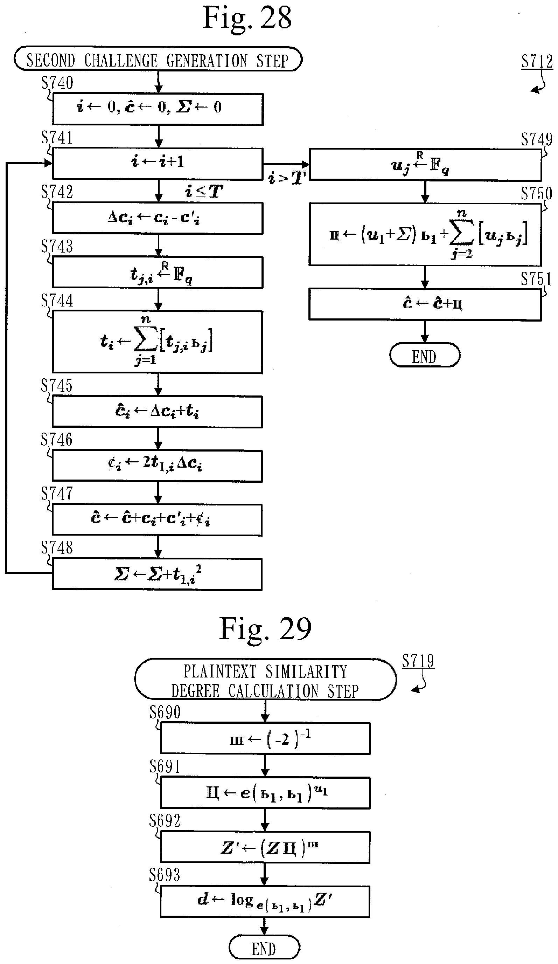

A third aspect will be described using Figs. 28 to 30.

Same reference signs are given to components that are common to those in the first and second aspects, thereby omitting description of the components that are common to those in the first and second embodiments.

In this aspect, the description will be directed to a case where, as the similarity degree d between the two feature vectors b and b', an inner product $\sum_i[b_i b'_i]$ rather than the square of the Euclidean distance $\sum_i[(b_i - b'_i)^2]$ is calculated.

It is assumed that each component of each feature vector has one of two values of 1 and 0.

An overall configuration of the biometric authentication system 100 and inner configurations of the certification apparatus 101, the authentication apparatus 102, the decryption apparatus 103, and the registration apparatus 104 are similar to those described in the first aspect. Thus, only a difference will be explained.

Using the processing device 911, the vector summation unit 367 of the encrypted random similarity degree calculation unit 314 in the authentication apparatus 102 calculates the vector c^, based on the encrypted feature vector C stored by the encrypted data storage unit 312, the encrypted feature vector C' extracted by the encrypted data extraction unit 305, the scalar multiplication vector calculated by the scalar multiplication calculation unit 364, and the encryption key u calculated by the encryption key generation unit 366. The vector c^ is a vector $\sum_i[c_i] + \sum_i[c'_i] + \sum_i[2t_{1,i}\Delta c_i] + (\sum_i[t_{1,i}^2])b_1 + \sum_i[u_j b_j]$ (i being each integer not less than 1 and not more than T, and j being each integer not less than 1 and not more than n) obtained by combining T pieces of components $c_i$ of the encrypted feature vector C, T pieces of components $c'_i$ of the encrypted feature vector C', T pieces of components $2t_{1,i}\Delta c_i$ of the scalar multiplication vector calculated by the scalar multiplication calculation unit 364, and the encryption key

$$ц = (\sum_i[t_{1,i}^2])b_1 + \sum_j[u_j b_j]$$

(i being each integer not less than 1 and not more than T, and j being each integer not less than 1 and not more than n), by addition in the vector space V. The vector c^ is obtained by encrypting $\sum_i[b_i + b'_i + 2t_{1,i}(b_i - b'_i) + 2t_{1,i}^2] + u_1$, due to additive homomorphism of encryption.

Fig. 28 is a flow chart diagram showing an example of a flow of processes of the second challenge generation step S712 in this aspect.

Though the flow of processes of the second challenge generation step S712 is almost the same as that in the first aspect, only the vector summation step S747 is different.

In the vector summation step S747, using the processing device 911 and based on the ith component $c_i$ of the encrypted feature vector C stored by the encrypted data storage unit 312, the ith component $c'_i$ of the encrypted feature vector C' extracted by the encrypted data extraction unit 305, the ith component $\mathbb{C}_i = 2t_{1,i}\Delta c_i$ of the scalar multiplication vector $\mathbb{C}$ calculated by the scalar multiplication calculation unit 364 in the scalar multiplication step S746, the vector summation unit 367 combines the vector $c_i$, the vector $c'_i$, and the vector $\mathbb{C}_i$ with the vector c^ by addition in the vector space V.

Though the decryption unit 404 of the decryption apparatus 103 has the same configuration as that in the first aspect the vector c^ has a different meaning. Thus, the second response Z to be generated by the decryption unit 404 also has a meaning different from that in the first aspect.

That is, the second response Z is an element obtained by exponentiating the element e $(b_1, b_1)$ of the finite group $G_T$ by $(\sum_i[(b_i - b'_i)^2 - (b_i + b'_i)] - u_1)$ (i being each integer not less than 1 and not more than T) by exponentiation on the finite group $G_T$. Since each of $b_i$ and $b'_i$ takes one of values of 0 and 1, $b_i = b_i^2$ and $b'_i = b'_i^2$ constantly hold. Accordingly, the second response Z is the element obtained by exponentiating the element e $(b_1, b_1)$ of the finite group $G_T$ by $(-2\sum_i[b_i b'_i] - u_1)$ (i being each integer not less than 1 and not more than T). That is, the second response Z is the one obtained by encrypting the inner product $\sum_i[b_i b'_i]$ between the feature vector b and the feature vector b' by the random number $u_1$ as the temporary key.

Using the processing device 911, the element combining unit 372 of the plaintext similarity degree extraction unit 315 in the authentication apparatus 102 calculates an inverse element III = $(-2)^{-1}$ of $(-2)$ using multiplication on the finite field $F_q$, based on the order q which is the part of the public key pk stored by the public key storage unit 302. Using the processing device 911, the authentication apparatus 102 calculates the decrypted similarity degree element Z', based on the finite group $G_T$, which is the part of the public key pk stored by the public key storage unit 302, the second response Z received by the second response receiving unit 341, the decryption key $ц = e(b_1, b_1)^{u1}$ calculated by the group conversion unit 371, and the calculated inverse element III. The decrypted similarity degree element Z' is an element $(Zц)^{III}$ obtained by exponentiating an element $Zц$ by the inverse element III by exponentiation on the finite group $G_T$. The element $Zц$ is obtained by combining the second response Z and the decryption key $ц$ by multiplication on the finite group $G_T$. The second response Z is the element obtained by exponentiating the

element e $(b_1, b_1)$ of the finite group $G_T$ by $(-2\sum_i[b_i\ b'_i] -u_1)$ (i being each integer not less than 1 and not more than T) using exponentiation on the finite group $G_T$. Thus, the decrypted similarity degree element Z' is the element obtained by exponentiating the element e $(b_1, b_1)$ of the finite group $G_T$ by $(\sum_i[b_i\ b'_i])$ (i being each integer not less than 1 and more than T) using exponentiation on the finite group $G_T$.

Fig. 29 is a flow chart diagram showing an example of a flow of processes of the plaintext similarity degree calculation step S719 in this aspect.

In addition to the steps described in the first aspect, the plaintext similarity degree calculation step S719 includes an inverse number calculation step S690.

In the inverse number calculation step S690, using the processing device 911, the element combining unit 372 calculates the inverse element III of (-2) using multiplication on the finite field $F_q$. The inverse element III is constant irrespective of the second response Z. Thus, it may be so configured that the inverse element III is calculated in advance.

In the element combining step S692, using the processing device 911, the element combining unit 372 calculates the decrypted similarity degree element Z' = $(Z Ц)^{III}$, based on the second response Z received by the second response receiving unit 341, the inverse element III calculated in the inverse number calculation step S690, and the decryption key Ц calculated by the group calculation unit 371 in the group conversion step S691.

It may also be so configured that, as the decrypted similarity degree element Z', the element combining unit 372 calculates the element $Z Ц$ by combining the second response Z and the decryption key Ц using multiplication on the finite group $G_T$, and that the discrete logarithm calculation unit 373 determines, as the similarity degree d, to what power e $(b_1, b_1)^{-2}$ of the finite group $G_T$ is raised to be equal to the decrypted similarity degree element Z'.

The inner product $\sum_i[b_ib'_i]$ between the two feature vectors b and b' indicates that the larger the inner product $\sum_i[b_ib'_i]$ is, the more similar the two feature vectors b and b' are, to the contrary of the square of the Euclidean distance $\sum_i[(b_i - b'_i)^2]$. For this reason, the determination unit 306 determines that the two feature vectors b and b' are similar when the similarity degree d calculated by the discrete logarithm calculation unit 373 is larger than the predetermined threshold value $d_0$.

Each component of each feature vector takes one of the two values of 0 and 1. Thus, the inner product $\sum_i[b_ib'_i]$ between the two feature vectors b and b' becomes an integer not less than 0 and not more than T. The discrete logarithm calculation unit 373 calculates the element $e(b_1, b_1)^d$ by exponentiating $e(b_1, b_1)$ by the integer d in advance for each integer d not less than $d_0$ and not more than T, for example. The discrete logarithm calculation unit 373 thereby calculates the similarity degree d when the similarity degree d is not less than $d_0$ and not more than T, and determines that the similarity degree d is smaller than $d_0$ when the similarity degree is less than $d_0$. The discrete logarithm calculation unit 373 may also be configured to calculate the similarity degree d when the similarity degree d is not more than $d_0$ and to determine that the similarity degree d is larger than $d_0$ when the similarity degree is larger than $d_0$, as in the first aspect.

With this arrangement, it can be determined whether the two feature vectors b and b' are similar, using the number of matches between feature points as a reference.

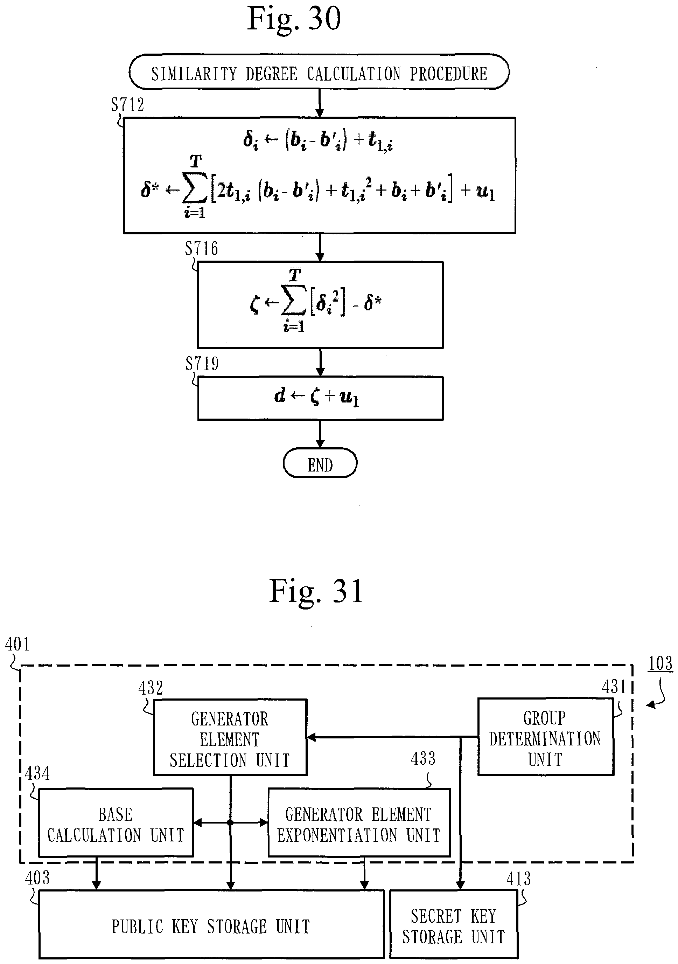

Fig. 30 is a flow chart diagram showing a procedure for calculating a similarity degree in the biometric authentication system 100 in this aspect.

As a first stage, the authentication apparatus 102 calculates the second challenge C^ from the two encrypted feature vectors C and C', thereby calculating T pieces of $\delta_i = (b_i - b'_i) + t_{1,\,i}$ (i being each integer not less than 1 and not more than T) and one $\delta^* = \sum_i[2t_{1,\,i}(b_i - b'_i) + t_{1,\,i}^2 + b_i + b'_i] + u_1$ (i being each integer not less than 1 and not more than T), in the second challenge generation step S712. This calculation is performed with the encrypted feature vectors C and C' kept encrypted with the key of the decryption apparatus 103. Thus, the authentication apparatus 102 cannot obtain information on the feature vectors b and b'.

As a second stage, the decryption apparatus 103 calculates the second response Z from the second challenge C^, thereby calculating $\xi = \sum_i[\delta_i^2] - \delta^*$ (i being each integer not less than 1 and not more than T), in the second response generation step S716. This calculation is performed with the second challenge C^ decrypted with the secret key of the decryption apparatus 103. Since the decryption apparatus 103 does not know the temporary key $u_1$, the decryption apparatus 103 does not obtain the information on the feature vectors b and b' and information on the similarity degree. That is, this calculation is performed with a result of the decyption kept encrypted with the temporary key $u_1$.

As a third stage, the authentication apparatus 102 calculates the similarity degree d = $\xi + u_1$ from the second response Z, in the plaintext similarity degree calculation step S719. With this arrangement, the authentication apparatus 102 can obtain the similarity degree d, but cannot obtain the information on the feature vectors b and b'.

The encryption system is not limited to the Okamoto-Takashima encryption system. It may be so configured that a different additive homomorphic encryption system, such as the BGN encryption system, the Gentry encryption system, or the Paillier encryption system is employed. It may also be so configured that a second encryption system such as the standard public key encryption system is employed for communication between the certification apparatus 101 and the authentication apparatus 102.

As in the second aspect, the biometric authentication system 100 may be so configured that the certification apparatus 101 combines functions as the decryption apparatus 103 and the registration apparatus 104.

As compared with the first aspect, configurations of the certification apparatus 101, the decryption apparatus 103, and the registration apparatus 104 remain unchanged, but only the configuration of the authentication apparatus 102 is different in this aspect. Accordingly, by setting the authentication apparatus 102 to a configuration capable of switching between the configuration described in the first aspect and the configuration described in this aspect, two types of similarity degrees using the Euclidean distance and the inner product may be calculated without altering the other apparatuses in the biometric authentication system 100.

Fourth aspect.

A fourth aspect will be described, using Figs. 31 to 45.

Same reference signs are given to components that are common to those in the first to third aspects, thereby omitting description of the components that are common to those in the first to third aspect.

In this aspect, a description will be directed to a case where the BGN encryption system is employed as the encryption system. The square of the Euclidean distance is used for the similarity degree d, as in the first aspect.

First, the BGN encryption system will be outlined.

Assume that N is the product of two mutually different prime numbers p and q. Assume that G and $G_T$ are finite groups of the order N. A group arithmetic operation on each of the finite group G and the finite group $G_T$ is described as multiplication. Assume that e is a pairing $G \times G \rightarrow G_T$ that maps a set of two elements of the finite group G to an element of the finite group $G_T$. The pairing e satisfies bilinearity and non-degenerateness.

Assume that g and u are elements uniform randomly selected from the generator element of the finite group G. Assume that h is an element of the finite group G, and is an element $u^q$ obtained by exponentiating the element u by the prime number q, using exponentiation on the finite group G.

Each of the finite group G and the finite group $G_T$ is the direct product of the cyclic group of the order p and the cyclic group of the order q. Accordingly, the order of the element h is p.

Assume that x and r are each an integer not less than 0 and less than N. Assume that a product $g^x h^r$ of an element $g^x$ and an element $h^r$ is given. The element $g^x$ is obtained by exponentiating the element g by an integer x using exponentiation on the finite group G, and the element $h^r$ is obtained by exponentiating the element h by an integer r using exponentiation on the finite group G. Then, an element $[g^x h^r]^p$ obtained by exponentiating the product $g^x h^r$ by the prime number p using exponentiation on the finite group G is equal to $[g^x]^p$, because the order of the element h is p.

Assume that a set of the finite group G, the finite group $G_T$, the order N, the pairing e, the element g, and the element h is set to the public key pk, and the prime number p is set to the secret key sk, for example. Then, assume that the integer x not less than 0 and not more than L which is sufficiently smaller than the prime number q is set to a plaintext, and the element $g^x h^r$ of the finite group G is set to a ciphertext E(x) obtained by encrypting the plaintext x. Assume, however, that r is the integer uniform randomly selected from among integers not less than 0 and less than N.

The prime number p, which is the secret key sk, is used for decryption. An element $E(x)^p = [g^x]^p = [g^p]^x$ obtained by exponentiating the ciphertext E(x) by the prime number p is calculated, using exponentiation on the finite group G. When it is known to what power $g^p$ is raised to be equal to $[g^p]^x$, x can be decrypted.

When the integer L is small, this problem of discrete logarithm can be solved, by using Pollard's lambda method, for example. The amount of calculation necessary in that case is proportional to $\sqrt{L}$. Accordingly, when the value of the integer L is set so that the calculation may be performed with a practical amount of calculation, x can be decrypted.

When a ciphertext $E(x_1) = g^{x1} h^{r1}$ of an integer $x_1$ and a ciphertext $E(x_2) = g^{x2} h^{r2}$ of an integer $x_2$ are combined using multiplication on the finite group G, $E(x_1)E(x_2) = g^{x1 + x2} h^{r1 + r2}$ is obtained. Thus, a ciphertext $E(x_1 + x_2)$ for x1 + x2, which is the sum of the integer x1 and the integer x2, is obtained.

The ciphertext E(x) can also be decrypted in a state of being kept encrypted, after having been translated to the finite group $G_T$ using the pairing e. A pairing $e(g^{x1} h^{r1}, g^{x2} h^{r2})$ between the ciphertext $E(x_1)$ of the integer $x_1 = g^{x1} h^{r1}$ and the ciphertext $E(x_2)$ of the integer $x_2 = g^{x2} h^{r2}$ is $e(g, g)^{x1x2} e(g, h)^{x1r2} e(h, g)^{x2r1} e(h, h)^{r1r2}$ due to bilinearity of the paring. Since the order of the element h of the finite group G is p, the order of each of pairings $e(g, h)$, $e(h, g)$, $e(h, h)$, which are elements of the finite group $G_T$, is p. Accordingly, when the pairing $e(E(x_1), E(x_2))$ between the ciphertext $E(x_1)$ and the ciphertext $E(x_2)$ is exponentiated by the prime number p using exponentiation on the finite group $G_T$, $[e(g, g)^p]^{x1x2}$ is obtained. That is, the pairing $e(E(x_1), E(x_2))$ between the ciphertext $E(x_1)$ and the ciphertext $E(x_2)$ is the ciphertext of the product $x_1x_2$ of the integer $x_1$ and the integer $x_2$.

Fig. 31 is a detailed block diagram showing an example of a configuration of the key generation unit 401 in this aspect.

The key generation unit 401 of the decryption apparatus 103 includes a group determination unit 431, a generator element selection unit 432, and a generator element exponentiation unit 433, for example.

Using the processing device 911, the group determination unit 431 generates the two mutually different prime numbers p and q, based on the size (such as 512 bits or 1024 bits) determined according to the security level. The group determination unit 431 calculates the product N = pq between the two generated prime numbers p and q, using the processing device 911. The group determination unit 431 determines the finite group G and the finite group $G_T$, based on the calculated product N, using the processing device 911. The order of each of the finite group G and the finite group $G_T$ is N, and the finite group G and the finite group $G_T$ have the pairing e: $G \times G \rightarrow G_T$.

Using the processing device 911, the generator element selection unit 432 selects the two generator elements g and u of the finite group G, based on the finite group G determined by the group determination unit 431.

Using the processing device 911, the generator element exponentiation unit 433 calculates the element h, based on the prime number q generated by the group determination unit 431 and the generator element u selected by the generator element selection unit 432. The element h is the element $u^q$ obtained by exponentiating the generator element u by the prime number q using exponentiation on the finite group G.

Using the processing device 911, a base calculation unit 434 calculates an element $\pi$, based on the prime number p generated by the group determination unit 431, the paring e, and the generator element g selected by the generator element selection unit 432. The element $\pi$ is an element of the finite group $G_T$. The element $\pi$ is an element $e(g, g)^p$ obtained by exponentiating the element (g, g) by the prime number p using exponentiation on the finite group $G_T$. The element (g, g) is obtained by translation of a set of the generator elements g by the pairing e.

The public key storage unit 403 stores, as the public key pk, a set $(G, G_T, N, e, g, h, \pi)$ of the finite group G, the finite group $G_T$, the product N, the pairing e, the generator element g, the element h, and the element $\pi$, using the storage device 914.

The secret key storage unit 413 stores, as the secret key sk, the prime number p generated by the group determination unit 431, using the storage device 914.

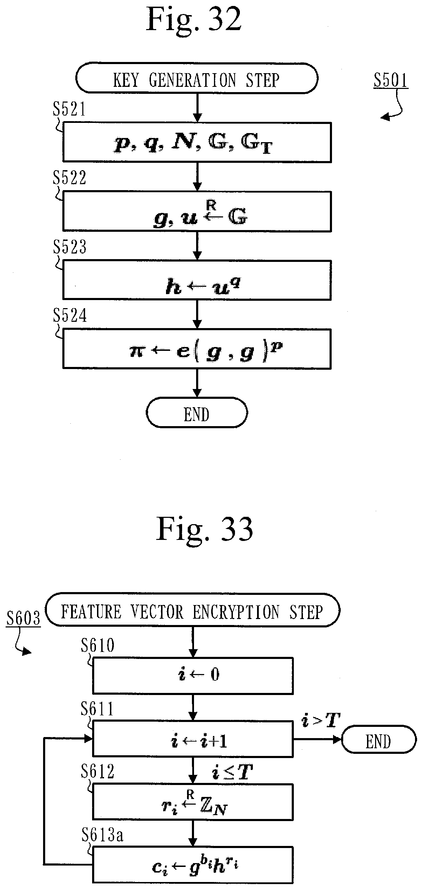

Fig. 32 is a flow chart diagram showing an example of a flow of processes of the key generation step S501 in this aspect.

In the key generation step S501, the decryption apparatus 103 generates a set of the public key pk and the secret key sk. It may also be so configured that a set of the public key pk and the secret key sk which is different for each user is generated. Alternatively, it may be so configured that one set of the public key pk and the secret key sk is generated for the overall system.

The key generation step S501 includes a group determination step S521, a generator element selection step S522, a generator element exponentiation step S523, and a base calculation step S524, for example.

First, in the group determination step S521, using the processing device 911, the group determination unit 431 determines the two prime numbers p and q, the product N, and each of the finite groups G and $G_T$ of the order N. Using the storage device 914, the public key storage unit 403 stores the product N, the finite group G, and the finite group $G_T$, as a part of the public key pk. Using the storage device 914, the secret key storage unit 413 stores the prime number p as the secret key sk.

In the generator element selection step S522, using the processing device 911, the generator element selection unit 432 selects the two generator elements g and u, based on the finite group G determined by the group determination unit 431 in the group determination step S521. The public key storage unit 403 stores the generator element g, as a part of the public key pk, using the storage device 914.

In the generator element exponentiation step S523, using the processing device 911, the generator element exponentiation unit 433 calculates the element $h = u^q$ of the finite group G, based on the prime number q determined by the group determination unit 431 in the group determination step S521 and the generator element u selected by the generator element selection unit 432 in the generator element selection step S522. Using the processing device 911, the public key storage unit 403 stores the element h, as a part of the public key pk.

In the base calculation step S524, using the processing device 911, the base calculation unit 434 calculates the element $\pi = e(g, g)^p$ of the finite group $G_T$, based on the prime number p determined by the group determination unit 431 in the group determination step S521, the pairing e, and the generator element g selected by the generator element selection unit 432 in the generator element selection step S522. Using the processing device 911, the public key storage unit 403 stores the element $\pi$ as a part of the public key pk.

The public key pk = $(G, G_T, N, e, g, h, \pi)$ stored by the public key storage unit 403 in this manner is transmitted to each of the authentication apparatus 102 and the like by the public key transmitting unit 408, and each of the authentication apparatus 102 and the like receives and then stores the public key pk.

Fig. 33 is a flow chart diagram showing an example of a flow of processes of the feature vector encryption step S603 in this aspect.

In the feature vector encryption step S603, the registration apparatus 104 encrypts the feature vector b, thereby generating the encrypted feature vector C. The feature vector encryption step S603 includes the initialization step S610, the repetition step S611, the random number generation step S612, and an element calculation step S613a, for example.

The feature vector b generated by the feature vector formation unit 204 of the registration apparatus 104 is a T-dimensional vector $(b_1, b_2, ..., b_T)$ (T being an integer not less than 1) having components of integers. The encrypted feature vector C generated by the encrypted data generation unit 206 is a T-dimensional vector $(c_1, c_2, ..., c_T)$ having components of elements of the finite group G.

First, in the initialization step S610, using the processing device 911, the encrypted data generation unit 206 initializes the integer i to 0.

In the repetition step S611, using the processing device 911, the encrypted data generation unit 206 adds 1 to the integer i. When the integer i is larger than T, the encrypted data generation unit 206 finishes the feature vector encryption step S603. When the integer i is not more than T, the encrypted data generation unit 206 causes the process to proceed to the random number generation step S612, thereby generating the ith component $c_i$ of the encrypted feature vector C.

In the random number generation step S612, using the processing device 911, the random number generation unit 205 generates a random number $r_i$, based on the order N which is a part of the public key pk stored by the public key storage unit 202. The random number $r_i$ generated by the random number generation unit 205 is an integer uniform randomly selected from among integers not less than 0 and less than N.

In the element calculation step S613a, using the processing device 911, the encrypted data generation unit 206 calculates the ith component $c_i$ of the encrypted feature vector C, based on the generator element g and the element h which are the parts of the public key pk stored by the public key storage unit 202, the ith component $b_i$ of the feature vector b generated by the feature vector formation unit 204, and the random number $r_i$ generated by the feature vector formation unit 204 in the random number generation step S612. The ith component $c_i$ of the encrypted feature vector C calculated by the encrypted data generation unit 206 is an element $g^{b_i}h^{r_i}$ obtained by combining an element $g^{b_i}$ and an element $h^{r_i}$ using multiplication on the finite group G. The element $g^{b_i}$ is obtained by exponentiating the generator element g by an integer $b_i$ using exponentiation on the finite group G. The element $h^{r_i}$ is obtained by exponentiating the element h by the random number $r_i$ using exponentiation on the finite group G.

The encrypted data generation unit 206 causes the process to return to the repetition step S611, thereby generating the subsequent component of the encrypted feature vector C.

The encrypted feature vector C generated by the encrypted data generation unit 206 in this manner is transmitted to the authentication apparatus 102 by the encrypted data transmitting unit 201, and the authentication apparatus 102 receives and then stores the encrypted feature vector C.

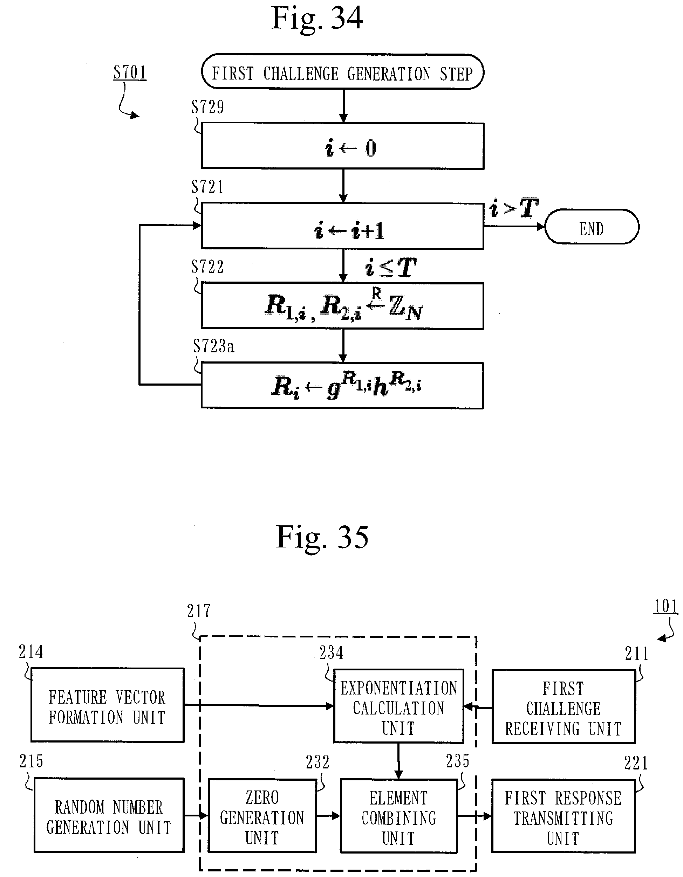

Fig. 34 is a flow chart diagram showing an example of a flow of processes of the first challenge generation step S701 in this aspect.

In the first challenge generation step S701, the authentication apparatus 102 generates the first challenge R. The first challenge generation step S701 includes the initialization step S729, the repetition step S721, the random number generation step S722, and an element calculation step S723a, for example.

The first challenge R generated by the encrypted random number generation unit 304 of the authentication apparatus 102 is a T-dimensional vector $(R_1, R_2, ..., R_T)$ having components of elements of the finite group G.

First, in the initialization step S729, using the processing device 911, the encrypted random number generation unit 304 initializes the integer i to 0.

In the repetition step S721, using the processing device 911, the encrypted random number generation unit 304 adds 1 to the integer i. When the integer i is larger than T, the encrypted random number generation unit 304 finishes the first challenge generation step S701. When the integer i is not more than T, the encrypted random number generation unit 304 causes the process to proceed to the random number generation step S722, thereby generating the ith component $R_i$ of the first challenge R.

In the random number generation step S722, using the processing device 911, the random number generation unit 303 generates two random numbers $R_{1,i}$ and $R_{2,i}$, based on the order N, which is the part of the public key pk stored by the public key storage unit 302. The random numbers $R_{1,i}$ and $R_{2,i}$ generated by the random number generation unit 303 are integers uniform randomly selected from among the integers not less than 0 and less than N. The random number storage unit 322 stores the random number $R_{1,i}$ generated by the random number generation unit 303, using the storage device 914.

In the element calculation step S723a, using the processing device 911, the encrypted random number generation unit 304 calculates the ith component $R_i$ of the first challenge R, based on the generator element g and the element h which are the parts of the public key pk stored by the public key storage unit 302 and the two random numbers $R_{1,i}$ and $R_{2,i}$ generated by the random number generation unit 303 in the random number generation step S722. The ith component $R_i$ of the first challenge R calculated by the encrypted random number generation unit 304 is an element resulting from combination of an element obtained by exponentiating the generator element g by the random number $R_{1,i}$ using exponentiation on the finite group G and an element obtained by exponentiating the element h by the random number $R_{2,i}$ using exponentiation on the finite group G, by multiplication on the finite group G.

The encrypted random number generation unit 304 causes the process to return to the repetition step S721, thereby generating the subsequent component of the first challenge R.

The first challenge R generated by the encrypted random number generation unit 304 in this manner is transmitted to the certification apparatus 101 by the first challenge transmitting unit 311. The certification apparatus 101 receives and then processes the first challenge R.

The number of the random numbers $R_{1,i}$ and $R_{2,i}$ (i being each integer not less than 1 and not more than T) generated by the random number generation unit 303 in the first challenge generation step S701 is 2T in total. T pieces of random numbers $R_{1,i}$ (i being each integer not less than 1 and not more than T) are stored by the random number storage unit 322. The T pieces of random numbers $R_{1,i}$ stored by the random number storage unit 322 are random numbers as plaintexts, and the remaining T pieces of random numbers $R_{2,i}$ (i being each integer not less than 1 and not more than T) are random numbers for encryption. Each component $R_i$ of the first challenge R is obtained by encrypting the random number $R_{1,i}$ as a plaintext.

Fig. 35 is a detailed block diagram showing an example of a configuration of the encrypted data embedding unit 217 in this embodiment.

The encrypted data embedding unit 217 of the certification apparatus 101 includes an exponentiation calculation unit 234, the zero generation unit 232, and an element combining unit 235.

A feature vector b' generated by the feature vector formation unit 214 of the certification apparatus 101 is a T-dimensional vector $(b'_1, b'_2, ..., b'_T)$ having components of integers, like the feature vector b generated by the feature vector formation unit 204 of the registration apparatus 104.

Using the processing device 911, the random number generation unit 215 generates T pieces of random numbers $r'_i$ (i being each integer not less than 1 and not more than T), based on the order N which is the part of the public key pk stored by the public key storage unit 212. The random numbers $r'_i$ generated by the random number generation unit 215 are integers uniform randomly selected from among the integers not less than 1 and less than N.

Using the processing device 911, the exponentiation calculation unit 234 calculates an exponentiation vector $Я$, based on the first challenge R received by the first challenge receiving unit 211 and the feature vector b' generated by the feature vector formation unit 214. The exponentiation vector $Я$ calculated by the exponentiation calculation unit 234 is a T-dimensional vector $(Я_1, Я_2, ..., Я_T)$ having components of elements of the finite group G, like the first challenge R. The ith component $Я_i$ (i being the integer not less than 1 and not more than T) of the exponentiation vector $Я$ calculated by the exponentiation calculation unit 234 is an element $R_i^{b'i}$ obtained by exponentiating the ith component $R_i$ of the first challenge R by the ith component $b'_i$ of the

feature vector b' using exponentiation on the finite group G. Each component $Я_i$ of the exponentiation vector $Я$ calculated by the exponentiation calculation unit 234 is obtained by encrypting the product of the component $b'_i$ of the feature vector b' and the random number $R_{1,i}$ as the plaintext generated by the authentication apparatus 102.

Using the processing device 911, the zero generation unit 232 generates the encrypted zero vector O based on the element h which is the part of the public key pk stored by the public key storage unit 202 and the T pieces of random numbers $r'_i$ generated by the random number generation unit 21. The encrypted zero vector O is a T-dimensional vector $(o_1, o_2, ..., o_T)$ having components of elements of the finite group G. The ith component $o_i$ (i being the integer not less than 1 and not more than T) of the encrypted zero vector O is an element $h^{r'i}$ obtained by exponentiating the element h by the ith random number $r'_i$ using exponentiation on the finite group G.

Using the processing device 911, the element combining unit 235 calculates the first response R', based on the exponentiation vector $Я$ calculated by the exponentiation calculation unit 234 and the encrypted zero vector O generated by the zero generation unit 232. The first response R' is a T-dimensional vector $(R'_1, R'_2, ..., R'_T)$ having components of elements of the finite group G. The ith component $R'_i$ (i being the integer not less than 1 and not more than T) of the first response R' is an element $R_i^{b'i}h^{r'i}$ obtained by combining the ith component $Я_i = R_i^{b'i}$ of the exponentiation vector and the ith component $o_i = h^{r'i}$ of the encrypted zero vector O using multiplication on the finite group G. Each component $R'_i$ of the first response R' is obtained by encrypting the product of the random number $R_{1,i}$ as the plaintext and the component $b'_i$ of the feature vector b'. The random number $R_{1,i}$ is encrypted in the component $R_i$ of the first challenge R.

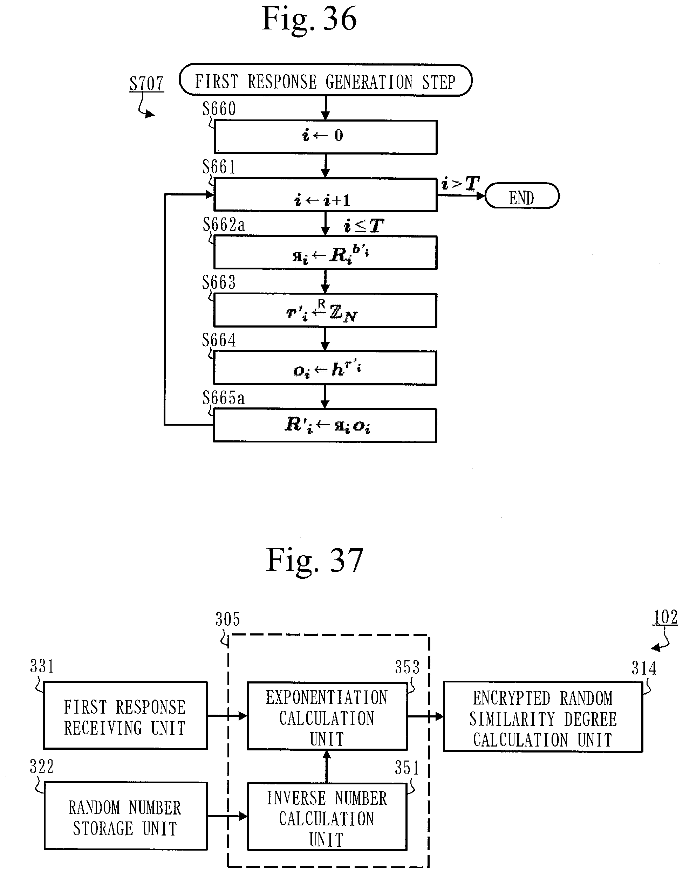

Fig. 36 is a flow chart diagram showing an example of a flow of processes of the first response generation step S707 in this aspect.

In the first response generation step S707, the certification apparatus 101 generates the first response R', based on the feature vector b' and the first challenge R. The first response generation step S707 includes the initialization step S660, the repetition step S661, an exponentiation calculation step S662a, the random number generation step S663, the zero generation step S664, and an element combining step S665a.

First, in the initialization step S660, the element combining unit 235 initializes the integer i to 0, using the processing device 911.

In the repetition step S661, the element combining unit 235 adds 1 to the integer i, using the processing device 911. When the integer i is larger than T, the element combining unit 235 finishes the first response generation step S707. When the integer i is not more than T, the element combining unit 235 causes the process to proceed to the exponentiation calculation step S662a to generate the ith component $R'_i$ of the first response R'.

In the exponentiation calculation step S662a, using the processing device 911, the exponentiation calculation unit 234 calculates the ith component $Я_i = R_i^{b'i}$ of the exponentiation vector $Я$, based on the ith component $b'_i$ of the feature vector b' generated by the feature vector formation unit 214 and the ith vector $R_i$ of the first challenge R received by the first challenge receiving unit 211.

In the random number generation step S663, the random number generation unit 215 generates the random number $r'_i$, using the processing device 911.

In the zero generation step S664, using the processing device 911, the zero generation unit 232 calculates the ith component $o_i = h^{r'i}$ of the encrypted zero vector O, based on the random number $r'_i$ generated by the random number generation unit 215 in the random number generation step S663.

In the element combining step S665a, using the processing device 911, the element combining unit 235 calculates the ith component $R'_i = Я_i O_i$, based on the ith component $Я_i$ of the exponentiation vector $Я$ calculated by the exponentiation calculation unit 234 in the exponentiation calculation step S662a and the ith component $o_i$ of the encrypted zero vector O calculated by the zero generation unit 232 in the zero generation step S664.

The element combining unit 235 causes the process to return to the repetition step S661 to generate the subsequent component of the first response R'.

The first response R' generated by the encrypted data embedding unit 217 in this manner is transmitted to the authentication apparatus 102 by the first response transmitting unit 221. The authentication apparatus 102 receives and then processes the first response R'.

When the component $b'_i$ of the feature vector b' takes only one of two values of 0 and 1, the processes of the first response generation step S707 can be simplified, as follows, for example.

First, there is no need for exponentiation, so that the exponentiation calculation unit 234 is not provided, and the exponentiation calculation step S662a is not executed.

Using the processing device 911, the element combining unit 235 determines whether or not the ith component $b'_i$ of the feature vector b' is 0 or 1, in the element combining step S665a. When the ith component $b'_i$ of the feature vector b' is 0, the element combining unit 235 sets the ith component $o_i = h^{r'i}$ of the encrypted zero vector O calculated by the zero generation unit 232 in the zero generation step S664 to the ith component

$R'_i$ of the first response R', using the processing device 911. When the ith component $b'_i$ of the feature vector b' is 1, the element combining unit 235 calculates an element $R_i h^{r'i}$ by combining the ith component $o_i = h^{r'i}$ of the encrypted zero vector O calculated by the zero generation unit 232 in the zero generation step S664 and the ith component $R_i$ of the first challenge R received by the first challenge receiving unit 211 to set the element $R_i h^{r'i}$ to the ith component $R'_i$ of the first response R' by multiplication on the finite group G, using the processing device 911.

The ith component $R_i$ of the first challenge R is the product of the $R_{1,i}$ th power of the generator element g and the $R_{2,i}$ th power of the element h. Thus, the ith component $R'_i$ of the first response R' is the product of the $b'_i R_{1,i}$ th power of the generator element g and the $(b'_i R_{2,i} + r'_i)$ th power of the element h. That is, the ith component $R'_i$ of the first response R' is obtained by encrypting the product of the ith component $b'_i$ of the feature vector b' and the random number $R_{1,i}$.

Fig. 37 is a detailed block diagram showing an example of a configuration of the encrypted data extraction unit 305 in this embodiment.

The encrypted data extraction unit 305 of the authentication apparatus 102 includes the inverse number calculation unit 351 and the scalar multiplication calculation unit 352, for example.

The encrypted feature vector C' generated by the encrypted data extraction unit 305 of the authentication apparatus 102 is a T-dimensional vector ($c'_1$, $c'_2$, ..., $c'_T$) having components of elements of the finite group G, like the encrypted feature vector C generated by the encrypted data generation unit 206 of the registration apparatus 104.

Using the processing device 911, the inverse number calculation unit 351 calculates an inverse number $\kappa_i = R_{1,i}^{-1}$ of each random number $R_{1,i}$ by multiplication of integers modulo N, based on the T pieces of random numbers $R_{1,i}$ (i being each integer not less than 1 and not more than T) stored by the random number storage unit 322. The inverse number $\kappa_i$ is an integer where, when the product of the random number $R_{1,i}$ and the inverse number $\kappa_i$ is divided by N, the remainder is 1. Since N is not a prime number, the random number $R_{1,i}$ does not necessarily have the inverse number $\kappa_i$. However, the two prime numbers p and q, which are prime factors of N, are sufficiently large, the probability that the random number $R_{1,i}$ is a zero divisor is extremely small and is negligible.

Using the processing device 911, the exponentiation calculation unit 353 calculates the encrypted feature vector C', based on the first response R' received by the first response receiving unit 331 and the T inverse numbers $\kappa_i$ calculated by the inverse number calculation unit 351. The ith component $c'_i$ (i being the integer not less than 1 and not more than T) of the encrypted feature vector C' calculated by the exponentiation calculation unit 353 is an element obtained by exponentiating the ith com-

ponent $R'_i$ of the first response $R'$ by the ith inverse number $\kappa_i$ using multiplication on the finite group G. Each component $c'_i$ of the encrypted feature vector C' is obtained by encrypting the component $b'_i$ of the feature vector b'.

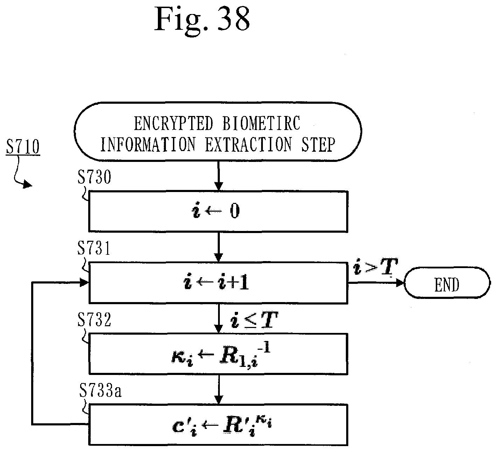

Fig. 38 is a flow chart diagram showing an example of a flow of processes of the encrypted biometric information extraction step S710 in this aspect.

In the encrypted biometric information extraction step S710, the authentication apparatus 102 generates the encrypted feature vector C', based on the first response R'. The encrypted biometric information extraction unit S710 includes the initialization step S730, the repetition step S731, the inverse number calculation step S732, and an exponentiation calculation step S733a, for example.

First, in the initialization step S730, the exponentiation calculation unit 353 initializes the integer i to 0, using the processing device 911.

In the repetition step S731, the exponentiation calculation unit 353 adds 1 to the integer i, using the processing device 911. When the integer i is larger than T, the exponentiation calculation unit 353 finishes the encrypted biometric information extraction step S710. When the integer i is not more than T, the exponentiation calculation unit 353 causes the process to proceed to the inverse number calculation step S732 to generate the ith component $c'_i$ of the encrypted feature vector C'.

In the inverse number calculation step S732, using the processing device 911, the inverse number calculation unit 351 calculates the inverse number $\kappa_i = R_{1,i}^{-1}$, based on the ith random number $R_{1,i}$ out of the T pieces of random numbers stored by the random number storage unit 322 in the first challenge generation step S701.

In the exponentiation calculation step S733a, using the processing device 911, the exponentiation calculation unit 353 calculates the ith component $c'_i = R'_i{}^{\kappa i}$, based on the ith component $R'_i$ of the first response R' received by the first response receiving unit 331 and the inverse number $\kappa_i$ calculated in the inverse number calculation step S732.

The exponentiation calculation unit 353 causes the process to return to the repetition step S731 to generate the subsequent component of the encrypted feature vector C'.

The encrypted feature vector C' generated by the encrypted data extraction unit 305 in this manner is used in the second challenge generation step S712.

The ith component $R'_i$ of the first response R' is the product of the $b'_i R_{1,i}$ th power of the generator element g and the $(b'_i R_{2,i} + r'_i)$th power of the element h. Thus, the ith component $c'_i$ of the encrypted feature vector C' is the product of the $(R_{1,i}^{-1} b'_i R_{1,i})$ th power of the generator element g and the $R_{1,i}^{-1}(b'_i R_{2,i} + r'_i)$ th power of the element h. Since $R_{1,i} R_{1,i}^{-1} \equiv 1 (\bmod\ N)$, $c'_i$ is the product of the $b'_i$th power of the generator element g and the $R_{1,i}^{-1}(b'_i R_{2,i} + r'_i)$ th power of the element h. That is, the ith component $c'_i$ of the encrypted feature vector C' is obtained by encrypting the ith component $b'_i$ of the feature vector b'.

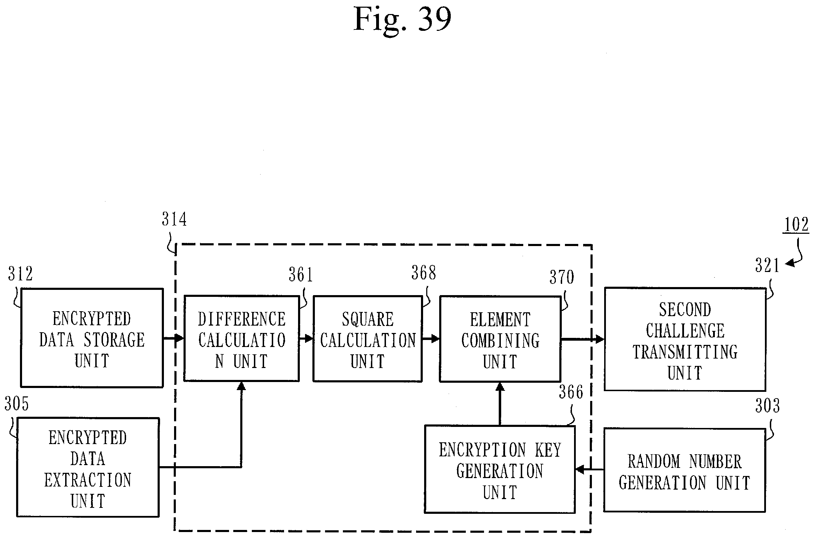

Fig. 39 is a detailed block diagram showing an example of a configuration of the encrypted random similarity degree calculation unit 314 in this aspect.

The encrypted random similarity degree calculation unit 314 of the authentication apparatus 102 includes the difference calculation unit 361, a square calculation unit 368, the encryption key generation unit 366, and an element combining unit 370.

Using the processing device 911, the random number generation unit 303 generates two random numbers $s_1$ and $s_2$, based on the order N, which is a part of the public key pk stored by the public key storage unit 302. The random numbers $s_1$ and $s_2$ generated by the random number generation unit 303 are the integers uniform randomly selected from among integers not less than 0 and less than N.

The random number storage unit 322 stores one random number $s_1$ out of the random numbers generated by the random number generation unit 303, using the storage device 914.

Using the processing device 911, the difference calculation unit 361 calculates the encrypted difference vector $\Delta C$, based on the encrypted feature vector C stored by the encrypted data storage unit 312 and the encrypted feature vector C' extracted by the encrypted data extraction unit 305. The encrypted difference vector $\Delta C$ is a T-dimensional vector $(\Delta c_1, \Delta c_2, ..., \Delta c_T)$ having components of elements of the finite group G. The ith component $\Delta c_i$ (i being the integer not less than 1 and not more than T) of the encrypted difference vector $\Delta C$ is an element $c_i c'_i{}^{-1}$ obtained by combining the ith component $c_i$ of the encrypted feature vector C and an inverse element $c'_i{}^{-1}$ of the ith component of the encrypted feature vector C' using multiplication on the finite group G. Each component $\Delta c_i$ of the encrypted difference vector $\Delta C$ is obtained by encrypting a difference $(b_i - b'_i)$ between the component $b_i$ of the feature vector b and the component $b'_i$ of the feature vector b'.

The ith component $\Delta c_i$ of the encrypted difference vector $\Delta C$ may be an element $c_i{}^{-1} c'_i$ obtained by an inverse element $c_i{}^{-1}$ of the ith component $c_i$ of the encrypted feature vector C and the ith component $c'_i$ of the encrypted feature vector C' using multiplication on the finite group G. Further, the component $\Delta c_i$ of the encrypted difference vector $\Delta C$ may be a randomly selected one of the elements $c_i c'_i{}^{-1}$ and $c_i{}^{-1} c'_i$.

Using the processing device 911, the square calculation unit 368 calculates an encrypted square vector $\Delta C'$, based on the pairing e which is a part of the public key pk stored by the public key storage unit 302 and the encrypted difference vector $\Delta C$ calculated by the difference calculation unit 361. The encrypted square vector $\Delta C'$ is a T-dimensional vector $((\Delta c'_1, \Delta c'_2, .., \Delta c'_T)$ having components of elements of the finite group $G_T$. The ith component $\Delta c'_i$ (i being the integer not less than 1 and not more than T) of the encrypted square vector $\Delta C'$ is a

paring e ($\Delta c_i$, $\Delta c_i$) obtained by translation of a set of the ith components $\Delta c_i$ of the encrypted difference vector $\Delta C$ by the pairing e. Each component $\Delta c'_i$ of the encrypted square vector $\Delta C'$ is obtained by encrypting the square $(b_i - b'_i)^2$ of a difference between the component $b_i$ of the feature vector b and the component $b'_i$ of the feature vector b'.

Using the processing device 911, the encryption key generation unit 366 calculates the encryption key Ц, based on the paring e, the generator element g, and the element h, which are the parts of the public key pk stored by the public key storage unit 302, and the two random numbers $s_1$ and $s_2$ generated by the random number generation unit 303. The encryption key Ц is an element of the finite group $G_T$. The encryption key Ц is an element e ($g^{s1}h^{s2}$, g) obtained by translation of a set of an element $g^{s1}h^{s2}$ and the generator element g by the pairing e. The element $g^{s1}h^{s2}$ is obtained by combining an element $g^{s1}$ and an element $h^{s2}$ using multiplication on the finite group G. The element $g^{s1}$ is obtained by exponentiating the generator element g by the random number $s_1$, using exponentiation on the finite group G. The element $h^{s2}$ is obtained by exponentiating the element h by the random number $s_2$, using exponentiation on the finite group G. Based on the generator element g and the random number $s_1$, the encryption key generation unit 366 calculates the element $g^{s1}$ by exponentiating the generator element g by the random number $s_1$, using the exponentiation on the finite group G, for example. Based on the element h and the random number $s_2$, the encryption key generation unit 366 calculates the element $h^{s2}$ by exponentiating the element h by the random number $s_2$, using the exponentiation on the finite group G. The encryption key generation unit 366 calculates the element $g^{s1}h^{s2}$ by combining the two calculated elements $g^{s1}$ and $h^{s2}$ using the multiplication on the finite group G. The encryption key generation unit 366 calculates the element e($g^sh^{s2}$, g) by translation of the set of the calculated element $g^{s1}h^{s2}$ and the generator element g by the pairing e. The encryption key Ц is obtained by encrypting the random number $s_1$ calculated by the random number generation unit 303.

Using the processing device 911, the element combining unit 370 calculates the second challenge C^, based on the encrypted square vector $\Delta C'$ calculated by the square calculation unit 368 and the encryption key Ц calculated by the encryption key generation unit 366. The second challenge C^ is an element of the finite group $G_T$. The second challenge C^ calculated by the element combining unit 370 is an element $\Pi_i[\Delta c'_i]$ Ц obtained by combining T components $\Delta c'_i$ of the encrypted square vector

$\Delta C'$ and the encryption key Ц, using multiplication on the finite group $G_T$. The second challenge C' is obtained by encrypting a summation $\sum_i[(b_i - b'_i)^2] + s_1$, which is the sum of the random number $s_1$ and the summation of the square $(b_i - b'_i)^2$ of the difference between the component $b_i$ of the feature vector b and the component $b'_i$ of the feature vector b'.

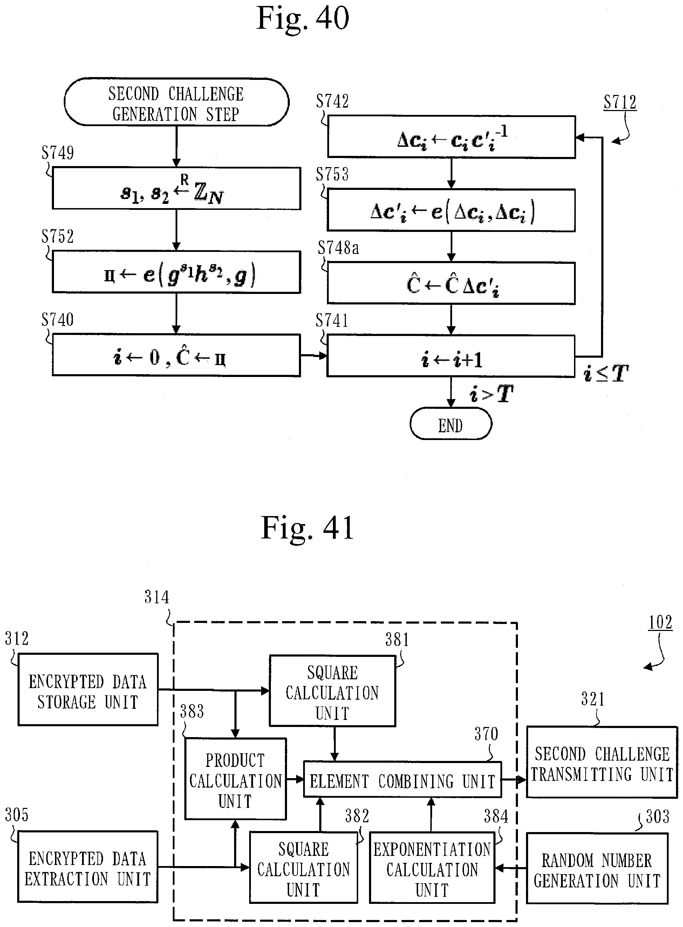

Fig. 40 is a flow chart diagram showing an example of a flow of processes of the second challenge generation step S712 in this embodiment.

In the second challenge generation step S712, the authentication apparatus 102 generates the second challenge C^, based on the two encrypted feature vectors C and C'. The second challenge generation step S712 includes the random number generation step S749, an encryption key generation step S752, the initialization step S740, the repetition step S741, the difference calculation step S742, a square calculation step S753, and an element summation step S748a, for example.

First, in the random generation step S749, the random number generation unit 303 generates the two random numbers $s_1$ and $s_2$, using the processing device 911.

In the encryption key generation step S752, using the processing device 911, the encryption key generation unit 366 calculates the encryption key Ц = $g^{s1}h^{s2}$, based on the two random numbers $s_1$ and $s_2$ generated by the random number generation unit 303 in the random number generation step S749. Using the processing device 911, the element combining unit 370 initializes the second challenge C^ to the encryption key Ц calculated by the encryption key generation unit 366.

In the initialization step S740, the element combining unit 370 initializes the integer i to 0, using the processing device 911.

In the repetition step S741, using the processing device 911, the element combining unit 370 adds 1 to the integer i. When the integer i is larger T, the element combining unit 370 finishes the second challenge generation step S712, because the second challenge C^ has been completed. When the integer is not more than T, the element combining unit 370 causes the process to proceed to the difference calculation step S742.

In the difference calculation step S742, using the processing device 911, the difference calculation unit 361 calculates the ith component $\Delta c_i$ of the encrypted difference vector $\Delta C$, based on the component $c_i$ of the encrypted feature vector C stored by the encrypted data storage unit 305 and the ith component $c'_i$ of the encrypted feature vector C' extracted by the encrypted data extraction unit 305.

In the square calculation step S753, the square calculation unit 368 calculates the ith component $\Delta c'_i$ = e($\Delta c_i$, $\Delta c_i$) of the encrypted square vector $\Delta C'$, based on the element $\Delta c_i$ calculated by the difference calculation unit 361 in the difference calculation step S742.

In the element summation step S748a, using the processing device911, the element combining unit 370 combines the ith component $\Delta c'_i$ of the encrypted square vector $\Delta C'$ calculated by the square calculation unit 368 in the square calculation step S753 with the second challenge $C^\wedge$.

The element combining unit 370 causes the process to the repetition step S741.

The second challenge $C^\wedge$ calculated by the encrypted random similarity degree calculation unit 314 in this manner is transmitted to the decryption device 103 by the second challenge transmitting unit 321, and the decryption device 103 receives and then processes the second challenge $C^\wedge$.

The procedure for calculating the second challenge $C^\wedge$ may be different from the above-mentioned procedure. Assume that calculation such as multiplication can be performed more quickly on the finite group $G_T$ than on the finite group G, for example. Then, the number of arithmetic operations on the finite group $G_T$ should be increased and the number of arithmetic operations on the finite group G should be reduced. Then, the time to be taken for calculation in the second challenge generation step S712 can be thereby reduced.

Fig. 41 is a detailed block diagram showing another example of a configuration of the encrypted random similarity degree calculation unit 314 in this aspect.

The encrypted random similarity degree calculation unit 314 of the authentication apparatus 102 includes two square calculation units 381 and 382, a product calculation unit 383, an exponentiation calculation unit 384, and the element combining unit 370, for example.

Using the processing device 911, the square calculation unit 381 calculates a first encrypted square vector $Ж$, based on the pairing e which is the part of the public pk stored by the public key storage unit 302 and the encrypted feature vector C stored by the encrypted data storage unit 312. The first encrypted square vector is a T-dimensional vector ($Ж_1$, $Ж_2$, ... $Ж_T$) having components of elements of the finite group $G_T$. The ith component $Ж_i$, (i being the integer not less than 1 and not more than T) of the first encrypted square vector $Ж$ is an element $e(c_i, c_i)$ obtained by translation of a set of the ith components $c_i$ of the encrypted feature vector C by the pairing e.

Using the processing unit 911, the square calculation unit 382 calculates a second encrypted square vector $Ж'$, based on the pairing e which is the part of the public pk stored by the public key storage unit 302 and the encrypted feature vector C' extracted by the encrypted data extraction unit 305. The second encrypted square vector $Ж'$ is a T-dimensional vector ($Ж'_1$, $Ж'_2$ ... $Ж'_T$) having components of elements of the finite group $G_T$. The ith component $Ж'_i$ (i being the integer not less than 1 and not more than T) of the second encrypted square vector $Ж'$ is an element $e(c'_i, c'_i)$ obtained by converting a set of the ith components $c'_i$ of the encrypted feature vector C'.

Using the processing device 911, the product calculation unit 383 calculates an encrypted product vector $ℂ$, based on the pairing e which is the part of the public pk stored by the public key storage unit 302, the encrypted feature vector C stored by the encrypted data storage unit 312, and the encrypted feature vector C' extracted by the encrypted data extraction unit 305. The encrypted product vector $ℂ$ is a T-dimensional vector ($ℂ_1$, $ℂ_2 \cdots ℂ_T$) having components of elements of the finite group $G_T$. The ith component $ℂ_i$ (i being the integer not less than 1 and not more than T) of the encrypted product vector $ℂ$ is an element $e(c_i, c'_i)$ obtained by translation of a set of the ith component $c_i$ of the encrypted feature vector C and the ith component $c'_i$ of the encrypted feature vector C' by the pairing e.

Using the processing device 911, the exponentiation calculation unit 384 calculates two exponentiation elements $Ц_1$ and $Ц_2$, based on the pairing e, the generator element g, and the element h which are the parts of the public key pk stored by the public key storage unit 302 and the two random numbers $s_1$ and $s_2$ generated by the random number generation unit 303. The first exponentiation element $Ц_1$ is an element $e(g, g)^{s1}$ obtained by exponentiating an element $e(g, g)$ by the random number $s_1$, using exponentiation on the finite group $G_T$. The element $e(g, g)$ is obtained by translation of a set of the generator elements g by the pairing e. The second exponentiation element $Ц_2$ is an element $e(g, h)^{s2}$ obtained by exponentiating an element $e(g, h)$ by the random number $s_2$, using exponentiation on the finite group $G_T$. The element $e(g, h)$ is obtained by translation of a set of the generator element g and the generator element h by the pairing e.

Using the processing device 911, the element combining unit 370 calculates the second challenge $C^\wedge$, based on the first encrypted square vector $Ж$ calculated by the square calculation unit 381, the second encrypted square vector $Ж'$ calculated by the square calculation unit 382, the encrypted product vector $ℂ$ calculated by the product calculation unit 383, and the two exponentiation elements $Ц_1$ and $Ц_2$ calculated by the exponentiation calculation unit 384. The second challenge $C^\wedge$ is an element of the finite group $G_T$. The second challenge C^ calculated by the element combining unit 370 is an element $\Pi_i\left[\text{Ж}_i\,\text{Ж}'_i\,\mathbb{C}_i^{-2}\right]\text{Ц}_1\text{Ц}_2$ obtained by combining all of the T components $\text{Ж}_i$ of the first encrypted square vector $\text{Ж}$, the T components $\text{Ж}'_i$ of the second encrypted square vector $\text{Ж}'$, the minus square of the T components $\mathbb{C}_i$ of the encrypted product vector $\mathbb{C}$, and the two exponentiation elements $\text{Ц}_1$ and $\text{Ц}_2$. In this case, the second challenge C^ is obtained by encrypting $\Sigma_i[b_i^2 + b'^2_i - 2b_ib'_i] + s_1 = \Sigma_i[(b_i - b_i)^2] + s_1$.

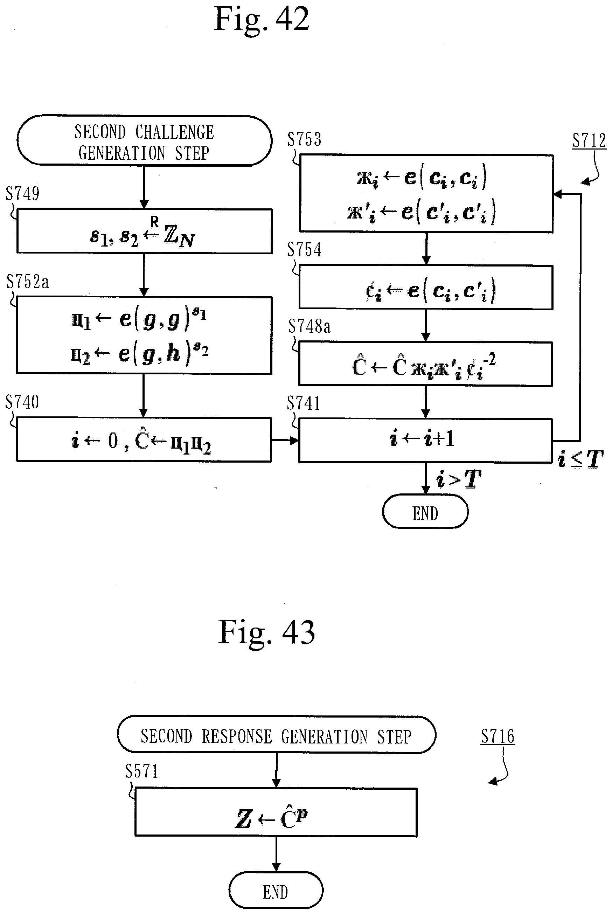

Fig. 42 is a flow chart diagram showing another example of a flow of processes of the second challenge generation step S712 in this embodiment.

The second challenge generation step S712 includes the random number generation step S749, an exponentiation calculation step S752a, the initialization step S740, the repetition step S741, the square calculation step S753, a product calculation step S754, and the element summation step S748a, for example.

In the random number generation step S749, the random number generation unit 303 generates the two random numbers $s_1$ and $s_2$, using the processing device 911.

In the exponentiation calculation step S752a, using the processing device 911, the exponentiation calculation unit 384 calculates the two exponentiation element $\text{Ц}_1 = e(g, g)^{s1}$ and $\text{Ц}_2 = e(g, h)^{s2}$, based on the two random numbers $s_1$ and $s_2$ generated by the random number generation unit 303 in the random number generation step S749.

In the initialization step S740, using the processing device 911, the element combining unit 370 initializes the integer i to 0. Using the processing device 911, the element combining unit 370 calculates an element $\text{Ц}_1$, $\text{Ц}_2$ by combining the two exponentiation elements $\text{Ц}_1$ and $\text{Ц}_2$ calculated by the exponentiation calculation unit 384 in the exponentiation calculation step S752a, using multiplication on the finite group $G_T$. The element combining unit 370 initializes the second challenge C^ to the calculated element $\text{Ц}_1, \text{Ц}_2$ using the processing device 911.

In the repetition step S741, using the processing device 911, the element combining unit 370 adds 1 to the integer i. When the integer i is larger than T, the second challenge C^ has been completed. Thus, the element combining unit 370 finishes the second challenge generation step S712. When the integer i is not more than T, the element combining unit 370 causes the process to proceed to the square calculation step S753.

In the square calculation step S753, using the processing device 911, the square calculation unit 381 calculates the ith component $\text{Ж}_i = e(c_i, c_i)$ of the first encrypted square vector $\text{Ж}$, based on the ith component $c_i$ of the encrypted feature vector C stored by the encrypted data storage unit 312. Using the processing device 911, the square calculation unit 382 calculates the ith component $\text{Ж}'_i = e(c'_i, c'_i)$ of the second encrypted square vector $\text{Ж}'$, based on the ith component $c'_i$ of the encrypted feature vector C' extracted by the encrypted data extraction unit 305.

In the product calculation step S754, using the processing device 911, the product calculation unit 383 calculates the ith component $\mathbb{C}_i = e(c_i, c'_i)$, based on the ith component $c_i$ of the encrypted feature vector C stored by the encrypted data storage unit 312 and the ith component $c'_i$ of the encrypted feature vector C' extracted by the encrypted data extraction unit 305.

In the element summation step S748a, using the processing device 911, the element combining unit 370 combines the ith component $\text{Ж}_i$ of the first encrypted square vector $\text{Ж}$ calculated by the square calculation unit 381 in the square calculation step S753, the ith component $\text{Ж}'_i$ of the second encrypted square vector $\text{Ж}'$ calculated by the square calculation unit 382 in the square calculation step S753, and the minus square of the ith component $\mathbb{C}_i$ of the encrypted product vector $\mathbb{C}$ calculated by the product calculation unit 383 in the product calculation step S754 with the second challenge C^.

The element combining unit 370 causes the process to return to the repetition step S741.

By using the processing procedure as described above, the need for an arithmetic operation on the finite group G is eliminated. The second challenge C^ can be generated just by calculation using the pairing e and multiplication on the finite group $G_T$.

Since the pairings e(g, g) and e(g, h) and the component $e(c_i, c_i)$ of the first encrypted square vector $\text{Ж}$ are not related to the encrypted feature vector C', the pairings e(g, g) and e(g, h) and the component $e(c_i, c_i)$ of the first encrypted square vector $\text{Ж}$ can be calculated in advance. By calculating these pairings and component in advance, the time to be taken for generating the second challenge C^ can be reduced.

Fig. 43 is a flow chart diagram showing an example of a flow of processes of the second response generation step S716 in this aspect.

In the second response generation step S716, the decryption device 103 generates the second response Z from the second challenge C^. The second response generation step S716 includes an exponentiation calculation step S571, for example.

In the exponentiation calculation step S571, using the processing device 911, the decryption unit 404 of the decryption device 103 calculates the second response Z, based on the prime number p that is the secret key sk stored by the secret key storage unit 413 and the second challenge C^ received by the second challenge receiving unit 402. The second response Z is an element of the finite group $G_T$. The second response Z calculated by the decryption unit 404 is an element obtained by exponentiating the second challenge C^ by the prime number p, using exponentiation on the finite group $G_T$.

The second challenge C^ is obtained by encrypting $\sum_i[b_i - b'_i]^2] + s_1$. Thus, the second response Z is an element obtained by exponentiating an element $e(g, g)^p$ by $\sum_i[(b_i - b'_i)^2] + s_1$ using exponentiation on the finite group $G_T$. The element $e(g, g)^p$ is obtained by exponentiating the element $e(g, g)$ by the prime number p using exponentiation on the finite group $G_T$. The element $e(g, g)$ is obtained by translation of a set of the generator elements g by the pairing e. Since the element $e(g, g)^p$ is the element $\pi$ released as the part of the public key pk, the second response Z is an element obtained by exponentiating the element $\pi$ by $\sum_i[(b_i - b'_i)^2] + s_1$, using exponentiation on the finite group $G_T$.

Since the configuration of the plaintext similarity degree extraction unit 315 is the same as that described in the first aspect, a description will be given with reference to Fig. 24

Using the processing device 911, the group conversion unit 371 calculates a decryption key Ц, based on the element $\pi$ which is the part of the public key pk stored by the public key storage unit 302 and the random number $s_1$ stored by the random number storage unit 322. The decryption key Ц is an element of the definite group $G_T$. The decryption key Ц is an element $\pi^{-s1}$ obtained by exponentiating the element $\pi$ by the additive inverse $-s_1$ of the random number $s_1$, using exponentiation on the finite group $G_T$.

Using the processing device 911, the element combining unit 372 calculates the decrypted similarity degree element Z', based on the second response Z received by the second response receiving unit 341 and the decryption key Ц calculated by the group conversion unit 371. The decrypted similarity degree element Z' is an element of the finite group $G_T$. The decrypted similarity degree element Z' is an element $Z$Ц obtained by combining the second response Z and the decryption key Ц, using multiplifaction on the finite group $G_T$. The second response Z is an element obtained by exponentiating the element $\pi$ by $\sum_i[(b_i - b'_i)^2] + s_1$, using multiplication on the finite group $G_T$. Thus, the decrypted similarity degree element Z' is an element obtained by exponentiating the element $\pi$ by $\sum_i[(b_i - b'_i)^2]$ , using exponentiation on the finite group $G_T$.

Using the processing device 911, the discrete logarithm calculation unit 373 calculates to what power the element $\pi$ is raised to be equal to the decrypted similarity degree element Z', based on the element $\pi$ which is the part of the public key pk stored by the public key storage unit 302 and the decrypted similarity degree element Z' calculated by the element combining unit 372, thereby setting the power to the similarity degree d. As in the first aspect, the discrete logarithm calculation unit 373 may be so configured to calculate the similarity degree d when the similarity degree d is not more than the threshold value $d_0$, and to determine that the similarity degree d is larger than the threshold value $d_0$ when the similarity degree d is larger than the threshold value $d_0$.

With this arrangement, the authentication apparatus 102 calculates the square $\sum_i[(b_i - b'_i)^2]$ of the Euclidean distance between the two feature vectors b and b'.

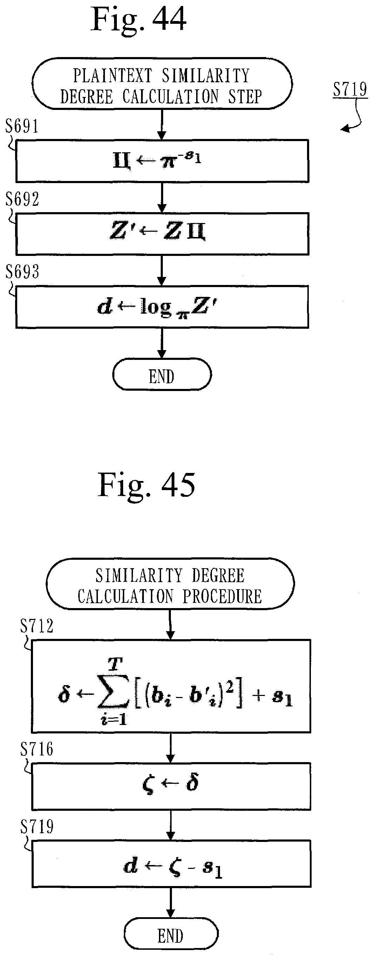

Fig. 44 is a flow chart diagram showing an example of a flow of processes of the plaintext similarity degree calculation step S719 in this embodiment.

In the plaintext similarity degree calculation step S719, the authentication apparatus 102 calculates the similarity degree d from the second response Z. The plaintext similarity degree calculation step S719 includes, the group conversion step S691, the element combining step S692, and the discrete logarithm calculation step S693, for example.

First, in the group conversion step S691, the group conversion unit 371 calculates the decryption key Ц = $\pi_{-s1}$, based on the random number $s_1$ stored by the random number storage unit 322 as a temporary key, using the processing device 911.

In the element combining step S692, using the processing device 911, the element combining unit 372 calculates the decrypted similarity degree element Z' = $Z$Ц, based on the second response received by the second response receiving unit 341 and the decryption key Ц calculated by the group conversion unit 371 in the group conversion step S691.

In the discrete logarithm calculation step S693, using the processing device 911, the discrete logarithm calculation unit 373 calculates the similarity degree d, based on the decrypted similarity degree element Z' calculated by the element combining unit 372 in the element combining unit 372.

The determination unit 306 determines whether or not the two feature vectors b and b' are similar, based on the similarity degree d calculated by the plaintext similarity degree extraction unit 315, thereby determining a person having biometric information represented by the feature vector b and a person having biometric information represented by the feature vector b' are identical. When the similarity degree d is smaller than the threshold value $d_0$, the determination unit 306 determines that the two feature vectors b and b' are similar.

Fig. 45 is a flow chart diagram showing a similarity degree calculation procedure in the biometric authentication system 100 in this aspect.

As a first stage, in the second challenge generation step S712, the authentication apparatus 102 calculates the second challenge C^ from the two encrypted feature vectors C and C', thereby calculating $\delta = \Sigma_i[(b_i - b'_i)^2] + s_1$ (i being each integer not less than 1 and not more than T). This calculation is performed with the encrypted feature vector C and C' kept encrypted with the key of the decryption apparatus 103. Thus, the authentication apparatus 102 cannot obtain information on the feature vectors b and b'.

As a second stage, in the second response generation step S716, the decryption apparatus 103 calculates the second response Z from the second challenge C^, thereby calculating $\xi$. The decryption apparatus 103 just performs decryption processing, so that $\xi$ is equal to $\delta$. The decryption apparatus 103 does not know the temporary key $s_1$. Thus, the decryption apparatus 103 cannot obtain the information on the feature vectors b and b' and information on the similarity degree. That is, this calculation is performed with a result of the decryption kept encrypted with the temporary key $s_1$.

As a third stage, in the plaintext similarity degree calculation step S719, the authentication apparatus 102 calculates from the second response Z the similarity degree $d = \xi - s_1$. With this arrangement, the authentication apparatus 102 can obtain the similarity degree d, but cannot obtain the information on the feature vectors b and b'.

By employing the encryption system by which an arithmetic operation corresponding to plaintext multiplication as well as an arithmetic operation corresponding to plaintext addition with the data associated with feature vectors b and b' kept encrypted can be performed at least once, most of the similarity degree calculation procedure may be finished in the first stage. With this arrangement, the decryption apparatus 103 should simply perform the decryption processing.

According to this aspect, the number of the public key pk, the secret key sk, the random numbers to be generated, and the number of the random numbers to be stored can be reduced.

Further, the amount of data of the second challenge to be transmitted from the authentication apparatus 102 to the decryption apparatus 103 is reduced. Thus, the amount of communication necessary for authentication can be reduced.

The encryption system is not limited to the BGN encryption system. It may be so configured that a different ring-homomorphic encryption system such as the Genrty encryption system is employed. It may be so configured that a second encryption system such as the standard public key encryption system is employed for communication between the certification apparatus 101 and the authentication apparatus 102.

As in the second aspect, the certification apparatus 101 in the biometric authentication system 100 may be configured to combine functions as the decryption apparatus 103 and the registration apparatus 104.

Fifth aspect.

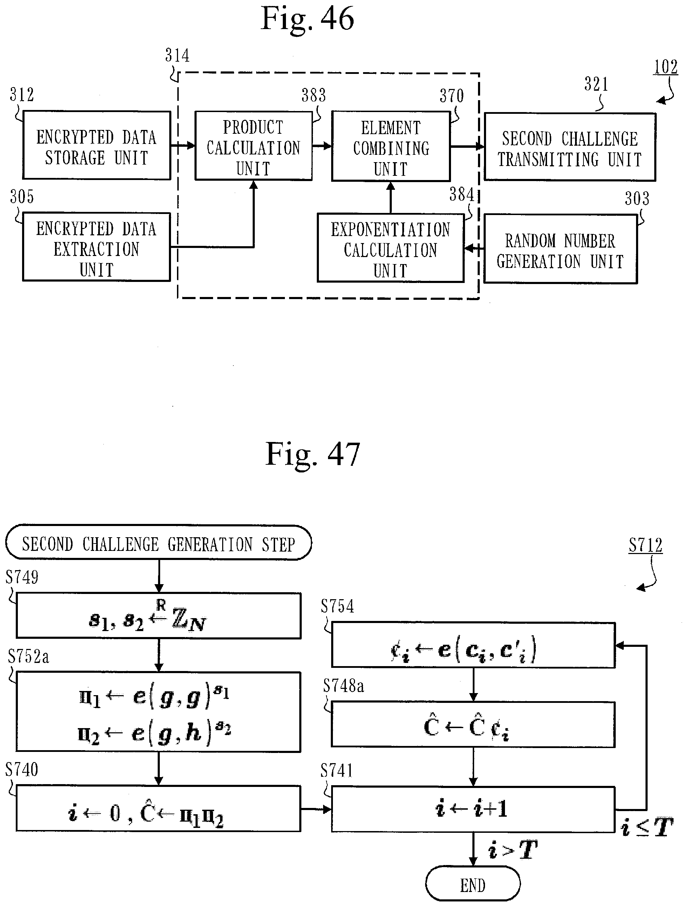

A fifth aspect will be described, using Figs. 46 to 48.

Same reference signs are given to components that are common to those in the first to fourth asepects, thereby omitting description of the components that are common to those in the first to fourth aspects.

In this aspect, the description will be given about a case where the BGN encryption system described in the fourth aspect is employed as the encryption system, and the inner product $\Sigma_i[b_i b'_i]$ is calculated as the similarity degree d, as in the third aspect.

An overall configuration of the biometric authentication system 100 and inner configurations of the certification apparatus 101, the authentication apparatus 102, the decryption apparatus 103, and the registration apparatus 104 are similar to those described in the fourth aspect. Thus, only a difference will be described.

Fig. 46 is a detailed block diagram showing an example of a configuration of the encrypted random similarity degree calculation unit 314 in this pect.

The encrypted random similarity degree calculation unit 314 of the authentication apparatus 102 includes the product calculation unit 383, the exponentiation calculation unit 384, and the element combining unit 370, for example.

Using the processing device 911, the product calculation unit 383 calculates the encrypted product vector $\mathbb{C}$, based on the pairing e which is the part of the public pk stored by the public key storage unit 302, the encrypted feature vector C stored by the encrypted data storage unit 312, and the encrypted feature vector C' extracted by the encrypted data extraction unit 305. The encrypted product vector $\mathbb{C}$ is a T-dimensional vector $(\mathbb{C}_1, \mathbb{C}_2, \cdots, \mathbb{C}_T)$ having components of elements of the finite group $G_T$. The ith component $\mathbb{C}_i$ of the encrypted product vector $\mathbb{C}$ is an element $e(c_i, c'_i)$ obtained by translation of a set of the ith component $c_i$ of the encrypted feature vector C and the ith component $c'_i$ of the encrypted feature vector C' by the pairing e.

Using the processing device 911, the exponentiation calculation unit 384 calculates the two exponentiation elements $ц_1$ and $ц_2$, based on the pairing e, the generator element g, and the element h which are the parts of the public key pk stored by the public key storage unit 302 and the two random numbers $s_1$ and $s_2$ generated by the random number generation unit 303. The first exponentiation element $ц_1$ is the element $e(g, g)^{s1}$ obtained by exponentiating the element e(g, g) by the random number $s_1$, using exponentiation on the finite group $G_T$. The element e(g, g) is obtained by translation of the set of the generator elements g by the pairing e. The second exponentiation element Ц$_2$ is the element e(g, h)$^{s2}$ obtained by exponentiating the element e(g, h) by the random number $s_2$, using exponentiation on the finite group $G_T$. The element e(g, h) is obtained by translation of the set of the generator element g and the element h by the pairing e.

Using the processing device 911, the element combining unit 370 calculates the second challenge C^, based on the encrypted product vector C calculated by the product calculation unit 383 and the two exponentiation elements Ц$_1$ and Ц$_2$ calculated by the exponentiation calculation unit 384. The second challenge C^ is an element of the finite group $G_T$. The second challenge C^ calculated by the element combining unit 370 is an element $\Pi_i[\mathbb{C}_i]$ Ц$_1$Ц$_2$ obtained by combining all of T components $\mathbb{C}_i$ of the encrypted product vector $\mathbb{C}$ and the two exponentiation elements Ц$_1$ and Ц$_2$, using multiplication on the finite group $G_T$. The second challenge C^ is obtained by encrypting $\Sigma_i[b_i \ b'_i] + s_1$.

Fig. 47 is a flow chart diagram showing an example of a flow of processes of the second challenge generation step S712 in this aspect.

The second challenge generation step S712 includes the random number generation step S749, the exponentiation calculation step S752a, the initialization step S740, the repetition step S741, the product calculation step S754, and the element summation step S748a, for example.

In the random number generation step S749, the random number generation unit 303 generates the two random numbers $s_1$ and $s_2$, using the processing device 911.

In the exponentiation calculation step S752a, using the processing device 911, the exponentiation calculation unit 384 calculates the two exponentiation elements Ц$_1$ = e(g, g)$^{s1}$ and Ц$_2$ = e(g, h)$^{s2}$, (based on the two random numbers $s_1$ and $s_2$ generated by the random number generation unit 303 in the random number generation step S749.

In the initialization step S740, using the processing device 911, the element combining unit 370 initializes the integer i to 0. Using the processing device 911, the element combining unit 370 calculates the element Ц$_1$Ц$_2$ by combining the two exponentiation elements Ц$_1$ and Ц$_2$ calculated by the exponentiation calculation unit 384, using multiplication on the finite group $G_T$. The element combining unit 370 initializes the second challenge C^ to the calculated element Ц$_1$Ц$_2$, using the

processing device 911.

In the repetition step S741, using the processing device 911, the element combining unit 370 adds 1 to the integer i. When the integer i is larger than T, the second challenge C^ has been completed. Thus, the element combining unit 370 finishes the second challenge generation step S712. When the integer i is not more than T, the element combining unit 370 causes the process to proceed to the product calculation step S754.

In the product calculation step S754, using the processing device 911, the product calculation unit 383 calculates the ith component $\mathbb{C}_i$ = e($c_i$, $c'_i$) of the encrypted product vector $\mathbb{C}$, based on the ith component $c_i$ of the encrypted feature vector C stored by the encrypted data storage unit 312 and the ith component $c'_i$ of the encrypted feature vector C' extracted by the encrypted data extraction unit 305.

In the element summation step S748a, using the processing device 911, the element combining unit 370 combines the ith component $\mathbb{C}_i$ of the encrypted product vector $\mathbb{C}$ calculated by the product calculation unit 383 in the product calculation step S754 with the second challenge C^, using multiplication on the finite group $G_T$.

The element combining unit 370 causes the process to proceed to the repetition step S741.

The second challenge C^ calculated by the encrypted random similarity degree calculation unit 314 in this manner is transmitted to the decryption apparatus 103 by the second challenge transmitting unit 321. The decryption apparatus 103 receives and then processes the second challenge C^.

The decryption unit 404 of the decryption apparatus 103 has the same configuration as that in the fourth aspect. However, the second challenge C^ has a different meaning. Thus, the second response Z to be generated by the decryption unit 404 also has a meaning different from that in the first embodiment.

That is, the second response Z is an element obtained by exponentiating the element $\pi$ of the finite group $G_T$ by ($\Sigma_i[(b_i \ b'i) + s_1$) (i being each integer not less than 1 and not more than T) by exponentiation on the finite group $G_T$. That is, the second response Z is the one obtained by the inner product $\Sigma_i[b_i b'_i]$ between the feature vector b and the feature vector b' by the random number $s_1$ as the temporary key.

The plaintext similarity degree extraction unit 315 of the authentication apparatus 102 also has the same configuration as that in the fourth aspect.

The decrypted similarity degree element Z' calculated by the element combining unit 370 is an element obtained by exponentiating the element $\pi$ by the inner product $E_i[b_i b'_i]$ between the feature vector b and the feature vector b' by exponentiation on the finite group $G_T$. Accordingly, the plaintext similarity degree extraction unit 315 calculates the inner product $\Sigma_i[b_ib'_i]$ between the feature vector b and the feature vector b', as the similarity degree d.

The determination unit 306 determines that the two feature vectors b and b' are similar when the similarity degree d calculated by the discrete logarithm calculation unit 373 is larger than the predetermined threshold value $d_0$.

With this arrangement, it can be determined whether or not the two feature vectors b and b' are similar, using the number of matches between feature points as a reference.

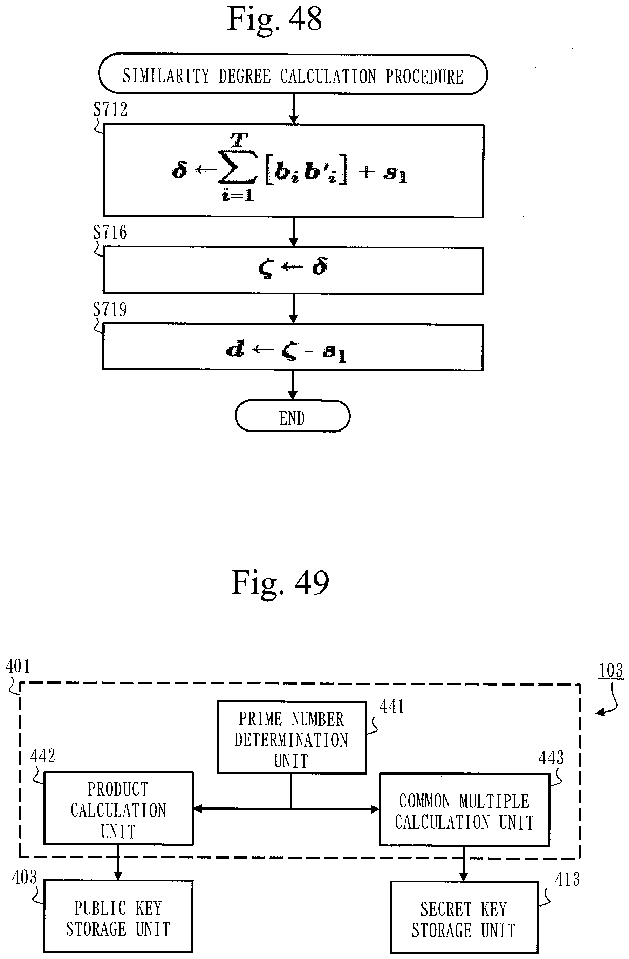

Fig. 48 is a similarity degree calculation procedure in the biometric authentication system 100 in this embodiment.

As a first stage, in the second challenge generation step S712, the authentication apparatus 102 calculates the second challenge C^ from the two encrypted feature vectors C and C', thereby calculating $\delta = \Sigma_i[(b_i - b'_i)^2] + s_1$ (i being each integer not less than 1 and not more than T). This calculation is performed with the encrypted feature vectors C and C' kept encrypted with the key of the decryption apparatus 103. Thus, the authentication apparatus 102 cannot obtain information on the feature vectors b and b'.

As a second stage, in the second response generation step S716, the decryption apparatus 103 calculates the second response Z from the second challenge C^, thereby calculating $\xi$. The decryption apparatus 103 just performs decryption processing, so that $\xi$ is equal to $\delta$. The decryption apparatus 103 does not know the temporary key $s_1$. Thus, the decryption apparatus 103 cannot obtain the information on the feature vectors b and b' and information on the similarity degree. That is, this calculation is performed with a result of the decryption encrypted with the temporary key $s_1$.

As a third stage, in the plaintext similarity degree calculation step S719, the authentication apparatus 102 calculates from the second response Z the similarity degree d = $\xi$ - $s_1$. With this arrangement, the authentication apparatus 102 can obtain the similarity degree d, but cannot obtain the information on the feature vectors b and b'.

The encryption system is not limited to the BGN encryption system. It may be so configured that a different ring-homomorphic encryption system such as the Genrty encryption system is employed. It may be so configured that a second encryption system such as the standard public key encryption system is employed for communication between the certification apparatus 101 and the authentication apparatus 102.

As in the second aspect, the certification apparatus 101 in the biometric authentication system 100 may be configured to combine functions as the decryption apparatus 103 and the registration apparatus 104.

As compared with the fourth aspect, configurations of the certification apparatus 101, the decryption apparatus 103, and the registration apparatus 104 remain unchanged, and only the authentication apparatus 102 has a different configuration from that in the fourth aspect. Accordingly, by setting the authentication apparatus 102 to a configuration capable of switching between the configuration described in the fourth aspect and the configuration described in this aspect, two types of similarity degrees using the Euclidean distance and the inner product can be calculated, without altering the other apparatuses in the biometric authentication system 100.

Sixth aspect.

A sixth aspect will be described, using Figs. 49 to 61.

Same reference signs are given to components that are common to those in the first to fifth aspects, thereby omitting description of the components that are common to those in the first to fifth aspects.

In this aspect, the description will be given about a case where the Paillier encryption system is employed as the encryption system. The square of the Euclidean distance is used for the similarity degree d, as in the first aspect.

The Pailler encryption system will be outlined.

Assume that N is the product of two mutually different prime numbers p and q. Assume that $\lambda$ is a common multiple between p - 1 and q - 1. When r and N are set to integers that are relatively prime, $r^{\lambda N} \equiv 1 \pmod{N^2}$ holds. When x and y are set to integers, $(1 + xN)^y \equiv 1 + xyN \pmod{N^2}$ holds. Accordingly, $[r^N(1 + xN)]^\lambda \equiv 1 + x\lambda N \pmod{N^2}$ holds.

Assume that N is set to the public key pk, and the least common multiple $\lambda$ between p - 1 and q - 1 is set to the secret key sk, for example. Assume that an integer x not less than 0 and less than N is set to a plaintext, while $r^N (1 + xN)$ is set to a ciphertext E(x) obtained by encrypting the plaintext x. Assume, however, that r is an integer uniform randomly selected from among integers not less than 0 and less than N. When the prime numbers p and q are sufficiently large, the probability that r and N are not relatively prime is extremely small to be neglible.

For decryption, $\lambda$ that is the secret key sk is used. When $E(x)^\lambda \equiv 1 + x\lambda N \pmod{N^2}$ is used, the random number r can be deleted. Since $E(x)^\lambda$ - 1 is a multiple of N, $[E(x)^\lambda - 1]/N$ is an integer. Assume that the inverse element of $\lambda$ in multiplication of integers modulo N is indicated by $\lambda^{-1}$. Then, when the product of $(E(x)^\lambda - 1)/N$ and $\lambda^{-1}$ is divided by N to obtain the remainder, the plaintext x can be decrypted.

The remainder obtained by dividing the product of a ciphertext $E(x_1)$ of an integer $x_1$ and a ciphertext $E(x_2)$ of an integer $x_2$ by $N^2$ is $r_1^N (1 + x_1N)r_2^N (1 + x_2N) \equiv (r_1r_2)^N [1 + (x_1 + x_2)N] \pmod{N^2}$. Thus, the remainder is a ciphertext $E(x_1 + x_2)$ of $x_1 + x_2$ which is the sum of the integer $x_1$ and the integer $x_2$.

Fig. 49 is a detailed block diagram showing an example of a configuration of the key generation unit 401 in this aspect.

The key generation unit 401 of the decryption apparatus 103 includes a prime number determination unit 441, a product calculation unit 442, and a common multiple calculation unit 443, for example.

Using the processing device 911, the prime number determination unit 441 generates the mutually different two prime numbers p and q, based on the size (such as 512 bits or 1024 bits) determined according to the security level.

Using the processing device 911, the product calculation unit 442 calculates the integer N, based on the two prime numbers p and q generated by the prime number determination unit 441. The integer N is the product of the two prime numbers p and q.

Using the processing device 911, the common multiple calculation unit 443 calculates the least common multiple $\lambda$ = LCM (p - 1, q - 1) between p - 1 and q - 1, based on the two prime numbers p and q generated by the prime number determination unit 441.

The public key storage unit 403 stores the product N, as the public key pk, using the storage device 914.

The secret key storage unit 413 stores the least common multiple $\lambda$, as the secret key sk, using the storage device 914.

Since the inverse number $\lambda^{-1}$ of $\lambda$ in multiplication of integers modulo N is necessary for decryption, it may be so configured that the common multiple calculation unit 443 calculates the inverse number $\lambda^{-1}$, and then, the secret key storage unit 413 stores the inverse number $\lambda^{-1}$ as a part of the secret key sk.

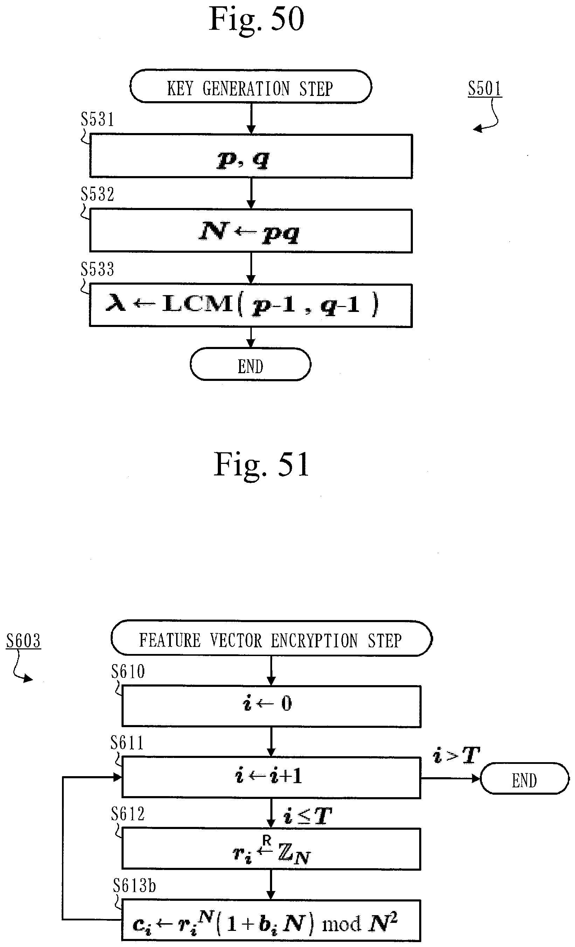

Fig. 50 is a flow chart diagram showing an example of a flow of processes of the key generation step S501 in this aspect.

In the key generation step S501, the decryption apparatus 103 generates a set of the public key pk and the secret key sk.

It may be so configured that a set of the public key pk and the secret key sk that is different for each user is generated, or that a set of one public key pk and one secret key sk is generated for the overall system.

The key generation step S501 includes a prime number determination step S531, a product calculation step S532, and a common multiple calculation step S533.

First, in the prime number determination step S531, the prime number determination unit 441 determines the two prime numbers p and q, using the processing device 911.

In the product calculation step S532, the product calculation unit 442 calculates the integer N = pq, based on the two prime numbers p and q determined by the prime number determination unit 441 in the prime number determination step S531, using the processing device 911. Using the storage device 914, the public key storage unit 403 stores the integer N calculated by the product calculation unit 442, as the public key pk.

In the common multiple calculation step S533, using the processing device 911, the common multiple calculation unit 443 calculates the least common multiple $\lambda$ = LCM (p - 1, q - 1), based on the two prime numbers p and q determined by the prime number determination unit 441 in the prime number determination step S531. Using the storage device 914, the secret key storage unit 413 stores the least common multiple $\lambda$ calculated by the common multiple calculation unit 443, as the secret key sk.

The public key pk = (N) stored by the public key storage unit 403 in this manner is transmitted to each of the authentication apparatus 102 and the like by the public key transmitting unit 408. Each of the authentication apparatus 102 and the like receives and then stores the public key pk.

Fig. 51 is a flow chart diagram showing an example of a flow of processes of the feature vector encryption step S603 in this aspect.

In the feature vector encryption step S603, the registration apparatus 104 encrypts the feature vector b to generate the encrypted feature vector C. The feature vector encryption step S603 includes the initialization step S610, the repetition step S611, the random number generation step S612, and an integer calculation step S613b, for example.

The feature vector b generated by the feature vector formation unit 204 of the registration apparatus 104 is a T-dimensional vector $(b_1, b_2, ..., b_T)$ (T being an integer not less than 1) having components of integers not less than 0 and less than N. The encrypted feature vector C generated by the encrypted data generation unit 206 is a T-dimensional vector $(c_1, c_2, ..., c_T)$ having components of integers not less than 0 and less than $N^2$.

First, in the initialization step S610, the encrypted data generation unit 206 initializes the integer i to 0, using the processing device 911.

In the repetition step 611, the encrypted data generation unit 206 adds 1 to the integer i, using the processing device 911. When the integer i is larger than T, the encrypted data generation unit 206 finishes the feature vector encryption step S603. When the integer i is not more than T, the encrypted data generation unit 206 causes the process to proceed to the random number generation step S612 to generate the ith component $c_i$ of the encrypted feature vector C.

In the random number generation step S612, using the processing device 911, the random number generation unit 205 generates the random number $r_i$, based on the integer N which is the public key pk stored by the public key storage unit 202. The random number $r_i$ generated by the random number generation unit 205 is the integer uniform randomly selected from among integers not less than 1 and less than N.

In the integer calculation step S613b, using the processing device 911, the encrypted data generation unit 206 calculates the ith component $c_i$ of the encrypted feature vector C, based on the integer N which is the public key pk stored by the public key storage unit 202, the ith component $b_i$ of the feature vector b generated by the feature vector formation unit 204, and the random

number $r_i$ generated by the random number generation unit 205 in the random number generation step S612. The ith component $c_i$ of the encrypted feature vector C calculated by the encrypted data generation unit 206 is a remainder when a product $r_i^N (1 + b_iN)$ of a sum $(1 + b_iN)$ and an integer $r_i^N$ is divided by the square of the integer N. The sum $(1 + b_iN)$ is obtained by adding 1 to a product $b_iN$ of the ith component bi of the feature vector b and the integer N. The integer $r_i^N$ is obtained by exponentiating the random number $r_i$ by the integer N.

The encrypted data generation unit 206 causes the process to return to the repetition step S611 to generate the subsequent component of the encrypted feature vector C.

The encrypted feature vector C generated by the encrypted data generation unit 206 in this manner is transmitted to the authentication apparatus 102 by the encrypted data transmitting unit 201. The authentication apparatus 102 receives and then stores the encrypted feature vector C.

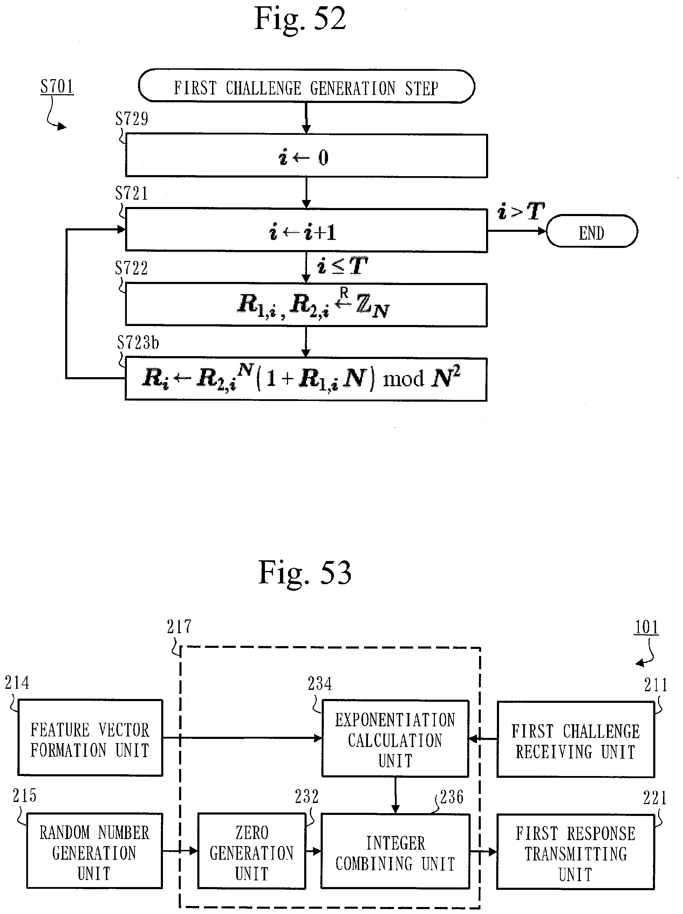

Fig. 52 is a flow chart diagram showing an example of a flow of processes of the first challenge generation step S701 in this embodiment.

In the first challenge generation step S701, the authentication apparatus 102 generates the first challenge R. The first challenge generation step S701 includes the initialization step S729, the repetition step S721, the random number generation step S722, and an integer calculation step S723b, for example.

The first challenge R generated by the encrypted random number generation unit 304 of the authentication apparatus 102 is a T-dimensional vector ($R_1$, $R_2$, ..., $R_T$) having components of integers not less than 0 and less than $N^2$.

First, in the initialization step S729, using the processing device 911, the encrypted random number generation unit 304 initializes the integer i to 0.

In the repetition step S721, using the processing device 911, the encrypted random number generation unit 304 adds 1 to the integer i. When the integer i is larger than T, the encrypted random number generation unit 304 finishes the first challenge generation step S701. When the integer i is not more than T, the encrypted random number generation unit 304 causes the process to proceed to the random number generation step S722, thereby generating the ith component $R_i$ of the first challenge R.

In the random number generation step S722, using the processing device 911, the random number generation unit 303 generates the two random numbers $R_{1, i}$ and $R_{2, i}$, based on the integer N which is the public key pk stored by the public key storage unit 302. The random numbers $R_{1, i}$ and $R_{2, i}$ generated by the random number generation unit 303 are the integers uniform randomly selected from among the integers not less than 1 and less than N. The random number storage unit 322 stores the random number $R_{1, i}$ generated by the random number generation unit 303, using the storage device 914.

In the element calculation step S723a, using the processing device 911, the encrypted random number generation unit 304 calculates the ith component $R_i$ of the first challenge R, based on the integer N which is the public key pk stored by the public key storage unit 302 and the two random numbers $R_{1, i}$ and $R_{2, i}$ generated by the random number generation unit 303 in the random number generation step S722. The ith component $R_i$ of the first challenge R calculated by the encrypted random number generation unit 304 is a remainder when the product of a sum $(1 + R_{1,i}N)$ and an integer $R_{2, i}^N$ is divided by the square of the integer N. The sum $(1 + R_{1,i}N)$ is obtained by adding 1 to a product $R_{1, i}N$ of the random number $R_{1, i}$ and the integer N. The integer $R_{2, i}^N$ is obtained by exponentiating the random number $R_{2, i}$ by the integer N.

The encrypted random number generation unit 304 causes the process to return to the repetition step S721, thereby generating the subsequent component of the first challenge R.

The first challenge R generated by the encrypted random number generation unit 304 in this manner is transmitted to the certification apparatus 101 by the first challenge transmitting unit 311. The certification apparatus 101 receives and then processes the first challenge R.

The number of the random numbers $R_{1, i}$ and $R_{2, i}$ (i being each integer not less than 1 and not more than T) generated by the random number generation unit 303 in the first challenge generation step S701 is 2T in total. T pieces of random numbers $R_{1, i}$ (i being each integer not less than 1 and not more than T) are stored by the random number storage unit 322. The T pieces of random numbers $R_{1, i}$ stored by the random number storage unit 322 are random numbers as plaintexts, and the remaining T pieces of random numbers $R_{2, i}$ (i being each integer not less than 1 and not more than T) are random numbers for encryption. Each component $R_i$ of the first challenge R is obtained by encrypting the random number $R_{1,i}$ as a plaintext.

Fig. 53 is a detailed block diagram showing an example of a configuration of the encrypted data embedding unit 217 in this aspect.

The encrypted data embedding unit 217 of the certification apparatus 101 includes the exponentiation calculation unit 234, the zero generation unit 232, and an integer combining unit 236, for example.

The feature vector b' generated by the feature vector formation unit 214 of the certification apparatus 101 is a T-dimensional vector ($b'_1$, $b'_2$, ..., $b'_T$) having components of the integers not less than 0 and less than N, like the feature vector b generated by the feature vector formation unit 204 of the registration apparatus 104.

Using the processing device 911, the random number generation unit 215 generates T pieces of random numbers $r'_i$ (i being each integer not less than 1 and not more than T), based on the interger N which is the public key pk stored by the public key storage unit 212. The random numbers $r'_i$ generated by the random number generation unit 215 are integers uniform randomly selected from among the integers not less than 1 and less than N.

Using the processing device 911, the exponentiation calculation unit 234 calculations the exponentiation vector $Я$, based on the first challenge R received by the first challenge receiving unit 211 and the feature vector b' generated by the feature vector formation unit 214. The exponentiation vector $Я$ calculated by the exponentiation calculation unit 234 is a T-dimensional vector $(Я_1, Я_2, ..., Я_T)$ having components of integers not less than 1 and less than $N^2$, like the first challenge R. The ith component $Я_i$ (i being the integer not less than 1 and not more than T) of the exponentiation vector $Я$ calculated by the exponentiation calculation unit 234 is a remainder when an integer $R_i^{b'i}$ obtained by exponentiating the ith component $R_i$ of the first challenge R by the ith component $b'_i$ of the feature vector b' is divided by the square of the integer N. Each component $Я_i$ of the exponentiation vector $Я$ calculated by the exponentiation calculation unit 234 is obtained by encrypting the product of the component $b'_i$ of the feature vector b' and the random number $R_{1,i}$ as the plaintext that has been generated by the authentication apparatus 102.

Using the processing device 911, the zero generation unit 232 generates the encrypted zero vector O based on the integer N which is the public key pk stored by the public key storage unit 202 and the T pieces of random numbers $r'_i$ generated by the random number generation unit 215. The encrypted zero vector O is a T-dimensional vector $(o_1, o_2, ..., o_T)$ having components of integers not less than 0 and less than $N^2$. The ith component $o_i$ (i being the integer not less than 1 and not more than T) of the encrypted zero vector O is a remainder when an integer $r'_i^N$ obtained by exponentiating the ith random number $r'_i$ by the integer N is divided by the square of the integer N. Each component $o_i$ of the encrypted zero vector O is obtained by encrypting 0.

Using the processing device 911, the integer combining unit 236 calculates the first response R', based on the exponentiation vector $Я$ calculated by the exponentiation calculation unit 234 and the encrypted zero vector O generated by the zero generation unit 232. The first response R' is a T-dimensional vector $(R'_1, R'_2, ..., R'_T)$ having components of integers not less than 0 and less than $N^2$. The ith component $R'_i$ (i being the integer not less than 1 and not more than T) of the first response R' is a remainder when the product of the ith component $Я_i$ of the exponentiation vector $Я$ and the ith component $o_i$ of the encrypted zero vector O is divided by the square of the integer N. Each component $R'_i$ of the first response R' is obtained by encrypting the product of the random number $R_{1,i}$ as the plaintext and the component $b'_i$ of the feature vector b'. The random number $R_{1,i}$ is encrypted in the component $R_i$ of the first challenge R.

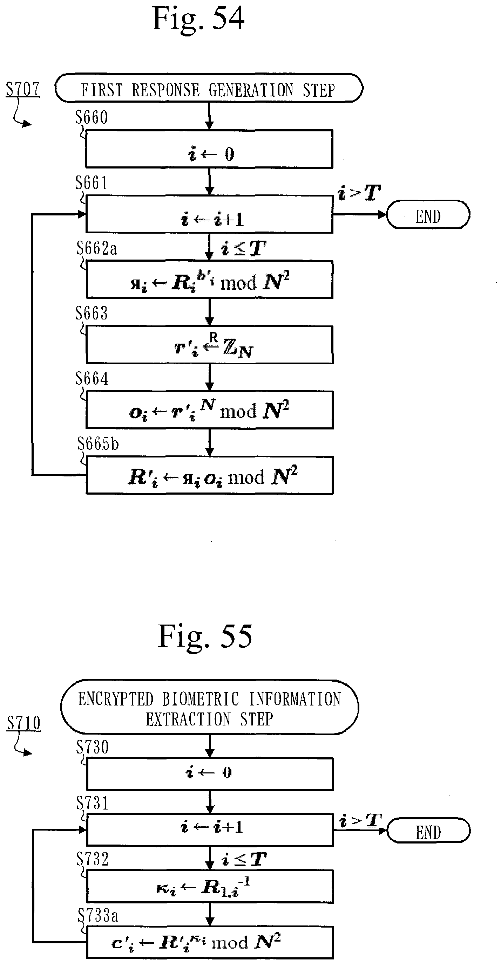

Fig. 54 is a flow chart diagram showing an example of a flow of processes of the first response generation step S707 in this aspect.

In the first response generation step S707, the certification apparatus 101 generates the first response R', based on the feature vector b' and the first challenge R. The first response generation step S707 includes the initialization step S660, the repetition step S661, the exponentiation calculation step S662a, the random number generation step S663, the zero generation step S664, and an integer combining step S665b.

First, in the initialization step S660, the integer combining unit 236 initializes the integer i to 0, using the processing device 911.

In the repetition step S661, the integer combining unit 236 adds 1 to the integer i, using the processing device 911. When the integer i is larger than T, the element combining unit 236 finishes the first response generation step S707. When the integer i is not more than T, the integer combining unit 236 causes the process to proceed to the exponentiation calculation step S662a to generate the ith component $R'_i$ of the first response R'.

In the exponentiation calculation step S662a, using the processing device 911, the exponentiation calculation unit 234 calculates the ith component $Я_i = R_i^{b'i}$ mod $N^2$ of the exponentiation vector $Я$, based on the ith component $b'_i$ of the feature vector b' generated by the feature vector formation unit 214 and the ith vector $R_i$ of the first challenge R received by the first challenge receiving unit 211.

In the random number generation step S663, the random number generation unit 215 generates the random number $r'_i$, using the processing device 911.

In the zero generation step S664, using the processing device 911, the zero generation unit 232 calculates the ith component $o_i = r'_i^N$ mod $N^2$ of the encrypted zero vector O, based on the random number $r'_i$ generated by the random number generation unit 215 in the random number generation step S663.

In the integer combining step S665b, using the processing device 911, the integer combining unit 236 calculates the ith component $R'_i$ of the first response R', based on the ith component $Я_i$ of the exponentiation vector $Я$ calculated by the exponentiation calculation unit 234 in the exponentiation calculcation step S662a and the ith component $o_i$ of the encrypted zero vector O calculated by the zero generation unit 232 in the zero generation step S664.

The integer combining unit 236 causes the process to return to the repetition step S661 to generate the subsequent component of the first response R'.

The first response R' generated by the encrypted data embedding unit 217 in this manner is transmitted to the authentication apparatus 102 by the first response transmitting unit 221. The authentication apparatus 102 receives and then processes the first response R'.

When the component $b'_i$ of the feature vector b' takes only one of two values of 0 and 1, the processes of the first response generation step S707 can be simplified, as follows, for example.

First, there is no need for exponentiation, so that the exponentiation calculation unit 234 is not provided, and the exponentiation calculation step S662a is not executed.

Using the processing device 911, the integer combining unit 236 determines whether or not the ith component $b'_i$ of the feature vector b' is 0 or 1, in the integer combining step S665a. When the ith component $b'_i$ of the feature vector b' is 0, the integer combining unit 236 sets the ith component $o_i = r'i^N \bmod N^2$ of the encrypted zero vector O calculated by the zero generation unit 232 in the zero generation step S664 to the ith component $R'_i$ of the first response R', using the processing device 911. When the ith component $b'_i$ of the feature vector b' is 1, the element combining unit 235 calculates a remainder when the product of the ith component $o_i$ of the encrypted zero vector O calculated by the zero generation unit 232 in the zero generation step S664 and the ith component $R_i$ of the first challenge R received by the first challenge receiving unit 211 is divided by the square of the integer N, and sets the remainder to the ith component $R'_i$ of the first response R', using the processing device 911.

The ith component $R_i$ of the first challenge R is the remainder when the product of the integer $(1 + R_{1,i}N)$ and the integer obtained by exponentiating the random number $R_{2,i}^N$ by N is divided by $N^2$. The integer $(1 + R_{1,i}N)$ is obtained by adding 1 to the product of the random number $R_{1,i}$ and the integer N. Thus, the ith component $R'_i$ of the first response R' is a remainder when the product of an integer $(1 + b'_iR_{1,i}N)$ and the Nth power of the product of the $b'_i$ power of the random number $R_{2,i}$ and the random number $r'_i$ is divided by $N^2$. The integer $(1 + b'_iR_{1,i}N)$ is obtained by adding 1 to the product of the ith component $b'_i$ of the feature vector b', the random number $R_{1,i}$, and the integer N. That is, the ith component $R'_i$ of the first response R' is obtained by encrypting the product of the random number $R_{1,i}$ and the ith component $b'_i$ of the feature vector b'.

The encrypted data extraction unit 305 has the same configuration as that explained in the fourth embodiment. Thus, a description will be given, with reference to Fig. 37.

The encrypted data extraction unit 305 of the authentication apparatus 102 includes the inverse number calculation unit 351 and the exponentiation calculation unit 353, for example.

The encrypted feature vector C' generated by the encrypted data extraction unit 305 of the authentication apparatus 102 is a T-dimensional vector ($c'_1$, $c'_2$, ..., $c'_T$) having components of elements of integers not less than 0 and less than $N^2$, like the encrypted feature vector C generated by the encrypted data generation unit 206 of the registration apparatus 104.

Using the processing device 911, the inverse number calculation unit 351 calculates the inverse number $\kappa_i = R_{1,i}^{-1}$ of each random number $R_{1,i}$ by multiplication of integers modulo N, based on the T pieces of random numbers $R_{1,i}$ (i being each integer not less than 1 and not more than T) stored by the random number storage unit 322. The inverse number $\kappa_i$ is the integer where, when the product of the random number $R_{1,i}$ and the inverse number $\kappa_i$ is divided by N, the remainder is one. Since N is not the prime number, the random number $R_{1,i}$ does not necessarily have the inverse number $\kappa_i$. However, when the two prime numbers p and q that are the prime factors of N are sufficiently large, the probability that the random number $R_{1,i}$ is the zero divisor is extremely small and is negligible.

Using the processing device 911, the exponentiation calculation unit 353 calculates the encrypted feature vector C', based on the first response R' received by the first response receiving unit 331 and the T inverse numbers $\kappa_i$ calculated by the inverse number calculation unit 351. The ith component $c'_i$ (i being the integer not less than 1 and not more than T) of the encrypted feature vector C' calculated by the exponentiation calculation unit 353 is a remainder when an integer obtained by exponentiating the ith component $R'_i$ of the first response R' by the ith inverse number $\kappa_i$ is divided by the square of the integer N. Each component $c'_i$ of the encrypted feature vector C' is obtained by encrypting the component $b'_i$ of the feature vector b'.

Fig. 55 is a flow chart diagram showing an example of a flow of processes of the encrypted biometric information extraction step S710 in this embodiment.

In the encrypted biometric information extraction step S710, the authentication apparatus 102 generates the encrypted feature vector C', based on the first response R'. The encrypted biometric information extraction unit S710 includes the initialization step S730, the repetition step S731, the inverse number calculation step S732, and the exponentiation calculation step S733a, for example.

First, in the initialization step S730, the exponentiation calculation unit 353 initializes the integer i to 0, using the processing device 911.

In the repetition step S731, the exponentiation calculation unit 353 adds 1 to the integer i, using the processing device 911. When the integer i is larger than T, the exponentiation calculation unit 353 finishes the encrypted biometric information extraction step S710. When the integer i is not more than T, the exponentiation calculation unit 353 causes the process to proceed to the inverse number calculation step S732 to generate the ith component $c'_i$ of the encrypted feature vector C'.

In the inverse number calculation step S732, using the processing device 911, the inverse number calculation unit 351 calculates the inverse number $\kappa_i = R_{1, i}^{-1}$, based on the ith random number $R_{1, i}$ out of the T pieces of random numbers stored by the random number storage unit 322 in the first challenge generation step S701.

In the exponentiation calculation step S733a, using the processing device 911, the exponentiation calculation unit 353 calculates the ith component $c'_i = R'^{\kappa i}_i$, based on the ith component $R'_i$ of the first response R' received by the first response receiving unit 331 and the inverse number $\kappa_i$ calculated by the inverse number calculation step S732.

The exponentiation calculation unit 353 causes the process to return to the repetition step S731 to generate the subsequent component of the encrypted feature vector C'.

The encrypted feature vector C' generated by the encrypted data extraction unit 305 in this manner is used in the second challenge generation step S712.

The ith component $R'_i$ of the first response R' is the remainder when the product of the integer $(1 + b'_i R_{1, i} N)$ and the Nth power of $R_{2,i}^{b'_i r'_i}$ is divided by $N^2$. The integer $(1 + b' R_{1, i} N)$ is obtained by adding 1 to the product of an integer $b'_i R_{1, i}$ and the integer N. Thus, the ith component $c'_i$ of the encrypted feature vector C' is the product of an integer $(1 + \kappa_i b'_i R_{1, i} N)$ and the Nth power of $(R_{2, i}^{b'_i r'_i})^{\kappa i}$. The integer $(1 + \kappa_i b'_i R_{1, i} N)$ is obtained by adding 1 to the product of an integer $\kappa_i b'_i R_{1, i}$ and the integer N. Since $R_{1, i} \kappa_i \equiv 1 (\bmod N)$, $c'_i$ is the product of the Nth power of $(R_{2,i}^{b'_i r'_i})^{\kappa i}$ and an integer $(1 + b'_i N)$. The integer $(1 + b'_i N)$ is obtained by adding 1 to the product of an integer $b'_i$ and the integer N. That is, the ith component $c'_i$ of the encrypted feature vector C' is obtained by encrypting the ith component $b'_i$ of the feature vector b'.

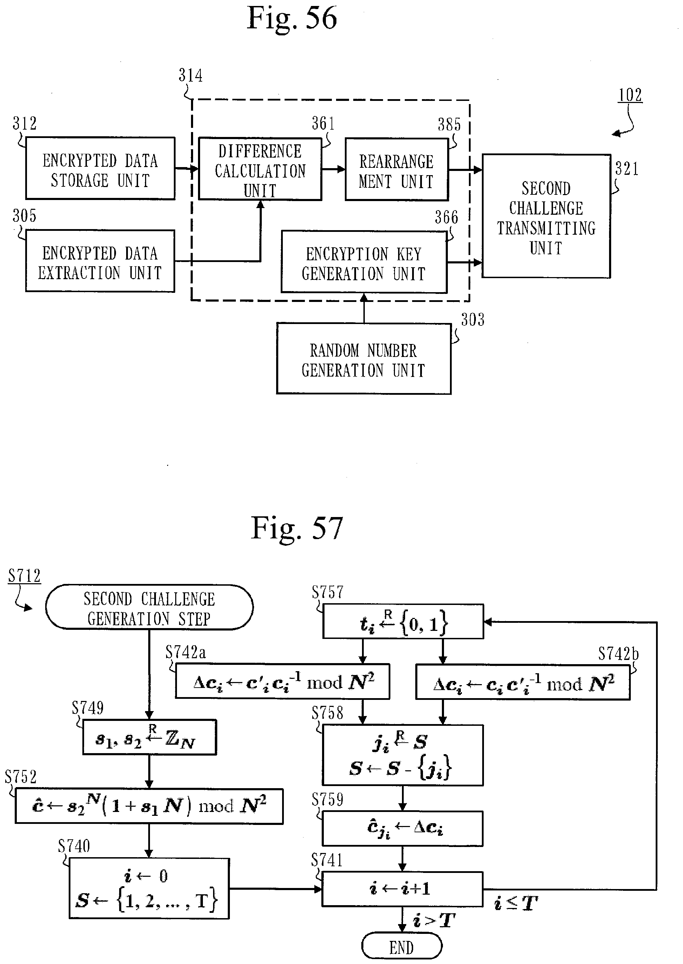

Fig. 56 is a detailed block diagram showing an example of a configuration of the encrypted random similarity degree calculation unit 314 in this aspect.

The second challenge C^ to be generated by the encrypted random similarity degree calculation unit 314 of the authentication apparatus 102 is constituted from $(T + 1)$ integers $c^{\wedge}_1, c^{\wedge}_2, ..., c^{\wedge}_T$, and c^ which are not less than 0 and less than $N^2$. The encrypted random similarity degree calculation unit 314 includes the difference calculation unit 361, a rearrangement unit 385, and the encryption key generation unit 366, for example.

Using the processing device 911, the random number generation unit 303 generates two random numbers $s_1$ and $s_2$, based on the integer N, which is the public key pk stored by the public key storage unit 302. The random numbers $s_1$ and $s_2$ generated by the random number generation unit 303 are integers uniform randomly selected from among the integers not less than 0 and less than N.

The random number storage unit 322 stores one random number $s_1$ out of the random numbers generated by the random number generation unit 303, using the storage device 914.

Using the processing device 911, the difference calculation unit 361 calculates the encrypted difference vector ΔC, based on the encrypted feature vector C stored by the encrypted data storage unit 312 and the encrypted feature vector C' extracted by the encrypted data extraction unit 305. The encrypted difference vector ΔC is a T-dimensional vector $(\Delta c_1, Ac_2, ..., \Delta c_T)$ having components of elements of the integers not less than 0 and less than $N^2$. The ith component $\Delta c_i$ (i being the integer not less than 1 and not more than T) of the encrypted difference vector ΔC is one of the following two integers randomly selected. The integer which is the first candidate for $\Delta c_i$ is a remainder when the product of the ith component $c'_i$ of the encrypted feature vector C' and an inverse number $c_i^{-1}$ of the ith component $c_i$ of the encrypted feature vector C is divided by $N^2$ in multiplication of integers modulo $N^2$. The integer which is the second candidate for $\Delta c_i$ is a remainder when the product of the ith component $c_i$ of the encrypted feature vector C and an inverse number $c'^{-1}_i$ of the ith component $c'_i$ of the encrypted feature vector C' is divided by $N^2$ in the multiplication of integers modulo $N^2$. That is, the first candidate and the second candidate are in a relationship of inverse numbers in the multiplication of integers modulo $N^2$. Each component $\Delta c_i$ of the encrypted difference vector ΔC is obtained by encrypting a difference $(b_i - b'_i)$ whose polarity has been randomly changed. The difference $(b_i - b'_i)$ is the one between the component $b_i$ of the feature vector b and the component $b'_i$ of the feature vector b'.

Using the processing device 911, the rearrangement unit 385 generates T integers $c^{\wedge}_i$ (i being each integer not less than 1 and not more than T), which is a part of the second challenge C^, based on the encrypted difference vector ΔC calculated by the difference calculation unit 361. The integers $c^{\wedge}_i$ are integers not less than 0 and less than $N^2$. The T integers $c^{\wedge}_i$ are obtained by rearranging the order of T components $\Delta c_i$ of the encrypted difference vector ΔC.

Using the processing device 911, the encryption key generation unit 366 calculates one integer c^ which is a part of the second challenge C^, based on the integer N which is the public key pk stored by the public key storage unit 302 and the two random numbers $s_1$ and $s_2$ generated by the random number generation unit 303. The integer c^ is an integer not less than 0 and less than $N^2$. The integer c^ is a remainder when the product of an integer $(1 + s_1 N)$ and an integer $s_2^N$ is divided by the square of the integer N. The integer $(1 + s_1 N)$ is obtained by adding 1 to the product of the random number $s_1$ and the integer N. The integer $s_2^N$ is obtained by exponentiating the random number $s_2$ by the integer N. The integer c^ is obtained by encrypting the random number $s_1$ calculated by the random number generation unit 303.

Fig. 57 is a flow chart diagram showing an example of a flow of processes of the second challenge generation step S712 in this aspect.

In the second challenge generation step S712, the authentication apparatus 102 generates the second challenge C^, based on the two encrypted feature vectors C and C'. The second challenge generation step S712 includes the initialization step S740, the repetition step S741, a random number generation step S757, two difference calculation steps S742a and S742b, a random number generation step S758, a second challenge setting step S759, the random number generation step S749, and the encryption key generation step S752 , for example.

First, in the initialization step S740, using the processing device 911, the rearrangement unit 385 initializes the integer i to 0. Using the processing device 911, the rearrangement unit 385 initializes a group S to a group having components of elements of T integers not less than 1 and not more than T.

In the repetition step S741, using the processing device 911, the rearrangement unit 385 adds 1 to the integer i. When the integer i is larger T, the rearrangement unit 385 finishes the second challenge generation step S712. When the integer is not more than T, the rearrangement unit 385 causes the process to proceed to the random number generation step S757.

In the random number generation step S757, the random number generation unit 303 generates a random number $t_i$, using the processing device 911. The random number $t_i$ is an integer uniform randomly selected from 0 or 1.

When the random number $t_i$ is 0, the difference calculation unit 361 causes the process to proceed to the difference calculation step S742a.

When the random number $t_i$ is 1, the difference calculation unit 361 causes the process to proceed to the difference calculation step S742b.

In the difference calculation step S742a, using the processing device 911, the difference calculation unit 361 calculates the inverse number $c_i^{-1}$ of the integer $c_i$ in multiplication of integers modulo $N^2$, based on the ith component $c_i$ of the encrypted feature vector C. Using the processing device 911, the difference calculation unit 361 calculates the remainder when the product of the integer $c'_i$ and the inverse number $c_i^{-1}$ is divided by the square of the integer N, based on the calculated inverse number $c_i^{-1}$ and the ith component $c'_i$ of the encrypted feature vector C' to set the remainder to the component $\Delta c_i$ of the encrypted difference vector $\Delta C$. The difference calculation unit 361 causes the process to proceed to the random number generation step S758.

In the difference calculation step S742b, using the processing device 911, the difference calculation unit 361 calculates the inverse number $c'_i^{-1}$ of the integer $c'_i$ in multiplication of integers modulo $N^2$, based on the ith component $c'_i$ of the encrypted feature vector C'. Using the processing device 911, the difference calculation unit 361 calculates the remainder when the product of the integer $c_i$ and the inverse number $c'_i^{-1}$ is divided by the square of the integer N, based on the calculated inverse number $c'_i^{-1}$ and the ith component $c_i$ of the encrypted feature vector C to set the remainder to the component $\Delta c_i$ of the encrypted difference vector $\Delta C$. The difference calculation unit 361 causes the process to proceed to the random number generation step S758.

In the random number generation step S758, using the processing device 911, the random number generation unit 303 generates a random number $j_i$. The random number $j_i$ is an integer uniform randomly selected from among elements of the group S. The rearrangement unit 385 removes the random number $j_i$ from the elements of the group S.

In the second challenge setting step S759, using the processing device 911, the rearrangement unit 385 sets the ith component $\Delta c_i$ of the encrypted difference vector $\Delta C$ to a jth integer $c^\wedge_{ji}$ of the second challenge C^.

The rearrangement unit 385 causes the process to return to the repetition step S741.

In the random number generation step S749, using the processing device 911, the random number generation unit 303 generates the two random numbers $s_1$ and $s_2$.

In the encryption key generation step S752, the encryption key generation unit 366 calculates the (T + 1)th integer $c^\wedge = s_2^N (1 + s_1 N) \bmod N^2$ of the second challenge C^, based on the two random numbers $s_1$ and $s_2$ generated by the random number generation unit 303 in the random number generation step S749.

The second challenge C^ calculated by the encrypted random similarity degree calculation unit 314 in this manner is transmitted to the decryption apparatus 103. The decryption apparatus 103 receives and then processes the second challenge C^.

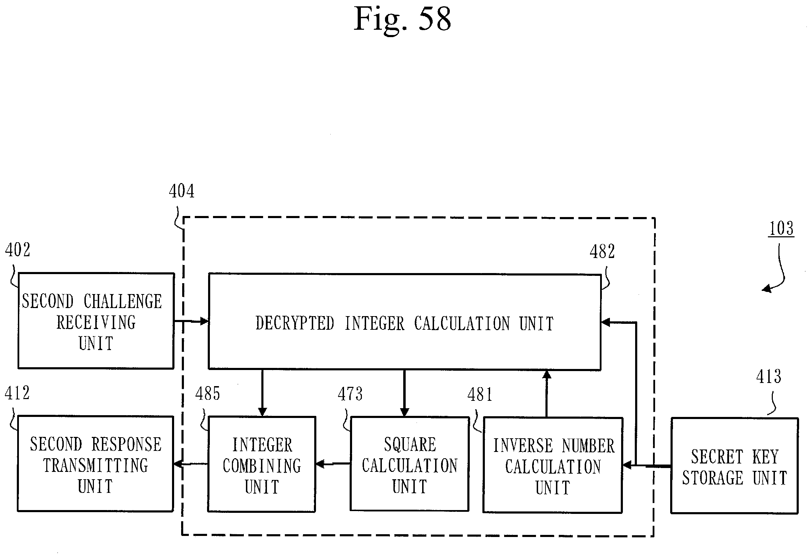

Fig. 58 is a detailed block diagram showing an example of a configuration of the decryption apparatus 404 in this aspect.

The decryption unit 404 of the decryption apparatus 103 includes an inverse number calculation unit 481, a decrypted integer calculation unit 482, the square calculation unit 473, and an integer combining unit 485, for example.

Using the processing device 911, based on the integer N which is the public key pk stored by the public key storage unit 403 and the integer λ which is the secret key sk stored by the secret key storage unit 413, the inverse number calculation unit 481 calculates the inverse number $\lambda^{-1}$ of the integer λ in multiplication of integers modulo N.

Using the processing device 911, the decrypted integer calculation unit 482 calculates (T + 1) integers $z_i$ and z' (i being each integer not less than 1 and not more than T), based on the integer λ which is the secret key sk stored by the secret key storage unit 413, the second challenge C^ received by the second challenge receiving unit 402, and the inverse number $\lambda^{-1}$ calculated by the inverse calculation unit 481. The integers $z_i$ and z' are integers not less than 0 and less than N. The ith integer

$z_i$ (i being the integer not less than 1 and not more than T + 1) is an integer obtained by decrypting the ith integer $c^{\wedge}_i$ of the second challenge $C^{\wedge}$. The integer z' is an integer obtained by decrypting the (T + 1)th integer $c^{\wedge}$ of the second challenge $C^{\wedge}$. Accordingly, the integer $z_i$ indicates a difference between the component of the feature vector b and the corresponding component of the feature vector b'. The integer z' is equal to the random number $s_1$ generated by the random number generation unit 303 of the authentication apparatus 102.

The first to Tth integers $c^{\wedge}_i$ of the second challenge $C^{\wedge}$ are obtained by randomly rearranging the sequence of the components of the encrypted difference vector $\Delta C$. Thus, the decryption apparatus 103 cannot know from which components of the feature vectors b and b' the difference between the components of the feature vectors b and b' indicated by the integer $z_i$ comes from. Further, the polarity of the component $\Delta c_i$ of the encrypted difference vector $\Delta C$ is randomly changed. Thus, the decryption apparatus 103 cannot know which one of the two feature vectors b and b' has the larger components than the other of the two feature vectors b and b'.

Using the processing device 911, the square calculation unit 473 calculates square values $z'_i$ (i being each integer not less than 1 and not more than T), based on the integer N which is the public key pk stored by the public key storage unit 403 and the T integers $z_i$ calculated by the decrypted integer calculation unit 911. Each square value $z'_i$ is an integer not less than 0 and less than N. The ith square value $z'_i$ (i being the integer not less than 1 and not more than T) is a remainder when the square of the ith integer $z_i$ is divided by the integer N.

Using the processing device 911, the integer combining unit 485 calculates the second response Z, based on the integer N which is the public key pk stored by the public key storage unit 403, the integer z' calculated by the decrypted integer calculation unit 482, and the T integers $z'_i$ calculated by the square calculation unit 473. The second response Z is an integer not less than 0 and less than N. The second response Z calculated by the integer combining unit 485 is a remainder obtained by dividing the sum of the T integers $z'_i$ and the integer z' by the integer N. The second response Z is equal to the sum of the random number $s_1$ and $\sum_i[(b_i - b'_i)^2]$ of the square of the Euclidean distance between the feature vector b and the feature vector b'. That is, the second response Z is obtained by encrypting the square of the Euclidean distance between the feature vector b and the feature vector b' by a random number $u_1$ as a temporary key.

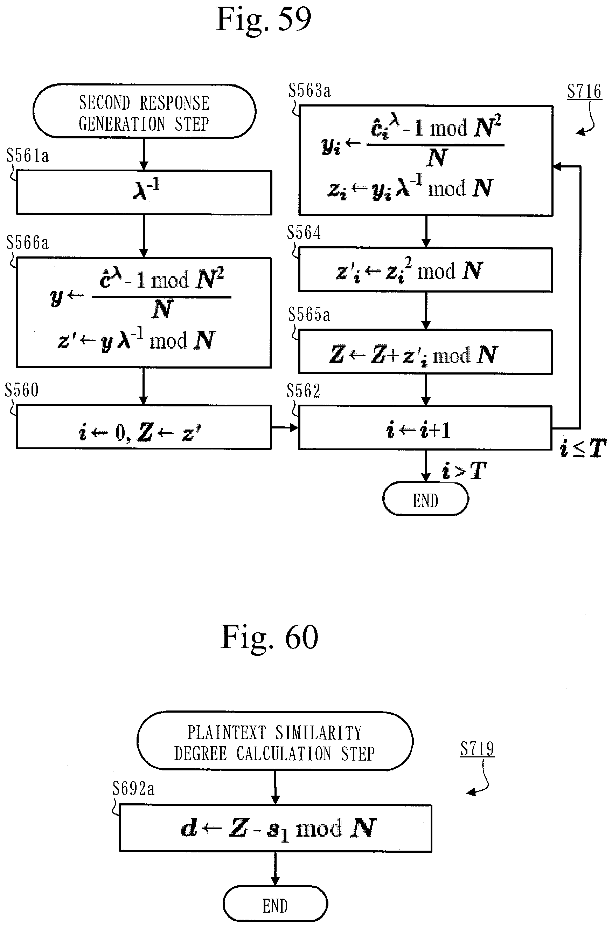

Fig. 59 is a flow chart diagram showing an example of a flow of processes of the second response generation step S716 in this aspect.

In the second response generation step S716, the decryption apparatus 103 generates the second response Z from the second challenge $C^{\wedge}$. The second response generation step S716 includes an inverse number calculation step S561a, a decrypted integer calculation step S566a, the initialization step S560, the repetition step S562, a decrypted integer calculation step S563a, the square calculation step S564, and an integer combining step S565a, for example.

First, in the inverse number calculation step S561a, using the processing device 911, the inverse number calculation unit 481 calculates the inverse number $\lambda^{-1}$ of the integer $\lambda$ which is the secret key sk stored by the secret key storage unit 413. The inverse calculation unit 481 may be configured to calculate the inverse number $\lambda^{-1}$ in advance (e.g., in the setup process S500) using the processing device 911 and then to store the calculated inverse number $\lambda^{-1}$, using the storage device 914.

In the decrypted integer calculation step S566a, using the processing device 911, the decrypted integer calculation unit 482 decrypts the last integer $c^{\wedge}$ of the second challenge $C^{\wedge}$ received by the second challenge receiving unit 402 to calculate the integer z', based on the inverse number $\lambda^{-1}$ calculated by the inverse number calculation unit 481 in the inverse number calculation step S561a. To take an example, the decrypted integer calculation unit 482 calculates a quotient y. The quotient y is obtained by dividing, by N, a remainder when an integer ($c^{\wedge\lambda}$ - 1) is divided by the square of the integer N. The integer ($c^{\wedge\lambda}$ - 1) is obtained by subtracting 1 from an integer obtained by exponentiating the integer $c^{\wedge}$ by the integer $\lambda$. The decrypted integer calculation unit 482 calculates a remainder when a product $y\lambda^{-1}$ of the calculated quotient y and the inverse number $\lambda^{-1}$ is divided by N, and then sets the remainder to the integer z'.

In the initialization step S560, using the processing device 911, the integer combining unit 485 initializes the integer i to 0. The integer combining unit 485 initializes the second response Z to the integer z' calculated by the decrypted integer calculation unit 482 in the decrypted integer calculation step S566a.

In the repetition step S562, using the processing device 911, the integer combining unit 485 adds 1 to the integer i. When the integer i is larger than T, the second response Z has been completed. Thus, the integer combining unit 485 finishes the second response generation step S716. When the integer i is not more than T, the integer combining unit 485 causes the process to proceed to the decrypted integer calculation step S563a.

In the decrypted integer calculation step S563a, using the processing device 911, the decrypted integer calculation unit 482 decrypts the ith component $c^{\wedge}_i$ of the second challenge $C^{\wedge}$ received by the second challenge receiving unit 402 to calculate the ith integer $z_i$, based on the inverse number $\lambda^{-1}$ calculated by the inverse number calculation unit 481 in the inverse number calculation step S561a. To take an example, the decrypted integer calculation unit 482 calculates a quotient $y_i$. The quotient $y_i$ is obtained by dividing an integer ($c^{\wedge\lambda}_i$ - 1) by the square of the integer N. The integer ($c^{\wedge i\lambda}$ - 1) is obtained by subtracting 1 from an integer resulting from exponentiation of the integer $c\hat{}_i$ by the integer $\lambda$. The decrypted integer calculation unit 482 calculates a remainder when a product $y_i\lambda^{-1}$ of the calculated integer $y_i$ and the inverse number $\lambda^{-1}$ is divided by N, and then sets the remainder to the integer $Z_i$.

In the square calculation step S564, using the processing device 911, the square calculation unit 473 calculates the ith square value $z'_i$, based on the ith integer $z_i$ calculated by the decrypted integer calculation unit 482 in the decrypted integer calculation step S563a.

In the integer combining step S565a, using the processing device 911, the integer combining unit 485 combines the ith square value $z'_i$ calculated by the square calculation unit 473 in the square calculation step S564 with the second response Z, by addition of integers modulo the integer N.

The integer combining unit 485 causes the process to return to the repetition step S562 to process the subsequent integer of the second challenge C^.

The second response Z generated by the decryption unit 404 in this manner is transmitted to the authentication apparatus 102 by the second response transmitting unit 412. The authentication apparatus 102 receives and then processes the second response Z.

Fig. 60 is a flow chart diagram showing an example of a flow of processes of the plaintext similarity degree calculation step S719 in this aspect.

In the plaintext similarity degree calculation step S719, the authentication apparatus 102 calculates the similarity degree d from the second response Z. The plaintext similarity degree calculation step S719 includes an integer combining step S692a, for example.

In the integer combining step S692a, using the processing device 911, the plaintext similarity degree extraction unit 315 of the authentication apparatus 102 calculates the similarity degree d, based on the random number $s_1$ stored by the random number storage unit 322 and the second response Z received by the second response receiving unit 341. The similarity degree d is an integer not less than 0 and less than N. The similarity degree d calculated by the plaintext similarity degree extraction unit 315 is a remainder when a difference obtained by subtracting the random number $s_1$ from the second response Z is divided by N.

Based on the similarity degree d calculated by the plaintext similarity degree extraction unit 315, the determination unit 306 determines whether or not the two feature vectors b and b' are similar, thereby determining whether or not a person having biometric information represented by the feature vector b and a person having biometric information represented by the feature vector b' are identical. When the similarity degree d is smaller than the threshold value $d_0$, the determination unit 306 determines that the two feature vectors b and b' are similar.

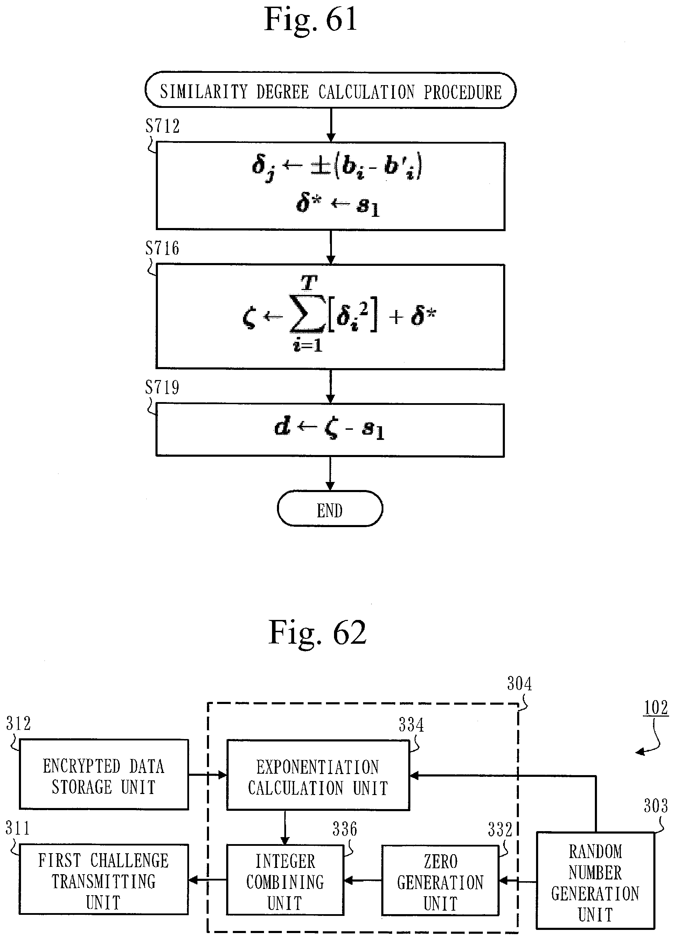

Fig. 61 is a flow chart diagram showing a similarity degree calculation procedure in the biometric authentication system 100 in this aspect.

As a first stage, in the second challenge generation step S712, the authentication apparatus 102 calculates the second challenge C^ from the two encrypted feature vectors C and C', thereby calculating T pieces of $\delta_j = \pm (b_i - b'_i)$ (each of i and j being each integer not less than 1 and not more than T) and one $\delta^* = s_1$. This calculation is performed with the encrypted feature vectors C and C' kept encrypted with the key of the decryption apparatus 103. Thus, the authentication apparatus 102 cannot obtain information on the feature vectors b and b'. Further, the polarity of each $\delta_j$ is randomly changed, and the sequence of the T pieces of $\delta_i$ is also randomly rearranged in order to prevent leakage of the information on the feature vectors b and b' to the decryption apparatus 103.

As a second stage, in the second response generation step S716, the decryption apparatus 103 calculates the second response Z from the second challenge C^, thereby calculating $\xi = \Sigma i[\delta_i^2] + \delta^*$ (i being each integer not less than 1 and not more than T). The first term $\Sigma i[\delta_i^2]$ represents the similarity degree d and the second term $\delta^*$ represents encryption. That is, the decryption apparatus 103 calculates the similarity degree d, and then encrypts the similarity degree d using $\delta^* = s_1$. This calculation is performed the second challenge C^ decrypted with the secret key of the decryption apparatus 103. However, due to randomization in the first stage, the decryption apparatus 103 cannot obtain the information on the feature vectors b and b'.

As a third stage, in the plaintext similarity degree calculation step S719, the authentication apparatus 102 calculates from the second response Z the similarity degree $d = \xi - s_1$. With this arrangement, the authentication apparatus 102 can obtain the similarity degree d, but cannot obtain the information on the feature vectors b and b'.

The encryption system is not limited to the Paillier encryption system. It may be so configured that a different additive-homomorphic encryption system such as the Okamoto-Takashima encryption system, the BGN encryption system, or the Gentry encryption system is employed. It may be so configured that a second encryption system such as the standard public key encryption system is employed for communication between the certification apparatus 101 and the authentication apparatus 102.

As in the second aspect, the biometric authentication system 100 may be so configured that the certification apparatus 101 combines functions of the decryption apparatus 103 and the registration apparatus 104.

Seventh aspect.

A seventh aspect will be described, using Figs. 62 to 68.

Same reference signs are given to components that are common to those in the first to sixth aspects thereby omitting description of the components that are common to those in the first to sixth aspects.

In this aspect, a description will be directed to a configuration in which information on comparison data b that derives from the encrypted feature vector C is embedded into the first challenge R to cause the certification apparatus 101 to perform calculation in the first stage of similarity degree calculation.

In this aspect, a description will be directed to a case where the Paillier encryption system described in the sixth aspect is employed, and the inner product $\Sigma_i[b_i b'_i]$ is calculated as the similarity degree d, as in the third aspect.

Fig. 62 is a detailed block diagram showing an example of a configuration of the encrypted random number generation unit 304 in this aspect.

The encrypted random number generation unit 304 of the authentication apparatus 102 includes an exponentiation calculation unit 334, a zero generation unit 332, and an integer combining unit 336, for example.

Using the processing device 911, the random number generation unit 303 generates 2T pieces of random numbers $R_{1,i}$ and $R_{2,i}$ (i being each integer not less than 1 and not more than T), based on the integer N which is the public key pk stored by the public key storage unit 302. The random numbers $R_{1,i}$ and $R_{2,i}$ generated by the random number generation unit 303 are integers uniform randomly selected from among integers not less than 0 and less than N. Using the storage device 914, the random number storage unit 322 stores T pieces of random numbers $R_{1,i}$ (i being each integer not less than 1 and not more than T) out of the random numbers generated by the random number generation unit 303.

Using the processing device 911, the exponentiation calculation unit 334 calculations an exponentiation vector $Я'$, based on the encrypted feature vector C stored by the encrypted data storage unit 312 and the T pieces of random numbers $R_{1,i}$ generated by the random number generation unit 303. The exponentiation vector $Я'$ calculated by the exponentiation calculation unit 334 is a T-dimensional vector ($Я'_1$, $Я'_2$, ..., $Я'_T$) having components of integers not less than 0 and less than $N^2$. The ith component $Я'_i$ (i being the integer not less than 1 and not more than T) of the exponentiation vector $Я'$ calculated by the exponentiation calculation unit 334 is a remainder when an integer obtained by exponentiating the ith component $c_i$ of the encrypted feature vector C by the ith random number $R_{1,i}'$ is divided by the square of the integer N. Each component $Я'_i$ of the exponentiation vector $Я'$ calculated by the exponentiation calculation unit 334 is obtained by encrypting the product of the component $b_i$ of the feature vector b and the random number $R_{1,i}$ as a plaintext.

Using the processing device 911, the zero generation unit 332 generates an encrypted zero vector O' using the integer N which is the public key pk stored by the public key storage unit 302 and T pieces of random numbers $R_{2,i}$ generated by the random number generation unit 303. The encrypted zero vector O' is a T-dimensional vector ($o'_1$, $o'_2$, ..., $o'_T$) having components of integers not less than 0 and less than $N^2$. The ith component $o'_i$ (i being the integer not less than 1 and not more than T) of the encrypted zero vector O' is a remainder when an integer $R_{2,i}^N$ obtained by exponentiating the ith random number $R_{2,i}$ by the integer N is divided by the square of the integer N. Each component $o'_i$ of the encrypted zero vector O' is obtained by encrypting 0.

Using the processing device 911, the integer combining unit 336 calculates the first challenge R, based on the exponentiation vector $Я'$ calculated by the exponentiation calculation unit 334 and the encrypted zero vector O' generated by the zero generation unit 232. The first challenge R is a T-dimensional vector ($R_1$, $R_2$, ..., $R_T$) having components of the integers not less than 0 and less than $N^2$. The ith component $R_i$ (i being the integer not less than 1 and not more than T) of the first challenge R is a remainder when the product of the ith component $Я'_i$ of the exponentiation vector $Я'$ and the ith component $o'_i$ of the encrypted zero vector O' is divided by the square of the integer N. Each component $R_i$ of the first challenge R is obtained by encrypting the product of the random number $R_{1,i}$ as the plaintext and the component $b_i$ of the feature vector b.

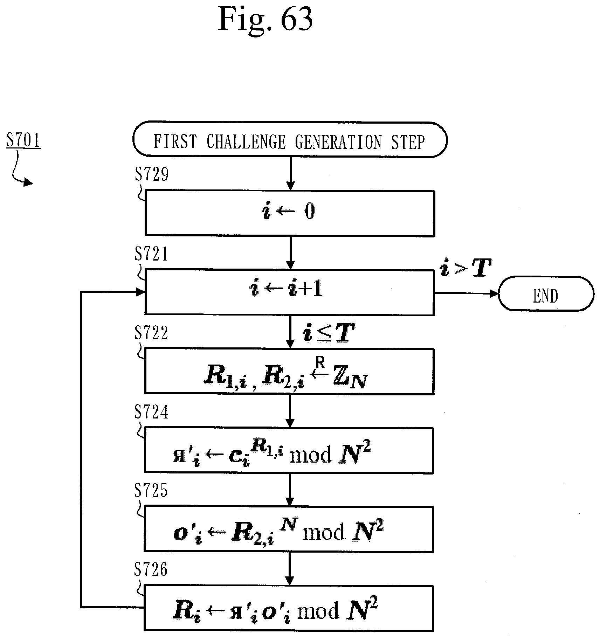

Fig. 63 is a flow chart diagram showing an example of a flow of processes of the first challenge generation step S701 in this aspect.

In the first challenge generation step S701, the authentication apparatus 102 generates the first challenge R, based on the encrypted feature vector C. The first challenge generation step S701 includes the initialization step S729, the repetition step S721, the random number generation step S722, an exponentiation calculation step S724, a zero generation step S725, and an integer combining step S726, for example.

First, in the initialization step S729, using the processing device 911, the integer combining unit 336 initializes the integer i to 0.

In the repetition step S721, using the processing device 911, the integer combining unit 336 adds 1 to the integer i. When the integer i is larger than T, the integer combining unit 336 finishes the first challenge generation step S701. When the integer i is not more than T, the integer combining unit 336 causes the process to proceed to the random number generation step S722, thereby generating the ith component $R_i$ of the first challenge R.

In the random number generation step S722, using the processing device 911, the random number generation unit 303 generates two random numbers $R_{1,i}$

and $R_{2,i}$. The random number storage unit 322 stores the random number $R_{1,i}$ generated by the random number generation unit 303, using the storage device 914.

In the exponentiation calculation step S724, using the processing device 911, the exponentiation calculation unit 334 calculates the ith component $Я'_i$ of the exponentiation vector $Я'$, based on the ith component $c_i$ of the encrypted feature vector C stored by the encrypted data storage unit 312 and the random number $R_{1,i}$ generated by the random number generation unit 303 in the random number generation step S722.

In the zero generation step S725, using the processing device 911, the zero generation unit 332 calculates the ith component $o'_i$ of the encrypted zero vector O', based on the random number $R_{2,i}$ generated by the random number generation unit 303 in the random number generation step S722.

In the integer combining step S726, the integer combining unit 336 calculates the ith component $R_i$ of the first challenge R, based on the ith component $Я'_i$ of the exponentiation vector $Я'$ calculated by the exponentiation calculation unit 334 in the exponentiation calculation step S724a and the ith component $o'_i$ of the encrypted zero vector O' calculated by the zero generation unit 332 in the zero generation step S725.

The integer combining unit 336 causes the process to return to the repetition step S721 to generate the subsequent component of the first challenge R.

The first challenge R generated by the encrypted random number generation unit 304 in this manner is transmitted to the certification apparatus 101 by the first challenge transmitting unit 311. The certification apparatus receives and then processes the first challenge R.

Though the encrypted data embedding unit 217 of the certification apparatus 101 has the same configuration as that in the sixth aspect, the first challenge R has a different meaning. Thus, the first response R' to be generated by the encrypted data embedding unit 217 also has a meaning different from that in the sixth aspect.

That is, the ith component $R'_i$ (i being the integer not less than 1 and not more than T) of the first response R' is obtained by encrypting the product of the ith component $b_i$ of the feature vector b, an ith component $b'_i$ of a feature vector b', and the random number $R_{1,i}$.

The encrypted data extraction unit 305 of the authentication apparatus 102 also has the same configuration as that in the sixth aspect.

The ith component $c'_i$ (i being the integer not less than 1 and not more than T) of the encrypted feature vector C' generated by the encrypted data extraction unit 305 is obtained by encrypting a product $b_i b'_i$ of the ith components $b_i$ and $b'_i$ of the two feature vectors b and b' rather than the ith component $b'_i$ of the feature vector b'.

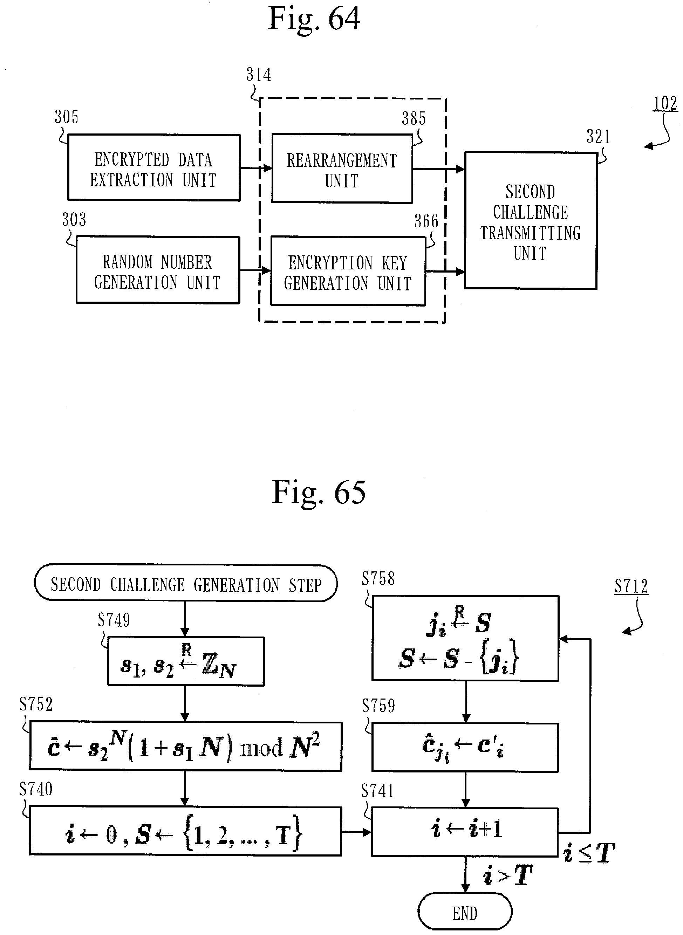

Fig. 64 is a detailed block diagram showing an example of a configuration of the encrypted random similarity calculation unit 314 in this aspect.

The second challenge $C^\wedge$ to be generated by the encrypted random similarity degree calculation unit 314 of the authentication apparatus 102 is constituted from (T + 1) integers $c^\wedge_1$, $c^\wedge_2$, ..., $c^\wedge_T$, and $c^\wedge$ which are not less than 0 and less than $N^2$. The encrypted random similarity degree calculation unit 314 includes the rearrangement unit 385, and the encryption key generation unit 366, for example.

Using the processing device 911, the random number generation unit 303 generates two random numbers $s_1$ and $s_2$, based on the integer N which is the public key pk stored by the public key storage unit 302. The random numbers $s_1$ and $s_2$ generated by the random number generation unit 303 are integers uniform randomly selected from among the integers not less than 0 and less than N.

The random number storage unit 322 stores one random number $s_1$ out of the random numbers generated by the random number generation unit 303, using the storage device 914.

Using the processing device 911, the rearrangement unit 385 generates T integers $c^\wedge_i$ (i being each integer not less than 1 and not more than T), which is a part of the second challenge $C^\wedge$, based on the encrypted feature vector C' generated by the encrypted data extraction unit 305. The integers $c^\wedge_i$ are integers not less than 0 and less than $N^2$. The T integers $c^\wedge_i$ are obtained by rearranging the sequence of T components $\Delta c_i$ of the encrypted feature vector C'.

Using the processing device 911, the encryption key generation unit 366 calculates one integer $c^\wedge$ which is a part of the second challenge $C^\wedge$, based on the integer N which is the public key pk stored by the public key storage unit 302 and the two random numbers $s_1$ and $s_2$ generated by the random number generation unit 303. The integer $c^\wedge$ is an integer not less than 0 and less than $N^2$. The integer $c^\wedge$ is a remainder when the product of the integer $(1 + s_1 N)$ and the integer $s_2^N$ is divided by the square of the integer N. The integer $(1 + s_1 N)$ is obtained by adding 1 to the product of the random number $s_1$ and the integer N. The integer $s_2^N$ is obtained by exponentiating the random number $s_2$ by the integer N. The integer $c^\wedge$ is obtained by encrypting the random number $s_1$ calculated by the random number generation unit 303.

Fig. 65 is a flow chart diagram showing an example of a flow of processes of the second challenge generation step S712 in this aspect.

Though the flow of processes of the second challenge generation step S712 is almost the same as that in the sixth aspect, there are just two differences between the process flows of the second challenge generation step S712 in this aspect and the sixth aspect.

The first difference is that, there are no random number generation step S757 and no two difference calculation steps S742a and S742b, and the procedure is made to proceed to the random number generation step S758 when the integer i is not more than T in the repetition step S741.

The second difference is the process in the second challenge setting step S759. In the second challenge setting step S759, using the processing device 911, the rearrangement unit 385 sets the ith component $\Delta c_i$ of the encrypted feature vector C' to the $j_i$th integer $c^\wedge_{ji}$ of the second challenge C^.

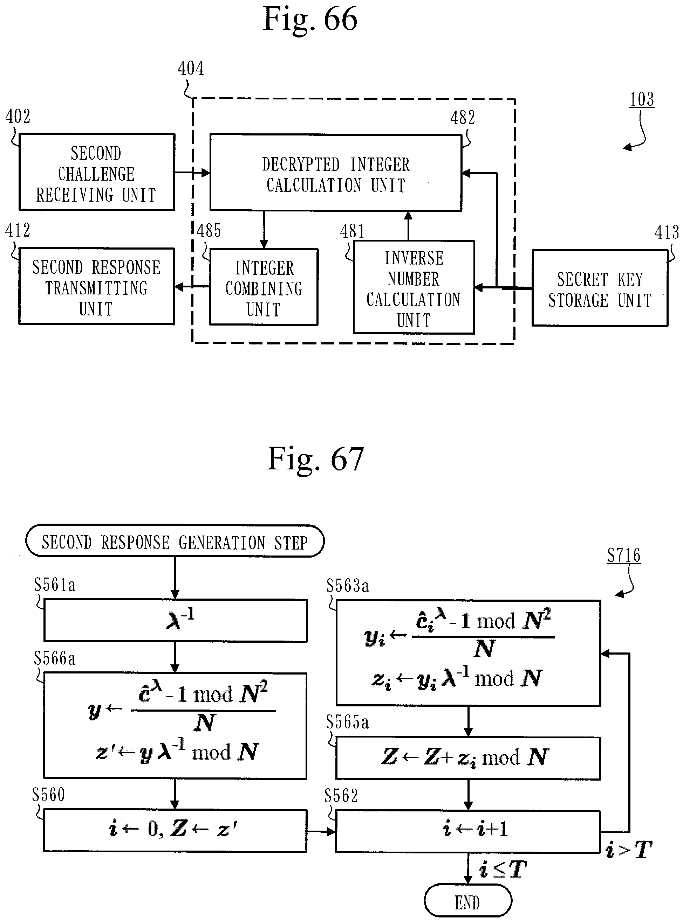

Fig. 66 is a detailed block diagram showing an example of a configuration of the decryption unit 404 in this aspect.

The decryption unit 404 of the decryption apparatus 103 includes the inverse number calculation unit 481, the decrypted integer calculation unit 482, and the integer combining unit 485, for example.

Using the processing device 911, the inverse number calculation unit 481 calculates the inverse number $\lambda^{-1}$ of the integer $\lambda$ in multiplication of integers modulo N, based on the integer N which is the public key pk stored by the public key storage unit 403 and the integer $\lambda$ which is the secret key sk stored by the secret key storage unit 413.

Using the processing device 911, the decrypted integer calculation unit 482 calculates (T + 1) integers $z_i$ and z' (i being each integer not less than 1 and not more than T), based on the integer $\lambda$ which is the secret key sk stored by the secret key storage unit 413, the second challenge C^ received by the second challenge receiving unit 402, and the inverse number $\lambda^{-1}$ calcaulted by the inverse calculation unit 481. The integers $z_i$ and z' are integers not less than 0 and less than N. The ith integer $z_i$ (i being the integer not less than 1 and not more than T + 1) is an integer obtained by decrypting the ith integer $c^\wedge_i$ of the second challenge C^. The integer z' is an integer obtained by decrypting the (T + 1)th integer c^ of the second challenge C^. Accordingly, the integer $z_i$ indicates the product of the component of the feature vector b and the corresponding component of the feature vector b'. The integer z' is equal to the random number $s_1$ generated by the random number generation unit 303 of the authentication apparatus 102.

Using the processing device 911, the integer combining unit 485 calculates the second response Z, based on the integer N which is the public key pk stored by the public key storage unit 403, the (T + 1) integers $z_i$ and z' calculated by the decrypted integer calculation unit 482. The second response Z is an integer not less than 0 and less than N. The second response Z calculated by the integer combining unit 485 is a remainder when the sum of the T integers $z'_i$ and the integer z' is divided by the integer N. The second response Z is equal to the sum of the random number $s_1$ and the inner product $\sum_i[b_i b'_i]$ between the feature vector b and the feature vector b'. That is, the second response Z is obtained by encrypting the inner product of the feature vector b and the feature vector b' by the random number $s_1$ as a temporary key.

Fig. 67 is a flow chart diagram showing an example of a flow of processes of the second response generation step S716 in this aspect.

Though the flow of processes of the second response generation step S716 is almost the same as that in the sixth aspect, there are just two differences between the process flows of the second response generation step S716 in the seventh aspect and the sixth aspect.

The first difference is that there is no square calculation step S564, and the procedure is made to proceed to the integer combining step S565a subsequently to the decrypted integer calculation step S563a.

The second difference is the processing in the integer combining step S565a. In the integer combining step S565a, using the processing device 911, the integer combining unit 485 combines the ith integer $z_i$ calculated by the decrypted integer calculation unit 482 in the decrypted integer calculation step S563a with the second response Z, by addition modulo the integer N.

The second response Z generated by the decryption unit 404 in this manner is transmitted to the authentication apparatus 102 by the second response transmitting unit 412. The authentication apparatus 102 receives and then processes the second response Z.

The plaintext similarity degree extraction unit 315 of the authentication apparatus 102 has the same configuration as that in the sixth aspect.

The plaintext similarity degree extraction unit 315 calculates the inner product $\sum_i[b_i b'_i]$ between the two feature vectors b and b', as the similarity degree d.

The determination unit 306 determines that the two feature vectors b and b' are similar when the similarity degree d calculated by the discrete logarithm calculation unit 373 is larger than the predetermined threshold value $d_0$.

With this arrangement, it can be determined whether the two feature vectors b and b' are similar, using the number of matches between feature points as a reference.

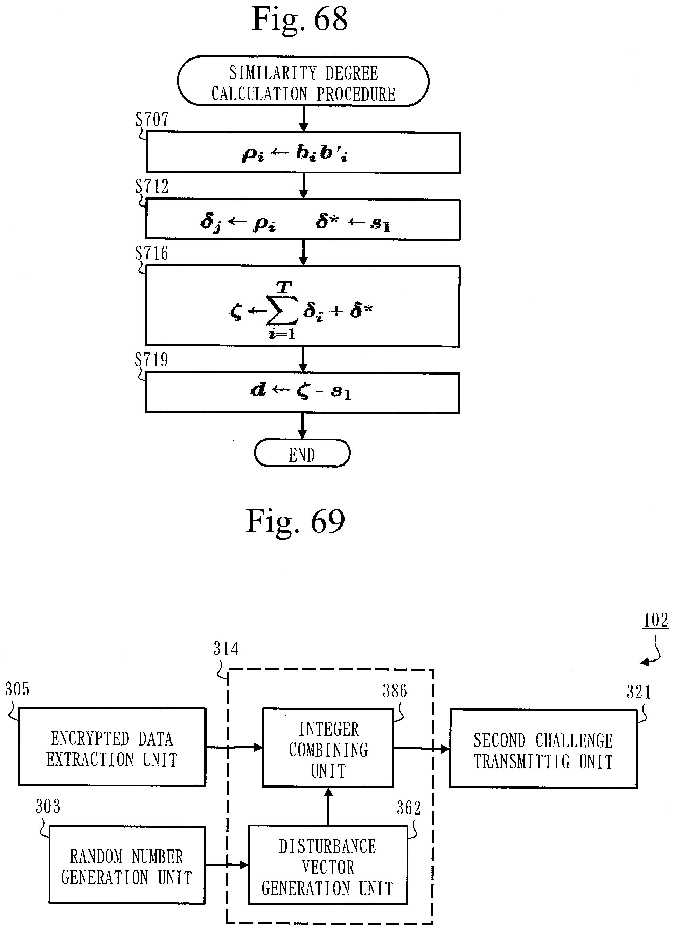

Fig. 68 is a flow chart diagram showing a similarity degree calculation procedure in the biometric authentication system 100 in this aspect.

Assume that $\rho_i$ indicates information encrypted in the first response R'.

A first stage is the first response generation step S707 rather than the second challenge generation step S712. In the first response generation step S707, the certification apparatus 101 calculates the first response R' from the first challenge R, thereby calculating $T\rho_i = b_i b'_i$. This calculation is performed with the feature vectors b and b' kept encrypted with the key of the decryption apparatus 103. Thus, the certification apparatus 101 cannot obtain information on the feature vector b.

As a second stage, in the second challenge generation step S712, the authentication apparatus 102 calculates the second challenge C^ from the encrypted feature vector C', thereby calculating T pieces of $\delta_j$ (j being each integer not less than 1 and not more than T), and one $\delta^* = s_1$. Since $\delta_j$ are obtained by rearranging the

order of the $\rho_i$ so as to prevent leakage of the information on the feature vector b and information on the feature vector b' to the decryption apparatus 103. Thus, the decryption apparatus 103 cannot obtain the information on the feature vector b and the information on the feature vector b'.

As a third stage, in the second response generation step S716, the decryption apparatus 103 calculates the second response Z from the challenge C^, thereby calculating $\xi = \sum_i[\delta_i] + \delta^*$ (i being each integer not less than 1 and not more than T). The first term $\sum_i[\delta_i]$ indicates the similarity degree d, while the second term $\delta^*$ indicates encryption. That is, the decryption apparatus 103 calculates the similarity degree d, and then encrypts the similarity degree, using $\delta^* = s_1$. This calculation is performed with the second challenge C^ decrypted with the secret key of the decryption apparatus 103. However, due to randomization in the second stage, the certification apparatus 101 cannot obtain the information on the feature vector b and the information on the feature vector b'.

As a fourth stage, the authentication apparatus 102 calculates the similarity degree $d = \xi - s_1$ in the plaintext similarity degree calculation step S719. With this arrangement, the authentication apparatus 102 can obtain the similarity degree d, but cannot obtain the information on the feature vector b and the information on the feature vector b'.

The encryption system is not limited to the Paillier encryption system. It may be so configured that a different additive-homomorphic encryption system such as the Okamoto-Takashima encryption system, the BGN encryption system, or the Gentry encryption system is employed. It may be so configured that a second encryption system such as the standard public key encryption system is employed for communication between the certification apparatus 101 and the authentication apparatus 102.

The biometric authentication system 100 may be so configured that the certification apparatus 101 combines functions of the decryption apparatus 103 and the registration apparatus 104, as in the second aspect.

When each component value of the feature vectors b and b' is one of 0 and 1, the product $b_i b'_i$ of the components of the two feature vectors b and b' takes one of the values 0 and 1. Thus, the decryption apparatus 103 may have the same configuration as that described in the sixth aspect. With that arrangement, the certification apparatus 101, the decryption apparatus 103, and the registration apparatus 104 have the same configurations as those in the sixth aspect, and only the authentication apparatus 102 has a different configuration from that in the sixth aspect. Accordingly, by setting the authentication apparatus 102 to a configuration capable of switching between the configuration described in the sixth aspect and the configuration described in this aspect, two types of similarity degrees using the Euclidean distance and the inner product may be calculated without altering the other apparatuses in the biometric authentication system 100.

Eighth aspect.

An eighth aspect will be described, using Figs. 69 to 72.

Same reference signs are given to components that are common to those in the first to seventh aspects, thereby omitting description of the components that are common to those in the first to seventh aspects.

In this aspect, the description will be directed to a variation example of the configuration described in the seventh aspect.

The encrypted feature vector C' is a T-dimensional vector $(c'_1, c'_2, ..., c'_T)$ having components of integers not less than 0 and less than $N^2$. The ith component $c_i$ (i being an integer not less than 1 and not more than T) of the encrypted feature vector C' is obtained by encrypting the product $b_i b'_i$ of the ith component $b_i$ of the feature vector b and the ith component $b'_i$ of the feature vector b'.

Fig. 69 is a detailed block diagram showing an example of a configuration of the encrypted random similarity calculation unit 314 in this aspect.

The encrypted random similarity degree calculation unit 314 of the authentication apparatus 102 includes the disturbance vector generation unit 362 and an integer combining unit 386, for example.

Using the processing device 911, the random number generation unit 303 generates 2T pieces of random numbers $t_{1,i}$ and $t_{2,i}$ (i being each integer not less than 1 and not more than T). The random numbers $t_{1,i}$ and $t_{2,i}$ are integers uniform randomly selected from among the integers not less than 0 and less than N. The random number storage unit 322 stores a summation value $s_1 = \sum_i[t_{1,i}]$ of the T pieces of random numbers $t_{1,i}$ generated by the random number generation unit 303, using the storage device 914. The random number storage unit 322 may be configured to store the T pieces of random numbers $t_{1,i}$ generated by the random number generation unit 303 without alteration. However, only the summation value is needed in a later stage. Thus, the configuration of storing the summation value needs a smaller storage amount than the configuration of storing the T pieces of random numbers $t_{1,i}$ without alteration.

Using the processing device 911, the disturbance vector generation unit 362 generates the disturbance vector T, based on the integer N which is the public key pk stored by the public key storage unit 302 and the 2T pieces of random numbers $t_{1,i}$ and $t_{2,i}$ generated by the random number generation unit 303. The disturbance vector T is a T-dimensional vector $(t_1, t_2, ..., t_T)$ having components of integers not less than 0 and less than $N^2$. The ith component $t_i$ (i being the integer not less than 1 and not more than T) of the disturbance vector T is a remainder when the product of a sum $(1 + t_{1,i}N)$ and an integer $t_{2,i}^N$ is divided by the square of the integer N. The sum $(1 + t_{1,i}N)$ is obtained by adding 1 to the product of the random number $t_{1,i}$ and the integer N. The integer $t_{2,i}^N$ is obtained by exponentiating the random number $t_{2,i}$ by the integer N. Each component $t_i$ of the disturbance vector T is obtained by encrypting the random number $t_{1,i}$.

Using the processing device 911, the integer combining unit 386 generates the second challenge C^, based on the integer N which is the public key pk stored by the public key storage unit 403, the encrypted feature vector C' generated by the encrypted data extraction unit 305, and the disturbance vector T calculated by the disturbance vector generation unit 362. The second challenge C^ is constituted from T integers of $c^_1$, $c^_2$, ..., $c^_T$. The T integers $c^_i$ are integers not less than 0 and less than $N^2$. The ith integer $c^_i$ (i being the integer not less than 1 and not more than T) of the second challenge C^ is a remainder when the product of the ith component $c'_i$ of the encrypted feature vector C' and ith component $t_i$ of the disturbance vector T is divided by the square of the integer N. Each integer $c^_i$ of the second challenge C^ is obtained by encrypting a sum $b_i b'_i + t_{1,i}$ of $b_i b'_i$ encrypted by the component of the encrypted feature vector C' and the random number $t_{1,i}$.

The sequence of the T integers $c^_i$ of the second challenge C^ may be different from the sequence of the components of the feature vectors b and b'.

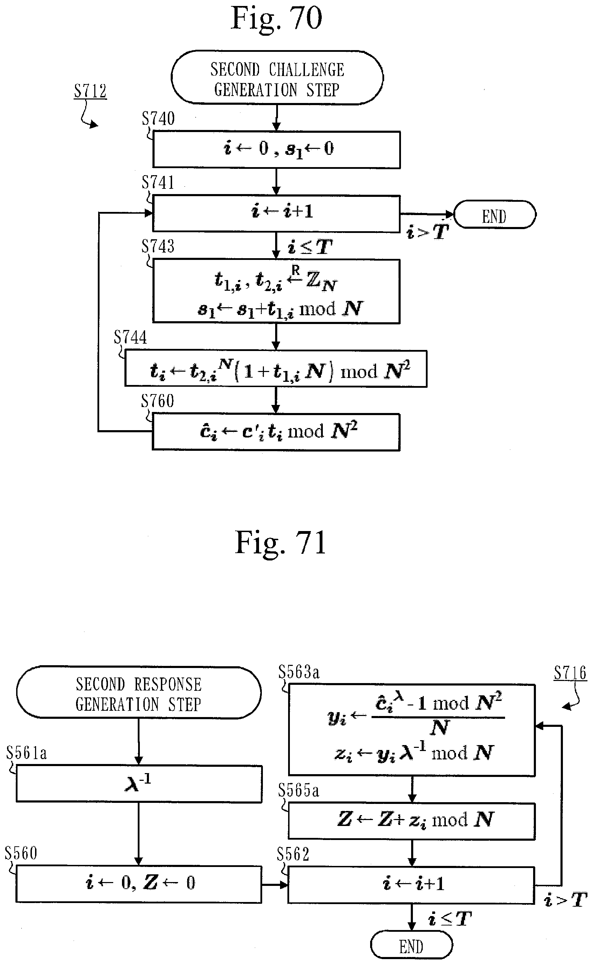

Fig. 70 is a flow chart diagram showing an example of a flow of processes of the second challenge generation step S712 in this aspect.

In the second challenge generation step S712, the authentication apparatus 102 generates the second challenge C^, based on the encrypted feature vector C'. The second challenge generation step S712 includes the initialization step S740, the repetition step S741, the random number generation step S743, the disturbance vector generation step S744, and an integer combining step S760, for example.

First, in the initialization step S740, using the processing device 911, the integer combining unit 386 initializes the integer i to 0. Using the processing device 911, the random number storage unit 322 initializes the integer $s_1$ to 0. Then, the random number storage unit 322 stores the initialized integer $s_1$, using the storage device 914.

In the repetition step S741, using the processing device 911, the integer combining unit 386 adds 1 to the integer i. When the integer i is larger than T, the integer combining unit 386 finishes the second challenge generation step S712. When the integer is not more than T, the integer combining unit 386 causes the procedure to proceed to the random number generation step S743 to generate the ith integer $c^_i$ of the second challenge C^.

In the random number generation step S743, using the processing device 911, the random number generation unit 303 generates two random numbers $t_{1,i}$, and $t_{2,i}$. The random number storage unit 322 adds the random number $t_{1,i}$ generated by the random number generation unit 303 to the integer $s_1$, using the processing device 911, and then stores the integer $s_1$ resulting from the calculation, using the storage device 914.

In the disturbance vector generation step S744, using the processing device 911, the disturbance vector generation unit 362 calculates the ith component $t_i$ of the disturbance vector T, based on the two random numbers $t_{1,i}$ and $t_{2,i}$ generated by the random number generation unit 303 in the random number generation step S743.

In the integer combining step S760, using the processing device 911, the integer combining unit 386 calculates the ith integer $c^_i$ of the second challenge C^, based on the ith component $c'_i$ of the encrypted feature vector C' generated by the encrypted data extraction unit 305 and the ith component $t_i$ of the disturbance vector T calculated by the disturbance vector generation unit 362 in the disturbance vector generation step S744.

The integer combining unit 386 causes the procedure to return to the repetition step S741 to generate the subsequent integer of the second challenge C^.

The second challenge C^ calculated by the encrypted random similarity degree calculation unit 314 in this manner is transmitted to the decryption apparatus 103 by the second challenge transmitting unit 321. The decryption apparatus 103 receives and then processes the second challenge C^.

Since the decryption unit 404 of the decryption apparatus 103 has the same configuration as that described in the seventh aspect, a description will be given with reference to Fig. 66.

The decryption unit 404 of the decryption apparatus 103 includes the inverse number calculation unit 481, the decrypted integer calculation unit 482, and the integer combining unit 485, for example.

Using the processing device 911, the inverse number calculation unit 481 calculates the inverse number $\lambda^{-1}$ of the integer $\lambda$ in multiplication of integers modulo N, based on the integer N which is the public key pk stored by the public key storage unit 403 and the integer $\lambda$ which is the secret key sk stored by the secret key storage unit 413.

Using the processing device 911, the decrypted integer calculation unit 482 calculates T integers $z_i$ (i being each integer not less than 1 and not more than T), based on the integer $\lambda$ which is the secret key sk stored by the secret key storage unit 413, the second challenge C^ received by the second challenge receiving unit 402, and the inverse number $\lambda^{-1}$ calculated by the inverse calculation unit 481. The integers $z_i$ are integers not less than 0 and less than N. The ith integer $z_i$ (i being the integer not less than 1 and and not more than T + 1) is an integer obtained by decrypting the ith integer $c^_i$ of the second challenge C^. The integer $z_i$ is equal to the sum $b_i b'_i + t_{1,i}$ of the random number $t_{1,i}$ and the product of the corresponding components $b_i$ and $b'_i$ of the two feature vectors b.

Using the processing device 911, the integer combining unit 485 calculates the second response Z, based on the integer N which is the public key pk stored by the public key storage unit 403 and the T integers $z_i$ calculated by the decrypted integer calculation unit 482. The second response Z is an integer not less than 0 and not more than N. The second response Z calculated by the integer combining unit 485 is a remainder when the summation of the T integers $z'_i$ is divided by the integer N. The second response Z is equal to the sum of the inner product $\sum_i[b_i b'_i]$ between the feature vector b and the feature vector b' and the summation value $s_1 = \sum_i[t_{1,i}]$ of the random numbers $t_{1,i}$. That is, the second response Z is obtained by encrypting the inner product between the feature vector b and the feature vector b' by the random number $s_1$ as a temporary key.

Fig. 71 is a flow chart diagram showing an example of a flow of processes of the second response generation step S716 in this aspect.

Though the flow of processes of the second response generation step S716 is almost the same as that in the seventh aspect, there are two differences between the flows of processes of the second response generation steps S716 in the seventh aspect and the eighth aspect.

The first difference is that there are no decrypted integer calculation step S566a and no integer combining step S568a, and the initialization step S560 is executed subsequently to the inverse number calculation step S561a.

The second difference is that, in the initialization step S560, the integer combining unit 485 initializes the second response Z to 0, using the processing device 911.

The second response Z generated by the decryption unit 404 in this manner is transmitted to the authentication apparatus 102 by the second response transmitting unit 412. The authentication apparatus 102 receives and then processes the second response Z.

The plaintext similarity degree extraction unit 315 of the authentication apparatus 102 has the same configuration as that in the sixth aspect.

The plaintext similarity degree extraction unit 315 calculates the inner product $\sum_i[b_i b'_i]$ between the two feature vectors b and b', as the similarity degree d.

The determination unit 306 determines that the two feature vectors b and b' are similar when the similarity degree d calculated by the discrete logarithm calculation unit 373 is larger than the predetermined threshold value $d_0$.

With this arrangement, it can be determined whether the two feature vectors b and b' are similar, using the number of matches between feature points as a reference.

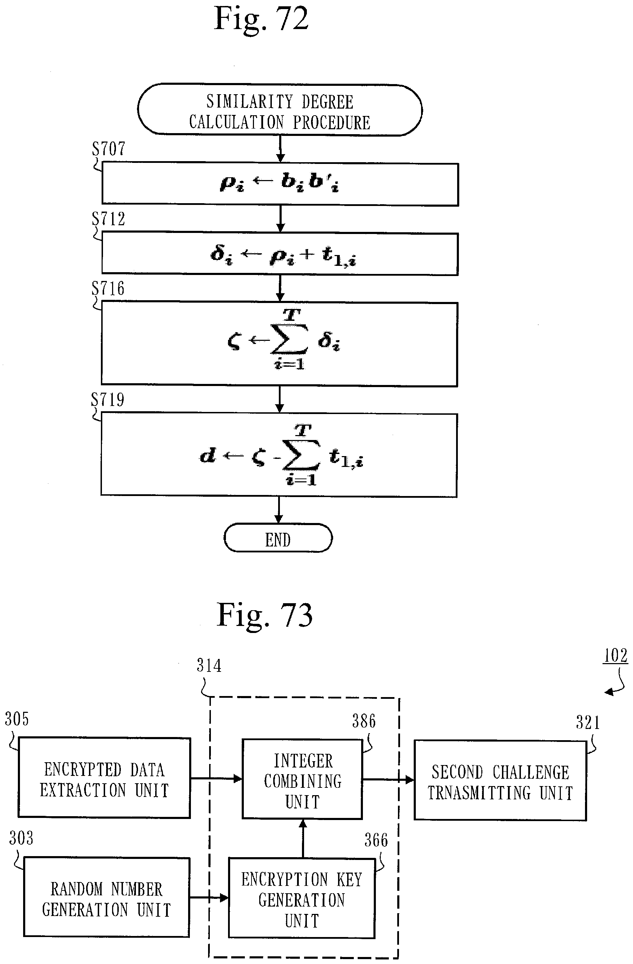

Fig. 72 is a flow chart diagram showing a similarity degree calculation procedure in the biometric authentication system 100 in this aspect.

As a first stage, in the first response generation step S707, the certification apparatus 101 calculates the first response R' from the first challenge R, thereby calculating T pieces of $\rho_i = b_i b'_i$. This calculation is performed with the feature vectors b and b' kept encrypted with the key of the decryption apparatus 103. Thus, the certification apparatus 101 cannot obtain information on the feature vector b.

As a second stage, in the second challenge generation step S712, the authentication apparatus 102 calculates the second challenge C^ from the encrypted feature vector C', thereby calculating T pieces of $\delta_i = \rho_i + t_{1,i}$ (i being each integer not less than 1 and not more than T). This calculation is performed with the encrypted feature vectors C and C' kept encrypted with the key of the decryption apparatus 103. Thus, the authentication apparatus 102 cannot obtain the information on the feature vector b, information on the feature vector b' and information on the similarity degree.

As a third stage, in the second response generation step S716, the decryption apparatus 103 calculates the second response Z from the second challenge C^, thereby calculating $\xi = \sum_i[\delta_i]$ (i being each integer not less than 1 and not more than T). This calculation is performed with the second challenge C^ decrypted with the secret key of the decryption apparatus 103. The decryption apparatus 103, however, does not know the temporary key $s_i = \sum_i[t_{1,i}]$. Thus, the decryption apparatus 103 cannot obtain the information on the feature vector b, the information on the feature vector b', and the information on the similarity degree. That is, this calculation is performed with a result of the decryption encrypted with the temporary key $s_1$.

As a fourth stage, the authentication apparatus 102 in the plaintext similarity degree calculation step S719 calculates the similarity degree $d = \xi - s_1$ from the second response Z. With this arrangement, the authentication apparatus 102 can obtain the similarity degree d, but cannot obtain the information on the feature vector b and the information on the feature vector b'.

The encryption system is not limited to the Paillier encryption system. It may be so configured that a different additive-homomorphic encryption system such as the Okamoto-Takashima encryption system, the BGN encryption system, or the Gentry encryption system is employed. It may be so configured that a second encryption system such as the standard public key encryption system is employed for communication between the certification apparatus 101 and the authentication apparatus 102.

The biometric authentication system 100 may be so configured that the certification apparatus 101 combines functions of the decryption apparatus 103 and the registration apparatus 104, as in the second aspect.

Ninth aspect.

A ninth aspect will be described, using Figs. 73 to 77.

Same reference signs are given to components that are common to those in the first to eighth espects, thereby omitting description of the components that are common to those in the first to eighth aspects.

In this aspect, the description will be directed to another variation example of the configuration described in the seventh aspect.

The encrypted feature vector C' is a T-dimensional vector $(c'_1, c'_2, ..., c'_T)$ having components of integers not less than 0 and less than $N^2$. The ith component $c_i$ (i being an integer not less than 1 and not more than T) of the encrypted feature vector C' is obtained by encrypting the product $b_i b'_i$ between the ith components $b_i$ and $b'_i$ of feature vectors b and b'.

Fig. 73 is a detailed block diagram showing an example of a configuration of the encrypted random number generation unit 314 in this aspect.

The encrypted random similarity degree calculation unit 314 of the authentication apparatus 102 includes the encryption key generation unit 366 and the integer combining unit 386, for example.

Using the processing device 911, the random number generation unit 303 generates two random numbers $s_1$ and $s_2$. The random numbers $s_1$ and $s_2$ are integers uniform randomly selected from among integers not less than 0 and less than N. Using the storage device 914, the random number storage unit 322 stores the random number $s_1$ generated by the random number generation unit 303.

Using the processing device 911, the encryption key generation unit 366 calculates the encryption key Ц, based on the integer N which is the public key pk stored by the public key storage unit 302 and the random numbers $s_1$ and $s_2$ generated by the random number generation unit 303. The encryption key Ц is an integer not less than 0 and less than $N^2$. The encryption key Ц is a remainder when the product of the sum $(1 + s_1 N)$ and the integer $s_2^N$ is divided by the square of the integer N. The sum $(1 + s_1 N)$ is obtained by adding 1 to the product of the random number $s_1$ and the integer N. The integer $s_2^N$ is obtained by exponentiating the random number $s_2$ by the integer N. The encryption key Ц is obtained by encrypting the random number $s_1$ as a plaintext.

Using the processing device 911, the integer combining unit 386 generates the second challenge C^, based on the integer N which is the public key pk stored by the public key storage unit 302, the encrypted feature vector C' generated by the encrypted data extraction unit 305, and the encryption key Ц calculated by the encryption key generation unit 366. The second challenge C^ is an integer not less than 0 and less than $N^2$. The second challenge C^ is a remainder when a total product $\Pi_i[c'_i]$Ц of T components $c'_i$ of the encrypted feature vector C' and the encryption key Ц is divided by the square of the integer N. The second challenge C^ is obtained by encrypting a sum $\sum_i[b_i b'_i] + s_1$ of the random number $s_1$ as the plaintext and the summation of encrypted $b_i b'_i$ which are the components of the encrypted feature vector C' (or the inner product of two feature vectors b and b').

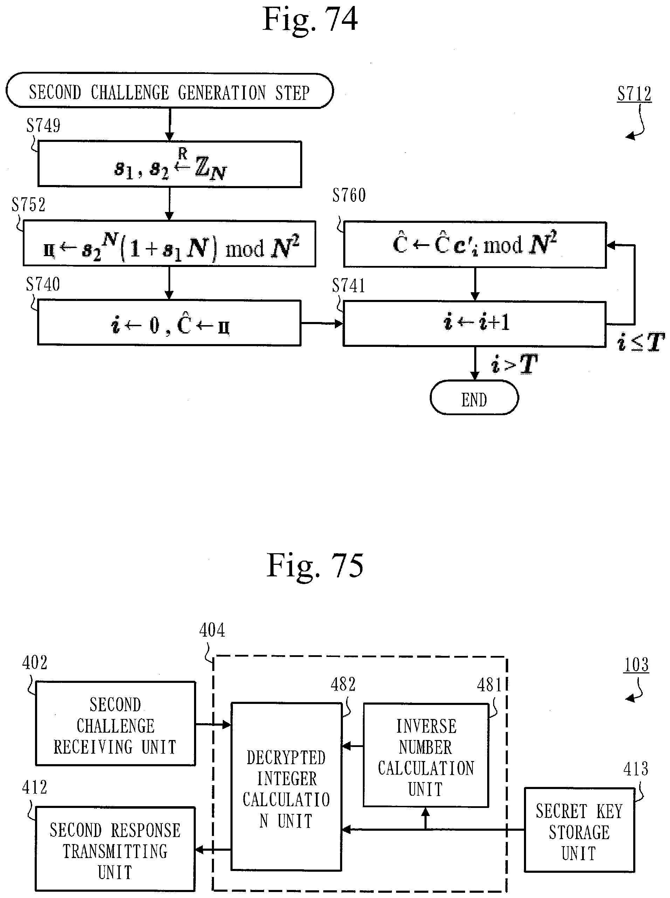

Fig. 74 is a flow chart diagram showing an example of a flow of processes of the second challenge generation step S712 in this aspect.

In the second challenge generation step S712, the authentication apparatus 102 generates the second challenge C^, based on the encrypted feature vector C'. The second challenge generation step S712 includes the random number generation step S749, the encryption key generation step S752, the initialization step S740, the repetition step S741, and the integer combining step S760, for example.

First, in the random number generation step S749, using the processing device 911, the random number generation unit 303 generates two random numbers $s_1$ and $s_2$. The random number storage unit 322 stores the integer $s_1$, using the storage device 914.

In the encryption key generation step S752, using the processing device 911, the encryption key generation unit 366 calculates the encryption key Ц, based on the two random numbers $s_1$ and $s_2$ generated by the random number generation unit 303 in the random number generation step S749.

In the initialization step S740, using the processing device 911, the integer combining unit 386 initializes the integer i to 0, and initializes the second challenge C^ to the encryption key Ц calculated by the encryption key generation unit 366 in the encryption key generation step S752.

In the repetition step S741, using the processing device 911, the integer combining unit 386 adds 1 to the integer i. When the integer i is larger than T, the second challenge C' has been completed. Thus, the integer combining unit 386 finishes the second challenge generation step S712. When the integer i is not more than T, the integer combining unit 386 causes the procedure to proceed to the integer combining step S760.

In the integer combining step S760, using the processing device 911, the integer combining unit 386 combines the ith component $c'_i$ of the encrypted feature vector C' generated by the encrypted data extraction unit 305 with the second challenge C^, by multiplication of integers modulo the square of the integer N.

The integer combining unit 386 causes the procedure to return to the repetition step S741.

The second challenge C^ generated by the encrypted random similarity degree calculation unit 314 in this manner is transmitted to the decryption apparatus 103 by the second challenge transmitting unit 321. The decryption apparatus 103 receives and then processes the second challenge C^.

Fig. 75 is a detailed block diagram showing an example of a configuration of the decryption unit 404 in this aspect.

The decryption unit 404 of the decryption apparatus 103 includes the inverse number calculation unit 481 and the decrypted integer calculation unit 482, for example.

Using the processing device 911, the inverse number calculation unit 481 calculates the inverse number $\lambda^{-1}$ of the integer $\lambda$ in multiplication of integers modulo N, based on the integer N which is the public key pk stored by the public key storage unit 403 and the integer $\lambda$ which is the secret key sk stored by the secret key storage unit 413.

Using the processing device 911, the decrypted integer calculation unit 482 calculates the second response Z, based on the integer $\lambda$ which is the secret key sk stored by the secret key storage unit 413, the second challenge C^ received by the second challenge receiving unit 402, and the inverse number $\lambda^{-1}$ calcaulted by the inverse calculation unit 481. The second response Z is an integer not less than 0 and less than N. The second response Z is the integer obtained by decrypting the second challenge C^. The second response Z is equal to the sum of the random number $s_1$ and the inner product $\sum_i[b_i b'_i]$ between the feature vector b and the feature vector b'. That is, the second response Z is obtained by encrypting the inner product of the feature vector b and the feature vector b' by the random number $s_1$ as the temporary key.

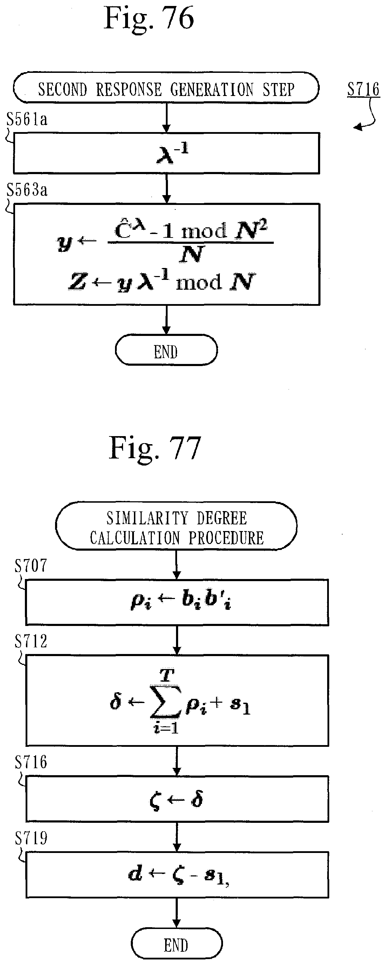

Fig. 76 is a flow chart diagram showing an example of a flow of processes of the second response generation step S716 in this aspect.

In the second response generation step S716, the decryption apparatus 103 generates the second response Z from the second challenge C^. The second response generation step S716 includes the inverse number calculation step S561a and the decrypted integer calculation step S563a, for example.

First, in the inverse number calculation step S561a, using the processing device 911, the inverse number calculation unit 481 calculates the inverse number $\lambda^{-1}$ of the integer $\lambda$ which is the secret key sk stored by the secret key storage unit 413.

In the decrypted integer calculation step S563a, using the processing device 911, the decrypted integer calculation unit 482 decrypts the second challenge C^ received by the second challenge receiving unit 402 to calculate the second response Z, based on the inverse matrix $\lambda^{-1}$ calculated by the inverse number calculation unit 481 in the inverse number calculation step S561a and the like. To take an example, the decrypted integer calculation unit 482 calculates the quotient y. The quotient y is obtained by dividing an integer ($C^{\wedge\lambda}$ - 1) by the square of the integer N. The integer ($C^{\wedge\lambda}$ - 1) is obtained by subtracting 1 from an integer resulting from exponentiation of the second challenge C^ by the integer $\lambda$. The decrypted integer calculation unit 482 calculates a remainder when the product $y\lambda^{-1}$ of the calculated quotient y and the inverse number $\lambda^{-1}$ is divided by the integer N, and then sets the remainder to the second response Z.

The second response Z generated by the decryption unit 404 in this manner is transmitted to the authentication apparatus 102 by the second response transmitting unit 412. The authentication apparatus 102 receives and then processes the second response Z.

The plaintext similarity degree extraction unit 315 of the authentication apparatus 102 has the same configuration as that in the sixth aspect.

The plaintext similarity degree extraction unit 315 calculates the inner product $\sum_i[b_i b'_i]$ between the two feature vectors b and b', as the similarity degree d.

The determination unit 306 determines that the two feature vectors b and b' are similar when the similarity degree d calculated by the discrete logarithm calculation unit 373 is larger than the predetermined threshold value $d_0$.

With this arrangement, it can be determined whether or not the two feature vectors b and b' are similar, using the number of matches between feature points as a reference.

Fig. 77 is a flow chart diagram showing a similarity degree calculation procedure in the biometric authentication system 100 in this aspect.

As a first stage, in the first response generation step S707, the certification apparatus 101 calculates the first response R' from the first challenge R, thereby calculating T pieces of $\rho_i = b_i b'_i$. This calculation is performed with the two feature vectors b and b' kept encrypted with the key of the decryption apparatus 103. Thus, the certification apparatus 101 cannot obtain information on the feature vector b.

As a second stage, in the second challenge generation step S712, the authentication apparatus 102 calculates the second challenge C^ from the encrypted feature vector C', thereby calculating $\delta = \sum_i[b_i b'_i] + s_1$ (i being each integer not less than 1 and not more than T). This calculation is performed with the encrypted feature vectors C and C' kept encrypted with the key of the decryption apparatus 103. Thus, the authentication apparatus 102 cannot obtain the information on the feature vector b and information on the feature vector b'.

As a third stage, in the second response generation step S716, the decryption apparatus 103 calculates the second response Z from the second challenge C^, thereby calculating $\xi$. Since the decryption apparatus 103 just performs decryption processing, $\xi$ is equal to $\delta$. The decryption apparatus 103 does not know the temporary key $s_1$. Thus, the decryption apparatus 103 cannot obtain the information on the feature vector b, the information on the feature vector b', and information on the similarity degree. That is, this calculation is performed with a result of the decryption encrypted with the temporary key $s_1$.

As a fourth stage, in the plaintext similarity degree calculation step S719, the authentication apparatus 102 calculates the similarity degree d = $\xi$ - $s_1$ from the

second response Z. With this arrangement, the authentication apparatus 102 can obtain the similarity degree d, but cannot obtain the information on the feature vector b and the information on the feature vector b'.

The encryption system is not limited to the Paillier encryption system. It may be so configured that a different additive-homomorphic encryption system such as the Okamoto-Takashima encryption system, the BGN encryption system, or the Gentry encryption system is employed. It may be so configured that a second encryption system such as the standard public key encryption system is employed for communication between the certification apparatus 101 and the authentication apparatus 102.

The biometric authentication system 100 may be so configured that the certification apparatus 101 combines functions of the decryption apparatus 103 and the registration apparatus 104, as in the second aspect.

Tenth aspect.

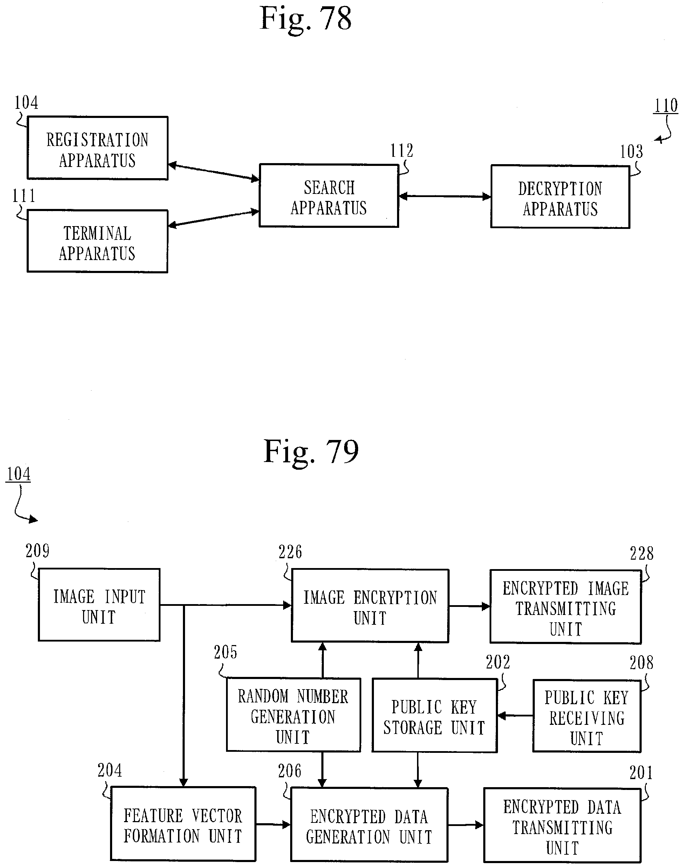

A tenth aspect will be described, using Figs. 78 to 81.

Same reference signs are given to components that are common to those in the first to ninth aspects, thereby omitting description of the components that are common to those in the first to ninth aspects.

Fig. 78 is a system configuration diagram showing an example of an overall configuration of an image search system 110.

The image search system 110 is a system for searching an image similar to a specified image from among registered images with image data of the registered images kept encrypted.

The image search system 110 (similarity degree calculation system) includes a terminal apparatus 111, a search apparatus 112, the decryption apparatus 103, and the registration apparatus 104, for example.

The registration apparatus 104 inputs image data, and then extracts from the input image data a feature of each image represented by the image data, thereby generating the feature vector b. The registration apparatus 104 encrypts the generated feature vector b to generate the encrypted feature vector C. The registration apparatus 104 encrypts the input image data to generate encrypted image data. The registration apparatus 104 registers the encrypted feature vector C and the encrypted image data in the search apparatus 112. It may be so configured that the encrypted image data is stored in a location different from the search apparatus 112, and that the encrypted feature vector C and data indicating the location of the encrypted image data are registered in the search apparatus 112.

The terminal apparatus 111 receives image data and extracts from the input image data a feature of an image represented by the image data, thereby generating the feature vector b'. The terminal apparatus 111 encrypts the generated feature vector b' to generate the encrypted feature vector C'. The terminal apparatus 112 requests the search apparatus 112 to make a search.

The search apparatus 112 stores a plurality of the encrypted feature vectors C registered in the registration apparatus 104. The search apparatus 112 calculates the similarity d, based on each of the stored encrypted feature vectors C and the encrypted feature vector C' transmitted from the terminal apparatus 111, based on the request for the search from the terminal apparatus 111. The search apparatus 112 determines the image similar to the specified image from among the registered images, based on the calculated similarity degree d, and returns the encrypted image data of the determined image or the data indicating the location of the encrypted image data to the terminal apparatus 111.

Hardware configurations of the terminal apparatus 111, the search apparatus 112, the decryption apparatus 103, and the registration apparatus 104 are the same as those described in the first aspect.

Fig. 79 is a block configuration diagram showing an example of a functional block configuration of the registration apparatus 104 in this aspect.

The registration apparatus 104 includes the public key receiving unit 208, the public key storage unit 202, an image input unit 209, the feature vector formation unit 204, the random number generation unit 205, the encrypted data generation unit 206, the encrypted data transmitting unit 201, an image encryption unit 226, and an encrypted image transmitting unit 228, for example.

The public key receiving unit 208 (public key acquisition unit) receives the public key pk of the decryption apparatus 103, using the input device 912 such as a communication device. The public key pk of the decryption apparatus 103 is a public key corresponding to the secret key sk stored by the decryption apparatus 103 in secret. Data encrypted with the public key pk of the decryption apparatus 103 can be decrypted only with the secret key sk stored by the decryption apparatus 103.

The public key storage unit 202 stores the public key pk received by the public key receiving unit 208, using the storage device 914.

The image input unit 209 inputs the image data to be registered, using the input device 912.

Using the processing device 911, the feature vector formation unit 204 (comparison data acquisition unit) generates the feature vector b (comparison data) from the image data input by the image input unit 209. The feature vector b is a T-dimensional vector having components of integers, for example.

Using the processing device 911, the random number generation unit 205 generates random numbers to be used when encrypting the feature vector b and the image data.

Using the processing device 911, the encrypted data generation unit 206 (comparison ciphertext generation unit) generates the encrypted feature vector C (comparison ciphertext), based on the public key stored by the public key storage unit 202, the feature vector b

generated by the feature vector formation unit 204, and the random numbers generated by the random number generation unit 205. The encrypted feature vector C is a T-dimensional vector having components of ciphertexts. Each component of the encrypted feature vector C is obtained by encrypting each component of the feature vector b.

The encrypted data transmitting unit 201 (comparison ciphertext notification unit) transmits the encrypted feature vector C to the search apparatus 112, using the output device 913 such as a communication device, in order to register the encrypted feature vector C generated by the encrypted data generation unit 206 in the search apparatus 112.

Using the processing device 911, the image encryption unit 226 generates the encrypted image data, based on the public key stored by the public key storage unit 202, the image data input by the image input unit 209, and the random numbers generated by the random number generation unit 205. The encrypted image data is obtained by encrypting the image data. An encryption system to be used when the image encryption unit 226 encrypts the image data may be the same encryption system as that to be used when the encrypted data generation unit 206 encrypts the feature vector b, or may be a different encryption system.

The encrypted image transmitting unit 228 transmits the encrypted image data to the search apparatus 112 together with the encrypted feature vector C to be transmitted by the encrypted data transmitting unit 201, using the output device 913 such as the communication device, in order to register the encrypted iamge data generated by the image encryption unit 226. It may be so configured that the encrypted image data is not registered in the search apparatus 112, but is registered in a different apparatus. It may also be so configured that the registration apparatus 104 itself stores the encrypted image data. In that case, the encrypted iamge transmitting unit 228 transmits to the search apparatus 112 the data indicating the location of the encrypted image data such as the URI (unified resource identifier) of the encrypted image data.

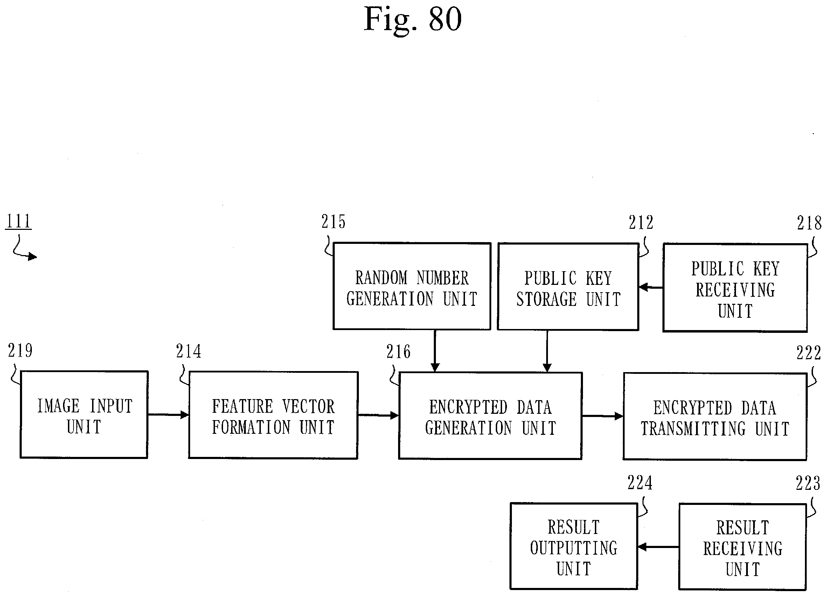

Fig. 80 is a block configuration diagram showing an example of a functional block configuration of the terminal apparatus 111 in this aspect.

The terminal apparatus 111 includes the public key receiving unit 218, the public key storage unit 212, an image input unit 219, the feature vector formation unit 214, the random number generation unit 215, an encrypted data generation unit 216, an encrypted data transmitting unit 222, a result receiving unit 223, and a result outputting unit 224, for example.

The public key receiving unit 218 (public key acquisition unit) receives the public key pk of the decryption apparatus 103, using the input device 912 such as a communication device.

Using the storage device 914, the public key storage unit 202 stores the public key pk received by the public key receiving unit 218.

The image input unit 219 inputs the image data from which the similar image should be searched, using the input device 912.

The feature vector formation unit 214 (target data acquisition unit) generates the feature vector b' (target data) from the image data input by the image input unit 219, using the processing device 911. The feature vector b' is a T-dimensional vector having components of integers, for example.

Using the processing device 911, the random number generation unit 215 generates random numbers to be used when encrypting the feature vector b'.

Using the processing device 911, the encrypted data generation unit 216 (target ciphertext generation unit) generates the encrypted feature vector C' (target ciphertext), based on the public key stored by the public key storage unit 212, the feature vector b' generated by the feature vector formation unit 214, and the random numbers generated by the random number generation unit 215. The encrypted feature vector C' is a T-dimensional vector having components of ciphertexts. Each component of the encrypted feature vector C' is obtained by encrypting each component of the feature vector b'.

Using the output device 913 such as a communication device, the encrypted data transmitting unit 222 (target ciphertext notification unit) transmits to the search apparatus 112 the encrypted feature vector C' generated by the ciphertext data generation unit 216 in order to search the image similar to that represented by the image data input by the image input unit 219.

Using the input device 912 such as the communication device, the result receiving unit 223 receives a result of the search transmitted by the search apparatus 112. The result of the search is the encrypted image data itself representing the image similar to that represented by the image data input by the image input unit 219 or the data indicating the location of the encrypted image data, for example.

Using the output device 913 such as a display device, the result outputting unit 224 outputs the result of the search received by the result receiving unit 223. The result outputting unit 224 displays the number of the images similar to the image represented by the image data input by the image input unit 219, for example. Alternatively, it may be so configured that the result outputting unit 224 displays the image by decryption of the encrypted image data.

Different from the certification apparatus 101 described in the first to ninth embodiments, the terminal apparatus 111 transmits the encrypted feature vector C' without alteration. In an authentication system, it is necessary to prevent spoofing using a replay attack. On contrast therewith, the terminal apparatus 111 in the image search system 110 in this aspect can just obtain the encrypted image data that has been encrypted, as the result of the search. If the terminal apparatus 111 has no authorization of decrypting the encrypted image data, the terminal apparatus 111 cannot display the searched image. Thus, the need for preventing the replay attack is eliminated.

However, the terminal apparatus 111 may be configured to receive the first challenge R from the search apparatus 112, to generate the first response R' based on the received first challenge R and the feature vector b', and then to transmit the generated first response R' to the search apparatus 112, like the certification apparatus 101 described in each of the first to ninth aspect.

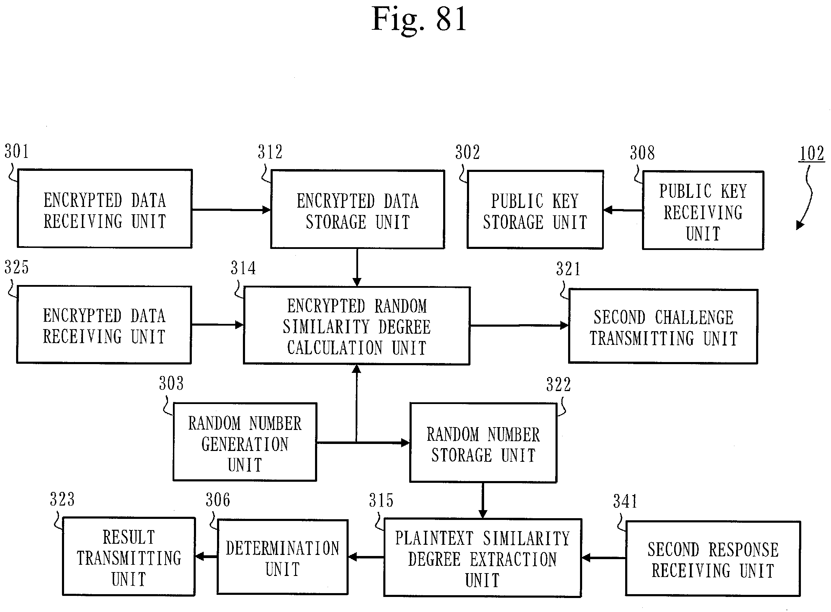

Fig. 81 is a block configuration diagram showing an example of a functional block configuration of the search apparatus 112 in this aspect.

The search apparatus 112 includes the public key receiving unit 308, the public key storage unit 302, the encrypted data receiving unit 301 and an encrypted data receiving unit 325 which are two encrypted data receiving units, the encrypted data storage unit 312, the random number generation unit 303, the random number storage unit 322, the encrypted random similarity degree calculation unit 314, the second challenge transmitting unit 321, the second response receiving unit 341, the plaintext similarity degree extraction unit 315, the determination unit 306, and a result transmitting unit 323.

Using the input device 912 such as a communication device, the public key receiving unit 308 (public key acquisition unit) receives the public key pk of the decryption apparatus 103.

Using the storage device 914, the public key storage unit 302 stores the public key pk received by the public key receiving unit 308.

The encrypted data receiving unit 301 (comparison ciphertext acquisition unit) receives the encrypted feature vector C transmitted by the registration apparatus 104, using the input device 912 such as the communication device.

The encrypted data storage unit 312 (comparison ciphertext storage unit) stores the encrypted feature vector C received by the encrypted data receiving unit 301, using the storage device 914. The encrypted data storage unit 312 associates the plurality of the encrypted feature vectors C with the data indicating the locations of the encrypted image data.

The encrypted data receiving unit 325 (target ciphertext acquisition unit) receives the encrypted feature vector C' transmitted by the terminal apparatus 111, using the input device 912 such as the communication device.

Using the processing device 911, the random number generation unit 303 generates random numbers to be used for generation of the second challenge C^.

Using the storage device 914, the random number storage unit 322 stores the random numbers as plaintexts out of the random numbers generated by the random number generation unit 303.

Using the processing device 911, the encrypted random similarity degree calculation unit 314 generates the second challenge C^, based on the encrypted feature vector C' received by the encrypted data receiving unit 325 and the random numbers generated by the random number generation unit 303 for each of the encrypted feature vectors C stored by the encrypted data storage unit 312.

The second challenge transmitting unit 321 transmits the second challenge C^ generated by the encrypted random similarity degree calculation unit 314 to the decryption apparatus 103, using the output device 913 such as a communication device.

The second response receiving unit 341 receives the second response Z transmitted by the decryption apparatus 103, as a response for the second challenge C" transmitted by the second challenge transmitting unit 321, using the input device 912 such as the communication device.

Using the processing device 911, the plaintext similarity degree extraction unit 315 calculates the similarity degree d, based on the random numbers stored by the random number storage unit 322 and the second response Z received by the second response receiving unit 341.

Using the processing device 911, the determination unit 306 determines the image similar to the image represented by the image data input by the terminal apparatus 111, based on the similarity degree d calculated by the plaintext similarity degree extraction unit 315. Assume that the similarity degree d is the square of the Euclidean distance or the like which indicates that the feature vectors b and b' are more similar as the similarity degree d becomes smaller. Then, when the similarity degree d is smaller than the predetermined threshold value $d_0$, the determination unit 306 determines that the image having the similarity degree d is similar to the image represented by the image data input by the terminal apparatus 111. When the number of images having the similarity degrees d smaller than the threshold value $d_0$ is larger than a predetermined number, the determination unit 306 may be configured to determine that only the predetermined number of images having the similarity degrees d in the descending order of the similarity degrees d are similar to the image represented by the image data input by the terminal apparatus 111.

Using the output device 913 such as the communication device, the result transmitting unit 323 transmits a result determined by the plaintext similarity degree extraction unit 315 to the terminal apparatus 111.

Detailed configurations of the encrypted random similarity degree calculation unit 314, the plaintext similarity degree extraction unit 315, and the like are the same as those of the encrypted random similarity degree calculation unit 314, the plaintext similarity degree extraction unit 315, and the like of the authentication apparatus 102 described in each of the first to ninth aspects.

The decryption apparatus 103 also has the same configuration as that of the decryption apparatus 103 described in each of the first to ninth aspect.

By searching the image similar to the image represented by the image data input by the terminal apparatus 111 based on the similarity degree d calculated by the method described in each of the first to ninth aspects, the image can be searched without decrypting the encrypted image data and the feature vectors.

Data to be searched is not limited to the image data. The data to be searched may be different data such as document data. Assume that the target to be searched is the document data. Then, a configuration may be considered where the number of occurrences of a predetermined word is set to the value of each feature vector component.

The configuration described in each aspect is an example, and may be a different configuration. To take an example, a configuration that combines the configurations described in the different aspects may be used. Alternatively, a configuration may be used where the configuration of an insignificant portion is replaced by a different configuration.

The description was directed to the configuration where the square of the Euclidean distance between the two feature vectors b and b' is calculated as the similarity degree d and the configuration where the inner product of the two feature vectors b and b' is calculated as the similarity degree d, for example. A configuration may be employed where the similarity degree d is calculated by a different formula for computation, such as a Hamming distance between the two feature vectors b and b' or the number of matches between feature points.

In the biometric system 100 described in each of the first to ninth aspects, the description was directed to the configuration where the encrypted feature vector C corresponding to the first response R' received by the first response receiving unit 331 is identified from among the encrypted feature vectors C stored by the encrypted data storage unit 312 of the authentication apparatus 102, using the user identifier, thereby generating the second challenge C'. A configuration may be employed where the similarity degree d is calculated for each encrypted feature vector C stored by the encrypted data storage unit 312, as in the image search system 110 described in the tenth aspect. In that case, the determination unit 306 may be configured to determine a user who input biometric information to the certification apparatus 101 is the user having the encrypted feature vector C determined to be most similar, for example.

In each of the first to ninth aspects, the description was given about the biometric authentication system 100 that performs authentication based on biometric information. An authentication system that performs authentication based on different information may be used.

Further, the similarity degree calculation system described above is not limited to the authentication system or the search system, but may be applied to other various systems.

The similarity degree calculation apparatus (authentication apparatus 102; or search apparatus 112) described above calculates a similarity degree (d) between comparison data (feature vector b) and target data (feature vector b').

The similarity degree calculation apparatus includes a storage device (914) that stores data, a processing device (911) that processes the data, a comparison ciphertext storage unit (encrypted data storage unit 312), a target ciphertext acquisition unit (encrypted data extraction unit 305; or encrypted data receiving unit 325), a temporary key generation unit (random number generation unit 303), an interim similarity degree ciphertext calculation unit (encrypted random similarity degree calculation unit 314), an interim similarity degree ciphertext notification unit (second challenge transmitting unit 321), an interim similarity degree decrypted text acquisition unit (second response receiving unit 341), and a similarity degree calculation unit (plaintext similarity degree extraction unit 315).

Using the storage device, the comparison ciphertext storage unit stores a comparison ciphertext (encrypted feature vector C) obtained by transforming the comparison data by encryption transformation using a public key (pk) corresponding to a secret key (sk) stored by a decryption apparatus (103).

Using the processing device, the target ciphertext acquisition unit acquires a target ciphertext (encrypted feature vector C') obtained by transforming the target data by the encryption transformation using the public key.

Using the processing device, the temporary key generation unit generates a temporary key (random number $u_1$; or random number $s_1$).

Using the processing device, based on the comparison ciphertext stored by the comparison ciphertext storage unit, the target ciphertext acquired by the target ciphertext acquisition unit, and the temporary key generated by the temporary key generation unit, the interim similarity degree ciphertext calculation unit performs calculation for calculating the similarity degree in a first stage with the comparison cirphertext and the target ciphertext kept encrypted. The interim similarity degree ciphertext calculation unit calculates an interim similarity degree ciphertext (second challenge C^) by encrypting a result of the calculation with the temporary key.

Using the processing device, the interim similarity degree ciphertext notification unit notifies to the decryption apparatus the interim similarity degree ciphertext calculated by the interim similarity degree ciphertext calculation unit.

Using the processing device, the interim similarity degree decrypted text acquisition unit acquires an interim similarity degree decrypted text (second response Z) calculated and notified by the decryption apparatus, based on the interim similarity degree ciphertext notified by the interim similarity degree ciphertext notification unit.

Using the processing device, the similarity degree calculation unit decrypts the interim similarity degree decrypted text with the temporary key, based on the temporary key generated by the temporary key generation unit and the interim similarity degree decrypted text acquired by the similarity degree calculating decrypted text acquisition unit, thereby calculating the similarity degree between the comparison data and the target data.

The similarity degree calculation system (biometric authentication system 100; or image search system 110) described above includes the similarity degree calculation apparatus (authentication apparatus 102; or search apparatus 112) and a decryption apparatus (103).

The decryption apparatus includes a storage device (914) that stores data, a processing device (911) that processes the data, a secret key storage unit (413), an interim similarity degree ciphertext acquisition unit (second challenge receiving unit 402), an interim similarity degree decrypted text calculation unit (decryption unit 404), and an interim similarity degree decrypted text notification unit (second response transmitting unit 412).

Using the storage device of the decryption apparatus, the secret key storage unit of the decryption apparatus stores the secret key (sk).

Using the processing device of the decryption apparatus, the interim similarity degree ciphertext acquisition unit of the decryption apparatus acquires the interim similarity degree ciphertext notified from the similarity degree calculation unit.

Using the processing device of the decryption apparatus, the interim similarity degree decrypted text calculation unit of the decryption apparatus decrypts the interim similarity degree ciphertext with the secret key, based on the secret key stored by the secret key storage unit of the decryption apparatus and the interim similarity degree ciphertext acquired by the interim similarity degree ciphertext acquisition unit of the decryption apparatus. The interim similarity degree decrypted text calculation unit performs calculation for calculating the similarity degree in a second stage with a result of the decryption kept encrypted with the temporary key, thereby calculating the interim similarity degree decrypted text.

Using the processing device of the decryption apparatus, the interim similarity degree decrypted text notification unit of the decryption apparatus notifies the interim similarity degree decrypted text calculated by the interim similarity degree decrypted text calculation unit of the decryption apparatus to the similarity degree calculation apparatus.

In the similarity degree calculation system (biometric authentication system 100; or image search system 110) described above,

each of the comparison data (feature vector b) and the target data (feature vector b') is a T-dimensional vector (T being an integer not less than 1) having components of integers.

Using the processing device (911) of the similarity degree calculation apparatus (authentication apparatus 102; or search apparatus 112), the interim similarity degree ciphertext calculation unit (encrypted random similarity degree calculation unit 314) of the similarity degree calculation apparatus calculates the difference or the product of the corresponding components of the comparison data and the target data, with the comparison ciphertext (encrypted feature vector C) and the target ciphertext (encrypted feature vector C') kept encrypted.

Using the processing device (911) of the decryption apparatus (103), the interim similarity degree ciphertext calculation unit (decryption unit 404) of the decryption apparatus decrypts the interim similarity degree ciphertext with the secret key (sk), and calculates the similarity degree (d), with the result of the decryption kept encrypted with the temporary key.

Using the processing device of the similarity degree calculation apparatus, the similarity degree calculation unit (plaintext similarity degree extraction unit 315) of the similarity degree calculation apparatus decrypts the interim similarity degree decrypted text, thereby obtaining the similarity degree.

In the similarity degree calculation system (biometric authentication system 100; or image search system 110) described above,

the encryption transformation is transformation for transforming an integer (integer not less than 0 and less than q; or integer not less than 0 and less than N) into a ciphertext (vector in a vector space V; element in a finite group G; or integer not less than 0 and less than $N^2$). An arithmetic operation (addition in the vector space V; multiplication on the finite group G; multiplication of integers modulo $N^2$) for combining and transforming a plurality of ciphertexts into a different ciphertext may be calculated for the ciphertext. A ciphertext obtained by combining a ciphertext ($E(x1)$) resulting from transformation of an arbitrary first integer ($xl$) and a ciphertext ($E(x2)$) resulting from transformation of an arbitrary second integer ($x2$) by the arithmetic operation for the ciphertext is a ciphertext ($E(xl + x2)$) resulting from transformation of the sum ($x1 + x2$) of the first integer and the second integer.

In the similarity degree calculation system (biometric authentication system 100; or image search system 110),

each of the comparison data (feature vector b) and the target data (feature vector b') is a T-dimensional vector (T being an integer not less than 1) having each component of an integer ($b_i$ or $b'_i$).

The comparison ciphertext (encrypted feature vector C) is a T-dimensional vector having a component of a ciphertext ($c_i$) obtained by transforming each component of the comparison data by the encryption transformation using the public key (pk).

The target ciphertext (encrypted feature vector C') is a T-dimensional vector having a component of a ciphertext ($c'_i$) obtained by transforming each component of the target data by the encryption transformation using the public key.

The similarity degree calculation apparatus (authentication apparatus 102; or search apparatus 112) further includes a public key storage unit (302).

Using the storage device (914) of the similarity degree calculation apparatus, the public key storage unit of the similarity degree calculation apparatus stores a public key (pk) corresponding to the secret key (sk) stored by the decryption apparatus (103).

Using the processing device (911) of the similarity degree calculation apparatus, the temporary key generation unit (random number generation unit 303) of the similarity degree calculation apparatus randomly generates an integer ($u_1$), and sets the generated integer to the temporary key.

The interim similarity degree ciphertext calculation unit (encrypted random similarity degree calculation unit 314) of the similarity degree calculation apparatus includes a random number plaintext generation unit (disturbance vector generation unit 362), a first ciphertext calculation unit (vector combining unit 363), and a second ciphertext calculation unit (vector summation unit 367).

Using the processing device of the similarity degree calculation apparatus, the random number plaintext generation unit of the similarity degree calculation apparatus generates a T-dimensional vector having a component of an integer ($t_{1,i}$), and sets the generated T-dimensional vector to a random number plaintext (disturbance vector T).

Using the processing device of the similarity degree calculation apparatus, the first ciphertext calculation unit of the similarity degree calculation apparatus calculates a first interim similarity degree ciphertext using the arithmetic operation for the ciphertext, based on the comparison ciphertext stored by the comparison ciphertext storage unit (encrypted data storage unit 312) of the similarity degree calculation apparatus, the target ciphertext acquired by the target ciphertext acquisition unit (encrypted data extraction unit 305; or encrypted data receiving unit 325) of the similarity degree calculation apparatus, and the random number plaintext generated by the random number plaintext generation unit of the similarity degree calculation apparatus. The first interim similarity degree ciphertext is a T-dimensional vector having a component of a ciphertext ($c^{\wedge}_i$) obtained by transforming a sum ($b_i - b'_i + t_{1,i}$) of a difference between each component of the comparison data and the corresponding component of the target data and the corresponding component of the random number plaintext by the encryption transformation using the public key.

Using the processing device of the similarity degree calculation apparatus, the second ciphertext calculation unit of the similarity degree calculation apparatus calculates a second interim similarity degree ciphertext ($c^{\wedge}$) using the arithmetic operation for the ciphertext, based on the comparison ciphertext stored by the comparison ciphertext storage unit of the similarity degree calculation apparatus, the target ciphertext acquired by the target ciphertext acquisition unit of the similarity degree calculation apparatus, the temporary key generated by the temporary key generation unit of the similarity degree calculation apparatus, and the random number plaintext generated by the random number plaintext generation unit of the similarity degree calculation apparatus. The second interim similarity degree ciphertext is a ciphertext obtained by transforming the sum of a correction value and the temporary key ($u_1$) by the encryption transformation using the public key. The correction value is an integer ($\sum_i[2t_{1,i}(b_i - b'_i) + t_{1,i}^2]$) obtained by summating, for all of the components, sums of squares of the respective components of the random number plaintext and twice the products of differences between the respective components of the comparison data and the corresponding components of the target data and the corresponding components of the random number plaintext.

Using the processing device of the similarity degree calculation apparatus, the similarity degree calculatin ciphertext notification unit (second challenge transmitting unit 321) of the similarity degree calculation apparatus notifies the first interim similarity degree ciphertext calculated by the first ciphertext calculation unit of the similarity degree calculation apparatus and the second interim similarity degree ciphertext calculated by the second ciphertext calculation unit of the similarity degree calculation apparatus to the decryption apparatus.

In the similarity degree calculation system (biometric authentication system 100: or image search system 110) described above,

each of the comparison data (feature vector b) and the target data (feature vector b') is a T-dimensional vector (T being an integer not less than 1) having each component ($b_i$, or $b'_i$) of an integer of 0 or one.

The comparison ciphertext (encrypted feature vector C) is a T-dimensional vector having a component of a ciphertext obtained by transforming each component of the comparison data by the encryption transformation using the public key (pk).

The target ciphertext is a T-dimensional vector having a component of a ciphertext obtained by transforming each component ($b'_i$) of the target data by the encryption transformation using the public key.

The similarity degree calculation apparatus (authentication apparatus 102; or search apparatus 112) further includes a public key storage unit (302).

Using the storage device (914) of the similarity degree calculation apparatus, the public key storage unit of the similarity degree calculation apparatus stores the public key (pk) corresponding to the secret key (sk) stored by the decryption apparatus (103).

Using the processing device (911) of the similarity degree calculation apparatus, the temporary key generation unit (random number generation unit 303) of the similarity degree calculation apparatus randomly generates an integer ($u_1$) and sets the integer to the temporary key.

The interim similarity degree ciphertext calculation unit (encrypted random similarity degree calculation unit 314) of the similarity degree calculation apparatus includes a random number plaintext generation unit (disturbance vector generation unit 362), a first ciphertext calculation unit (vector combining unit 363), and a second ciphertext calculation unit (vector summation unit 367).

Using the processing device of the similarity degree calculation apparatus, the random number plaintext generation unit of the similarity degree calculation apparatus generates a T-dimensional vector having a component of an integer ($t_{1,i}$), and sets the generated T-dimensional vector to a random number plaintext (disturbance vector T).

Using the processing device of the similarity degree calculation apparatus, the first ciphertext calculation unit of the similarity degree calculation apparatus calculates a first interim similarity degree ciphertext using the arithmetic operation for the ciphertext, based on the comparison ciphertext stored by the comparison ciphertext storage unit (encrypted data storage unit 312) of the similarity degree calculation apparatus, the target ciphertext acquired by the target ciphertext acquisition unit (encrypted data extraction unit 305; and encrypted data receiving unit 325) of the similarity degree calculation apparatus, and the random number plaintext generated by the random number plaintext generation unit of the similarity degree calculation apparatus. The first interim similarity degree ciphertext is a T-dimensional vector having a component of a ciphertext ($c^{\wedge}_i$) obtained by transforming a sum ($b_i - b'_i + t_{1,i}$) of a difference between each component of the comparison data and the corresponding component of the target data and the corresponding component of the random number plaintext by the encryption transformation using the public key.

Using the processing device of the similarity degree calculation apparatus, the second ciphertext calculation unit of the similarity degree calculation apparatus calculates a second interim similarity degree ciphertext ($c''$) using the arithmetic operation for the ciphertext, based on the comparison ciphertext stored by the comparison ciphertext storage unit of the similarity degree calculation apparatus, the target ciphertext acquired by the target ciphertext acquisition unit of the similarity degree calculation apparatus, the temporary key generated by the temporary key generation unit of the similarity degree calculation apparatus, and the random number plaintext generated by the random number plaintext generation unit of the similarity degree calculation apparatus. The second interim similarity degree ciphertext is a ciphertext obtained by transforming the sum of a correction value and the temporary key by the encryption transformation using the public key. The correction value is an integer ($\sum_i[2t_{1,i}(b_i - b'_i) + t_{1,i}^2 + b_i + b'_i]$) obtained by summating, for all the components, sums of squares of the respective components of the random number plaintext, the respective components of the comparison data, the respective components of the target data, and twice the products of differences between the respective components of the comparison data and the corresponding components of the target data and the corresponding components of the random number plaintext.

Using the processing device of the similarity degree calculation apparatus, the interim similarity degree ciphertext notification unit (second challenge transmitting unit 321) of the similarity degree calculation apparatus notifies the first interim similarity degree ciphertext calculated by the first ciphertext calculation unit of the similarity degree calculation apparatus and the second interim similarity degree ciphertext calculated by the second ciphertext calculation unit of the similarity degree calculation apparatus to the decryption apparatus.

In the similarity degree calculation system (biometric authentication system 100; or image search system 110) described above,
each of the comparison data (feature vector b) and the target data (feature vector b') is a T-dimensional vector (T being an integer not less than 1) having each component ($b_i$ or $b'_i$) of an integer.

The comparison ciphertext (encrypted feature vector C) is a T-dimensional vector having a component of a ciphertext ($c_i$) obtained by transforming each component of the comparison data by the encryption transformation using the public key (pk).

The target ciphertext (encrypted feature vector C') is a T-dimensional vector having a component of a ciphertext ($c'_i$) obtained by transforming each component of the target data by the encryption transformation using the public key.

The similarity degree calculation apparatus (authentication apparatus 102; or search apparatus 112) further includes a public key storage unit (302).

Using the storage device (914) of the similarity degree calculation apparatus, the public key storage unit of the similarity degree calculation apparatus stores the public key (ps) corresponding to the secret key (sk) stored by the decryption apparatus (103).

Using the processing device of the similarity degree calculation apparatus, the temporary key generation unit (random number generation unit 303) of the similarity degree calculation apparatus randomly generates an integer ($s_1$), and sets the generated integer to the temporary key.

The interim similarity degree ciphertext calculation unit of the similarity degree calculation apparatus includes a first ciphertext calculation unit (difference calculation unit 361, and rearrangement unit 385) and a second ciphertext calculation unit (encryption key generation unit 366).

Using the processing device of the similarity degree calculation apparatus, the first ciphertext calculation unit of the similarity degree calculation apparatus calculates a first interim similarity degree ciphertext using the arithmetic operation for the ciphertext, based on the comparison ciphertext stored by the comparison ciphertext storage unit (encrypted data storage unit 312) of the similarity degree calculation apparatus and the target ciphertext acquired by the target ciphertext acquisition unit (encrypted data extraction unit 305; or encrypted data receiving unit 325) of the similarity degree calculation apparatus. The first interim similarity degree ciphertext is a T-dimensional vector having a component of a ciphertext

($c^_i$) obtained by transforming a difference ($b_i$ - $b'_i$) between each component of the comparison data and the corresponding component of the target data by the encryption transformation using the public key.

Using the processing device of the similarity degree calculation apparatus, the second ciphertext calculation unit of the similarity degree calculation apparatus sets a ciphertext ($c^$) obtained by transformation of the temporary key by the encryption transformation using the public key to a second interim similarity degree ciphertext, based on the public key stored by the public key storage unit of the similarity degree calculation apparatus and the temporary key generated by the temporary key generation unit of the similarity degree calculation apparatus.

Using the processing device of the similarity degree calculation apparatus, the interim similarity degree ciphertext notification unit (second challenge transmitting unit 321) of the similarity degree calculation apparatus notifies the first interim similarity degree ciphertext calculated by the first ciphertext calculation unit of the similarity degree calculation apparatus and the second interim similarity degree ciphertext calculated by the second ciphertext calculation unit of the similarity degree calculation apparatus to the decryption apparatus.

In the similarity degree calculation system (biometric authentication system 100; or image search system 110) described above,

using the processing device (911) of the similarity degree calculation apparatus (authentication apparatus 102; or search apparatus 112), the first ciphertext calculation unit (difference calculation unit 361, and rearrangement unit 385) of the similarity degree calculation apparatus sets, as the first interim similarity degree ciphertext, the T-dimensional vector having components of a ciphertext randomly selected from among ciphertexts obtained by transforming the difference of each component of the comparison data from the corresponding component of the target data by the encryption transformation using the public key (pk) and ciphertexts obtained by transforming the difference of each component of the target data from the corresponding component of the comparison data by the encryption transformation using the public key, the T-dimensional vector having a sequence of the components randomly rearranged.

In the similarity degree calculation system (biometric authentication system 100; or image search system 110) described above,

using the processing device (911) of the decryption apparatus (103), the interim similarity degree decrypted text calculation unit (decryption unit 404) of the decryption apparatus calculates a difference or a sum between the summation of squares of the integers obtained by decrypting the T components of the first interim similarity degree ciphertext and the integer obtained by decrypting the second interim similarity degree ciphertext, or calculates an element obtained by combining z pieces of predetermined elements (in which z is the difference or the sum between the summation of squares of the integers obtained by decrypting the T components of the first interim similarity degree ciphertext and the integer obtained by decrypting the second interim similarity degree ciphertext) in a predetermined finite group by a group arithmetic operation on the predetermined finite group, and sets the calculated difference or the calculated sum or the calculated element to the interim similarity degree decrypted text (second response Z).

In the similarity degree calculation system (biometric authentication system 100; or image search system 110) described above,

each of the comparison data (feature vector b) and the target data (feature vector b') is a T-dimensional vector (T being an integer not less than 1) having each component ($b_i$ or $b'_i$) of an integer.

The comparison ciphertext (encrypted feature vector C) is a T-dimensional vector having a component of a ciphertext ($c_i$) obtained by transforming each component of the comparison data by the encryption transformation using the public key (pk).

The target ciphertext (encrypted feature vector C') is a T-dimensional vector having a component of a ciphertext ($c'_i$) obtained by transforming each component of the target data by the encryption transformation using the public key.

The similarity degree calculation apparatus (authentication apparatus 102; or search apparatus 112) further includes a public key storage unit (302).

Using the storage device (914) of the similarity degree calculation apparatus, the public key storage unit of the similarity degree calculation apparatus stores the public key (pk) corresponding to the secret key (sk) stored by the decryption apparatus (103).

Using the processing device (911) of the similarity degree calculation apparatus, the temporary key generation unit (random number generation unit 303) of the similarity degree calculation apparatus randomly generates an integer ($s_1$), , and sets the generated integer to the temporary key.

using the processing device of the similarity degree calculation apparatus, the interim similarity degree ciphertext calculation unit (encrypted random similarity degree calculation unit 314) of the similarity degree calculation apparatus calculates the interim similarity degree ciphertext (second challenge $C^$) using the arithmetic operation for the ciphertext, based on the comparison ciphertext stored by the comparison ciphertext storage unit (encrypted data storage unit 312) of the similarity degree calculation apparatus and the target ciphertext acquired by the target ciphertext acquisition unit (encrypted data extraction unit 305; or encrypted data receiving unit 325) of the similarity degree calculation apparatus, and the temporary key generated by the temporary key generation unit of the similarity degree calculation apparatus. The interim similarity degree ciphertext is a ciphertext obtained by transforming a sum or a difference between a summation value and the temporary key by the encryption transformation using the public key. The summation value is an integer ($\sum_i[(b_i - b'_i)^2]$; or $\sum_i[b_i b'_i]$) obtained by summating a square of a difference between each component of the comparison data and the corresponding component of the target data or the product of each component of the comparison data and the corresponding component of the target data, for all the components.

In the similarity degree calculation system (biometric authentication system 100; or image search system 110),

the encryption transformation is transformation for transforming an integer not less than 0 and less than q (q being a prime number) into a ciphertext that is an n-dimensional vector (n being an integer not less than 2) in a vector space (V).

The vector space is a direct product of n cyclic groups of an order q.

The arithmetic operation for the ciphertext is addition of vectors in the vector space.

The public key (pk) includes a random base (B) that is a base of the vector space.

The encryption transformation is transformation for transforming an integer x not less than 0 and less than q into a vector obtained by adding x times a first vector ($b_1$) of the random base and random number times a different vector ($b_j$) of the random base.

In the similarity degree calculation system (biometric authentication system 100; or image search system 110),

the encryption transformation is transformation for transforming an integer not less than 0 and less than N (N being the product of mutually different two prime numbers p and q) into a ciphertext that is an element of a finite group (G) of an order N.

The arithmetic operation for the ciphertext is a group arithmetic operation on the finite group.

The public key (pk) includes a generator element (g) of the finite group and a disturbance element (h) that is an element of the finite group and has an order of the prime number p.

The encryption transformation is transformation for transforming an integer x not less than 0 and less than N into an element obtained by combining x pieces of the generator elements and a random number of the disturbance elements using the group arithmetic operation on the finite group.

In the similarity degree calculation system (biometric authentication system 100; or image search system 110),

the encryption transformation is transformation for transforming an integer not less than 0 and less than N (N being the product of mutually different two prime numbers p and q) into a ciphertext that is an integer not less than 0 and less than $N^2$.

The arithmetic operation for the ciphertext is multiplication of integers modulo $N^2$.

The encryption transformation is transformation for transforming an integer x not less than 0 and less than N into a remainder when the product of an Nth power of a random number and the sum of 1 and the product of the integer x and the integer N is divided by $N^2$.

The similarity degree calculation system (biometric authentication system 100; or image search system 110) further includes an encryption apparatus (certification apparatus 101; or terminal apparatus 111).

The encryption apparatus includes a storage device (914) that stores data, a processing device (911) that processes the data, a public key storage unit (212), a target data acquisition unit (feature vector formation unit 214), a temporary public key acquisition unit (first challenge receiving unit 211), a target dual encryption text calculation unit (encrypted data embedding unit 217), and a target dual encryption text notification unit (first response transmitting unit 221).

Using the storage device of the encryption apparatus, the public key storage unit of the encryption apparatus stores the public key (pk) corresponding to the secret key (sk) stored by the decryption apparatus (103).

Using the processing device of the encryption apparatus, the target data acquisition unit of the encryption apparatus acquires the target data (feature vector b').

Using the processing device of the encryption apparatus, the temporary public key acquisition unit of the encryption apparatus acquires a temporary public key (first challenge R) notified from the similarity degree calculation apparatus (authentication apparatus 102; or search apparatus 112).

Using the processing device of the encryption apparatus, the target dual encryption text calculation unit of the encryption apparatus transforms the target data by second encryption transformation using the public key and the temporary public key, thereby calculating a target dual encryption text (first response R'), based on the public key stored by the public key storage unit of the encrypted apparatus, the target data acquired by the target data acquisition unit of the encryption apparatus, and the temporary public key acquired by the temporary public key acquisition unit of the encryption apparatus.

Using the processing device of the encryption apparatus, the target dual encryption text notification unit of the encryption apparatus notifies the target dual encryption text calculated by the target dual encryption text calculation unit of the encryption apparatus to the similarity degree calculation apparatus.

The similarity degree calculation apparatus further includes a temporary secret key generation unit (random number generation unit 303, and encrypted random number generation unit 304), a temporary public key notification unit (first challenge transmitting unit 311), and a target dual encryption text acquisition unit (first response receiving unit 331).

Using the processing device (911) of the similarity degree calculation apparatus, the temporary secret key generation unit of the similarity degree calculation apparatus generates a temporary secret key ($R_{1, i}$) and a temporary public key (first challenge R) corresponding to the temporary secret key.

Using the processing device of the similarity degree calculation apparatus, the temporary public key notification unit of the similarity degree calculation apparatus notifies the temporary public key generated by the temporary secret key generation unit of the similarity degree calculation apparatus to the encryption apparatus.

Using the processing device of the similarity degree calculation apparatus, the target dual encryption text acquisition unit of the similarity degree calculation apparatus acquires the target dual encryption text notified from the encryption apparatus.

Using the processing device of the similarity degree calculation apparatus, the target ciphertext acquisition unit of the similarity degree calculation apparatus transforms the target dual encryption text by second decryption transformation using the temporary secret key, based on the temporary secret key generated by the temporary secret key generation unit of the similarity degree calculation apparatus and the target dual encryption text acquired by the target dual encryption text acquisition unit of the similarity degree calculation apparatus, thereby calculating the target ciphertext (encrypted feature vector C') obtained by transforming the target data by the encryption transformation using the public key.

In the similarity degree calculation system (biometric authentication system 100; or image search system 110) described above,

each of the comparison data (feature vector b) and the target data (feature vector b') is a T-dimensional vector (T being an integer not less than 1) having each component ($b_i$ or $b'_i$) of an integer.

Using the processing device (911) of the similarity degree calculation apparatus (authentication apparatus 102; or search apparatus 112), the temporary secret key generation unit (random number generation unit 303, and encrypted random number generation unit 304) of the similarity degree calculation apparatusgenerates the temporary public key (first challenge R) including encrypted information on the comparison data, based on the comparison ciphertext (encrypted feature vector C) stored by the comparison ciphertext storage unit (encrypted data storage unit 312) of the similarity degree calculation apparatus.

Using the processing device (911) of the encryption apparatus (certification apparatus 101; or terminal apparatus 111), the target dual encryption text calculation unit (encrypted data embedding unit 217) of the encryption apparatuscalculates the target dual encryption text (first response R') including encrypted information on the product of the component of the target data and the corresponding component of the comparison data, by the second encryption transformation using the temporary public key.

In the similarity degree calculation system (biometric authentication system 100; or image search system 110) described above,

the encryption transformation is transformation for transforming an integer (integer not less than 0 and less than q; or integer not less than 0 and less than N) into a ciphertext (vector in the vector space V; element of the finite group G; or integer not less than 0 and less than $N^2$). An arithmetic operation (addition in the vector space V; multiplication on the finite group G; or multiplication of integers modulo $N^2$) for combining and transforming a plurality of ciphertexts into a different ciphertext may be performed for the ciphertext, and a ciphertext obtained by combining a ciphertext (E(x1)) resulting from transformation of an arbitrary first integer (x1) and a ciphertext resulting from transformation of an arbitrary second integer (x2) by the arithmetic operation for the ciphertext is a ciphertext (E(x1 + x2)) resulting from transformation of a sum (x1 + x2) of the first integer and the second integer.

The target data (feature vector b') is a T-dimensional vector (T being an integer not less than 1) having components of integers.

The similarity degree calculation apparatus (authentication apparatus 102; or search apparatus 112) further includes a public key storage unit (302).

Using the storage device (914) of the similarity degree calculation apparatus, the public key storage unit of the similarity degree calculation apparatus stores the public key (pk) corresponding to the secret key (sk) stored by the decryption apparatus (103).

Using the processing device (911) of the similarity degree calculation apparatus, the temporary public key generation unit (random number generation unit 303; and encrypted random number generation unit 304) of the similarity degree calculation apparatus randomly generates a T-dimensional vector having a component of an integer ($R_{1,\,i}$), and sets the generated T-dimensional vector to the temporary secret key, and calculates a T-dimensional vector having a component of a ciphertext ($R_i$) obtained by transforming each component of the temporary secret key by the encryption transformation using the public key, based on the public key stored by the public key storage unit of the similarity degree calculation apparatus and the generated temporary secret key, and sets the calculated T-dimensional vector to the temporary public key (first challenge R).

Using the processing device (911) of the encryption apparatus, the target dual encryption text calculation unit (encrypted data embedding unit 217) of the encryption apparatus (certification apparatus 101; or terminal apparatus 111) randomly generates a T-dimensional vector having a component of a ciphertext ($o_i$) obtained by transforming 0 by the encryption transformation using the public key, based on the public key stored by the public key storage unit (212) of the encryption apparatus, and sets the generated T-dimensional vector to a zero ciphertext (encrypted zero vector O), and calculates a T-dimensional vector having a component of a cirphetext obtained by combining $b'_i$ pieces of each component of the temporary public key ($b'_i$ being the integer indicating the corresponding component of the target data) and the corresponding component of the zero ciphertext by the arithmetic operation for the ciphertext, based on the target data acquired by the target data acquisition unit (feature vector formation unit 214) of the encryption apparatus, the temporary public key acquired by the temporary public key acquisition unit (first challenge receiving unit 211) of the encryption apparatus, and the generated zero ciphertext, and sets the calculated T-dimensional vector to the target dual encryption text (first response R').

The target ciphertext acquisition unit (encrypted data extraction unit 305) of the similarity degree calculation apparatus includes a temporary decryption key calculation unit (inverse number calculation unit 351) and a target ciphertext calculation unit (scalar multiplication calculation unit 352).

Using the processing device of the similarity degree calculation apparatus, the temporary decryption key calculation unit of the similarity degree calculation apparatus calculates a T-dimensional vector having a component of an inverse number ($\kappa_i$) of each component of the temporary secret key, based on the temporary secret key generated by the temporary secret key generation unit of the similarity degree calculation apparatus, and sets the calculated T-dimensional vector to a temporary decryption key.

Using the processing device of the similarity degree calculation apparatus, the target ciphertext calculation unit of the similarity degree calculation apparatus calculates a T-dimensional vector having a component of a ciphertext obtained by combining $R_i^{-1}$ pieces of each component ($R'_i$) of the target dual encryption text ($R_i^{-1}$ being the inverse number indicating the corresponding component of the temporary decryption key), based on the target dual encryption text acquired by the target dual encryption text acquisition unit (first response receiving unit 331) of the similarity degree calculation apparatus and the temporary decryption key calculated by the temporary decryption key calculation unit of the similarity degree calculation apparatus, and sets the calculated T-dimensional vector to the target ciphertext (encrypted feature vector C').

In the similarity degree calculation system (biometric authentication system 100; or image search system 110),
the encryption transformation is transformation for transforming an integer (integer not less than 0 and less than q; or integer not less than 0 and less than N) into a ciphertext (vector in the vector space V; element of the finite group G; or integer not less than 0 and less than $N^2$). An arithmetic operation (addition in the vector space V; multiplication on the finite group G; or multiplication of integers modulo $N^2$) for combining and transforming a plurality of ciphertexts into a different ciphertext may be performed for the ciphertext. A ciphertext obtained by combining a ciphertext ($E(x1)$) resulting from transformation of an arbitrary first integer ($x1$) and a ciphertext ($E(x2)$) resulting from transformation of an arbitrary second integer ($x2$) using the arithmetic operation for the ciphertext is a ciphertext ($E(x1 + x2)$) resulting from transformation of a sum ($x1 + x2$) of the first integer and the second integer.

Each of the comparison data (feature vector b) and the target data (feature vector b') is a T-dimensional vector (T being an integer not less than 1) having each component ($b_i$, $b'_i$) of an integer.

The comparison ciphertext (encrypted feature vector C) is a T-dimensional vector having a component of a ciphertext ($c_i$) obtained by transforming each component of the comparison data by the encryption transformation using the public key (pk).

The similarity degree calculation apparatus (authentication apparatus 102; or search apparatus 112) further includes a public key storage unit (302).

Using the storage device (914) of the similarity degree calculation apparatus, the public key storage unit of the similarity degree calculation apparatus stores the public key (pk) corresponding to the secret key (sk) stored by the decryption apparatus (103).

Using the processing device (911) of the similarity degree calculation apparatus, the temporary public key generation unit (random number generation unit 303; and encrypted random number generation unit 304) of the similarity degree calculation apparatus randomly generates a T-dimensional vector having a componens of an integer ($R_{1, i}$), and sets the generated T-dimensional vector to the temporary secret key, and randomly generates a T-dimensional vector having a component of a ciphertext ($o'_i$) obtained by transforming 0 by the encryption transformation using the public key and sets the calculated T-dimensional vector to a zero ciphertext (encrypted zero vector O'), based on the public key stored by the public key storage unit of the similarity degree calculation apparatus, and calculates a T-dimensional vector having a component of a ciphertext obtained by combining $R_i$ pieces of each component of the comparison ciphertext ($R_i$ being an integer indicating a corresponding component of the temporary secret key) and the corresponding component of the zero ciphertext, based on the comparison ciphertext stored by the comparison ciphertext storage unit (encrypted data storage unit 312) of the similarity degree calculation apparatus, the generated temporary secret key, and the generated zero ciphertext, and sets the generated T-dimensional vector to the temporary public key (first challenge R).

Using the processing device (911) of the encryption apparatus(certification apparatus 101; or terminal apparatus 111), the target dual encryption text calculation unit (encrypted data embedding unit 217) of the encryption apparatus randomly generates a T-dimensional vector having a component of a ciphertext ($o_i$) obtained by transforming 0 by the encryption transformation using the public key, based on the public key stored by the public key storage unit (212) of the encryption apparatus, and set the generated T-dimensional vector to a zero ciphertext (encrypted zero vector O), and then calculates a T-dimensional vector having a component of a cirphetext obtained by combining $b'_i$ pieces of each component of the temporary public key ($b'_i$ being the integer indicating the corresponding component of the target data) and the corresponding component of the zero ciphertext by the arithmetic operation for the ciphertext, based on the target data acquired by the target data acquisition unit (feature vector formation unit 214) of the encryption apparatus, the temporary public key acquired by the temporary public key acquisition unit (first challenge receiving unit 211) of the encryption apparatus, and the generated zero ciphertext, and sets the calculated T-dimensional vector to the target dual encryption text (first response R').

The target ciphertext acquisition unit (encrypted data extraction unit 305) of the similarity degree calculation apparatus includes a temporary decryption key calculation unit (inverse number calculation unit 351) and a target ciphertext calculation unit (exponentiation calculation unit 353).

Using the processing device of the similarity degree calculation apparatus, the temporary decryption key calculation unit of the similarity degree calculation apparatus calculates a T-dimensional vector having a component of an inverse number ($\kappa_i$) of each component of the temporary secret key, based on the temporary secret key generated by the temporary secret key generation unit of the similarity degree calculation apparatus, and sets the calculated T-dimensional vector to a temporary decryption key.

Using the processing device of the similarity degree calculation apparatus, the target ciphertext calculation unit of the similarity degree calculation apparatus calculates a T-dimensional vector having a component of a ciphertext obtained by combining $R_i^{-1}$ pieces of each component of the target dual encryption text ($R_i^{-1}$ being the inverse number indicating the corresponding component of the temporary decryption key) by the arithmetic operation for the ciphertext, based on the target dual encryption text acquired by the target dual encryption text acquisition unit (first challenge transmitting unit 311) of the similarity degree calculation apparatus and the temporary decryption key calculated by the temporary decryption key calculation unit of the similarity degree calculation apparatus, and sets the calculated T-dimensional vector to the target ciphertext (encrypted feature vector C').

In the similarity degree calculation system (biometric authentication system 100; or image search system 110) described above,
The interim similarity degree ciphertext calculation unit (encrypted random similarity degree calculation unit 314) of the similarity degree calculation apparatus (authentication apparatus 102; or search apparatus 112) includes a random number plaintext generation unit (encryption key generation unit 366) and a ciphertext calculation unit (integer combining unit 386).

Using the processing device (911) of the similarity degree calculation apparatus, the random number plaintext generation unit of the similarity degree calculation apparatus randomly generates a T-dimensional vector having a component of an integer ($t_{1,i}$) and sets the generated T-dimensional vector to a random number plaintext (disturbance vector T).

Using the processing device of the similarity degree calculation apparatus, the temporary key generation unit (random number storage unit 322) of the similarity degree calculation apparatus calculates a summation ($\sum_i[t_{1,i}]$) of components of the random number plaintext generated by the random number generation unit of the similarity degree calculation apparatus, and sets the calculated summation to the temporary key.

Using the processing device of the similarity degree calculation apparatus, the ciphertext calculation unit of the similarity degree calculation apparatus calculates a T-dimensional vector having a component of a ciphertext obtained by combining each component of the target ciphertext and the corresponding component of the random number plaintext by the arithmetic operation for the ciphertext, based on the target ciphertext (encrypted feature vector C') acquired by the target ciphertext acquisition unit (encrypted data extraction unit 305) of the similarity degree calculation apparatus and the random number plaintext generated by the random number plaintext generation unit of the similarity degree calculation apparatus, and sets the calculated T-dimensional vector to the interim similarity degree ciphertext (second challenge C^).

In the similarity degree calculation system (biometric authentication system 100; or image search system 110) described above,
using the processing device (911) of the similarity degree calculation apparatus (authentication apparatus 102; or search apparatus 112), the temporary key generation unit (random number generation unit 303) of the similarity degree calculation apparatus randomly generates an integer ($s_1$), and sets the generated integer to the temporary key.

The interim similarity degree ciphertext calculation unit (encrypted random similarity degree calculation unit 314) of the similarity degree calculation apparatus includes a first ciphertext calculation unit (rearrangement unit 385) and a second ciphertext calculation unit (encryption key generation unit 366).

Using the processing device of the similarity degree calculation apparatus, the first ciphertext calculation unit of the similarity degree calculation apparatus calculates a T-dimensional vector with a sequence of the components of the target ciphertext (encrypted feature vector C') randomly rearranged, based on the target ciphertext acquired by the target ciphertext acquisition unit (encrypted data extraction unit 305) of the similarity degree calculation apparatus, and sets the calculated T-dimensional vector to a first interim similarity degree ciphertext.

Using the processing device of the similarity degree calculation apparatus, the second ciphertext calculation unit of the similarity degree calculation apparatus calculates a ciphertext obtained by transforming the temporary key by the encryption transformation using the public key, based on the public key (pk) stored by the public key storage unit (302) of the similarity degree calculation apparatus and the temporary key generated by the temporary key generation unit of the similarity degree calculation apparatus, and sets the calculated ciphertext to a second interim similarity degree ciphertext.

Using the processing device of the similarity degree calculation apparatus, the interim similarity degree ciphertext notification unit (second challenge transmitting unit 321) of the similarity degree calculation apparatus notifies the first interim similarity degree ciphertext calculated by the first ciphertext calculation unit of the similarity degree calculation apparatus and the second interim similarity degree ciphertext calculated by the second ciphertext calculation unit of the similarity degree calculation apparatus to the decryption apparatus (103).

In the similarity degree calculation system (biometric authentication system 100; or image search system 110) described above,

using the processing device (911) of the decryption apparatus, the interim similarity degree decrypted text calculation unit (decryption unit 404) of the decryption apparatus (103) calculates a difference or a sum between the summation of the integers obtained by decrypting the T components of the first interim similarity degree ciphertext and the integer obtained by decrypting the second interim similarity degree ciphertext, or calculates an element obtained by combining z pieces of predetermined elements in a predetermined finite group (z being is the difference or the sum between the summation of the integers obtained by decrypting the T components of the first interim similarity degree ciphertext and the integer obtained by decrypting the second interim similarity degree ciphertext) by a group arithmetic operation on the predetermined finite group, and sets the calculated difference or the calculated sum or the calculated element to the interim similarity degree decrypted text (second response Z).

In the similarity degree calculation system (biometric authentication system 100; or image search system 110) described above,

using the processing device (911) of the similarity degree calculation apparatus (authentication apparatus 102; or search apparatus 112), the temporary key generation unit (random number generation unit 303) of the similarity degree calculation apparatus randomly generates an integer ($s_1$), and sets the generated integer to the temporal key.

Using the processing device of the similarity degree calculation apparatus, the interim similarity degree ciphertxt calculation unit (encrypted random similarity degree calculation unit 314) of the similarity degree calculation apparatus calculates a ciphertext by combining a ciphertext obtained by transformation of the temporary key by the encryption transformation using the public key (pk) and the T components of the target ciphertext by the encryption transformation using the public key, using the arithmetic operation for the ciphertext, based on the public key stored by the public key storage unit (302) of the encryption apparatus, the target ciphertext (encrypted feature vector C') acquired by the target ciphertext acquisition unit (encrypted data extraction unit 305) of the similarity degree calculation apparatus, and the temporary key generated by the temporary key generation unit of the similarity degree calculation apparatus, and sets the calculated ciphertext to the interim similarity degree ciphertext (second challenge C^).

In the similarity degree calculation system (biometric authentication system 100; or image search system 110) described above,

using the processing device (911) of the decryption apparatus (103), the interim similarity degree decrypted text calculation unit (decryption unit 404) of the decryption apparatus calculates an integer obtained by decrypting the interim similarity degree ciphertext (second challenge C^), or calculates an element by combining z pieces of predetermined elements (z being the integer obtained by decrypting the interim similarity degree ciphertext) in a predetermined finite group by a group arithmetic operation on the predetermined finite group, based on the interim similarity degree ciphertext acquired by the interim similarity degree ciphertext acquisition unit (second challenge receiving unit 402) of the decryption apparatus, and sets the calculated integer or the calculated element to the interim similarity degree decrypted text (second response Z).

In the similarity degree calculation system (biometric authentication system 100; or image search system 110) described above,

the interim similarity degree decrypted text (second response Z) is an integer.

Using the processing device (911) of the similarity degree calculation apparatus (authentication apparatus 102; or search apparatus 112), the temporary key generation unit (random number generation unit 303) of the similarity degree calculation apparatus randomly generates an integer ($u_1$; or si), and sets the generated integer to the temporary key.

Using the processing device of the similarity degree calculation apparatus, the similarity degree calculation unit (plaintext similarity degree extraction unit 315) of the similarity degree calculation apparatus calculates a sum or a difference between the temporary key and the interim similarity degree decrypted text, based on the temporary key generated by the temporary key generation unit of the similarity degree calculation apparatus and the interim similarity degree decrypted text acquired by the interim similarity degree decrypted text acquisition unit (second response receiving unit 341) of the similarity degree calculation apparatus, and sets the calculated sum or the calculated difference to the similarity degree (d).

In the similarity degree calculation system (biometric authentication system 100; or image search system 110) described above,

the interim similarity degree decrypted text is an element in a predetermined finite group ($G_T$).

Using the processing device (911) of the similarity degree calculation apparatus, the temporary key generation unit (random number generation unit 303) of the similarity degree calculation apparatus randomly generates an integer ($u_1$; or $s_1$), and sets the generated integer to the temporary key.

The similarity degree calculation unit (plaintext similarity degree extraction unit 315) of the similarity degree calculation apparatus includes a similarity degree decrypted text calculation unit (element combining unit 372) and a discrete logarithm calculation unit (373).

Using the processing device of the similarity degree calculation apparatus, the similarity degree decrypted text calculation unit of the similarity degree calculation apparatus calculates an element by combining the interim similarity degree decrypted text and u pieces of predetermined elements ($e(b_1, b_1)$; or $\pi$) (u being the integer that is the temporary key) in the predetermined finite group by a group arithmetic operation on the predetermined finite group, based on the temporary key generated by the temporary key generation unit of the similarity degree calculation apparatus and the interim similarity degree decrypted text acquired by the interim similarity degree decrypted text acquisition unit (second response receiving unit 341) of the similarity degree calculation apparatus, and sets the calculated element to a similarity degree decrypted text (decrypted similarity degree element Z').

Using the processing device of the similarity degree calculation apparatus, the discrete logarithm calculation unit of the similarity degree calculation apparatus calculates a number of the predetermined elements to be combined to be equal to the similarity degree decrypted text, by the group arithmetic operation on the predetermined finite group, based on the similarity degree decrypted text calculated by the similarity degree decrypted text of the similarity degree calculation apparatus, and sets the calculated number of the predetermine elements to the similarity degree (d).

In the similarity degree calculation system (biometric authentication system 100; or image search system 110) described above,

using the processing device (911) of the similarity degree calculation apparatus (authentication apparatus 102; or search apparatus 112), the discrete logarithm calculation unit (373) of the similarity degree calculation apparatuscalculates the similarity degree (d) when the similarity degree is an integer within a predetermined range, and determines that the similarity degree is outside the predetermined range when the similarity degree is outside the predetermined range.

The similarity degree calculation system (biometric authentication system 100; or image search system 110) described above further includes a registration apparatus (104).

The registration apparatus includes a storage device (914) that stores data, a processing device (911) that processes the data, a public key storage unit (202), a comparison data acquisition unit (feature vector formation unit 204), a comparison ciphertext calculation unit (encrypted data generation unit 206), and a comparison ciphertext notification unit (encrypted data transmitting unit 201).

Using the storage device of the registration apparatus, the public key storage unit of the registration apparatus stores the public key (pk) corresponding to the secret key (sk) stored by the decryption apparatus (103).

Using the processing device of the registration apparatus, the comparison data acquisition unit of the registration apparatus acquires the comparison data.

Using the processing device of the registration apparatus, the comparison ciphertext calculation unit of the registration apparatus transforms the comparison data by the encryption transformation using the public key, thereby calculating the comparison ciphertext (encrypted feature vector C), based on the public key stored by the public key storage unit of the registration apparatus and the comparison data acquired by the comparison data acquisition unit of the registration apparatus.

Using the processing device of the registration apparatus, the comparison ciphertext notification unit of the registration apparatus notifies the comparison ciphertext calculated by the comparison ciphertext calculation unit of the registration apparatus to the similarity degree calculation apparatus (authentication apparatus 102; or search apparatus 112).

The similarity degree calculation apparatus' further includes a comparison ciphertext acquisition unit (encrypted data receiving unit 301).

Using the processing device (911) of the similarity degree calculation apparatus, the comparison ciphertext acquisition unit of the similarity degree calculation apparatus acquires the comparison ciphertext notified from the registration apparatus.

Using the storage device (914) of the similarity degree calculation apparatus, the comparison ciphertext storage unit (encrypted data storage unit 312) of the similarity degree calculation apparatus stores the comparison ciphertext acquired by the comparison ciphertext acquisition unit of the similarity degree calculation apparatus.

According to the similarity degree calculation apparatus, the similarity degree calculation system, the computer program, and the similarity degree calculation method described above, a similarity degree between data may be calculated with the data kept encrypted, and leakage of information on the original data and leakage of information to be used for spoofing during the course of the calculation of the similarity degree may also be prevented.

[Description of Reference Signs]

100: biometric authentication system, 101: certification apparatus, 102: authentication apparatus, 103: decryption apparatus, 104: registration apparatus, 110: image search system, 111: terminal apparatus, 112: search apparatus, 201, 222: encrypted data transmitting unit, 202, 212, 302, 403: public key storage unit, 203, 213: biometric information extraction unit, 204, 214: feature vector formation unit, 205, 215, 303: random number generation unit, 206, 216: encrypted data generation unit, 208, 218, 308: public key receiving unit, 209, 219: image input unit, 211: first challenge receiving unit, 217: encrypted data embedding unit, 221: first response transmitting unit, 223: result receiving unit, 224: result outputting unit, 226: image encryption unit, 228: encrypted image transmitting unit, 231, 352, 364: scalar multiplication calculation unit, 232, 332: zero generation unit, 233, 363: vector combining unit, 234, 353, 384, 334: exponentiation calculation unit, 235, 370, 372, 475: element combining unit, 236, 336, 386, 485: integer combining unit, 301, 325: encrypted data receiving unit, 304: encrypted random number generation unit, 305: encrypted data extraction unit, 306: determination unit, 311: first challenge transmitting unit, 312: encrypted data storage unit, 314: encrypted random similarity degree calculation unit, 315: plaintext similarity degree extraction unit, 321: second challenge transmitting unit, 322: random number storage unit, 323: result transmitting unit, 331: first response receiving unit, 341: second response receiving unit, 351: inverse number calculation unit, 361: difference calculation unit, 362: disturbance vector generation unit, 365: square summation calculation unit, 366: encryption key generation unit, 367: vector summation unit, 368, 381, 382, 473: square calculation unit, 371, 474: group conversion unit, 373: discrete logarithm calculation unit, 383: product calculation unit, 385: rearrangement unit, 401: key generation unit, 402: second challenge receiving unit, 404: decryption unit, 408: public key transmitting unit, 412: second response transmitting unit, 413: secret key storage unit, 421, 431: group determination unit, 422: canonical base setting unit, 423: random number generation unit, 424: determinant calculation unit, 425: regular matrix setting unit, 426: random base calculation unit, 432: generator element selection unit, 433: generator element exponentiation unit, 434: base calculation unit, 441: prime number determination unit, 442: product calculation unit, 443: common multiple calculation unit, 471: inverse matrix calculation unit, 472: vector decomposition unit, 481: inverse number calculation unit, 482: decrypted integer calculation unit, 911: processing device, 912: input device, 913: output device, 914: storage device, A: canonical base, B: random base, b, b': feature vector, C, C': encrypted feature vector, C^: second challenge, $\Delta$C: encrypted difference vector, $\Delta$C': encrypted square vector, d: similarity degree, $d_0$: threshold value, $F_q$: finite field, G, $G_T$: finite group, g: generator element, O, O': encrypted zero vector, pk: public key, R: first challenge, R': first response, Я: vector, Я': exponentiation vector, S500: setup process, S501: key generation step, S502: public key notification step, S503, S504, S505: public key acquisition step, S511, S521: group determination step, S512: canonical base setting step, S513: matrix generation step, S514: regular matrix determination step, S515: random base calculation step, S522: generator element selection step, S523: generator element exponentiation step, S524: base calculation step, S531: prime number determination step, S532, S754: product calculation step, S533: common multiple calculation step, S540: vector decomposition process, S541, S561: inverse matrix calculation step, S542: first initialization step, S543: first repetition step, S544: second initialization step, S545: second repetition step, S546: third initialization step, S547: third repetition step, S548: factor summation step, S549: map calculation step, S550: scalar multiplication step, S551, S747, S751: vector summation step, S560, S610, S660, S729, S730, S740: initialization step, S561a, S690, S732: inverse number calculation step, S562, S611, S661, S721, S731, S741: repetition step, S563, S566: vector decomposition step, S563a, S566a: decrypted integer calculation step, S564, S753: square calculation step, S565, S665a, S692: element combining step, S565a, S665b, S692a, S726, S760: integer combining step, S567, S691: group conversion step, S571, S662a, S724, S733a, S752a, S755: exponentiation calculation step, S600: registration process, S601, S705: biometric information extraction step, S602, S706: feature vector generation step, S603: feature vector encryption step, S604: encrypted biometric information notification step, S605: encrypted biometric information acquisition step, S612, S663, S722, S743, S749, S757, S758: random number generation step, S613, S723: vector calculation step, S613a, S723a: element calculation step, S613b, S723b: integer calculation step, S662, S733, S746: scalar multiplication step, S664, S725: zero generation step, S665, S745: vector combining step, S693: discrete logarithm calculation step, S700: authentication process, S701: first challenge generation step, S702, S713: random number storage step, S703: first challenge notification step, S704: first challenge acquisition step, S707: first response generation step, S708: first response notification step, S709: first response acquisition step, S710: encrypted biometric information extraction step, S711: encrypted biometric information reading step, S712: second challenge generation step, S714: second challenge notification step, S715: second challenge acquisition step, S716: second response generation step, S717: second response notification step, S718: second response acquisition step, S719: plaintext similarity degree calculation step, S720: authentication determination step, S742, S742a, S742b: difference calculation step, S744: disturbance vector generation step, S748: square summation step, S748a: element summation step, S750: encryption key generation step, S752: encryption key generation step, S759: second challenge setting step, sk: secret key, T: disturbance vector, Ц: decryption key, Ц: encryption key, ц$_1$, ц$_2$: exponentiation element, V: vector space, Ш: inverse element, X: regular matrix, X$^{-1}$: inverse matrix, Z: second response, Z': decrypted similarity degree element, Ж: first encrypted square vector, Ж': second encrypted square vector

**Claims**

1. A similarity degree calculation system (100, 110) including a similarity degree calculation apparatus (102, 112) that calculates a similarity degree between comparison data and target data, and a decryption apparatus (103), wherein

the similarity degree calculation apparatus includes a storage device (914) that stores data, a processing device (911) that processes the data, a comparison ciphertext storage unit (312), a target ciphertext acquisition unit (305, 325), a temporary key generation unit (303), an interim similarity degree ciphertext calculation unit (314), an interim similarity degree ciphertext notification unit (321), an interim similarity degree decrypted text acquisition unit (341), and a similarity degree calculation unit (315);

the decryption apparatus includes a storage unit (914) that stores data, a processing device (911) that processes the data, a secret key storage unit (413), an interim similarity degree ciphertext acquisition unit (402), an interim similarity degree decrypted text calculation unit (404), and an interim similarity degree decrypted text notification unit (412);

using the storage device of the decryption apparatus, the secret key storage unit of the decryption apparatus stores a secret key;

using the storage device of the similarity degree calculation apparatus, the comparison ciphertext storage unit of the similarity degree calculation apparatus stores a comparison ciphertext obtained by transforming the comparison data by encryption transformation using a public key corresponding to the secret key stored by the decryption apparatus (103);

using the processing device of the similarity degree calculation apparatus, the target ciphertext acquisition unit of the similarity degree calculation apparatus acquires a target ciphertext obtained by transforming the target data by the encryption transformation using the public key;

using the processing device of the similarity degree calculation apparatus, the temporary key generation unit of the similarity degree calculation apparatus generates a temporary key;

using the processing device of the similarity degree calculation apparatus, based on the comparison ciphertext stored by the comparison ciphertext storage unit, the target ciphertext acquired by the target ciphertext acquisition unit, and the temporary key generated by the temporary key generation unit, the interim similarity degree ciphertext calculation unit of the similarity degree calculation apparatus performs calculation for calculating the similarity degree in a first stage with the comparison cirphertext and the target ciphertext kept encrypted, and calculates an interim similarity degree ciphertext by encrypting a result of the calculation with the temporary key;

using the processing device of the similarity degree calculation apparatus, the interim similarity degree ciphertext notification unit of the similarity degree calculation apparatus notifies to the decryption apparatus the interim similarity degree ciphertext calculated by the interim similarity degree ciphertext calculation unit;

using the processing device of the decryption apparatus, the interim similarity degree ciphertext acquisition unit of the decryption apparatus acquires the interim similarity degree ciphertext notified from the similarity degree calculation apparatus;

using the processing device of the decryption apparatus, the interim similarity degree decrypted text calculation unit of the decryption apparatus decrypts the interim similarity degree ciphertext with the secret key, based on the secret key stored by the secret key storage unit of the decryption apparatus and the interim similarity degree ciphertext acquired by the interim similarity degree ciphertext acquisition unit of the decryption apparatus, and performs calculation for calculating the similarity degree in a second stage with a result of the decryption kept encrypted with the temporary key, thereby calculating the interim similarity degree decrypted text; and

using the processing device of the decryption apparatus, the interim similarity degree decrypted text notification unit of the decryption apparatus notifies the interim similarity degree decrypted text calculated by the interim similarity degree decrypted text calculation unit of the decryption apparatus to the similarity degree calculation apparatus;

using the processing device of the similarity degree calculation apparatus, the interim similarity degree decrypted text acquisition unit of the similarity degree calculation apparatus acquires the interim similarity degree decrypted text calculated and notified by the decryption apparatus, based on the interim similarity degree ciphertext notified by the interim similarity degree ciphertext notification unit; and

using the processing device of the similarity degree calculation apparatus, the similarity degree calculation unit of the similarity degree calculation apparatus decrypts the interim similarity degree decrypted text with the temporary key, based on the temporary key generated by the temporary key generation unit and the interim similarity degree decrypted text acquired by the interim similarity degree decrypted text acquisition unit, thereby calculating the similarity degree between the comparison data and the target data;

wherein the encryption transformation is transformation for transforming an integer into a ciphertext, an arithmetic operation for combining and transforming a plurality of ciphertexts into a different ciphertext may be calculated for the ciphertext, and a ciphertext obtained by combining a ciphertext resulting from transformation of an arbitrary first integer and a ciphertext resulting from transformation of an arbitrary second integer by the arithmetic operation for the ciphertext is a ciphertext resulting from transformation of a sum of the first integer and the second integer; and

wherein

each of the comparison data and the target data is a T-dimensional vector having each component of an integer, T being an integer not less than 1;

the comparison ciphertext is a T-dimensional vector having a component of a ciphertext obtained by transforming each component of the comparison data by the encryption transformation using the public key;

the target ciphertext is a T-dimensional vector having a component of a ciphertext obtained by transforming each component of the target data by the encryption transformation using the public key;

the similarity degree calculation apparatus further includes a public key storage unit (302);

using the storage device of the similarity degree calculation apparatus, the public key storage unit of the similarity degree calculation apparatus stores the public key corresponding to the secret key stored by the decryption apparatus;

using the processing device of the similarity degree calculation apparatus, the temporary key generation unit of the similarity degree calculation apparatus randomly generates an integer, and sets the generated integer to the temporary key; and

using the processing device of the similarity degree calculation apparatus, the interim similarity degree ciphertext calculation unit of the similarity degree calculation apparatus calculates the interim similarity degree ciphertext using the arithmetic operation for the ciphertext, based on the comparison ciphertext stored by the comparison ciphertext storage unit of the similarity degree calculation apparatus and the target ciphertext acquired by the target ciphertext acquisition unit of the similarity degree calculation apparatus, and the temporary key generated by the temporary key generation unit of the similiarity degree calculation apparatus, the interim similarity degree ciphertext being a ciphertext obtained by transforming a sum or a difference between a summation value and the temporary key by the encryption transformation using the public key, and the summation value is an integer obtained by summating a square of a difference between each component of the comparison data and the corresponding component of the target data or by summating a product of each component of the comparison data and the corresponding component of the target data, for all the components.

2. The similarity degree calculation system according to claim 1, wherein

each of the comparison data and the target data is a T-dimensional vector having components of integers, T being an integer not less than 1;

using the processing device of the similarity degree calculation apparatus, the interim similarity degree ciphertext calculation unit of the similarity degree calculation apparatus calculates a difference or a product of the corresponding components of the comparison data and the target data, with the comparison ciphertext and the target ciphertext kept encrypted;

using the processing device of the decryption apparatus, the interim similarity degree ciphertext calculation unit of the decryption apparatus decrypts the interim similarity degree ciphertext with the secret key, and calculates the similarity degree, with the result of the decryption kept encrypted with the temporary key; and

using the processing device of the similarity degree calculation apparatus, the similarity degree calculation unit of the similarity degree calculation apparatus decrypts the interim similarity degree decrypted text, thereby obtaining the similarity degree.

3. The similarity degree calculation system according to claim 1, wherein

each of the comparison data and the target data is a T-dimensional vector having each component of an integer, T being an integer not less than 1;

the comparison ciphertext is a T-dimensional vector having a component of a ciphertext obtained by transforming each component of the comparison data by the encryption transformation using the public key;

the target ciphertext is a T-dimensional vector having a component of a ciphertext obtained by transforming each component of the target data by the encryption transformation using the public key;

the similarity degree calculation apparatus further includes a public key storage unit (302);

using the storage device of the similarity degree calculation apparatus, the public key storage unit of the similarity degree calculation apparatus stores a public key corresponding to the secret key stored by the decryption apparatus;

using the processing device of the similarity degree calculation apparatus, the temporary key generation unit of the similarity degree calculation apparatus randomly generates an integer, and sets the generated integer to the temporary key;

the interim similarity degree ciphertext calculation unit of the similarity degree calculation apparatus includes a random number plaintext generation unit (362), a first ciphertext calculation unit (363), and a second ciphertext calculation unit (367);

using the processing device of the similarity degree calculation apparatus, the random number plaintext generation unit of the similarity degree calculation apparatus randomly generates a T-dimensional vector having a component of an integer, and sets the generated T-dimensional vector to a random number plaintext;

using the processing device of the similarity degree calculation apparatus, the first ciphertext calculation unit of the similarity degree calculation apparatus calculates a first interim similarity degree ciphertext using the arithmetic operation for the ciphertext, based on the comparison ciphertext stored by the comparison ciphertext storage unit of the similarity degree calculation apparatus, the target ciphertext acquired by the target ciphertext acquisition unit of the similarity degree calculation apparatus, and the random number plaintext generated by the random number plaintext generation unit of the similarity degree calculation apparatus, the first interim similarity degree ciphertext being a T-dimensional vector having a component of a ciphertext obtained by transforming a sum of a difference between each component of the comparison data and the corresponding component of the target data and the corresponding component of the random number plaintext by the encryption transformation using the public key;

using the processing device of the similarity degree calculation apparatus, the second ciphertext calculation unit of the similarity degree calculation apparatus calculates a second interim similarity degree ciphertext using the arithmetic operation for the ciphertext, based on the comparison ciphertext stored by the comparison ciphertext storage unit of the similarity degree calculation apparatus, the target ciphertext acquired by the target ciphertext acquisition unit of the similarity degree calculation apparatus, the temporary key generated by the temporary key generation unit of the similarity degree calculation apparatus, and the random number plaintext generated by the random number plaintext generation unit of the similarity degree calculation apparatus, the second interim similarity degree ciphertext being a ciphertext obtained by transforming a sum of a correction value and the temporary key by the encryption transformation using the public key, the correction value being an integer obtained by summating, for all of the components, sums of squares of the respective components of the random number plaintext and twice products of the corresponding components of the random number plaintext and differences between the respective components of the comparison data and the corresponding components of the target data; and

using the processing device of the similarity degree calculation apparatus, the interim similarity degree ciphertext notification unit of the similarity degree calculation apparatus notifies the first interim similarity degree ciphertext calculated by the first ciphertext calculation unit of the similarity degree calculation apparatus and the second interim similarity degree ciphertext calculated by the second ciphertext calculation unit of the similarity degree calculation apparatus to the decryption apparatus,

4. The similarity degree calculation system according to claim 1, wherein

each of the comparison data and the target data is a T-dimensional vector having a component of an integer, T being an integer not less than 1;

the comparison ciphertext is a T-dimensional vector having a component of a ciphertext obtained by transforming each component of the comparison data by the encryption transformation using the public key;

the target ciphertext is a T-dimensional vector having a component of a ciphertext obtained by transforming each component of the target data by the encryption transformation using the public key;

the similarity degree calculation apparatus further includes a public key storage unit (302);

using the storage device of the similarity degree calculation apparatus, the public key storage unit of the similarity degree calculation apparatus stores the public key corresponding to the secret key stored by the decryption apparatus;

using the processing device of the similarity degree calculation apparatus, the temporary key generation unit of the similarity degree calculation apparatus randomly generates an integer, and sets the generated integer to the temporary key;

the interim similarity degree ciphertext calculation unit of the similarity degree calculation apparatus includes a first ciphertext calculation unit (363) and a second ciphertext calculation unit (367);

using the processing device of the similarity degree calculation apparatus, the first ciphertext calculation unit of the similarity degree calculation apparatus calculates a first interim similarity degree ciphertext using the arithmetic operation for the ciphertext, based on the comparison ciphertext stored by the comparison ciphertext storage unit of the similarity degree calculation apparatus and the target ciphertext acquired by the target ciphertext acquisition unit of the similarity degree calculation apparatus, the first interim similarity degree ciphertext being a T-dimensional vector having a component of a ciphertext obtained by transforming a difference between each component of the comparison data and the corresponding component of the target data by the encryption transformation using the public key;

using the processing device of the similarity degree calculation apparatus, the second ciphertext calculation unit of the similarity degree calculation apparatus sets a ciphertext obtained by transformation of the temporary key by the encryption transformation using the public key to a second interim similarity degree ciphertext, based on the public key stored by the public key storage unit of the similarity degree calculation apparatus and the temporary key generated by the temporary key generation unit of the similarity degree calculation apparatus; and

using the processing device of the similarity degree calculation apparatus, the interim similarity degree ciphertext notification unit of the similarity degree calculation apparatus notifies the first interim similarity degree ciphertext calculated by the first ciphertext calculation unit of the similarity degree calculation apparatus and the second interim similarity degree ciphertext calculated by the second ciphertext calculation unit of the similarity degree calculation apparatus to the decryption apparatus.

5. The similarity degree calculation system according to claim 4, wherein

using the processing device of the similarity degree calculation apparatus, the first ciphertext calculation unit of the similarity degree calculation apparatus sets, as the first interim similarity degree ciphertext, the T-dimensional vector having components of a ciphertext randomly selected from among ciphertexts obtained by transforming the difference of each component of the comparison data from the corresponding component of the target data by the encryption transformation using the public key and ciphertexts obtained by transforming the difference of each component of the target data from the corresponding component of the comparison data by the encryption transformation using the public key, the T-dimensional vector having a sequence of the components randomly rearranged.

6. The similarity degree calculation system according to any one of claims 3 to 5, wherein

using the processing device of the decryption apparatus, the interim similarity degree decrypted text calculation unit of the decryption apparatus calculates a difference or a sum between a summation of squares of the integers obtained by decrypting the T components of the first interim similarity degree ciphertext and the integer obtained by decrypting the second interim similarity degree ciphertext, or calculates an element obtained by combining z pieces of predetermined elements in a predetermined finite group by a group arithmetic operation on the predetermined finite group, and sets the calculated difference, the calculated sum, or the calculated element to the interim similarity degree decrypted text, z being the difference or the sum between the summation of squares of the integers obtained by decrypting the T components of the first interim similarity degree ciphertext and the integer obtained by decrypting the second interim similarity degree ciphertext.

7. The similarity degree calculation system according to claim 1, wherein

the similarity degree calculation system further includes an encryption apparatus (101, 111);

the encryption apparatus includes a storage device (914) that stores data, a processing device (911) that processes the data, a public key storage unit (212), a target data acquisition unit (214), a temporary public key acquisition unit (211), a target dual encryption text calculation unit (217), and a target dual encryption text notification unit (221);

using the storage device of the encryption apparatus, the public key storage unit of the encryption apparatus stores the public key corresponding to the secret key stored by the decryption apparatus;

using the processing device of the encryption apparatus, the target data acquisition unit of the encryption apparatus acquires the target data;

using the processing device of the encryption apparatus, the temporary public key acquisition unit of the encryption apparatus acquires a temporary public key notified from the similarity degree calculation apparatus;

using the processing device of the encryption apparatus, the target dual encryption text calculation unit of the encryption apparatus transforms the target data by second encryption transformation using the public key and the temporary public key, thereby calculating a target dual encryption text, based on the public key stored by the public key storage unit of the encryption apparatus, the target data acquired by the target data acquisition unit of the encryption apparatus, and the temporary public key acquired by the temporary public key acquisition unit of the encryption apparatus;

using the processing device of the encryption apparatus, the target dual encryption text notification unit of the encryption apparatus notifies the target dual encryption text calculated by the target dual encryption text calculation unit of the encryption apparatus to the similarity degree calculation apparatus;

the similarity degree calculation apparatus further includes a temporary secret key generation unit (303, 304), a temporary public key notification unit (311), and a target dual encryption text acquisition unit (331);

using the processing device of the similarity degree calculation apparatus, the temporary secret key generation unit of the similarity degree calculation apparatus generates a temporary secret key and a temporary public key corresponding to the temporary secret key;

using the processing device of the similarity degree calculation apparatus, the temporary public key notification unit of the similarity degree calculation apparatus notifies the temporary public key generated by the temporary secret key generation unit of the similarity degree calculation apparatus to the encryption apparatus;

using the processing device of the similarity degree calculation apparatus, the target dual encryption text acquisition unit of the similarity degree calculation apparatus acquires the target dual encryption text notified from the encryption apparatus; and

using the processing device of the similarity degree calculation apparatus, the target ciphertext acquisition unit of the similarity degree calculation apparatus transforms the target dual encryption text by second decryption transformation using the temporary secret key, based on the temporary secret key generated by the temporary secret key generation unit of the similarity degree calculation apparatus and the target dual encryption text acquired by the target dual encryption text acquisition unit of the similarity degree calculation apparatus, thereby calculating the target ciphertext obtained by transforming the target data by the encryption transformation using the public key.

8. The similarity degree calculation system according to claim 7, wherein

the encryption transformation is transformation for transforming an integer to a ciphertext, an arithmetic operation for combining and transforming a plurality of ciphertexts into a different ciphertext may be calculated for the ciphertext, and a ciphertext obtained by combining a ciphertext resulting from transformation of an arbitrary first integer and a ciphertext resulting from transformation of an arbitrary second integer by the arithmetic operation for the ciphertext is a ciphertext resulting from transformation of a sum of the first integer and the second integer;

the target data is a T-dimensional vector having components of integers, T being an integer not less than 1;

the similarity degree calculation apparatus further includes a public key storage unit (302);

using the storage device of the similarity degree calculation apparatus, the public key storage unit of the similarity degree calculation apparatus stores the public key corresponding to the secret key stored by the decryption apparatus;

using the processing device of the similarity degree calculation apparatus, the temporary public key generation unit of the similarity degree calculation apparatus randomly generates a T-dimensional vector having a component of an integer, and sets the generated T-dimensional vector to the temporary secret key, and calculates a T-dimensional vector having a component of a ciphertext obtained by transforming each component of the temporary secret key by the encryption transformation using the public key, based on the public key stored by the public key storage unit of the similarity degree calculation apparatus and the generated temporary secret key, and sets the calculated T-dimensional vector to the temporary public key;

using the processing device of the encryption apparatus, the target dual encryption text calculation unit of the encryption apparatus randomly generates a T-dimensional vector having a component of a ciphertext obtained by transforming 0 by the encryption transformation using the public key, based on the public key stored by the public key storage unit of the encryption apparatus, and sets the generated T-dimensional vector to a zero ciphertext, and calculates a T-dimensional vector having a component of a cirphetext obtained by combining $b'_i$ pieces of each component of the temporary public key, $b'_i$ being the integer indicating the corresponding component of the target data, and the corresponding component of the zero ciphertext by the arithmetic operation for the ciphertext, based on the target data acquired by the target data acquisition unit of the encryption apparatus, the temporary public key acquired by the temporary public key acquisition unit of the encryption apparatus, and the generated zero ciphertext, and sets the calculated T-dimensional vector to the target dual encryption text;

the target ciphertext acquisition unit of the similarity degree calculation apparatus includes a temporary decryption key calculation unit (351) and a target ciphertext calculation unit (352);

using the processing device of the similarity degree calculation apparatus, the temporary decryption key calculation unit of the similarity degree calculation apparatus calculates a T-dimensional vector having a component of an inverse number of each component of the temporary secret key, based on the temporary secret key generated by the temporary secret key generation unit of the similarity degree calculation apparatus, and sets the calculated T-dimensional vector to a temporary decryption key; and

using the processing device of the similarity degree calculation apparatus, the target ciphertext calculation unit of the similarity degree calculation apparatus calculates a T-dimensional vector having a component of a ciphertext obtained by combining $R_i^{-1}$ pieces of each component of the target dual encryption text, $R_i^{-1}$ being the inverse number indicating the corresponding component of the temporary decryption key, based on the target dual encryption text acquired by the target dual encryption text acquisition unit of the similarity degree calculation apparatus and the temporary decryption key calculated by the temporary decryption key calculation unit of the similarity degree calculation apparatus, and sets the calculated T-dimensional vector to the target ciphertext.

9. The similarity degree calculation system according to claim 1, wherein
using the processing device of the decyprtion apparatus, the interim similarity degree decrypted text calculation unit of the decryption apparatus calculates an integer obtained by decrypting the interim similarity degree ciphertext, or calculates an element by combining z pieces of predetermined elements, z being the integer obtained by decrypting the interim similarity degree ciphertext, in a predetermined finite group by a group arithemetic operation in the predetermined finite group, based on the interim similarity degree ciphertext acquired by the interim similarity degree ciphertext acquisition unit of the decryption apparatus, and sets the calculated integer or the calculated element to the interim similarity degree decrypted text.

10. The similarity degree calculation system according to any one of claims 1 to 5, 7 and 8, wherein
the interim similarity degree decrypted text is an integer;
using the processing device of the similarity degree calculation apparatus, the temporary key generation unit of the similarity degree calculation apparatus randomly generates an integer, and sets the generated integer to the temporary key; and
using the processing device of the similarity degree calculation apparatus, the similarity degree calculation unit of the similarity degree calculation apparatus calculates a sum or a difference between the temporary key and the interim similarity degree decrypted text, based on the temporary key generated by the temporary key generation unit of the similarity degree calculation apparatus and the interim similarity degree decrypted text acquired by the interim similarity degree decrypted text acquisition unit of the similarity degree calculation apparatus, and sets the calculated sum or the calculated difference to the similarity degree.

11. The similarity degree calculation system according to any one of claims 1 to 5, 7 and 8, wherein
the interim similarity degree decrypted text is an element in a predetermined finite group;
using the processing device of the similarity degree calculation apparatus, the temporary key generation unit of the similarity degree calculation apparatus randomly generates an integer, and sets the generated integer to the temporary key;
the similarity degree calculation unit of the similarity degree calculation apparatus includes a similarity degree decrypted text calculation unit (372) and a discrete logarithm calculation unit (373);
using the processing device of the similarity degree calculation apparatus, the similarity degree decrypted text calculation unit of the similarity degree calculation apparatus calculates an element by combining the interim similarity degree decrypted text and u pieces of predetermined elements, u being the integer of the temporary key, in the predetermined finite group by a group arithmetic operation on the predetermined finite group, based on the temporary key generated by the temporary key generation unit of the similarity degree calculation apparatus and the interim similarity degree decrypted text acquired by the interim similarity degree decrypted text acquisition unit of the similarity degree calculation apparatus, and sets the calculated element to a similarity degree decrypted text; and
using the processing device of the similarity degree calculation apparatus, the discrete logarithm calculation unit of the similarity degree calculation apparatus calculates a number of the predetermined elements to be combined to be equal to the similarity degree decrypted text, by the group arithmetic operation in the predetermined finite group, based on the similarity degree decrypted text calculated by the similarity degree decrypted text calculation unit of the similarity degree calculation apparatus, and sets the number of the predetermine elements to the similarity degree.

12. The similarity degree calculation system according to claim 11, wherein
using the processing device of the similarity degree calculation apparatus, the discrete logarithm calculation unit of the similarity degree calculation apparatus calculates the similarity degree when the similarity degree is an integer within a predetermined range, and determines that the similarity degree is outside the predetermined range when the similarity degree is outside the predetermined range.

13. The similarity degree calculation system according to any one of claims 1 to 5, 7 and 8, wherein
the similarity degree calculation system further includes a registration apparatus (104);
the registration apparatus includes a storage device (914) that stores data, a processing device (911) that processes the data, a public key storage unit (202), a comparison data acquisition unit (204), a comparison ciphertext calculation unit (206), and a comparison ciphertext notification unit (201);
using the storage device of the registration apparatus, the public key storage unit of the registration apparatus stores the public key corresponding to the secret key stored by the decryption apparatus;
using the processing device of the registration apparatus, the comparison data acquisition unit of the registration apparatus acquires the comparison data;
using the processing device of the registration apparatus, the comparison ciphertext calculation unit of the registration apparatus transforms the comparison data by the encryption transformation using the public key to calculate the comparison ciphertext, based on the public key stored by the public key storage unit of the registration apparatus and the comparison data acquired by the comparison data acquisition unit of the registration apparatus;

using the processing device of the registration apparatus, the comparison ciphertext notification unit of the registration apparatus notifies the comparison ciphertext calculated by the comparison ciphertext calculation unit of the registration apparatus to the similarity degree calculation apparatus;

the similarity degree calculation apparatus further includes a comparison ciphertext acquisition unit (301);

using the processing device of the similarity degree calculation apparatus, the comparison ciphertext acquisition unit of the similarity degree calculation apparatus acquires the comparison ciphertext notified from the registration apparatus; and

using the storage device of the similarity degree calculation apparatus, the comparison ciphertext storage unit of the similarity degree calculation apparatus stores the comparison ciphertext acquired by the comparison ciphertext acquisition unit of the similarity degree calculation apparatus.

14. A similarity degree calculation method of calculating a similarity degree between comparison data and target data by a similarity degree calculation system (100, 110) including a similarity degree calculation apparatus (102, 112) and a decryption apparatus (103),

each of the similarity degree calculation apparatus and the decryption apparatus including a storage device (914) that stores data and a processing device (911) that processes the data, the similarity degree calculation method comprising:

storing a secret key by the storage device of the decryption apparatus;

storing by the storage device of the similarity degree calculation apparatus a comparison ciphertext obtained by transforming the comparison data by encryption transformation using a public key corresponding to the secret key stored by the decryption apparatus;

acquiring by the processing device of the similarity degree calculation apparatus a target ciphertext obtained by transforming the target data by the encryption transformation using the public key;

generating a temporary key by the processing device of the similarity degree calculation apparatus;

by the processing device of the similarity degree calculation apparatus, performing calculation for calculating the similarity degree in a first stage with the comparison cirphertext and the target ciphertext kept encrypted, based on the comparison ciphertext stored by the storage device of the similarity degree calculation apparatus, the target ciphertext acquired by the processing device of the similarity degree calculation apparatus, and the temporary key generated by the processing device of the similarity degree calculation apparatus, thereby calculating an interim similarity degree ciphertext obtained by encrypting a result of the calculation by the temporary key;

by the processing device of the similarity degree calculation apparatus, notifying to the decryption apparatus the interim similarity degree ciphertext calculated by the processing device of the interim similarity degree ciphertext calculation apparatus;

by the processing device of the decryption apparatus, acquiring the interim similarity degree ciphertext notified from the similarity degree calculation apparatus;

by the processing device of the decryption apparatus, decrypting the interim similarity degree ciphertext with the secret key, based on the secret key stored by the storage device of the decryption apparatus and the interim similarity degree ciphertext acquired by the processing device of the decryption apparatus, performing calculation for calculating the similarity degree in a second stage with a result of the decryption kept encrypted with the temporary key, thereby calculating the interim similarity degree decrypted text;

by the processing device of the decryption apparatus, notifying the interim similarity degree decrypted text calculated by the processing device of the decryption apparatus to the similarity degree calculation apparatus;

by the processing device of the similarity degree calculation apparatus, acquiring the interim similarity degree decrypted text notified from the decryption apparatus; and

by the processing device of the similarity degree calculation apparatus, decrypting the interim similarity degree decrypted text with the temporary key, based on the temporary key generated by the processing device of the similarity degree calculation apparatus and the interim similarity degree decrypted text acquired by the processing device of the similarity degree calculation apparatus, thereby calculating the similarity degree between the comparison data and the target data;

wherein the encryption transformation is transformation for transforming an integer into a ciphertext, an arithmetic operation for combining and transforming a plurality of ciphertexts into a different ciphertext may be calculated for the ciphertext, and a ciphertext obtained by combining a ciphertext resulting from transformation of an arbitrary first integer and a ciphertext resulting from transformation of an arbitrary second integer by the arithmetic operation for the ciphertext is a ciphertext resulting from transformation of a sum of the first integer and the second integer; and

wherein

each of the comparison data and the target data is a T-dimensional vector having each component of an integer, T being an integer not less than 1;

the comparison ciphertext is a T-dimensional vector having a component of a ciphertext obtained by transforming each component of the comparison data by the encryption transformation using the public key;

the target ciphertext is a T-dimensional vector having a component of a ciphertext obtained by transforming each component of the target data by the encryption transformation using the public key;

the similarity degree calculation apparatus further includes a public key storage unit (302);

storing, by the public key storage unit of the similarity degree calculation apparatus, the public key corresponding to the secret key stored by the decryption apparatus;

randomly generating, by the temporary key generation unit of the similarity degree calculation apparatus, an integer, and setting the generated integer to the temporary key; and

calculating, by the interim similarity degree ciphertext calculation unit of the similarity degree calculation apparatus, the interim similarity degree ciphertext using the arithmetic operation for the ciphertext, based on the comparison ciphertext stored by the comparison ciphertext storage unit of the similarity degree calculation apparatus and the target ciphertext acquired by the target ciphertext acquisition unit of the similarity degree calculation apparatus, and the temporary key generated by the temporary key generation unit of the similiarity degree calculation apparatus, the interim similarity degree ciphertext being a ciphertext obtained by transforming a sum or a difference between a summation value and the temporary key by the encryption transformation using the public key, and the summation value is an integer obtained by summating a square of a difference between each component of the comparison data and the corresponding component of the target data or by summating a product of each component of the comparison data and the corresponding component of the target data, for all the components.

## Patentansprüche

1. Ähnlichkeitsgrad-Berechnungssystem (100, 110) mit einer Ähnlichkeitsgrad-Berechnungsvorrichtung (102, 112), die einen Ähnlichkeitsgrad zwischen Vergleichsdaten und Solldaten berechnet, und einer Entschlüsselungsvorrichtung (103), wobei

die Ähnlichkeitsgrad-Berechnungsvorrichtung eine Speichereinrichtung (914), die Daten speichert, eine Verarbeitungseinrichtung (911), die Daten verarbeitet, eine Vergleichs-Chiffretext-Speichereinheit (312), eine Soll-Chiffretext-Erfassungseinheit (305, 325), eine Temporärer-Schlüssel-Erzeugungseinheit (303), eine Interim-Ähnlichkeitsgrad-Chiffretext-Berechnungseinheit (314), eine Interim-Ähnlichkeitsgrad-Chiffretext-Meldeeinheit (321), eine Interim-Ähnlichkeitsgrad-Entschlüsselter-Text-Erfassungseinheit (341) und eine Ähnlichkeitsgrad-Berechnungseinheit (315) umfasst;

die Entschlüsselungsvorrichtung eine Speichereinrichtung (914), die Daten speichert, eine Verarbeitungseinrichtung (911), die Daten verarbeitet, eine Geheimschlüssel-Speichereinheit (413), eine Interim-Ähnlichkeitsgrad-Chiffretext-Erfassungseinheit (402), eine Interim-Ähnlichkeitsgrad-Entschlüsselter-Text-Berechnungseinheit (404) und eine Interim-Ähnlichkeitsgrad-Entschlüsselter-Text-Meldeeinheit (412) umfasst;

die Geheimschlüsselspeichereinheit der Entschlüsselungsvorrichtung unter Verwendung der Speichereinrichtung der Entschlüsselungsvorrichtung einen Geheimschlüssel speichert;

die Vergleichs-Chiffretext-Speichereinheit der Ähnlichkeitsgrad-Berechnungsvorrichtung unter Verwendung der Speichereinrichtung der Ähnlichkeitsgrad-Berechnungsvorrichtung einen Vergleichs-Chiffretext speichert, der durch Umwandeln der Vergleichsdaten durch Verschlüsselungsumwandlung unter Verwendung eines öffentlichen Schlüssels, der dem durch die Entschlüsselungsvorrichtung (103) gespeicherten Geheimschlüssel entspricht, erhalten wird;

die Soll-Chiffretext-Erfassungseinheit der Ähnlichkeitsgrad-Berechnungsvorrichtung unter Verwendung der Verarbeitungseinrichtung der Ähnlichkeitsgrad-Berechnungsvorrichtung einen Soll-Chiffretext erfasst, der durch Umwandeln der Solldaten durch die Verschlüsselungsumwandlung unter Verwendung des öffentlichen Schlüssels erhalten wird;

die Temporärer-Schlüssel-Erzeugungseinheit der Ähnlichkeitsgrad-Berechnungsvorrichtung unter Verwendung der Verarbeitungseinrichtung der Ähnlichkeitsgrad-Berechnungsvorrichtung einen temporären Schlüssel erzeugt;

die Interim-Ähnlichkeitsgrad-Chiffretext-Berechnungseinheit der Ähnlichkeitsgrad-Berechnungsvorrichtung unter Verwendung der Verarbeitungseinrichtung der Ähnlichkeitsgrad-Berechnungsvorrichtung auf der Grundlage des durch die Vergleichs-Chiffretext-Speichereinheit gespeicherten Vergleichs-Chiffretextes, des durch die Soll-Chiffretext-Erfassungseinheit erfassten Soll-Chiffretextes und des durch die Temporärer-Schlüssel-Erzeugungseinheit erzeugten temporären Schlüssels Berechnung zum Berechnen des Ähnlichkeitsgrads in einer ersten Stufe mit dem Vergleichs-Chiffretext und dem verschlüsselt gehaltenen Soll-Chiffretext durchführt und einen Interim-Ähnlichkeitsgrad-Chiffretext durch Verschlüsseln eines Ergebnisses der Berechnung mit dem temporären Schlüssel berechnet;

die Interim-Ähnlichkeitsgrad-Chiffretext-Meldeeinheit der Ähnlichkeitsgrad-Berechnungsvorrichtung unter Verwendung der Verarbeitungseinrichtung der Ähnlichkeitsgrad-Berechnungsvorrichtung der Entschlüsselungsvorrichtung den durch die Interim-Ähnlichkeitsgrad-Chiffretext-Berechnungseinheit berechneten Interim-Ähnlichkeitsgrad-Chiffretext meldet;

die Interim-Ähnlichkeitsgrad-Chiffretext-Erfassungseinheit der Entschlüsselungsvorrichtung unter Verwendung der Verarbeitungseinrichtung der Entschlüsselungsvorrichtung den von der Ähnlichkeitsgrad-Berechnungsvorrichtung gemeldeten Interim-Ähnlichkeitsgrad-Chiffretext erfasst;

die Interim-Ähnlichkeitsgrad-Entschlüsselter-Text-Berechnungseinheit der Entschlüsselungsvorrichtung unter Verwendung der Verarbeitungseinrichtung der Entschlüsselungsvorrichtung den Interim-Ähnlichkeitsgrad-Chiffretext mit dem Geheimschlüssel auf der Grundlage des durch die Geheimschlüssel-Speichereinheit der Entschlüsselungsvorrichtung gespeicherten Geheimschlüssels und des durch die Interim-Ähnlichkeitsgrad-Chiffretext-Erfassungseinheit der Verschlüsselungsvorrichtung erfassten Interim-Ähnlichkeitsgrad-Chiffretextes entschlüsselt und Berechnung zum Berechnen des Ähnlichkeitsgrads in einer zweiten Stufe mit einem Ergebnis der mit dem temporären Schlüssel verschlüsselt gehaltenen Entschlüsselung durchführt und dabei den Interim-Ähnlichkeitsgrad-Entschlüsselten-Text berechnet; und

die Interim-Ähnlichkeitsgrad-Entschlüsselter-Text-Meldeeinheit der Entschlüsselungsvorrichtung unter Verwendung der Verarbeitungseinrichtung der Entschlüsselungsvorrichtung den durch die Interim-Ähnlichkeitsgrad-Entschlüsselter-Text-Berechnungseinheit der Entschlüsselungsvorrichtung berechneten Interim-Ähnlichkeitsgrad-Entschlüsselten-Text an die Ähnlichkeitsgrad-Berechnungsvorrichtung meldet;

die Interim-Ähnlichkeitsgrad-Entschlüsselter-Text-Erfassungseinheit der Ähnlichkeitsgrad-Berechnungsvorrichtung unter Verwendung der Verarbeitungseinrichtung der Ähnlichkeitsgrad-Berechnungsvorrichtung den Interim-Ähnlichkeitsgrad-Entschlüsselten-Text, der berechnet und gemeldet wird durch die Entschlüsselungsvorrichtung, auf der Grundlage des durch die Interim-Ähnlichkeitsgrad-Chiffretext-Meldeeinheit gemeldeten Interim-Ähnlichkeitsgrad-Chiffretextes erfasst; und

die Ähnlichkeitsgrad-Berechnungseinheit der Ähnlichkeitsgrad-Berechnungsvorrichtung unter Verwendung der Verarbeitungseinrichtung der Ähnlichkeitsgrad-Berechnungsvorrichtung den Interim-Ähnlichkeitsgrad-Entschlüsselten-Text mit dem temporären Schlüssel auf der Grundlage des durch die Temporärer-Schlüssel-Erzeugungseinheit erzeugten temporären Schlüssels und des durch die Interim-Ähnlichkeitsgrad-Entschlüsselter-Text-Erfassungseinheit erfassten Interim-Ähnlichkeitsgrad-Entschlüsselten-Textes entschlüsselt,

wobei der Ähnlichkeitsgrad zwischen den Vergleichsdaten und den Solldaten berechnet wird;

wobei die Verschlüsselungsumwandlung eine Umwandlung zum Umwandeln einer ganzen Zahl in einen Chiffretext ist, eine arithmetische Operation zum Kombinieren und Umwandeln einer Vielzahl von Chiffretexten in einen anderen Chiffretext für den Chiffretext berechnet werden kann, und ein Chiffretext, der durch Kombinieren eines Chiffretextes erhalten wird, der sich aus der Umwandlung einer beliebigen ersten ganzen Zahl ergibt, und eines Chiffretextes, der sich aus der Umwandlung einer beliebigen zweiten ganzen Zahl durch die arithmetische Operation für den Chiffretext ergibt, ein Chiffretext ist, der sich aus der Umwandlung einer Summe der ersten ganzen Zahl und der zweiten ganzen Zahl ergibt; und

wobei

jede der Vergleichsdaten und der Solldaten ein T-dimensionaler Vektor ist, der jede Komponente einer ganzen Zahl aufweist, wobei T eine ganze Zahl nicht kleiner als 1 ist;

der Vergleichs-Chiffretext ein T-dimensionaler Vektor ist, der eine Komponente eines Chiffretextes aufweist, die durch Umwandeln jeder Komponente der Vergleichsdaten durch die Verschlüsselungsumwandlung unter Verwendung des öffentlichen Schlüssels erhalten wird;

der Soll-Chiffretext ein T-dimensionaler Vektor ist, der eine Komponente eines Chiffretextes aufweist, die durch Umwandeln jeder Komponente der Solldaten durch die Verschlüsselungsumwandlung unter Verwendung des öffentlichen Schlüssels erhalten wird;

die Ähnlichkeitsgrad-Berechnungsvorrichtung ferner eine Öffentlicher-Schlüssel-Speichereinheit (302) umfasst;

die Öffentlicher-Schlüssel-Speichereinheit der Ähnlichkeitsgrad-Berechnungsvorrichtung unter Verwendung der Speichereinrichtung der Ähnlichkeitsgrad-Berechnungsvorrichtung den öffentlichen Schlüssel, der dem durch die Entschlüsselungsvorrichtung gespeicherten Geheimschlüssel entspricht, speichert;

die Temporärer-Schlüssel-Erzeugungseinheit der Ähnlichkeitsgrad-Berechnungsvorrichtung unter Verwendung der Verarbeitungseinrichtung der Ähnlichkeitsgrad-Berechnungsvorrichtung zufällig eine ganze Zahl erzeugt und die erzeugte ganze Zahl auf den temporären Schlüssel setzt; und

die Interim-Ähnlichkeitsgrad-Chiffretext-Berechnungseinheit der Ähnlichkeitsgrad-Berechnungsvorrichtung unter Verwendung der Verarbeitungseinrichtung der Ähnlichkeitsgrad-Berechnungsvorrichtung den Interim-Ähnlichkeitsgrad-Chiffretext unter Verwendung der arithmetischen Operation für den Chiffretext auf der Grundlage des durch die Vergleichs-Chiffretext-Speichereinheit der Ähnlichkeitsgrad-Berechnungsvorrichtung gespeicherten Vergleichs-Chiffretextes und des durch die Soll-Chiffretext-Erfassungseinheit der Ähnlichkeitsgrad-Berechnungsvorrichtung erfassten Soll-Chiffretextes und des durch die Temporärer-Schlüssel-Erzeugungseinheit der Ähnlichkeitsgrad-Berechnungsvorrichtung erzeugten temporären Schlüssels berechnet, wobei der Interim-Ähnlichkeitsgrad-Chiffretext ein Chiffretext ist, der durch Umwandeln einer Summe oder Differenz zwischen einem Summenwert und dem temporären Schlüssel durch die Verschlüsselungsumwandlung unter Verwendung des öffentlichen Schlüssels erhalten wird, und der Summenwert eine ganze Zahl ist, die durch Summieren eines Quadrats einer Differenz zwischen jeder Komponente der Vergleichsdaten und der entsprechenden Komponente der Solldaten oder durch Summieren eines Produkts jeder Komponente der Vergleichsdaten und der entsprechenden Komponente der Solldaten für alle Komponenten erhalten wird.

2. Ähnlichkeitsgrad-Berechnungssystem nach Anspruch 1, wobei
jede der Vergleichsdaten und der Solldaten ein T-dimensionaler Vektor ist, der Komponenten ganzer Zahlen aufweist, wobei T eine ganze Zahl nicht kleiner als 1 ist;

die Interim-Ähnlichkeitsgrad-Chiffretext-Berechnungseinheit der Ähnlichkeitsgrad-Berechnungsvorrichtung unter Verwendung der Verarbeitungseinrichtung der Ähnlichkeitsgrad-Berechnungsvorrichtung eine Differenz oder ein Produkt der entsprechenden Komponenten der Vergleichsdaten und der Solldaten berechnet, wobei der Vergleichs-Chiffretext und der Soll-Chiffretext verschlüsselt gehalten werden;

die Interim-Ähnlichkeitsgrad-Chiffretext-Berechnungseinheit der Entschlüsselungsvorrichtung unter Verwendung der Verarbeitungseinrichtung der Entschlüsselungsvorrichtung den Interim-Ähnlichkeitsgrad-Chiffretext mit dem Geheimschlüssel entschlüsselt und den Ähnlichkeitsgrad berechnet, wobei das Ergebnis der Entschlüsselung mit dem temporären Schlüssel verschlüsselt gehalten wird; und

die Ähnlichkeitsgrad-Berechnungseinheit der Ähnlichkeitsgrad-Berechnungsvorrichtung unter Verwendung der Verarbeitungseinrichtung der Ähnlichkeitsgrad-Berechnungsvorrichtung den Interim-Ähnlichkeitsgrad-Entschlüsselten-Text entschlüsselt, wobei der Ähnlichkeitsgrad erhalten wird.

3. Ähnlichkeitsgrad-Berechnungssystem nach Anspruch 1, wobei
jede der Vergleichsdaten und der Solldaten ein T-dimensionaler Vektor ist, der jeder eine Komponente einer ganzen Zahl aufweist, wobei T eine ganze Zahl nicht kleiner als 1 ist;

der Vergleichs-Chiffretext ein T-dimensionaler Vektor ist, der eine Komponente eines Chiffretextes aufweist, die durch Umwandeln jeder Komponente der Vergleichsdaten durch die Verschlüsselungsumwandlung unter Verwendung des öffentlichen Schlüssels erhalten wird;

der Soll-Chiffretext ein T-dimensionaler Vektor ist, der eine Komponente eines Chiffretextes aufweist, die durch Umwandeln jeder Komponente der Solldaten durch die Verschlüsselungsumwandlung unter Verwendung des öffentlichen Schlüssels erhalten wird;

die Ähnlichkeitsgrad-Berechnungsvorrichtung ferner eine Öffentlicher-Schlüssel-Speichereinheit (302) umfasst:

die Öffentlicher-Schlüssel-Speichereinheit der Ähnlichkeitsgrad-Berechnungsvorrichtung speichert unter Verwendung der Speichereinrichtung der Ähnlichkeitsgrad-Berechnungsvorrichtung einen öffentlichen Schlüssel, der dem durch die Entschlüsselungsvorrichtung gespeicherten Geheimschlüssel entspricht;

die Temporärer-Schlüssel-Erzeugungseinheit der Ähnlichkeitsgrad-Berechnungsvorrichtung erzeugt unter Verwendung der Verarbeitungseinrichtung der Ähnlichkeitsgrad-Berechnungsvorrichtung zufällig eine ganze Zahl und setzt die erzeugte ganze Zahl auf den temporären Schlüssel; und

die Interim-Ähnlichkeitsgrad-Chiffretext-Berechnungseinheit der Ähnlichkeitsgrad-Berechnungsvorrichtung umfasst eine Zufallszahl-Klartext-Erzeugungseinheit (362), eine erste Chiffretext-Berechnungseinheit (363) und eine zweite Chiffretext-Berechnungseinheit (367);

die Zufallszahl-Klartext-Erzeugungseinheit der Ähnlichkeitsgrad-Berechnungsvorrichtung erzeugt unter Verwendung der Verarbeitungseinrichtung der Ähnlichkeitsgrad-Berechnungsvorrichtung zufällig einen T-dimensionalen Vektor, der eine Komponente einer ganzen Zahl aufweist, und setzt den erzeugten T-dimensionalen Vektor auf einen Zufallszahl-Klartext;

die erste Chiffretext-Berechnungseinheit der Ähnlichkeitsgrad-Berechnungsvorrichtung berechnet unter Verwendung der Verarbeitungseinrichtung der Ähnlichkeitsgrad-Berechnungsvorrichtung unter Verwendung der arithmetischen Operation für den Chiffretext einen ersten Interim-Ähnlichkeitsgrad-Chiffretext auf Grundlage des durch die Vergleichs-Chiffretext-Speichereinheit der Ähnlichkeitsgrad-Berechnungsvorrichtung gespeicherten Vergleichs-Chiffretextes, des durch die Soll-Chiffretext-Erfassungseinheit der Ähnlichkeitsgrad-Berechnungsvorrichtung erfassten Soll-Chiffretextes und des durch die Zufallszahl-Klartext-Erzeugungseinheit der Ähnlichkeitsgrad-Berechnungsvorrichtung erzeugten Zufallszahl-Klartextes, wobei der erste Interim-Ähnlichkeitsgrad-Chiffretext ein T-dimensionaler Vektor ist, der eine Komponente eines Chiffretextes aufweist, die durch Umwandeln einer Summe einer Differenz zwischen jeder Komponente der Vergleichsdaten und der entsprechenden Komponente der Solldaten und der entsprechenden Komponente des Zufallszahl-Klartextes durch die Verschlüsselungsumwandlung unter Verwendung des öffentlichen Schlüssels erhalten wird;

die zweite Chiffretext-Berechnungseinheit der Ähnlichkeitsgrad-Berechnungsvorrichtung berechnet unter Verwendung der Verarbeitungseinrichtung der Ähnlichkeitsgrad-Berechnungsvorrichtung unter Verwendung der arithmetischen Operation für den Chiffretext einen zweiten Interim-Ähnlichkeitsgrad-Chiffretext auf Grundlage des durch die Vergleichs-Chiffretext-Speichereinheit der Ähnlichkeitsgrad-Berechnungsvorrichtung gespeicherten Vergleichs-Chiffretextes, des durch die Soll-Chiffretext-Erfassungseinheit der Ähnlichkeitsgrad-Berechnungsvorrichtung erfassten Soll-Chiffretextes, des durch die Temporärer-Schlüssel-Erzeugungseinheit der Ähnlichkeitsgrad-Berechnungsvorrichtung erzeugten temporären Schlüssels und des durch die Zufallszahl-Klartext-Erzeugungseinheit der Ähnlichkeitsgrad-Berechnungsvorrichtung erzeugten Zufallszahl-Klartextes, wobei der zweite Interim-Ähnlichkeitsgrad-Chiffretext ein Chiffretext ist, der durch Umwandeln einer Summe eines Korrekturwertes und des temporären Schlüssels durch die Verschlüsselungsumwandlung unter Verwendung des öffentlichen Schlüssels erhalten wird, wobei der Korrekturwert eine ganze Zahl ist, die durch Summieren für alle der Komponenten, Summen von Quadraten der jeweiligen Komponenten des Zufallszahl-Klartextes und Doppelprodukte der entsprechenden Komponenten des Zufallszahl-Klartextes und Differenzen zwischen den jeweiligen Komponenten der Vergleichsdaten und der entsprechenden Komponenten der Solldaten erhalten wird; und

die Interim-Ähnlichkeitsgrad-Chiffretext-Meldeeinheit meldet der Entschlüsselungsvorrichtung unter Verwendung der Verarbeitungseinrichtung der Ähnlichkeitsgrad-Berechnungsvorrichtung den ersten durch die erste Chiffretext-Berechnungseinheit der Ähnlichkeitsgrad-Berechnungsvorrichtung berechneten Interim-Ähnlichkeitsgrad-Chiffretext und den zweiten durch die zweite Chiffretext-Berechnungseinheit der Ähnlichkeitsgrad-Berechnungsvorrichtung berechneten Interim-Ähnlichkeitsgrad-Chiffretext.

4. Ähnlichkeitsgrad-Berechnungssystem nach Anspruch 1, wobei

jede der Vergleichsdaten und der Solldaten ein T-dimensionaler Vektor ist, der eine Komponente einer ganzen Zahl aufweist, wobei T eine ganze Zahl nicht kleiner als 1 ist;

der Vergleichs-Chiffretext ein T-dimensionaler Vektor ist, der eine Komponente eines Chiffretexts aufweist, die durch Umwandeln jeder Komponente der Vergleichsdaten durch die Verschlüsselungsumwandlung unter Verwendung des öffentlichen Schlüssels erhalten wird;

der Soll-Chiffretext ein T-dimensionaler Vektor ist, der eine Komponente eines Chiffretextes aufweist, die durch Umwandeln jeder Komponente der Solldaten durch die Verschlüsselungsumwandlung unter Verwendung des öffentlichen Schlüssels erhalten wird;

die Ähnlichkeitsgrad-Berechnungsvorrichtung ferner eine Öffentlicher-Schlüssel-Speichereinheit (302) umfasst;

die Öffentlicher-Schlüssel-Speichereinheit der Ähnlichkeitsgrad-Berechnungsvorrichtung unter Verwendung der Speichereinrichtung der Ähnlichkeitsgrad-Berechnungsvorrichtung den öffentlichen Schlüssel, der dem durch die Entschlüsselungsvorrichtung gespeicherten Geheimschlüssel entspricht, speichert;

die Temporärer-Schlüssel-Erzeugungseinheit der Ähnlichkeitsgrad-Berechnungsvorrichtung unter Verwendung der Verarbeitungseinrichtung der Ähnlichkeitsgrad-Berechnungsvorrichtung zufällig eine ganze Zahl erzeugt und die erzeugte ganze Zahl auf den temporären Schlüssel setzt;

die Interim-Ähnlichkeitsgrad-Chiffretext-Berechnungseinheit der Ähnlichkeitsgrad-Berechnungsvorrichtung eine erste Chiffretext-Berechnungseinheit (363) und eine zweite Chiffretext-Berechnungseinheit (367) umfasst;

die erste Chiffretext-Berechnungseinheit der Ähnlichkeitsgrad-Berechnungsvorrichtung unter Verwendung der Verarbeitungseinrichtung der Ähnlichkeitsgrad-Berechnungsvorrichtung einen ersten Interim-Ähnlichkeitsgrad-Chiffretext unter Verwendung der arithmetischen Operation für den Chiffretext auf Grundlage des durch die Vergleichs-Chiffretext-Speichereinheit der Ähnlichkeitsgrad-Berechnungsvorrichtung gespeicherten Vergleichs-Chiffretextes und des durch die Soll-Chiffretext-Erfassungseinheit der Ähnlichkeitsgrad-Berechnungsvorrichtung erfassten Soll-Chiffretextes berechnet, wobei der erste Interim-Ähnlichkeitsgrad-Chiffretext ein T-dimensionaler Vektor ist, der eine Komponente eines Chiffretextes aufweist, die durch Umwandeln einer Differenz zwischen jeder Komponente der Vergleichsdaten und der entsprechenden Komponente der Solldaten durch die Verschlüsselungsumwandlung unter Verwendung des öffentlichen Schlüssels erhalten wird;

die zweite Chiffretext-Berechnungseinheit der Ähnlichkeitsgrad-Berechnungsvorrichtung unter Verwendung der Verarbeitungseinrichtung der Ähnlichkeitsgrad-Berechnungsvorrichtung einen durch die Umwandlung des temporären Schlüssels durch die Verschlüsselungsumwandlung unter Verwendung des öffentlichen Schlüssels erhaltenen Chiffretext auf der Grundlage des durch die Öffentlicher-Schlüssel-Speichereinheit der Ähnlichkeitsgrad-Berechnungsvorrichtung gespeicherten Öffentlichen Schlüssels und des durch die Temporärer-Schlüssel-Erzeugungseinheit der Ähnlichkeitsgrad-Berechnungsvorrichtung erzeugten temporären Schlüssels auf einen zweiten Interim-Ähnlichkeitsgrad-Chiffretext setzt; und

die Interim-Ähnlichkeitsgrad-Chiffretext-Meldeeinheit unter Verwendung der Verarbeitungseinrichtung der Ähnlichkeitsgrad-Berechnungsvorrichtung den ersten durch die erste Chiffretext-Berechnungseinheit der Ähnlichkeitsgrad-Berechnungsvorrichtung berechneten Interim-Ähnlichkeitsgrad-Chiffretext und den zweiten durch die zweite Chiffretext-Berechnungseinheit der Ähnlichkeitsgrad-Berechnungsvorrichtung berechneten Interim-Ähnlichkeitsgrad-Chiffretext der Entschlüsselungsvorrichtung meldet.

5. Ähnlichkeitsgrad-Berechnungssystem nach Anspruch 4, wobei
die erste Chiffretext-Berechnungseinheit der Ähnlichkeitsgrad-Berechnungsvorrichtung unter Verwendung der Verarbeitungseinrichtung der Ähnlichkeitsgrad-Berechnungsvorrichtung als den ersten Interim-Ähnlichkeitsgrad-Chiffretext den T-dimensionalen Vektor einsetzt, der Komponenten eines Chiffretextes aufweist, die zufällig aus Chiffretexten ausgewählt werden, die durch Umwandeln der Differenz jeder Komponente der Vergleichsdaten aus der entsprechenden Komponente der Solldaten durch die Verschlüsselungsumwandlung unter Verwendung des öffentlichen Schlüssels erhalten werden und aus Chiffretexten, die durch Umwandeln der Differenz jeder Komponente der Solldaten aus der entsprechenden Komponente der Vergleichsdaten durch Verschlüsselungsumwandlung unter Verwendung des öffentlichen Schlüssels erhalten werden, wobei der T-dimensionale Vektor eine Folge der zufällig neu angeordneten Komponenten aufweist.

6. Ähnlichkeitsgrad-Berechnungssystem nach einem der Ansprüche 3 bis 5, wobei
die Interim-Ähnlichkeitsgrad-Verschlüsselter-Text-Berechnungseinheit der Verschlüsselungsvorrichtung unter Verwendung der Verarbeitungseinrichtung der Verschlüsselungsvorrichtung eine Differenz oder eine Summe zwischen einer Summierung von Quadraten der ganzen Zahlen, die durch Entschlüsselung der T-Komponenten des ersten Interim-Ähnlichkeitsgrad-Chiffretextes erhalten werden, und der ganzen Zahl, die durch Entschlüsseln des zweiten Interim-Ähnlichkeitsgrad-Chiffretextes erhalten wird, berechnet, oder ein Element berechnet, das durch Kombinieren von z Teilen vorgegebener Elemente in einer vorgegebenen endlichen Gruppe durch eine gruppenarithmetische Operation auf der vorgegebenen endlichen Gruppe erhalten wird, und die berechnete Differenz, die berechnete Summe oder das berechnete Element auf den Interim-Ähnlichkeitsgrad-Verschlüsselten-Text setzt, wobei z die Differenz oder die Summe zwischen der Summierung von Quadraten der durch Entschlüsselung der T-Komponenten des ersten Interim-Ähnlichkeitsgrad-Chiffretextes erhaltenen ganzen Zahlen und der durch Entschlüsselung des zweiten Interim-Ähnlichkeitsgrad-Chiffretextes erhaltenen ganzen Zahl ist.

7. Ähnlichkeitsgrad-Berechnungssystem nach Anspruch 1, wobei
das Ähnlichkeitsgrad-Berechnungssystem ferner eine Verschlüsselungsvorrichtung (101, 111) umfasst;
die Entschlüsselungsvorrichtung eine Speichereinrichtung (914), die Daten speichert, eine Verarbeitungseinrichtung (911), die die Daten verarbeitet, eine Öffentlicher-Schlüssel-Speichereinheit (212), eine Solldaten-Erfassungseinheit (214), eine Temporärer-Schlüssel-Erfassungseinheit (211), eine Soll-Dualverschlüsselungstext-Berechnungseinheit (217) und eine Soll-Dualverschlüsselungstext-Meldeeinheit (221) umfasst;
die Öffentlicher-Schlüssel-Speichereinheit der Ähnlichkeitsgrad-Berechnungsvorrichtung unter Verwendung der Speichereinrichtung der Verschlüsselungsvorrichtung den öffentlichen Schlüssel, der dem durch die Entschlüsselungsvorrichtung gespeicherten Geheimschlüssel entspricht, speichert;

die Solldaten-Erfassungseinheit der Entschlüsselungsvorrichtung unter Verwendung der Verarbeitungseinrichtung der Entschlüsselungsvorrichtung die Solldaten erfasst;

die Temporärer-Schlüssel-Erfassungseinheit der Entschlüsselungsvorrichtung unter Verwendung der Verarbeitungseinrichtung der Entschlüsselungsvorrichtung einen von der Ähnlichkeitsgrad-Berechnungsvorrichtung gemeldeten temporären öffentlichen Schlüssel erfasst;

die Soll-Dualverschlüsselungstext-Berechnungseinheit der Verschlüsselungsvorrichtung unter Verwendung der Verarbeitungseinrichtung der Verschlüsselungsvorrichtung die Solldaten durch die zweite Verschlüsselungsumwandlung unter Verwendung des öffentlichen Schlüssels und des temporären öffentlichen Schlüssels umwandelt, wodurch auf der Grundlage des durch die Öffentlicher-Schlüssel-Speichereinheit der Verschlüsselungsvorrichtung gespeicherten öffentlichen Schlüssels, der durch die Solldaten-Erfassungseinheit der Verschlüsselungsvorrichtung erfassten Solldaten und des durch die Temporärer-Öffentlicher-Schlüssel-Erfassungseinheit der Verschlüsselungsvorrichtung erfassten temporären öffentlichen Schlüssels ein Soll-Dualverschlüsselungstext berechnet wird; und

die Soll-Dualverschlüsselungstext-Meldeeinheit der Verschlüsselungsvorrichtung unter Verwendung der Verarbeitungseinrichtung der Verschlüsselungsvorrichtung den durch die Soll-Dualverschlüsselungstext-Berechnungseinheit der Verschlüsselungsvorrichtung berechneten Soll-Dualverschlüsselungstext an die Ähnlichkeitsgrad-Berechnungsvorrichtung meldet;

die Ähnlichkeitsgrad-Berechnungsvorrichtung ferner eine Temporärer-Geheimschlüssel-Erzeugungseinheit (303, 304), eine Temporärer-Öffentlicher-Schlüssel-Meldeeinheit (311) und eine Soll-Dualverschlüsselungstext-Erfassungseinheit (331) umfasst;

die Temporärer-Geheimschlüssel-Erzeugungseinheit der Ähnlichkeitsgrad-Berechnungsvorrichtung unter Verwendung der Verarbeitungseinrichtung der Ähnlichkeitsgrad-Berechnungsvorrichtung einen temporären Geheimschlüssel und einen temporären öffentlichen Schlüssel, der dem temporären Geheimschlüssel entspricht, erzeugt;

die Temporärer-Öffentlicher-Schlüssel-Meldeeinheit der Ähnlichkeitsgrad-Berechnungsvorrichtung unter Verwendung der Verarbeitungseinrichtung der Ähnlichkeitsgrad-Berechnungsvorrichtung der Verschlüsselungsvorrichtung den durch die Temporärer-Geheimschlüssel-Erzeugungseinheit der Ähnlichkeitsgrad-Berechnungsvorrichtung erzeugten temporären öffentlichen Schlüssel meldet;

die Soll-Dualverschlüsselungstext-Erfassungseinheit der Ähnlichkeitsgrad-Berechnungsvorrichtung unter Verwendung der Verarbeitungseinrichtung der Ähnlichkeitsgrad-Berechnungsvorrichtung den von der Verschlüsselungsvorrichtung gemeldeten Soll-Dualverschlüsselungstext erfasst;

die Soll-Chiffretext-Erfassungseinheit der Ähnlichkeitsgrad-Berechnungsvorrichtung unter Verwendung der Verarbeitungseinrichtung der Ähnlichkeitsgrad-Berechnungsvorrichtung den Soll-Dualverschlüsselungstext durch zweite Verschlüsselungsumwandlung unter Verwendung des temporären Geheimschlüssels auf Grundlage des durch die Temporärer-Geheimschlüssel-Erzeugungseinheit der Ähnlichkeitsgrad-Berechnungsvorrichtung erzeugten temporären Geheimschlüssels und des durch die Soll-Dualverschlüsselungstext-Erfassungseinheit der Ähnlichkeitsgrad-Berechnungsvorrichtung erfassten Soll-Dualverschlüsselungstextes umwandelt, wodurch der durch Umwandeln der Solldaten durch die Verschlüsselungsumwandlung unter Verwendung des öffentlichen Schlüssels erhaltene Soll-Chiffretext berechnet wird.

8. Ähnlichkeitsgrad-Berechnungssystem nach Anspruch 7, wobei

die Verschlüsselungsumwandlung eine Umwandlung zum Umwandeln einer ganzen Zahl in einen Chiffretext ist, eine arithmetische Operation zum Kombinieren und Umwandeln einer Vielzahl von Chiffretexten in einen anderen Chiffretext für den Chiffretext berechnet werden kann, und ein Chiffretext, der durch Kombinieren eines Chiffretextes erhalten wird, der sich aus der Umwandlung einer beliebigen ersten ganzen Zahl ergibt, und eines Chiffretextes, der sich aus der Umwandlung einer beliebigen zweiten ganzen Zahl durch die arithmetische Operation für den Chiffretext ergibt, ein Chiffretext ist, der sich aus der Umwandlung einer Summe der ersten ganzen Zahl und der zweiten ganzen Zahl ergibt; und

die Solldaten ein T-dimensionaler Vektor sind, der Komponenten ganzer Zahlen aufweist, wobei T eine ganze Zahl nicht kleiner als 1 ist;

die Ähnlichkeitsgrad-Berechnungsvorrichtung ferner eine Öffentlicher-Schlüssel-Speichereinheit (302) umfasst;

die Öffentlicher-Schlüssel-Speichereinheit der Ähnlichkeitsgrad-Berechnungsvorrichtung unter Verwendung der Speichereinrichtung der Ähnlichkeitsgrad-Berechnungsvorrichtung den öffentlichen Schlüssel, der dem durch die Entschlüsselungsvorrichtung gespeicherten Geheimschlüssel entspricht, speichert;

die Temporärer-Öffentlicher-Schlüssel-Erzeugungseinheit der Ähnlichkeitsgrad-Berechnungsvorrichtung unter Verwendung der Verarbeitungseinrichtung der Ähnlichkeitsgrad-Berechnungsvorrichtung zufällig einen T-dimensionalen Vektor erzeugt, der eine Komponente einer ganzen Zahl aufweist, und den erzeugten T-dimensionalen Vektor auf den temporären Geheimschlüssel setzt, und einen T-dimensionalen Vektor berechnet, der eine Komponente eines durch Umwandlung jeder Komponente des temporären Geheimschlüssels durch die Verschlüsselungsumwandlung unter Verwendung des öffentlichen Schlüssels erhaltenen Chiffretexts aufweist, auf Grundlage des durch die Öffentlicher-Schlüssel-Speichereinrichtung der Ähnlichkeitsgrad-Berechnungsvorrichtung gespeicherten öffentlichen Schlüssels, und den berechneten T-dimensionalen Vektor auf den temporären öffentlichen Schlüssel setzt;

die Soll-Dualverschlüsselungstext-Berechnungseinheit der Verschlüsselungsvorrichtung unter Verwendung der Verarbeitungseinrichtung der Verschlüsselungsvorrichtung zufällig einen T-dimensionalen Vektor erzeugt, der eine Komponente eines Chiffretextes aufweist, die durch Transformieren von 0 durch die Verschlüsselungsumwandlung unter Verwendung des öffentlichen Schlüssels auf Grundlage des durch die Öffentlicher-Schlüssel-Speichereinheit der Verschlüsselungsvorrichtung gespeicherten öffentlichen Schlüssels erhalten wird, und den erzeugten T-dimensionalen Vektor auf einen Null-Chiffretext setzt, und einen T-dimensionalen Vektor berechnet, der eine Komponente eines Chiffretexts aufweist, die durch Kombinieren von $b'_i$ Teilen jeder Komponente des temporären öffentlichen Schlüssels erhalten wird, wobei $b'_i$ die ganze Zahl ist, die die entsprechende Komponente der Solldaten und die entsprechende Komponente des Null-Chiffretextes durch die arithmetische Operation für den Chiffretext auf Grundlage der durch die Solldaten-Erfassungseinheit der Verschlüsselungsvorrichtung erfassten Solldaten, des durch die Temporärer-Öffentlicher-Schlüssel-Erfassungseinheit der Verschlüsselungsvorrichtung erfassten temporären, öffentlichen Schlüssels und des erzeugten Null-Chiffretextes anzeigt, und den berechneten T-dimensionalen Vektor auf den Soll-Dualverschlüsselungstext setzt;

die Soll-Chiffretext-Erfassungseinheit der Ähnlichkeitsgrad-Berechnungsvorrichtung eine Temporärer-Entschlüsselungsschlüssel-Berechnungseinheit (351) und eine Soll-Chiffretext-Berechnungseinheit (352) umfasst;

die Temporärer-Entschlüsselungsschlüssel-Berechnungseinheit der Ähnlichkeitsgrad-Berechnungsvorrichtung unter Verwendung der Verarbeitungseinrichtung der Ähnlichkeitsgrad-Berechnungsvorrichtung einen T-dimensionalen Vektor berechnet, der eine Komponente einer inversen Zahl jeder Komponente des temporären Geheimschlüssels auf Grundlage des durch die Temporärer-Geheimschlüssel-Erzeugungseinheit der Ähnlichkeitsgrad-Berechnungsvorrichtung erzeugten temporären Geheimschlüssels aufweist, und den berechneten T-dimensionalen Vektor auf den temporären Entschlüsselungsschlüssel setzt;

die Soll-Chiffretext-Berechnungseinheit der Ähnlichkeitsgrad-Berechnungsvorrichtung unter Verwendung der Verarbeitungseinrichtung der Ähnlichkeitsgrad-Berechnungsvorrichtung einen T-dimensionalen Vektor berechnet, der eine Komponente eines Chiffretexts aufweist, die durch Kombinieren von $R_i^{-1}$ Teilen jeder Komponente des Soll-Dualverschlüsselungstextes erhalten wird, wobei $R_i^{-1}$ die inverse Zahl ist, die die entsprechende Komponente des temporären Entschlüsselungsschlüssels auf Grundlage des durch die Soll-Dualverschlüsselungstext-Erfassungseinheit der Ähnlichkeitsgrad-Berechnungsvorrichtung erfassten Soll-Dualverschlüsselungstextes und des durch die Temporärer-Entschlüsselungsschlüssel-Berechnungseinheit der Ähnlichkeitsgrad-Berechnungsvorrichtung berechneten temporären Entschlüsselungsschlüssels anzeigt, und den berechneten T-dimensionalen Vektor auf den Soll-Chiffretext setzt.

9. Ähnlichkeitsgrad-Berechnungssystem nach Anspruch 1, wobei
die Interim-Ähnlichkeitsgrad-Verschlüsselter-Text-Berechnungseinheit der Verschlüsselungsvorrichtung unter Verwendung der Verarbeitungseinrichtung der Verschlüsselungsvorrichtung eine ganze Zahl berechnet, die durch Entschlüsseln des Interim-Ähnlichkeitsgrad-Chiffretextes erhalten wird, oder ein Element durch Kombinieren von z Teilen vorgegebener Elemente berechnet, wobei z die ganze Zahl ist, die durch Entschlüsseln des Interim-Ähnlichkeitsgrad-Chiffretextes in einer vorgegebenen begrenzten Gruppe durch eine gruppenarithmetische Operation an der vorgegebenen begrenzten Gruppe auf Grundlage des durch die Interim-Ähnlichkeitsgrad-Chiffretext-Erfassungseinheit der Entschlüsselungsvorrichtung erfassten Interim-Ähnlichkeitsgrad-Chiffretextes erhalten wird, und die berechnete ganze Zahl oder das berechnete Element auf den Interim-Ähnlichkeitsgrad-Entschlüsselten-Text setzt.

10. Ähnlichkeitsgrad-Berechnungssystem nach einem der Ansprüche 1 bis 5, 7 und 8, wobei
der Interim-Ähnlichkeitsgrad-Entschlüsselte-Text eine ganze Zahl ist;
die Temporärer-Schlüssel-Erzeugungseinheit der Ähnlichkeitsgrad-Berechnungsvorrichtung unter Verwendung der Verarbeitungseinrichtung der Ähnlichkeitsgrad-Berechnungsvorrichtung zufällig eine ganze Zahl erzeugt und die erzeugte ganze Zahl auf den temporären Schlüssel setzt; und
die Ähnlichkeitsgrad-Berechnungseinheit der Ähnlichkeitsgrad-Berechnungsvorrichtung unter Verwendung der Verarbeitungseinrichtung der Ähnlichkeitsgrad-Berechnungsvorrichtung eine Summe oder eine Differenz zwischen dem temporären Schlüssel und dem Interim-Ähnlichkeitsgrad-Entschlüsselten-Text auf der Grundlage des durch die Temporärer-Schlüssel-Erzeugungseinheit der Ähnlichkeitsgrad-Berechnungsvorrichtung erzeugten temporären Schlüssels und des durch die Interim-Ähnlichkeitsgrad-Entschlüsselter-Text-Erfassungseinheit der Ähnlichkeitsgrad-Berechnungsvorrichtung erfassten Interim-Ähnlichkeitsgrad-Entschlüsselten-Textes berechnet und die berechnete Summe oder die berechnete Differenz auf den Ähnlichkeitsgrad setzt.

11. Ähnlichkeitsgrad-Berechnungssystem nach einem der Ansprüche 1 bis 5, 7 und 8, wobei
der Interim-Ähnlichkeitsgrad-Entschlüsselte-Text ein Element in einer vorgegebenen begrenzten Gruppe ist;
die Temporärer-Schlüssel-Erzeugungseinheit der Ähnlichkeitsgrad-Berechnungsvorrichtung unter Verwendung der Verarbeitungseinrichtung der Ähnlichkeitsgrad-Berechnungsvorrichtung zufällig eine ganze Zahl erzeugt und die erzeugte ganze Zahl auf den temporären Schlüssel setzt; und
die Ähnlichkeitsgrad-Berechnungseinheit der Ähnlichkeitsgrad-Berechnungsvorrichtung eine Ähnlichkeitsgrad-Entschlüsselter-Text-Berechnungseinheit (372) und eine Diskreter-Logarithmus-Berechnungseinheit (373) umfasst;
die Ähnlichkeitsgrad-Entschlüsselter-Text-Berechnungseinheit der Ähnlichkeitsgrad-Berechnungsvorrichtung unter Verwendung der Verarbeitungseinrichtung der Ähnlichkeitsgrad-Berechnungsvorrichtung durch Kombinieren des Interim-Ähnlichkeitsgrad-Entschlüsselten-Texts mit u Teilen vorgegebener Elemente ein Element berechnet, wobei u die ganze Zahl des temporären Schlüssels ist, in der vorgegebenen endlichen Gruppe durch eine gruppenarithmetische Operation auf der vorgegebenen endlichen Gruppe, auf Grundlage des durch die Temporärer-Schlüssel-Erzeugungseinheit der Ähnlichkeitsgrad-Berechnungsvorrichtung erzeugten temporären Schlüssels und des durch die Interim-Ähnlichkeitsgrad-Entschlüsselter-Text-Erfassungseinheit der Ähnlichkeitsgrad-Berechnungsvorrichtung erfassten Interim-Ähnlichkeitsgrad-Entschlüsselten-Textes ist, und das berechnete Element auf einen Ähnlichkeitsgrad-Entschlüsselten-Text setzt; und
die Diskreter-Logarithmus-Berechnungseinheit der Ähnlichkeitsgrad-Berechnungsvorrichtung unter Verwendung der Verarbeitungseinrichtung der Ähnlichkeitsgrad-Berechnungsvorrichtung eine Anzahl der vorgegebenen Elemente berechnet, die kombiniert werden sollen, um gleich dem Ähnlichkeitsgrad-Entschlüsselten-Text zu sein, durch die gruppenarithmetische Operation in der vorgegebenen endlichen Gruppe, auf Grundlage des durch die Ähnlichkeitsgrad-Entschlüsselter-Text-Berechnungseinheit der Ähnlichkeitsgrad-Berechnungsvorrichtung berechneten Ähnlichkeitsgrad-Entschlüsselten-Textes, und die Anzahl der vorgegebenen Elemente auf den Ähnlichkeitsgrad setzt.

12. Ähnlichkeitsgrad-Berechnungssystem nach Anspruch 11, wobei
die Diskreter-Logarithmus-Berechnungseinheit der Ähnlichkeitsgrad-Berechnungsvorrichtung unter Verwendung der Verarbeitungseinrichtung der Ähnlichkeitsgrad-Berechnungsvorrichtung den Ähnlichkeitsgrad berechnet, wenn der Ähnlichkeitsgrad eine ganze Zahl innerhalb eines vorgegebenen Bereichs ist, und bestimmt, dass der Ähnlichkeitsgrad außerhalb des vorgegebenen Bereichs liegt, wenn der Ähnlichkeitsgrad außerhalb des vorgegebenen Bereichs liegt.

13. Ähnlichkeitsgrad-Berechnungssystem nach einem der Ansprüche 1 bis 5, 7 und 8, wobei
das Ähnlichkeitsgrad-Berechnungssystem ferner eine Registriervorrichtung (104) umfasst;
die Registriervorrichtung eine Speichereinrichtung (914), die Daten speichert, eine Verarbeitungseinrichtung (911), die die Daten verarbeitet, eine Öffentlicher-Schlüssel-Speichereinheit (202), eine Vergleichsdaten-Erfassungseinheit (204), eine Vergleichs-Chiffretext-Berechnungseinheit (206) und eine Vergleichs-Chiffretext-Meldeeinheit (201) umfasst;
die Öffentlicher-Schlüssel-Speichereinheit der Registriervorrichtung unter Verwendung der Speichereinrichtung der Registriervorrichtung den öffentlichen Schlüssel, der dem durch die Entschlüsselungsvorrichtung gespeicherten Geheimschlüssel entspricht, speichert;
die Vergleichsdaten-Erfassungseinheit der Registriervorrichtung unter Verwendung der Verarbeitungseinrichtung der Registriervorrichtung die Vergleichsdaten erfasst;
die Vergleichs-Chiffretext-Berechnungseinheit der Registriervorrichtung unter Verwendung der Verarbeitungseinrichtung der Registriervorrichtung die Vergleichsdaten durch die Verschlüsselungsumwandlung unter Verwendung des öffentlichen Schlüssels umwandelt, um den Vergleichs-Chiffretext auf der Grundlage des durch die Öffentlicher-Schlüssel-Speichereinheit der Registriervorrichtung gespeicherten öffentlichen Schlüssels und der durch die Vergleichsdaten-Erfassungseinheit der Registriervorrichtung erfassten Vergleichsdaten zu berechnen;
die Vergleichs-Chiffretext-Meldeeinheit der Registriervorrichtung unter Verwendung der Verarbeitungseinrichtung der Registriervorrichtung den durch die Vergleichs-Chiffretext-Berechnungseinheit der Registriervorrichtung berechneten Vergleichs-Chiffretext an die Ähnlichkeitsgrad-Berechnungsvorrichtung meldet;

die Ähnlichkeitsgrad-Berechnungsvorrichtung ferner eine Vergleichs-Chiffretext-Erfassungseinheit (301) umfasst;

die Vergleichs-Chiffretext-Erfassungseinheit der Ähnlichkeitsgrad-Berechnungsvorrichtung unter Verwendung der Verarbeitungseinrichtung der Ähnlichkeitsgrad-Berechnungsvorrichtung den von der Registriervorrichtung gemeldeten Vergleichs-Chiffretext erfasst;

die Vergleichs-Chiffretext-Speichereinheit der Ähnlichkeitsgrad-Berechnungsvorrichtung unter Verwendung der Speichereinrichtung der Ähnlichkeitsgrad-Berechnungsvorrichtung den von der Vergleichs-Chiffretext-Erfassungseinheit erfassten Vergleichs-Chiffretext speichert.

14. Ähnlichkeitsgrad-Berechnungsverfahren des Berechnens eines Ähnlichkeitsgrades zwischen Vergleichsdaten und Solldaten durch ein Ähnlichkeitsgrad-Berechnungssystem (100, 110) mit einer Ähnlichkeitsgrad-Berechnungsvorrichtung (102, 112) und einer Entschlüsselungsvorrichtung (103), wobei jede der Ähnlichkeitsgrad-Berechnungsvorrichtung und der Entschlüsselungsvorrichtung eine Speichereinrichtung (914), die Daten speichert, und eine Verarbeitungseinrichtung (911), die Daten verarbeitet, beinhaltet, wobei das Ähnlichkeitsgrad-Berechnungsverfahren umfasst:

Speichern, durch die Speichereinrichtung der Entschlüsselungsvorrichtung, eines Geheimschlüssels;

Speichern, durch die Speichereinrichtung der Ähnlichkeitsgrad-Berechnungsvorrichtung, eines Vergleichs-Chiffretextes, der durch Umwandeln der Vergleichsdaten durch Verschlüsselungsumwandlung unter Verwendung eines öffentlichen Schlüssels, der dem durch die Entschlüsselungsvorrichtung gespeicherten Geheimschlüssel entspricht, erhalten wird;

Erfassen, durch die Verarbeitungseinrichtung der Ähnlichkeitsgrad-Berechnungsvorrichtung, eines Soll-Chiffretextes, der durch Umwandeln der Solldaten durch die Verschlüsselungsumwandlung unter Verwendung des öffentlichen Schlüssels erhalten wird;

Erzeugen, durch die Verarbeitungseinrichtung der Ähnlichkeitsgrad-Berechnungsvorrichtung, eines temporären Schlüssels;

Durchführen, durch die Verarbeitungseinrichtung der Ähnlichkeitsgrad-Berechnungsvorrichtung, von Berechnung zum Berechnen des Ähnlichkeitsgrades in der ersten Stufe mit dem Vergleichs-Chiffretext und dem verschlüsselt gehaltenen Soll-Chiffretext, auf Grundlage des durch die Speichereinrichtung der Ähnlichkeitsgrad-Berechnungsvorrichtung gespeicherten Vergleichs-Chiffretextes, des durch die Verarbeitungseinrichtung der Ähnlichkeitsgrad-Berechnungsvorrichtung erfassten Soll-Chiffretextes und des durch die Verarbeitungseinrichtung der Ähnlichkeitsgrad-Berechnungsvorrichtung erzeugten temporären Schlüssels, wobei ein Interim-Ähnlichkeitsgrad-Chiffretext berechnet wird, der durch Verschlüsseln eines Ergebnisses der Berechnung mit dem temporären Schlüssel erhalten wird;

Melden, durch die Verarbeitungseinrichtung der Ähnlichkeitsgrad-Berechnungsvorrichtung, des durch die Verarbeitungseinrichtung der Ähnlichkeitsgrad-Chiffretext-Berechnungsvorrichtung berechneten Interim-Ähnlichkeitsgrad-Chiffretextes an die Entschlüsselungsvorrichtung;

Erfassen, durch die Verarbeitungseinrichtung der Entschlüsselungsvorrichtung, des von der Ähnlichkeitsgrad-Berechnungsvorrichtung gemeldeten Interim-Ähnlichkeitsgrad-Chiffretextes;

Entschlüsseln, durch die Verarbeitungseinrichtung der Entschlüsselungsvorrichtung, des Interim-Ähnlichkeitsgrad-Chiffretextes mit dem Geheimschlüssel, auf der Grundlage des durch die Speichereinrichtung der Entschlüsselungsvorrichtung gespeicherten Geheimschlüssels und des durch die Verarbeitungseinrichtung der Entschlüsselungsvorrichtung erfassten Interim-Ähnlichkeitsgrad-Chiffretextes, Durchführen von Berechnung zum Berechnen des Ähnlichkeitsgrades in einer zweiten Stufe mit einem Ergebnis der mit dem temporären Schlüssel verschlüsselt gehaltenen Entschlüsselung, wobei der Interim-Ähnlichkeitsgrad-Entschlüsselte-Text berechnet wird;

Melden, durch die Verarbeitungseinrichtung der Entschlüsselungsvorrichtung, des durch die Verarbeitungseinrichtung der Entschlüsselungsvorrichtung berechneten Interim-Ähnlichkeitsgrad-Entschlüsselten-Textes an die Ähnlichkeitsgrad-Berechnungsvorrichtung;

Erfassen, durch die Verarbeitungseinrichtung der Ähnlichkeitsgrad-Berechnungsvorrichtung, des von der Entschlüsselungsvorrichtung gemeldeten Interim-Ähnlichkeitsgrad-Entschlüsselten-Textes;

Entschlüsseln, durch die Verarbeitungseinrichtung der Ähnlichkeitsgrad-Berechnungsvorrichtung, des Interim-Ähnlichkeitsgrad-Entschlüsselten-Textes mit dem temporären Schlüssel, auf der Grundlage des durch die Verarbeitungseinrichtung der Ähnlichkeitsgrad-Berechnungsvorrichtung erzeugten temporären Schlüssels und des durch die Verarbeitungseinrichtung der Ähnlichkeitsgrad-Berechnungsvorrichtung erfassten Interim-Ähnlichkeitsgrad-Entschlüsselten-Textes, wobei der Ähnlichkeitsgrades zwischen den Vergleichsdaten und den Solldaten berechnet wird;

wobei die Verschlüsselungsumwandlung eine Umwandlung zum Umwandeln einer ganzen Zahl in einen Chiffretext ist, eine arithmetische Operation zum Kombinieren und Umwandeln einer Vielzahl von Chiffretexten in einen anderen Chiffretext für den Chiffretext berechnet werden kann, und ein Chiffretext, der durch Kombinieren eines Chiffretextes erhalten wird, der sich aus der Umwandlung einer beliebigen ersten ganzen Zahl ergibt, und eines Chiffretextes, der sich aus der Umwandlung einer beliebigen zweiten ganzen Zahl durch die arithmetische Operation für den Chiffretext ergibt, ein Chiffretext ist, der sich aus der Umwandlung einer Summe der ersten ganzen Zahl und der zweiten ganzen Zahl ergibt; und

wobei

jede der Vergleichsdaten und der Solldaten ein T-dimensionaler Vektor ist, der jeder eine Komponente einer ganzen Zahl aufweist, wobei T eine ganze Zahl nicht kleiner als 1 ist;

der Vergleichs-Chiffretext ein T-dimensionaler Vektor ist, der eine Komponente eines Chiffretextes aufweist, die durch Umwandeln jeder Komponente der Vergleichsdaten durch die Verschlüsselungsumwandlung unter Verwendung des öffentlichen Schlüssels erhalten wird;

der Soll-Chiffretext ein T-dimensionaler Vektor ist, der eine Komponente eines Chiffretextes aufweist, die durch Umwandeln jeder Komponente der Solldaten durch die Verschlüsselungsumwandlung unter Verwendung des öffentlichen Schlüssels erhalten wird;

die Ähnlichkeitsgrad-Berechnungsvorrichtung ferner eine Öffentlicher-Schlüssel-Speichereinheit (302) umfasst;

Speichern, durch die Öffentlicher-Schlüssel-Speichereinheit der Ähnlichkeitsgrad-Berechnungsvorrichtung, des öffentlichen Schlüssels, der dem durch die Entschlüsselungsvorrichtung gespeicherten Geheimschlüssel entspricht;

zufällig Erzeugen, durch die Temporärer-Schlüssel-Erzeugungseinheit der Ähnlichkeitsgrad-Berechnungsvorrichtung, einer ganzen Zahl und Setzen der ganzen Zahl auf den temporären Schlüssel; und

Berechnen, durch die Interim-Ähnlichkeitsgrad-Chiffretext-Berechnungseinheit der Ähnlichkeitsgrad-Berechnungsvorrichtung, des Interim-Ähnlichkeitsgrad-Chiffretextes unter Verwendung der arithmetischen Operation für den Chiffretext, auf der Grundlage des durch die Vergleichs-Chiffretext-Speichereinheit der Ähnlichkeitsgrad-Berechnungsvorrichtung gespeicherten Vergleichs-Chiffretextes und des durch die Soll-Chiffretext-Erfassungseinheit der Ähnlichkeitsgrad-Berechnungsvorrichtung erfassten Soll-Chiffretextes und des durch die Temporärer-Schlüssel-Erzeugungseinheit der Ähnlichkeitsgrad-Berechnungsvorrichtung erzeugten temporären Schlüssels, wobei der Interim-Ähnlichkeitsgrad-Chiffretext ein Chiffretext ist, der durch Umwandeln einer Summe oder einer Differenz zwischen einem Summenwert und dem temporären Schlüssel durch die Verschlüsselungsumwandlung unter Verwendung des öffentlichen Schlüssels erhalten wird, und der Summenwert eine ganze Zahl ist, die durch Summieren eines Quadrats einer Differenz zwischen jeder Komponente der Vergleichsdaten und der entsprechenden Komponente der Solldaten oder durch Summieren eines Produkts jeder Komponente der Vergleichsdaten und der entsprechenden Komponente der Solldaten für alle Komponenten erhalten wird.

**Revendications**

1. Système de calcul de degré de similarité (100, 110) incluant un appareil de calcul de degré de similarité (102, 112) qui calcule un degré de similarité entre des données de comparaison et des données cibles, et un appareil de déchiffrement (103), dans lequel l'appareil de calcul de degré de similarité comprend un dispositif de stockage (914) qui stocke des données, un dispositif de traitement (911) qui traite les données, une unité de stockage de cryptogramme de comparaison (312), une unité d'acquisition de cryptogramme cible (305, 325), une unité de génération de clé temporaire (303), une unité de calcul de cryptogramme de degré de similarité provisoire (314), une unité de notification de cryptogramme de degré de similarité provisoire (321), une unité d'acquisition de texte déchiffré de degré de similarité provisoire (341), et une unité de calcul de degré de similarité (315) ;

l'appareil de déchiffrement inclut une unité de stockage (914) qui stocke des données, un dispositif de traitement (911) qui traite les données, une unité de stockage de clé secrète (413), une unité d'acquisition de cryptogramme de degré de similarité provisoire (402), une unité de calcul de texte déchiffré de degré de similarité provisoire (404), et une unité de notification de texte déchiffré de degré de similarité provisoire (412) ;

en utilisant le dispositif de stockage de l'appareil de déchiffrement, l'unité de stockage de clé secrète de l'appareil de déchiffrement stocke une clé secrète ;

en utilisant le dispositif de stockage de l'appareil de calcul de degré de similarité, l'unité de stockage de cryptogramme de comparaison de l'appareil de calcul de degré de similarité stocke un cryptogramme de comparaison obtenu en transformant les données de comparaison, au moyen d'une transformation par chiffrement, en utilisant une clé publique correspondant à la clé secrète stockée par l'appareil de déchiffrement (103) ;

en utilisant le dispositif de traitement de l'appareil de calcul de degré de similarité, l'unité d'acquisition de cryptogramme cible de l'appareil de calcul de degré de similarité acquiert un cryptogramme cible, obtenu en transformant les données cibles au moyen de la transformation par chiffrement au moyen de la clé publique ;

en utilisant le dispositif de traitement de l'appareil de calcul de degré de similarité, l'unité de génération de clé temporaire de l'appareil de calcul de degré de similarité génère une clé temporaire ;

en utilisant le dispositif de traitement de l'appareil de calcul de degré de similarité, sur la base du cryptogramme de comparaison stocké par l'unité de stockage de cryptogramme de comparaison, du cryptogramme cible acquis par l'unité d'acquisition de cryptogramme cible, et de la clé temporaire générée par l'unité de génération de clé temporaire, l'unité de calcul de cryptogramme de degré de similarité provisoire de l'appareil de calcul de degré de similarité met en oeuvre un calcul pour calculer le degré de similarité dans le cadre d'une première étape avec le cryptogramme de comparaison et le cryptogramme cible maintenus chiffrés, et calcule un cryptogramme de degré de similarité provisoire en chiffrant un résultat du calcul avec la clé temporaire ;

en utilisant le dispositif de traitement de l'appareil de calcul de degré de similarité, l'unité de notification de cryptogramme de degré de similarité provisoire de l'appareil de calcul de degré de similarité notifie, à l'appareil de déchiffrement, le cryptogramme de degré de similarité provisoire calculé par l'unité de calcul de cryptogramme de degré de similarité provisoire ;

en utilisant le dispositif de traitement de l'appareil de déchiffrement, l'unité d'acquisition de cryptogramme de degré de similarité provisoire de l'appareil de déchiffrement acquiert le cryptogramme de degré de similarité provisoire notifié à partir de l'appareil de calcul de degré de similarité ;

en utilisant le dispositif de traitement de l'appareil de déchiffrement, l'unité de calcul de texte déchiffré de degré de similarité provisoire de l'appareil de déchiffrement déchiffre le cryptogramme de degré de similarité provisoire avec la clé secrète, sur la base de la clé secrète stockée par l'unité de stockage de clé secrète de l'appareil de déchiffrement, et du cryptogramme de degré de similarité provisoire acquis par l'unité d'acquisition de cryptogramme de degré de similarité provisoire de l'appareil de déchiffrement, et met en oeuvre un calcul pour calculer le degré de similarité dans le cadre d'une seconde étape avec un résultat du déchiffrement maintenu chiffré avec la clé temporaire, ce qui permet de calculer par conséquent le texte déchiffré de degré de similarité provisoire ; et

en utilisant le dispositif de traitement de l'appareil de déchiffrement, l'unité de notification de texte déchiffré de degré de similarité provisoire de l'appareil de déchiffrement notifie le texte déchiffré de degré de similarité provisoire calculé par l'unité de calcul de texte déchiffré de degré de similarité provisoire de l'appareil de déchiffrement à l'appareil de calcul de degré de similarité ;

en utilisant le dispositif de traitement de l'appareil de calcul de degré de similarité, l'unité d'acquisition de texte déchiffré de degré de similarité provisoire de l'appareil de calcul de degré de similarité acquiert le texte déchiffré de degré de similarité provisoire calculé et notifié par l'appareil de déchiffrement, sur la base du cryptogramme de degré de similarité provisoire notifié par l'unité de notification de cryptogramme de degré de similarité provisoire ; et

en utilisant le dispositif de traitement de l'appareil de calcul de degré de similarité, l'unité de calcul de degré de similarité de l'appareil de calcul de degré de similarité déchiffre le texte déchiffré de degré de similarité provisoire avec la clé temporaire, sur la base de la clé temporaire générée par l'unité de génération de clé temporaire et du texte déchiffré de degré de similarité provisoire, acquis par l'unité d'acquisition de texte déchiffré de degré de similarité provisoire, ce qui permet de calculer par conséquent le degré de similarité entre les données de comparaison et les données cibles ;

dans lequel la transformation par chiffrement est une transformation visant à transformer un nombre entier en un cryptogramme, dans lequel une opération arithmétique visant à combiner et transformer une pluralité de cryptogrammes en un cryptogramme différent peut être calculée pour le cryptogramme, et dans lequel un cryptogramme obtenu en combinant un cryptogramme résultant d'une transformation d'un premier nombre entier arbitraire et un cryptogramme résultant d'une transformation d'un second nombre entier arbitraire, par l'opération arithmétique pour le cryptogramme, correspond à un cryptogramme résultant d'une transformation d'une somme du premier nombre entier et du second nombre entier ; et

dans lequel

chacune des données de comparaison et des données cibles correspond à un vecteur à T dimensions présentant chaque composante d'un nombre entier, T étant un nombre entier non inférieur à 1 ;

le cryptogramme de comparaison est un vecteur à T dimensions présentant une composante d'un cryptogramme obtenu en transformant chaque composante des données de comparaison par le biais de la transformation par chiffrement au moyen de la clé publique ;

le cryptogramme cible est un vecteur à T dimensions présentant une composante d'un cryptogramme obtenu en transformant chaque composante des données cibles par le biais de la transformation par chiffrement au moyen de la clé publique ;

l'appareil de calcul de degré de similarité inclut en outre une unité de stockage de clé publique (302) ;

en utilisant le dispositif de stockage de l'appareil de calcul de degré de similarité, l'unité de stockage de clé publique de l'appareil de calcul de degré de similarité stocke la clé publique correspondant à la clé secrète stockée par l'appareil de déchiffrement ;

en utilisant le dispositif de traitement de l'appareil de calcul de degré de similarité, l'unité de génération de clé temporaire de l'appareil de calcul de degré de similarité génère de manière aléatoire un nombre entier, et définit le nombre entier généré sur la clé temporaire ; et

en utilisant le dispositif de traitement de l'appareil de calcul de degré de similarité, l'unité de calcul de cryptogramme de degré de similarité provisoire de l'appareil de calcul de degré de similarité calcule le cryptogramme de degré de similarité provisoire en utilisant l'opération arithmétique pour le cryptogramme, sur la base du cryptogramme de comparaison stocké par l'unité de stockage de cryptogramme de comparaison de l'appareil de calcul de degré de similarité, et du cryptogramme cible acquis par l'unité d'acquisition de cryptogramme cible de l'appareil de calcul de degré de similarité, et de la clé temporaire générée par l'unité de génération de clé temporaire de l'appareil de calcul de degré de similarité, dans lequel le cryptogramme de degré de similarité provisoire est un cryptogramme obtenu en transformant une somme ou une différence entre une valeur de sommation et la clé temporaire, par le biais de la transformation par chiffrement au moyen de la clé publique, et dans lequel la valeur de sommation est un nombre entier obtenu en sommant un carré d'une différence entre chaque composante des données de comparaison et la composante correspondante des données cibles, ou en sommant un produit de chaque composante des données de comparaison et la composante correspondante des données cibles, pour toutes les composantes.

**2.** Système de calcul de degré de similarité selon la revendication 1, dans lequel

chacune des données de comparaison et des données cibles correspond à un vecteur à T dimensions présentant des composantes de nombres entiers, T étant un nombre entier non inférieur à 1 ;

en utilisant le dispositif de traitement de l'appareil de calcul de degré de similarité, l'unité de calcul de cryptogramme de degré de similarité de l'appareil de calcul de degré de similarité calcule une différence ou un produit des composantes correspondantes des données de comparaison et des données cibles, avec le cryptogramme de comparaison et le cryptogramme cible maintenus chiffrés ;

en utilisant le dispositif de traitement de l'appareil de déchiffrement, l'unité de calcul de cryptogramme de degré de similarité provisoire de l'appareil de déchiffrement déchiffre le cryptogramme de degré de similarité provisoire avec la clé secrète, et calcule le degré de similarité, où le résultat du déchiffrement est maintenu chiffré avec la clé temporaire ; et

en utilisant le dispositif de traitement de l'appareil de calcul de degré de similarité, l'unité de calcul de degré de similarité de l'appareil de calcul de degré de similarité déchiffre le texte déchiffré de degré de similarité provisoire, ce qui permet d'obtenir par conséquent le degré de similarité.

**3.** Système de calcul de degré de similarité selon la revendication 1, dans lequel :

chacune des données de comparaison et des données cibles correspond à un vecteur à T dimensions présentant chaque composante d'un nombre entier, T étant un nombre entier non inférieur à 1 ;

le cryptogramme de comparaison est un vecteur à T dimensions présentant une composante d'un cryptogramme obtenu en transformant chaque composante des données de comparaison par le biais de la transformation par chiffrement au moyen de la clé publique ;

le cryptogramme cible est un vecteur à T dimensions présentant une composante d'un cryptogramme obtenu en transformant chaque composante des données cibles par le biais de la transformation par chiffrement au moyen de la clé publique ;

l'appareil de calcul de degré de similarité inclut en outre une unité de stockage de clé publique (302) ;

en utilisant le dispositif de stockage de l'appareil de calcul de degré de similarité, l'unité de stockage de clé publique de l'appareil de calcul de degré de similarité stocke une clé publique correspondant à la clé secrète stockée par l'appareil de déchiffrement ;

en utilisant le dispositif de traitement de l'appareil de calcul de degré de similarité, l'unité de génération de clé temporaire de l'appareil de calcul de degré de similarité génère de manière aléatoire un nombre entier, et définit le nombre entier généré sur la clé temporaire ;

l'unité de calcul de cryptogramme de degré de similarité provisoire de l'appareil de calcul de degré de similarité inclut une unité de génération de texte en clair de nombres aléatoires (362), une première unité de calcul de cryptogramme (363), et une seconde unité de calcul de cryptogramme (367) ;

en utilisant le dispositif de traitement de l'appareil de calcul de degré de similarité, l'unité de génération de texte en clair de nombres aléatoires de l'appareil de calcul de degré de similarité génère de manière aléatoire un vecteur à T dimensions présentant une composante d'un nombre entier, et définit le vecteur à T dimensions généré sur un texte en clair de nombres aléatoires ;

en utilisant le dispositif de traitement de l'appareil de calcul de degré de similarité, la première unité de calcul de cryptogramme de l'appareil de calcul de degré de similarité calcule un premier cryptogramme de degré de similarité provisoire en utilisant l'opération arithmétique pour le cryptogramme, sur la base du cryptogramme de comparaison stocké par l'unité de stockage de cryptogramme de comparaison de l'appareil de calcul de degré de similarité, du cryptogramme cible acquis par l'unité d'acquisition de cryptogramme cible de l'appareil de calcul de degré de similarité, et du texte en clair de nombres aléatoires généré par l'unité de génération de texte en clair de nombres aléatoires de l'appareil de calcul de degré de similarité, dans lequel le premier cryptogramme de degré de similarité provisoire est un vecteur à T dimensions présentant une composante d'un cryptogramme obtenu en transformant une somme d'une différence entre chaque composante des données de comparaison et la composante correspondante des données cibles et la composante correspondante du texte en clair de nombres aléatoires, par le biais de la transformation par chiffrement au moyen de la clé publique ;

en utilisant le dispositif de traitement de l'appareil de calcul de degré de similarité, la seconde unité de calcul de cryptogramme de l'appareil de calcul de degré de similarité calcule un second cryptogramme de degré de similarité provisoire en utilisant l'opération arithmétique pour le cryptogramme, sur la base du cryptogramme de comparaison stocké par l'unité de stockage de cryptogramme de comparaison de l'appareil de calcul de degré de similarité, du cryptogramme cible acquis par l'unité d'acquisition de cryptogramme cible de l'appareil de calcul de degré de similarité, de la clé temporaire générée par l'unité de génération de clé temporaire de l'appareil de calcul de degré de similarité, et du texte en clair de nombres aléatoires généré par l'unité de génération de texte en clair de nombres aléatoires de l'appareil de calcul de degré de similarité, dans lequel le second cryptogramme de degré de similarité provisoire est un cryptogramme obtenu en transformant une somme d'une valeur de correction et de la clé temporaire, par le biais de la transformation par chiffrement au moyen de la clé publique, dans lequel la valeur de correction est un nombre entier obtenu en sommant, pour toutes les composantes, des sommes de carrés des composantes respectives du texte en clair de nombres aléatoires et deux fois les produits des composantes correspondantes du texte en clair de nombres aléatoires et des différences entre les composantes respectives des données de comparaison et les composantes correspondantes des données cibles ; et

en utilisant le dispositif de traitement de l'appareil de calcul de degré de similarité, l'unité de notification de cryptogramme de degré de similarité provisoire de l'appareil de calcul de degré de similarité notifie, à l'appareil de déchiffrement, le premier cryptogramme de degré de similarité provisoire calculé par la première unité de calcul de cryptogramme de l'appareil de calcul de degré de similarité, ainsi que le second cryptogramme de degré de similarité provisoire calculé par la seconde unité de calcul de cryptogramme de l'appareil de calcul de degré de similarité.

**4.** Système de calcul de degré de similarité selon la revendication 1, dans lequel :

chacune des données de comparaison et des données cibles correspond à un vecteur à T dimensions présentant une composante d'un nombre entier, T étant un nombre entier non inférieur à 1 ;

le cryptogramme de comparaison est un vecteur à T dimensions présentant une composante d'un cryptogramme obtenu en transformant chaque composante des données de comparaison par le biais de la transformation par chiffrement au moyen de la clé publique ;

le cryptogramme cible est un vecteur à T dimensions présentant une composante d'un cryptogramme obtenu en transformant chaque composante des données cibles par le biais de la transformation par chiffrement au moyen de la clé publique ;

l'appareil de calcul de degré de similarité inclut en outre une unité de stockage de clé publique (302) ;

en utilisant le dispositif de stockage de l'appareil de calcul de degré de similarité, l'unité de stockage de clé publique de l'appareil de calcul de degré de similarité stocke la clé publique correspondant à la clé secrète stockée par l'appareil de déchiffrement ;

en utilisant le dispositif de traitement de l'appareil de calcul de degré de similarité, l'unité de génération de clé temporaire de l'appareil de calcul de degré de similarité génère de manière aléatoire un nombre entier, et définit le nombre entier généré sur la clé temporaire ;

l'unité de calcul de cryptogramme de degré de similarité provisoire de l'appareil de calcul de degré de similarité inclut une première unité de calcul de cryptogramme (363) et une seconde unité de calcul de cryptogramme (367) ;

en utilisant le dispositif de traitement de l'appareil de calcul de degré de similarité, la première unité de calcul de cryptogramme de l'appareil de calcul de degré de similarité calcule un premier cryptogramme de degré de similarité provisoire en utilisant l'opération arithmétique pour le cryptogramme, sur la base du cryptogramme de comparaison stocké par l'unité de stockage de cryptogramme de comparaison de l'appareil de calcul de degré de similarité et du cryptogramme cible acquis par l'unité d'acquisition de cryptogramme cible de l'appareil de calcul de degré de similarité, dans lequel le premier cryptogramme de degré de similarité provisoire est un vecteur à T dimensions présentant une composante d'un cryptogramme obtenu en transformant une différence entre chaque composante des données de comparaison et la composante correspondante des données cibles, par le biais de la transformation par chiffrement au moyen de la clé publique ;

en utilisant le dispositif de traitement de l'appareil de calcul de degré de similarité, la seconde unité de calcul de cryptogramme de l'appareil de calcul de degré de similarité définit un cryptogramme obtenu par une transformation de la clé temporaire par le biais de la transformation par chiffrement au moyen de la clé publique, en un second cryptogramme de degré de similarité provisoire, sur la base de la clé publique stockée par l'unité de stockage de clé publique de l'appareil de calcul de degré de similarité et de la clé temporaire générée par l'unité de génération de clé temporaire de l'appareil de calcul de degré de similarité ; et

en utilisant le dispositif de traitement de l'appareil de calcul de degré de similarité, l'unité de notification de cryptogramme de degré de similarité provisoire de l'appareil de calcul de degré de similarité notifie, à l'appareil de déchiffrement, le premier cryptogramme de degré de similarité provisoire calculé par la première unité de calcul de cryptogramme de l'appareil de calcul de degré de similarité, ainsi que le second cryptogramme de degré de similarité provisoire calculé par la seconde unité de calcul de cryptogramme de l'appareil de calcul de degré de similarité.

5. Système de calcul de degré de similarité selon la revendication 4, dans lequel :
en utilisant le dispositif de traitement de l'appareil de calcul de degré de similarité, la première unité de calcul de cryptogramme de l'appareil de calcul de degré de similarité définit, en tant que le premier cryptogramme de degré de similarité provisoire, le vecteur à T dimensions présentant des composantes d'un cryptogramme sélectionné de manière aléatoire parmi des cryptogrammes obtenus en transformant la différence de chaque composante des données de comparaison à partir de la composante correspondante des données cibles par le biais de la transformation par chiffrement au moyen de la clé publique, et des cryptogrammes obtenus en transformant la différence de chaque composante des données cibles à partir de la composante correspondante des données de comparaison par le biais de la transformation par chiffrement au moyen de la clé publique, dans lequel le vecteur à T dimensions présente une séquence des composantes réagencées de manière aléatoire.

6. Système de calcul de degré de similarité selon l'une quelconque des revendications 3 à 5, dans lequel :
en utilisant le dispositif de traitement de l'appareil de déchiffrement, l'unité de calcul de texte déchiffré de degré de similarité provisoire de l'appareil de déchiffrement calcule une différence ou une somme entre une sommation de carrés des nombres entiers obtenus en déchiffrant les T composantes du premier cryptogramme de degré de similarité provisoire et le nombre entier obtenu en déchiffrant le second cryptogramme de degré de similarité provisoire, ou calcule un élément obtenu en combinant « z » parties d'éléments prédéterminés dans un groupe fini prédéterminé, par le biais d'une opération arithmétique de groupe sur le groupe fini prédéterminé, et définit la différence calculée, la somme calculée ou l'élément calculé, sur le texte déchiffré de degré de similarité provisoire, dans lequel « z » correspond à la différence ou à la somme entre la sommation de carrés des nombres entiers obtenus en déchiffrant les T composantes du premier cryptogramme de degré de similarité provisoire et le nombre entier obtenu en déchiffrant le second cryptogramme de degré de similarité provisoire.

7. Système de calcul de degré de similarité selon la revendication 1, dans lequel :

le système de calcul de degré de similarité inclut en outre un appareil de chiffrement (101, 111) ;
l'appareil de chiffrement inclut un dispositif de stockage (914) qui stocke des données, un dispositif de traitement (911) qui traite les données, une unité de stockage de clé publique (212), une unité d'acquisition de données cibles (214), une unité d'acquisition de clé publique temporaire (211), une unité de calcul de texte à double chiffrement cible (217), et une unité de notification de texte à double chiffrement cible (221) ;

en utilisant le dispositif de stockage de l'appareil de chiffrement, l'unité de stockage de clé publique de l'appareil de chiffrement stocke la clé publique correspondant à la clé secrète stockée par l'appareil de déchiffrement ;

en utilisant le dispositif de traitement de l'appareil de chiffrement, l'unité d'acquisition de données cibles de l'appareil de chiffrement acquiert les données cibles ;

en utilisant le dispositif de traitement de l'appareil de chiffrement, l'unité d'acquisition de clé publique temporaire de l'appareil de chiffrement acquiert une clé publique temporaire notifiée à partir de l'appareil de calcul de degré de similarité ;

en utilisant le dispositif de traitement de l'appareil de chiffrement, l'unité de calcul de texte à double chiffrement cible de l'appareil de chiffrement transforme les données cibles par le biais d'une seconde transformation par chiffrement au moyen de la clé publique et de la clé publique temporaire, ce qui permet de calculer par conséquent un texte à double chiffrement cible, sur la base de la clé publique stockée par l'unité de stockage de clé publique de l'appareil de chiffrement, des données cibles acquises par l'unité d'acquisition de données cibles de l'appareil de chiffrement, et de la clé publique temporaire acquise par l'unité d'acquisition de clé publique temporaire de l'appareil de chiffrement ;

en utilisant le dispositif de traitement de l'appareil de chiffrement, l'unité de notification de texte à double chiffrement cible de l'appareil de chiffrement notifie, à l'appareil de calcul de degré de similarité, le texte à double chiffrement cible calculé par l'unité de calcul de texte à double chiffrement cible de l'appareil de chiffrement ;

l'appareil de calcul de degré de similarité inclut en outre une unité de génération de clé secrète temporaire (303, 304), une unité de notification de clé publique temporaire (311), et une unité d'acquisition de texte à double chiffrement cible (331) ;

en utilisant le dispositif de traitement de l'appareil de calcul de degré de similarité, l'unité de génération de clé secrète temporaire de l'appareil de calcul de degré de similarité génère une clé secrète temporaire et une clé publique temporaire correspondant à la clé secrète temporaire ;

en utilisant le dispositif de traitement de l'appareil de calcul de degré de similarité, l'unité de notification de clé publique temporaire de l'appareil de calcul de degré de similarité notifie, à l'appareil de chiffrement, la clé publique temporaire générée par l'unité de génération de clé secrète temporaire de l'appareil de calcul de degré de similarité ;

en utilisant le dispositif de traitement de l'appareil de calcul de degré de similarité, l'unité d'acquisition de texte à double chiffrement cible de l'appareil de calcul de degré de similarité acquiert le texte à double chiffrement cible notifié à partir de l'appareil de chiffrement ; et

en utilisant le dispositif de traitement de l'appareil de calcul de degré de similarité, l'unité d'acquisition de cryptogramme cible de l'appareil de calcul de degré de similarité transforme le texte à double chiffrement cible par le biais d'une seconde transformation par déchiffrement en utilisant la clé secrète temporaire, sur la base de la clé secrète temporaire générée par l'unité de génération de clé secrète temporaire de l'appareil de calcul de degré de similarité, et du texte à double chiffrement cible acquis par l'unité d'acquisition de texte à double chiffrement cible de l'appareil de calcul de degré de similarité, ce qui permet de calculer par conséquent le cryptogramme cible obtenu en transformant les données cibles par le biais de la transformation par chiffrement au moyen de la clé publique.

**8.** Système de calcul de degré de similarité selon la revendication 7, dans lequel :

la transformation par chiffrement correspond à une transformation visant à transformer un nombre entier en un cryptogramme, dans lequel une opération arithmétique visant à combiner et transformer une pluralité de cryptogrammes en un cryptogramme différent peut être calculée pour le cryptogramme, et dans lequel un cryptogramme obtenu en combinant un cryptogramme résultant de la transformation d'un premier nombre entier arbitraire et un cryptogramme résultant de la transformation d'un second nombre entier arbitraire par l'opération arithmétique pour le cryptogramme correspond à un cryptogramme résultant de la transformation d'une somme du premier nombre entier et du second nombre entier ;

les données cibles correspondent à un vecteur à T dimensions présentant des composantes de nombres entiers, T étant un nombre entier non inférieur à 1 ;

l'appareil de calcul de degré de similarité inclut en outre une unité de stockage de clé publique (302) ;

en utilisant le dispositif de stockage de l'appareil de calcul de degré de similarité, l'unité de stockage de clé publique de l'appareil de calcul de degré de similarité stocke la clé publique correspondant à la clé secrète stockée par l'appareil de déchiffrement ;

en utilisant le dispositif de traitement de l'appareil de calcul de degré de similarité, l'unité de génération de clé publique temporaire de l'appareil de calcul de degré de similarité génère de manière aléatoire un vecteur à T dimensions présentant une composante d'un nombre entier, et définit le vecteur à T dimensions généré sur la clé secrète temporaire, et calcule un vecteur à T dimensions présentant une composante d'un cryptogramme obtenu en transformant chaque composante de la clé secrète temporaire par le biais de la transformation par chiffrement au moyen de la clé publique, sur la base de la clé publique stockée par l'unité de stockage de clé publique de l'appareil de calcul de degré de similarité, et de la clé secrète temporaire générée, et définit le vecteur à T dimensions calculé sur la clé publique temporaire ;

en utilisant le dispositif de traitement de l'appareil de chiffrement, l'unité de calcul de texte à double chiffrement cible de l'appareil de chiffrement génère de manière aléatoire un vecteur à T dimensions présentant une composante d'un cryptogramme obtenu en transformant « 0 » par le biais de la transformation par chiffrement au moyen de la clé publique, sur la base de la clé publique stockée par l'unité de stockage de clé publique de l'appareil de chiffrement, et définit le vecteur à T dimensions généré sur un cryptogramme nul, et calcule un vecteur à T dimensions présentant une composante d'un cryptogramme obtenu en combinant « $b'_i$ » parties de chaque composante de la clé publique temporaire, dans lequel « $b'_i$ » correspond au nombre entier indiquant la composante correspondante des données cibles, et la composante correspondante du cryptogramme nul, par le biais de l'opération arithmétique pour le cryptogramme, sur la base des données cibles acquises par l'unité d'acquisition de données cibles de l'appareil de chiffrement, de la clé publique temporaire acquise par l'unité d'acquisition de clé publique temporaire de l'appareil de chiffrement, et du cryptogramme nul généré, et définit le vecteur à T dimensions calculé sur le texte à double chiffrement cible ;

l'unité d'acquisition de cryptogramme cible de l'appareil de calcul de degré de similarité inclut une unité de calcul de clé de déchiffrement temporaire (351) et une unité de calcul de cryptogramme cible (352) ;

en utilisant le dispositif de traitement de l'appareil de calcul de degré de similarité, l'unité de calcul de clé de déchiffrement temporaire de l'appareil de calcul de degré de similarité calcule un vecteur à T dimensions présentant une composante d'un nombre inverse de chaque composante de la clé secrète temporaire, sur la base de la clé secrète temporaire générée par l'unité de génération de clé secrète temporaire de l'appareil de calcul de degré de similarité, et définit le vecteur à T dimensions calculé sur une clé de déchiffrement temporaire ; et

en utilisant le dispositif de traitement de l'appareil de calcul de degré de similarité, l'unité de calcul de cryptogramme cible de l'appareil de calcul de degré de similarité calcule un vecteur à T dimensions présentant une composante d'un cryptogramme obtenu en combinant « $R_i^{-1}$ » parties de chaque composante du texte à double chiffrement cible, dans lequel « $R_i^{-1}$ » correspond au nombre inverse indiquant la composante correspondante de la clé de déchiffrement temporaire, sur la base du texte à double chiffrement cible acquis par l'unité d'acquisition de texte à double chiffrement cible de l'appareil de calcul de degré de similarité, et de la clé de déchiffrement temporaire calculée par l'unité de calcul de clé de déchiffrement temporaire de l'appareil de calcul de degré de similarité, et définit le vecteur à T dimensions calculé sur le cryptogramme cible.

**9.** Système de calcul de degré de similarité selon la revendication 1, dans lequel :
en utilisant le dispositif de traitement de l'appareil de déchiffrement, l'unité de calcul de texte déchiffré de degré de similarité provisoire de l'appareil de déchiffrement calcule un nombre entier obtenu en déchiffrant le cryptogramme de degré de similarité provisoire, ou calcule un élément en combinant « z » parties d'éléments prédéterminés, dans lequel « z » correspond au nombre entier obtenu en déchiffrant le cryptogramme de degré de similarité provisoire, dans un groupe fini prédéterminé par le biais d'une opération arithmétique de groupe dans le groupe fini prédéterminé, sur la base du cryptogramme de degré de similarité provisoire acquis par l'unité d'acquisition de cryptogramme de degré de similarité provisoire de l'appareil de déchiffrement, et définit le nombre entier calculé ou l'élément calculé sur le texte déchiffré de degré de similarité provisoire.

**10.** Système de calcul de degré de similarité selon l'une quelconque des revendications 1 à 5, 7 et 8, dans lequel :

le texte déchiffré de degré de similarité provisoire est un nombre entier ;
en utilisant le dispositif de traitement de l'appareil de calcul de degré de similarité, l'unité de génération de clé temporaire de l'appareil de calcul de degré de similarité génère de manière aléatoire un nombre entier, et définit le nombre entier généré sur la clé temporaire ; et
en utilisant le dispositif de traitement de l'appareil de calcul de degré de similarité, l'unité de calcul de degré de similarité de l'appareil de calcul de degré de similarité calcule une somme ou une différence entre la clé temporaire et le texte déchiffré de degré de similarité provisoire, sur la base de la clé temporaire générée par l'unité de génération de clé temporaire de l'appareil de calcul de degré de similarité, et du texte déchiffré de degré de similarité provisoire acquis par l'unité d'acquisition de texte déchiffré de degré de similarité provisoire de l'appareil de calcul de degré de similarité, et définit la somme calculée ou la différence calculée sur le degré de similarité.

11. Système de calcul de degré de similarité selon l'une quelconque des revendications 1 à 5, 7 et 8, dans lequel :

le texte déchiffré de degré de similarité provisoire correspond à un élément dans un groupe fini prédéterminé ;
en utilisant le dispositif de traitement de l'appareil de calcul de degré de similarité, l'unité de génération de clé temporaire de l'appareil de calcul de degré de similarité génère de manière aléatoire un nombre entier, et définit le nombre entier généré sur la clé temporaire ;
l'unité de calcul de degré de similarité de l'appareil de calcul de degré de similarité inclut une unité de calcul de texte déchiffré de degré de similarité (372) et une unité de calcul de logarithme discret (373) ;
en utilisant le dispositif de traitement de l'appareil de calcul de degré de similarité, l'unité de calcul de texte déchiffré de degré de similarité de l'appareil de calcul de degré de similarité calcule un élément en combinant le texte déchiffré de degré de similarité provisoire et « u » parties d'éléments prédéterminés, dans lequel « u » correspond au nombre entier de la clé temporaire, dans le groupe fini prédéterminé, par le biais d'une opération arithmétique de groupe sur le groupe fini prédéterminé, sur la base de la clé temporaire générée par l'unité de génération de clé temporaire de l'appareil de calcul de degré de similarité, et du texte déchiffré de degré de similarité provisoire acquis par l'unité d'acquisition de texte déchiffré de degré de similarité provisoire de l'appareil de calcul de degré de similarité, et définit l'élément calculé sur un texte déchiffré de degré de similarité ; et
en utilisant le dispositif de traitement de l'appareil de calcul de degré de similarité, l'unité de calcul de logarithme discret de l'appareil de calcul de degré de similarité calcule un nombre des éléments prédéterminés à combiner afin qu'il soit égal au texte déchiffré de degré de similarité, par le biais de l'opération arithmétique de groupe dans le groupe fini prédéterminé, sur la base du texte déchiffré de degré de similarité calculé par l'unité de calcul de texte déchiffré de degré de similarité de l'appareil de calcul de degré de similarité, et définit le nombre des éléments prédéterminés sur le degré de similarité.

12. Système de calcul de degré de similarité selon la revendication 11, dans lequel :
en utilisant le dispositif de traitement de l'appareil de calcul de degré de similarité, l'unité de calcul de logarithme discret de l'appareil de calcul de degré de similarité calcule le degré de similarité lorsque le degré de similarité est un nombre entier dans une plage prédéterminée, et détermine que le degré de similarité est en dehors de la plage prédéterminée lorsque le degré de similarité est en dehors de la plage prédéterminée.

13. Système de calcul de degré de similarité selon l'une quelconque des revendications 1 à 5, 7 et 8, dans lequel :

le système de calcul de degré de similarité inclut en outre un appareil d'enregistrement (104) ;
l'appareil d'enregistrement inclut un dispositif de stockage (914) qui stocke des données, un dispositif de traitement (911) qui traite les données, une unité de stockage de clé publique (202), une unité d'acquisition de données de comparaison (204), une unité de calcul de cryptogramme de comparaison (206), et une unité de notification de cryptogramme de comparaison (201) ;
en utilisant le dispositif de stockage de l'appareil d'enregistrement, l'unité de stockage de clé publique de l'appareil d'enregistrement stocke la clé publique correspondant à la clé secrète stockée par l'appareil de déchiffrement ;
en utilisant le dispositif de traitement de l'appareil d'enregistrement, l'unité d'acquisition de données de comparaison de l'appareil d'enregistrement acquiert les données de comparaison ;
en utilisant le dispositif de traitement de l'appareil d'enregistrement, l'unité de calcul de cryptogramme de comparaison de l'appareil d'enregistrement transforme les données de comparaison par le biais de la transformation par chiffrement au moyen de la clé publique en vue de calculer le cryptogramme de comparaison, sur la base de la clé publique stockée par l'unité de stockage de clé publique de l'appareil d'enregistrement et des données de comparaison acquises par l'unité d'acquisition de données de comparaison de l'appareil d'enregistrement ;
en utilisant le dispositif de traitement de l'appareil d'enregistrement, l'unité de notification de cryptogramme de comparaison de l'appareil d'enregistrement notifie, à l'appareil de calcul de degré de similarité, le cryptogramme de comparaison calculé par l'unité de calcul de cryptogramme de comparaison de l'appareil d'enregistrement ;

l'appareil de calcul de degré de similarité inclut en outre une unité d'acquisition de cryptogramme de comparaison (301) ;

en utilisant le dispositif de traitement de l'appareil de calcul de degré de similarité, l'unité d'acquisition de cryptogramme de comparaison de l'appareil de calcul de degré de similarité acquiert le cryptogramme de comparaison notifié à partir de l'appareil d'enregistrement ; et

en utilisant le dispositif de stockage de l'appareil de calcul de degré de similarité, l'unité de stockage de cryptogramme de comparaison de l'appareil de calcul de degré de similarité stocke le cryptogramme de comparaison acquis par l'unité d'acquisition de cryptogramme de comparaison de l'appareil de calcul de degré de similarité.

14. Procédé de calcul de degré de similarité pour calculer un degré de similarité entre des données de comparaison et des données cibles par le biais d'un système de calcul de degré de similarité (100, 110) incluant un appareil de calcul de degré de similarité (102, 112) et un appareil de déchiffrement (103) ; dans lequel chaque appareil parmi l'appareil de calcul de degré de similarité et l'appareil de déchiffrement inclut un dispositif de stockage (914) qui stocke des données et un dispositif de traitement (911) qui traite les données, le procédé de calcul de degré de similarité comprenant les étapes ci-dessous consistant à :

stocker une clé secrète par le biais du dispositif de stockage de l'appareil de déchiffrement ;

stocker, par le biais du dispositif de stockage de l'appareil de calcul de degré de similarité, un cryptogramme de comparaison obtenu en transformant les données de comparaison par le biais d'une transformation par chiffrement au moyen d'une clé publique correspondant à la clé secrète stockée par l'appareil de déchiffrement ;

acquérir, par le biais du dispositif de traitement de l'appareil de calcul de degré de similarité, un cryptogramme cible obtenu en transformant les données cibles par le biais de la transformation par chiffrement au moyen de la clé publique ;

générer une clé temporaire par le biais du dispositif de traitement de l'appareil de calcul de degré de similarité ;

par le biais du dispositif de traitement de l'appareil de calcul de degré de similarité, mettre en oeuvre un calcul pour calculer le degré de similarité dans le cadre d'une première étape avec le cryptogramme de comparaison et le cryptogramme cible maintenus chiffrés, sur la base du cryptogramme de comparaison stocké par le dispositif de stockage de l'appareil de calcul de degré de similarité, du cryptogramme cible acquis par le dispositif de traitement de l'appareil de calcul de degré de similarité, et de la clé temporaire générée par le dispositif de traitement de l'appareil de calcul de degré de similarité, ce qui permet de calculer par conséquent un cryptogramme de degré de similarité provisoire obtenu en chiffrant un résultat du calcul au moyen de la clé temporaire ;

par le biais du dispositif de traitement de l'appareil de calcul de degré de similarité, notifier, à l'appareil de déchiffrement, le cryptogramme de degré de similarité provisoire calculé par le dispositif de traitement de l'appareil de calcul de cryptogramme de degré de similarité provisoire ;

par le biais du dispositif de traitement de l'appareil de déchiffrement, acquérir le cryptogramme de degré de similarité provisoire notifié à partir de l'appareil de calcul de degré de similarité ;

par le biais du dispositif de traitement de l'appareil de déchiffrement, déchiffrer le cryptogramme de degré de similarité provisoire avec la clé secrète, sur la base de la clé secrète stockée par le dispositif de stockage de l'appareil de déchiffrement et du cryptogramme de degré de similarité provisoire acquis par le dispositif de traitement de l'appareil de déchiffrement, mettre en oeuvre un calcul pour calculer le degré de similarité dans le cadre d'une seconde étape avec un résultat du déchiffrement maintenu chiffré avec la clé temporaire, ce qui permet de calculer par conséquent le texte déchiffré de degré de similarité provisoire ;

par le biais du dispositif de traitement de l'appareil de déchiffrement, notifier le texte déchiffré de degré de similarité provisoire calculé par le dispositif de traitement de l'appareil de déchiffrement à l'appareil de calcul de degré de similarité ;

par le biais du dispositif de traitement de l'appareil de calcul de degré de similarité, acquérir le texte déchiffré de degré de similarité provisoire notifié à partir de l'appareil de déchiffrement ; et

par le biais du dispositif de traitement de l'appareil de calcul de degré de similarité, déchiffrer le texte déchiffré de degré de similarité provisoire avec la clé temporaire, sur la base de la clé temporaire générée par le dispositif de traitement de l'appareil de calcul de degré de similarité et du texte déchiffré de degré de similarité provisoire acquis par le dispositif de traitement de l'appareil de calcul de degré de similarité, ce qui permet de calculer par conséquent le degré de similarité entre les données de comparaison et les données cibles ;

dans lequel la transformation par chiffrement correspond à une transformation visant à transformer un nombre entier en un cryptogramme, dans lequel une opération arithmétique visant à combiner et transformer une pluralité de cryptogrammes en un cryptogramme différent peut être calculée pour le cryptogramme, et un cryptogramme obtenu en combinant un cryptogramme résultant de la transformation d'un premier nombre entier arbitraire et un cryptogramme résultant de la transformation d'un second nombre entier arbitraire, par le biais de l'opération arithmétique pour le cryptogramme, est un cryptogramme résultant de la transformation d'une somme du premier nombre entier et du second nombre entier ; et

dans lequel

chacune des données de comparaison et des données cibles correspond à un vecteur à T dimensions présentant chaque composante d'un nombre entier, T étant un nombre entier non inférieur à 1 ;

le cryptogramme de comparaison est un vecteur à T dimensions présentant une composante d'un cryptogramme obtenu en transformant chaque composante des données de comparaison par le biais de la transformation par chiffrement au moyen de la clé publique ;

le cryptogramme cible est un vecteur à T dimensions présentant une composante d'un cryptogramme obtenu en transformant chaque composante des données cibles par le biais de la transformation par chiffrement au moyen de la clé publique ;

l'appareil de calcul de degré de similarité inclut en outre une unité de stockage de clé publique (302) ;

stocker, par le biais de l'unité de stockage de clé publique de l'appareil de calcul de degré de similarité, la clé publique correspondant à la clé secrète stockée par l'appareil de déchiffrement ;

générer de manière aléatoire, par le biais de l'unité de génération de clé temporaire de l'appareil de calcul de degré de similarité, un nombre entier, et définir le nombre entier généré sur la clé temporaire ; et

calculer, par le biais de l'unité de calcul de cryptogramme de degré de similarité provisoire de l'appareil de calcul de degré de similarité, le cryptogramme de degré de similarité provisoire en utilisant l'opération arithmétique pour le cryptogramme, sur la base du cryptogramme de comparaison stocké par l'unité de stockage de cryptogramme de comparaison de l'appareil de calcul de degré de similarité, et du cryptogramme cible acquis par l'unité d'acquisition de cryptogramme cible de l'appareil de calcul de degré de similarité, et de la clé temporaire générée par l'unité de génération de clé temporaire de l'appareil de calcul de degré de similarité, dans lequel le cryptogramme de degré de similarité provisoire est un cryptogramme obtenu en transformant une somme ou une différence entre une valeur de sommation et la clé temporaire, par le biais de la transformation par chiffrement au moyen de la clé publique, et dans lequel la valeur de sommation est un nombre entier obtenu en sommant un carré d'une différence entre chaque composante des données de comparaison et la composante correspondante des données cibles, ou en sommant un produit de chaque composante des données de comparaison et la composante correspondante des données cibles, pour toutes les composantes.

# Fig. 1

104

REGISTRATION
APPARATUS

101

CERTIFICATION
APPARATUS

102

AUTHENTICATOIN
APPARATUS

100

103

DECRYPTION
APPARATUS

# Fig. 2

911

PROCESSING
DEVICE

101, 102, 103, 104

912

INPUT
DEVICE

913

OUTPUT
DEVICE

914

STORAGE
DEVICE

# Fig. 3

202 — PUBLIC KEY STORAGE UNIT

208 — PUBLIC KEY RECEIVING UNIT

104

203 — BIOMETRIC INFORMATION EXTRATION UNIT

204 — FEATURE VECTOR FORMATION UNIT

206 — ENCRYPTED DATA GENERATION UNIT

201 — ENCRYPTED DATA TRANSMITING UNIT

205 — RANDOM NUMBER GENERATION UNIT

# Fig. 4

212 — PUBLIC KEY STORAGE UNIT

218 — PUBLIC KEY RECEIVING UNIT

101

213 — BIOMETRIC INFORMATION EXTRACTION UNIT

214 — FEATURE VECTOR FORMATION UNIT

217 — ENCRYPTED DATA EMBEDDING UNIT

221 — FIRST RESPONSE TRANSMITTING UNIT

215 — RANDOM NUMBER GENERATION UNIT

211 — FIRST CHALLENGE RECEIVING UNIT

# Fig. 5

# Fig. 6

```
408                        403                      401                           103
 PUBLIC KEY        ←──  PUBLIC KEY    ←──       KEY
 TRANSMITTING          STORAGE                GENERATION
 UNIT                  UNIT                   UNIT

402                        404                      413
 SECOND CHALLENGE  ──→  DECRYPTION    ←──    SECRET KEY
 RECEIVING UNIT        UNIT                  STORAGE
                                             UNIT

412
 SECOND RESPONSE   ←──
 TRANSMITTING UNIT
```

# Fig. 7

```
          ( BIOMETRIC AUTHENTICATION SYSTEM )
                         │
    S500                 ↓
          ┌──────────────────────────────┐
          │        SETUP PROCESS          │
          └──────────────────────────────┘
                         │
    S600                 ↓
          ┌──────────────────────────────┐
          │     REGISTRATION PROCESS      │ ◄┈┈┐
          └──────────────────────────────┘   ┊
                         │          ↑         ┊
    S700                 ↓          │         ┊
          ┌──────────────────────────────┐   ┊
          │     AUTHENTICATION PROCESS    │───┘
          └──────────────────────────────┘
```

# Fig. 8

S500

REGISTRATION APPARATUS

S503 PUBLIC KEY ACQUISITION STEP

END

DECRYPTION APPARATUS

S501 KEY GENERATION STEP

S502 PUBLIC KEY NOTIFICATION STEP

END

CERTIFICATION APPARATUS

S504 PUBLIC KEY ACQUISITION STEP

END

AUTHENTICATION APPARATUS

S505 PUBLIC KEY ACQUISITION STEP

END

# Fig. 9

REGISTRATION APPARATUS

S600

S601 BIOMETRIC INFORMATION EXTRACTION STEP

S602 FEATURE VECTOR GENERATION STEP

S603 FEATURE VECTOR ENCRYPTION STEP

S604 ENCRYPTED BIOMETRIC INFORMATION NOTIFICATION STEP

END

AUTHENTICATION APPARATUS

S605 ENCRYPTED BIOMETRIC INFORMATION ACQUISITION STEP

END

# Fig. 10

S700

CERTIFICATION APPARATUS

S704
FIRST CHALLENGE ACQUISTION STEP

S705
BIOMETRIC INFORMATION EXTRACTION STEP

S706
FEATURE VECTOR GENERATION STEP

S707
FIRST RESPONSE GENERATION STEP

S708
FIRST RESPONSE NOTIFICATION STEP

END

DECRYPTION APPARATUS

S715
SECOND CHALLENGE ACQUISITION STEP

S716
SECOND RESPONSE GENERATION STEP

S717
SECOND RESPONSE NOTIFICATION STEP

END

S210

AUTHENTICATION APPARATUS

S701
FIRST CHALLENGE GENERATION STEP

S702
RANDOM NUMBER STORAGE STEP

S703
FIRST CHALLENGE NOTIFICATION STEP

S709
FIRST RESPONSE ACQUISITION STEP

S710
ENCRYPTED BIOMETRIC INFORMATION EXTRACTION STEP

S711
ENCRYPTED BIOMETRIC INFORMATION READING STEP

S712
SECOND CHALLENGE GENERATION STEP

S713
RANDOM NUMBER STORAGE STEP

S714
SECOND CHALLENGE NOTIFICATION STEP

S718
SECOND RESPONSE ACQUISTION STEP

S719
PLAINTEXT SIMILARITY DEGREE CALCULATION STEP

S720
AUTHENTICATION DETERMINATION STEP

END

# Fig. 11

```
VECTOR DECOMPOSITION
PROCESS
```

S541

$$(t_{i,j}) \leftarrow X^{-1}$$

S542

$$y \leftarrow 0, i \leftarrow 0$$

S543

$$i \leftarrow i+1$$

$i>L$ 　END

$i \leq L$

S548

$$\kappa \leftarrow \kappa + t_{i,j} \chi_{j,k}$$

S547 　　　$j \leq l$

$$j \leftarrow j+1$$

S546 　　$j>l$

$$j \leftarrow 0, \kappa \leftarrow 0$$

S545 　$k \leq L$

$$k \leftarrow k+1$$

$k>L$

S544

$$k \leftarrow 0$$

$\underline{S540}$

S549

$$\phi \leftarrow \phi_{k,i}(x)$$

S550

$$\phi' \leftarrow \kappa \phi$$

S551

$$y \leftarrow y + \phi'$$

# Fig. 12

103

401

421

**GROUP DETERMINATION UNIT**

424

**DETERMINANT CALCULATION UNIT**

423

**RANDOM NUMBER GENERATION UNIT**

425

**REGULAR MATRIX SETTING UNIT**

422

**CANONICAL BASE SETTING UNIT**

**RANDOM BASE CALCULATION UNIT**

403

**PUBLIC KEY STORAGE UNIT**

426 　413

**SECRET KEY STORAGE UNIT**

# Fig. 13

KEY GENERATION STEP — S501

S511 — $q, \mathbb{G}, \mathbb{G}_T, g$

S512 — $V, A$

S513 — $\chi_{i,j} \xleftarrow{R} \mathbb{F}_q$

S514 — $|X|$

$= 0$

$\neq 0$

S515 — $b_i \leftarrow \sum_{j=1}^{n} (\chi_{i,j} a_j)$

END

# Fig. 14

S603

FEATURE VECTOR ENCRYPTION STEP

S610 — $i \leftarrow 0$

S611 — $i \leftarrow i+1$

$i > T$ — END

$i \leq T$

S612 — $r_{j,i} \xleftarrow{R} \mathbb{F}_q$

S613 — $c_i \leftarrow b_i\, b_1 + \sum_{j=2}^{n} [r_{j,i}\, b_j]$

# Fig. 15

S701 — FIRST CHALLENGE GENERATION STEP

S729: $i \leftarrow 0$

S721: $i \leftarrow i+1$ — $i > T$ → END

$i \leq T$

S722: $R_{j,i} \xleftarrow{\text{R}} \mathbb{F}_q$

S723: $R_i \leftarrow \sum_{j=1}^{n} [R_{j,i} \, {}^{\text{b}}_j]$

# Fig. 16

217

101

214 FEATURE VECTOR FORMATION UNIT

231 SCALAR MULTIPLICATION CALCULATION UNIT

211 FIRST CHALLENGE RECEIVING UNIT

215 RANDOM NUMBER GENERATION UNIT

232 ZERO GENERATION UNIT

233 VECTOR COMBINING UNIT

221 FIRST RESPONSE TRANSMITTING UNIT

# Fig. 17

S707

```
        ┌─────────────────────────────────┐
        │ FIRST RESPONSE GENERATION STEP  │
        └─────────────────────────────────┘
                        │
        S660            ▼
        ┌─────────────────────────────────┐
        │           i ← 0                 │
        └─────────────────────────────────┘
                        │
        S661            ▼                    i > T
        ┌─────────────────────────────────┐        ┌──────┐
   ┌───▶│          i ← i+1                │───────▶│ END  │
   │    └─────────────────────────────────┘        └──────┘
   │                    │     i ≤ T
   │    S662            ▼
   │    ┌─────────────────────────────────┐
   │    │         ꙗ_i ← b'_i R_i          │
   │    └─────────────────────────────────┘
   │                    │
   │    S663            ▼
   │    ┌─────────────────────────────────┐
   │    │         R'_{j,i} ←^R 𝔽_q         │
   │    └─────────────────────────────────┘
   │                    │
   │    S664            ▼
   │    ┌─────────────────────────────────┐
   │    │    o_i ← Σ_{j=2}^{n} [ R'_{j,i} b_j ]  │
   │    └─────────────────────────────────┘
   │                    │
   │    S665            ▼
   │    ┌─────────────────────────────────┐
   └────│        R'_i ← ꙗ_i + o_i         │
        └─────────────────────────────────┘
```

$$i \leftarrow 0$$

$$i \leftarrow i+1$$

$$\text{я}_i \leftarrow b'_i R_i$$

$$R'_{j,i} \overset{R}{\leftarrow} \mathbb{F}_q$$

$$o_i \leftarrow \sum_{j=2}^{n} \left[ R'_{j,i}\, \mathbb{b}_j \right]$$

$$R'_i \leftarrow \text{я}_i + o_i$$

# Fig. 18

102

314

305

```
331
┌────────────────────┐
│  FIRST RESPONSE    │
│  RECEIVING UNIT    │──┐
└────────────────────┘  │   ┌ ─ ─ ─ ─ ─ ─ ─ ─ ─ ─ ─ ─ ─ ┐
                        │       352
                        │   │ ┌────────────────────┐ │     ┌────────────────────┐
                        └────▶│       SCALAR       │ │     │ ENCRYPTED RANDOM    │
                            │ │ MULTIPLICATION UNIT│────────▶│ SIMILARITY DEGREE   │
                        ┌────▶│                    │ │     │ CALCULATION UNIT    │
                        │   │ └────────────────────┘ │     └────────────────────┘
                        │              ▲
322                     │       351    │
┌────────────────────┐  │   │ ┌────────────────────┐ │
│  RANDOM NUMBER     │  │     │  INVERSE NUMBER    │
│  STORAGE UNIT      │──┘   │ │ CALCULATION UNIT   │ │
└────────────────────┘       └────────────────────┘
                            └ ─ ─ ─ ─ ─ ─ ─ ─ ─ ─ ─ ─ ─ ┘
```

# Fig. 19

S710

ENCRYPTED BIOMETRIC INFORMATION
EXTRACTION STEP

S730

$$i \leftarrow 0$$

S731

$$i \leftarrow i+1$$

$i > T$

END

$i \leq T$

S732

$$\kappa_i \leftarrow R_{1,i}^{-1}$$

S733

$$c'_i \leftarrow \kappa_i R'_i$$

# Fig. 20

# Fig. 21

$$\text{SECOND CHALLENGE GENERATION STEP}$$

S712

S740
$$i \leftarrow 0, \hat{c} \leftarrow 0, \Sigma \leftarrow 0$$

S741
$$i \leftarrow i+1$$

$i \le T$

$i > T$

S749
$$u_j \xleftarrow{R} \mathbb{F}_q$$

S742
$$\Delta c_i \leftarrow c_i - c'_i$$

S750
$$\mathrm{u} \leftarrow \left( u_1 + \Sigma \right) \mathrm{b}_1 + \sum_{j=2}^{n} \left[ u_j \, \mathrm{b}_j \right]$$

S743
$$t_{j,i} \xleftarrow{R} \mathbb{F}_q$$

S751
$$\hat{c} \leftarrow \hat{c} + \mathrm{u}$$

S744
$$t_i \leftarrow \sum_{j=1}^{n} \left[ t_{j,i} \, \mathrm{b}_j \right]$$

END

S745
$$\hat{c}_i \leftarrow \Delta c_i + t_i$$

S746
$$\dot{c}_i \leftarrow 2 t_{1,i} \Delta c_i$$

S747
$$\hat{c} \leftarrow \hat{c} + \dot{c}_i$$

S748
$$\Sigma \leftarrow \Sigma + t_{1,i}^2$$

116

# Fig. 22

404

402

472

| SECOND CHALLENGE RECEIVING UNIT | → | VECTOR DECOMPOSITION UNIT |
|---|---|---|

103

473

474

471

413

| GROUP CONVERSION UNIT | SQUARE CALCULATION UNIT | INVERSE MATRIX CALCULATION UNIT | SECRET KEY STORAGE UNIT |
|---|---|---|---|

412

475

| SECOND RESPONSE TRANSMITTING UNIT | ← | ELEMENT COMBINING UNIT |
|---|---|---|

# Fig. 23

SECOND RESPONSE GENERATION STEP

S716

S561
$$X^{-1}$$

S563
$$y_i \leftarrow \mathrm{Deco}(\hat{c}_i)$$

S566
$$y \leftarrow \mathrm{Deco}(\hat{c})$$

S564
$$y'_i \leftarrow e(y_i, y_i)$$

S567
$$y' \leftarrow e(y, \mathbf{b}_1)$$

S565
$$Z \leftarrow Z y'_i$$

S560
$$i \leftarrow 0, Z \leftarrow y'^{-1}$$

S562
$$i \leftarrow i+1$$

$$i \leq T$$

$$i > T$$

END

# Fig. 24

322
RANDOM NUMBER STORAGE UNIT

315

371
GROUP CONVERSION UNIT

372
ELEMENT COMBINING UNIT

341
SECOND RESPONSE RECEIVING UNIT

102

373
DISCRETE LOGARITHM CALCULATION UNIT

306
DETERMINATION UNIT

# Fig. 25

PLAINTEXT SIMILARITY DEGREE CALCULATION STEP

S719

S691
$$\amalg \leftarrow e(b_1, b_1)^{u_1}$$

S692
$$Z' \leftarrow Z\amalg$$

S693
$$d \leftarrow \log_{e(b_1, b_1)} Z'$$

END

118

# Fig. 26

$$\text{SIMILARITY DEGREE CALCULATION PROCEDURE}$$

S712

$$\delta_i \leftarrow (b_i - b'_i) + t_{1,i}$$

$$\delta^* \leftarrow \sum_{i=1}^{T} \left[ 2t_{1,i} (b_i - b'_i) + t_{1,i}^2 \right] + u_1$$

S716

$$\zeta \leftarrow \sum_{i=1}^{T} \left[ \delta_i^2 \right] - \delta^*$$

S719

$$d \leftarrow \zeta + u_1$$

$$\text{END}$$

# Fig. 27

101

CERTIFICATION APPARATUS

102

AUTHENTICATION APPARATUS

100

# Fig. 28

$S712$

$$\boxed{\text{SECOND CHALLENGE GENERATION STEP}}$$

S740
$$i \leftarrow 0,\ \hat{c} \leftarrow 0,\ \Sigma \leftarrow 0$$

S741
$$i \leftarrow i+1$$

$i \leq T$

S742
$$\Delta c_i \leftarrow c_i - c'_i$$

S743
$$t_{j,i} \xleftarrow{R} \mathbb{F}_q$$

S744
$$t_i \leftarrow \sum_{j=1}^{n}[t_{j,i}\,\mathsf{b}_j]$$

S745
$$\hat{c}_i \leftarrow \Delta c_i + t_i$$

S746
$$\mathfrak{c}_i \leftarrow 2t_{1,i}\Delta c_i$$

S747
$$\hat{c} \leftarrow \hat{c} + c_i + c'_i + \mathfrak{c}_i$$

S748
$$\Sigma \leftarrow \Sigma + t_{1,i}{}^2$$

$i > T$

S749
$$u_j \xleftarrow{R} \mathbb{F}_q$$

S750
$$\mathrm{II} \leftarrow (u_1 + \Sigma)\,\mathsf{b}_1 + \sum_{j=2}^{n}[u_j\,\mathsf{b}_j]$$

S751
$$\hat{c} \leftarrow \hat{c} + \mathrm{II}$$

$$\boxed{\text{END}}$$

# Fig. 29

$S719$

$$\boxed{\begin{array}{c}\text{PLAINTEXT SIMILARITY}\\\text{DEGREE CALCULATION STEP}\end{array}}$$

S690
$$\mathrm{III} \leftarrow (-2)^{-1}$$

S691
$$\mathrm{II} \leftarrow e(\mathsf{b}_1,\mathsf{b}_1)^{u_1}$$

S692
$$Z' \leftarrow (Z\,\mathrm{II})^{\mathrm{III}}$$

S693
$$d \leftarrow \log_{e(\mathsf{b}_1,\mathsf{b}_1)} Z'$$

$$\boxed{\text{END}}$$

# Fig. 30

$$\boxed{\text{SIMILARITY DEGREE CALCULATION PROCEDURE}}$$

S712
$$\delta_i \leftarrow (b_i - b'_i) + t_{1,i}$$
$$\delta^* \leftarrow \sum_{i=1}^{T} \left[ 2t_{1,i} (b_i - b'_i) + t_{1,i}^2 + b_i + b'_i \right] + u_1$$

S716
$$\zeta \leftarrow \sum_{i=1}^{T} \left[ \delta_i^2 \right] - \delta^*$$

S719
$$d \leftarrow \zeta + u_1$$

$$\boxed{\text{END}}$$

# Fig. 31

401    103

432 GENERATOR ELEMENT SELECTION UNIT

431 GROUP DETERMINATION UNIT

434 BASE CALCULATION UNIT

433 GENERATOR ELEMENT EXPONENTIATION UNIT

403 PUBLIC KEY STORAGE UNIT

413 SECRET KEY STORAGE UNIT

# Fig. 32

$$\boxed{\text{KEY GENERATION STEP}} \qquad \underline{S501}$$

S521
$$\boxed{\boldsymbol{p}, \boldsymbol{q}, \boldsymbol{N}, \mathbb{G}, \mathbb{G_T}}$$

S522
$$\boxed{\boldsymbol{g}, \boldsymbol{u} \overset{R}{\leftarrow} \mathbb{G}}$$

S523
$$\boxed{\boldsymbol{h} \leftarrow \boldsymbol{u}^{\boldsymbol{q}}}$$

S524
$$\boxed{\boldsymbol{\pi} \leftarrow \boldsymbol{e}(\boldsymbol{g}, \boldsymbol{g})^{\boldsymbol{p}}}$$

$$\boxed{\text{END}}$$

# Fig. 33

$$\underline{S603} \qquad \boxed{\text{FEATURE VECTOR ENCRYPTION STEP}}$$

S610
$$\boxed{\boldsymbol{i} \leftarrow 0}$$

S611
$$\boxed{\boldsymbol{i} \leftarrow \boldsymbol{i}+1} \xrightarrow{\boldsymbol{i} > \boldsymbol{T}} \boxed{\text{END}}$$

S612
$$\boldsymbol{i} \leq \boldsymbol{T}$$
$$\boxed{\boldsymbol{r_i} \overset{R}{\leftarrow} \mathbb{Z_N}}$$

S613a
$$\boxed{\boldsymbol{c_i} \leftarrow \boldsymbol{g}^{\boldsymbol{b_i}} \boldsymbol{h}^{\boldsymbol{r_i}}}$$

# Fig. 34

S701

FIRST CHALLENGE GENERATION STEP

S729

$$i \leftarrow 0$$

S721

$$i \leftarrow i+1$$

$i > T$ → END

$i \leq T$

S722

$$R_{1,i}, R_{2,i} \xleftarrow{R} \mathbb{Z}_N$$

S723a

$$R_i \leftarrow g^{R_{1,i}} h^{R_{2,i}}$$

# Fig. 35

217

214 FEATURE VECTOR FORMATION UNIT

234 EXPONENTIATION CALCULATION UNIT

211 FIRST CHALLENGE RECEIVING UNIT

101

215 RANDOM NUMBER GENERATION UNIT

232 ZERO GENERATION UNIT

235 ELEMENT COMBINING UNIT

221 FIRST RESPONSE TRANSMITTING UNIT

# Fig. 36

S707

**FIRST RESPONSE GENERATION STEP**

S660

$$i \leftarrow 0$$

S661

$$i \leftarrow i+1$$

$i > T$ → END

$i \leq T$

S662a

$$\mathfrak{R}_i \leftarrow R_i^{b'_i}$$

S663

$$r'_i \xleftarrow{R} \mathbb{Z}_N$$

S664

$$o_i \leftarrow h^{r'_i}$$

S665a

$$R'_i \leftarrow \mathfrak{R}_i o_i$$

# Fig. 37

305

102

331

**FIRST RESPONSE RECEIVING UNIT**

353

**EXPONENTIATION CALCULATION UNIT**

314

**ENCRYPTED RANDOM SIMILARITY DEGREE CALCULATION UNIT**

322

**RANDOM NUMBER STORAGE UNIT**

351

**INVERSE NUMBER CALCULATION UNIT**

# Fig. 38

S710

ENCRYPTED BIOMETIRC
INFORMATION EXTRACTION STEP

S730
$$i \leftarrow 0$$

S731
$$i \leftarrow i+1$$

$i > T$   END

$i \leq T$

S732
$$\kappa_i \leftarrow R_{1,i}^{-1}$$

S733a
$$c'_i \leftarrow R'^{\kappa_i}_i$$

Fig. 39

EP 2 680 488 B1

# Fig. 40

```
      SECOND CHALLENGE
      GENERATION STEP
```

S749

$$s_1, s_2 \xleftarrow{R} \mathbb{Z}_N$$

S752

$$\amalg \leftarrow e\left(g^{s_1}h^{s_2}, g\right)$$

S740

$$i \leftarrow 0, \hat{C} \leftarrow \amalg$$

S742

$$\Delta c_i \leftarrow c_i c'^{-1}_i$$

S712

S753

$$\Delta c'_i \leftarrow e\left(\Delta c_i, \Delta c_i\right)$$

S748a

$$\hat{C} \leftarrow \hat{C} \Delta c'_i$$

S741

$$i \leftarrow i+1$$

$i \leq T$

$i > T$

```
   END
```

# Fig. 41

314

312

ENCRYPTED DATA
STORAGE UNIT

383

381

SQUARE
CALCULATION
UNIT

370

102

321

SECOND CHALLENGE
TRANSMITTING UNIT

PRODUCT
CALCULATION
UNIT

ELEMENT COMBINING UNIT

382

305

ENCRYPTED DATA
EXTRACTION UNIT

SQUARE
CALCULATION
UNIT

384

EXPONENTIATION
CALCULATION
UNIT

303

RANDOM NUMBER
GENERATION UNIT

# Fig. 42

```
                SECOND CHALLENGE          S753                                    S712
                GENERATION STEP
                                                 ӝ_i ← e(c_i, c_i)
  S749                                           ӝ'_i ← e(c'_i, c'_i)
                                          S754
             s_1, s_2 ←^R ℤ_N
                                                 ç_i ← e(c_i, c'_i)
  S752a
                                          S748a
             ц_1 ← e(g, g)^{s_1}                 Ĉ ← Ĉ ӝ_i ӝ'_i ç_i^{-2}
             ц_2 ← e(g, h)^{s_2}
  S740                              S741
             i ← 0, Ĉ ← ц_1 ц_2              i ← i+1
                                                                          i ≤ T
                                                       i > T

                                                        END
```

# Fig. 43

```
         SECOND RESPONSE GENERATION STEP              S716

  S571

                   Z ← Ĉ^p

                        END
```

# Fig. 44

$$S719$$

PLAINTEXT SIMILARITY
DEGREE CALCULATION STEP

S691

$$Ⅱ \leftarrow \pi^{-s_1}$$

S692

$$Z' \leftarrow Z Ⅱ$$

S693

$$d \leftarrow \log_\pi Z'$$

END

# Fig. 45

SIMILARITY DEGREE
CALCULATION PROCEDURE

S712

$$\delta \leftarrow \sum_{i=1}^{T} \left[ (b_i - b'_i)^2 \right] + s_1$$

S716

$$\zeta \leftarrow \delta$$

S719

$$d \leftarrow \zeta - s_1$$

END

# Fig. 46

314

312
ENCRYPTED DATA
STORAGE UNIT

383
PRODUCT
CALCULATION
UNIT

370
ELEMENT
COMBINING
UNIT

321
SECOND CHALLENGE
TRANSMITTING UNIT

102

305
ENCRYPTED DATA
EXTRACTION
UNIT

384
EXPONENTIATION
CALCULATION
UNIT

303
RANDOM NUMBER
GENERATION UNIT

# Fig. 47

SECOND CHALLENGE GENERATION STEP

S712

S749
$$s_1, s_2 \xleftarrow{R} \mathbb{Z}_N$$

S752a
$$\mathbf{u}_1 \leftarrow e(g, g)^{s_1}$$
$$\mathbf{u}_2 \leftarrow e(g, h)^{s_2}$$

S740
$$i \leftarrow 0, \ \hat{C} \leftarrow \mathbf{u}_1 \mathbf{u}_2$$

S754
$$\hat{c}_i \leftarrow e(c_i, c'_i)$$

S748a
$$\hat{C} \leftarrow \hat{C} \hat{c}_i$$

S741
$$i \leftarrow i+1$$

$$i \leq T$$

$$i > T$$

END

# Fig. 48

SIMILARITY DEGREE CALCULATION PROCEDURE

S712

$$\delta \leftarrow \sum_{i=1}^{T} \left[ b_i \, b'_i \right] + s_1$$

S716

$$\zeta \leftarrow \delta$$

S719

$$d \leftarrow \zeta - s_1$$

END

# Fig. 49

401      103

441   PRIME NUMBER DETERMINATION UNIT

442   PRODUCT CALCULATION UNIT

443   COMMON MULTIPLE CALCULATION UNIT

403   PUBLIC KEY STORAGE UNIT

413   SECRET KEY STORAGE UNIT

# Fig. 50

S501

KEY GENERATION STEP

S531

$$p, q$$

S532

$$N \leftarrow pq$$

S533

$$\lambda \leftarrow \mathrm{LCM}(p\text{-}1, q\text{-}1)$$

END

# Fig. 51

S603

FEATURE VECTOR ENCRYPTION STEP

S610

$$i \leftarrow 0$$

S611

$$i \leftarrow i+1$$

$i > T$

END

$i \leq T$

S612

$$r_i \overset{R}{\leftarrow} \mathbb{Z}_N$$

S613b

$$c_i \leftarrow r_i^N (1 + b_i N) \bmod N^2$$

# Fig. 52

S701

FIRST CHALLENGE GENERATION STEP

S729

$$i \leftarrow 0$$

S721

$$i \leftarrow i+1$$   $i > T$   END

S722   $i \leq T$

$$R_{1,i}, R_{2,i} \overset{R}{\leftarrow} \mathbb{Z}_N$$

S723b

$$R_i \leftarrow R_{2,i}{}^N \left(1 + R_{1,i} N\right) \bmod N^2$$

# Fig. 53

217

101

214

FEATURE VECTOR FORMATION UNIT

234

EXPONENTIATION CALCULATION UNIT

211

FIRST CHALLENGE RECEIVING UNIT

215

RANDOM NUMBER GENERATION UNIT

232

ZERO GENERATION UNIT

236

INTEGER COMBINING UNIT

221

FIRST RESPONSE TRANSMITTING UNIT

# Fig. 54

S707 — FIRST RESPONSE GENERATION STEP

S660
$$i \leftarrow 0$$

S661
$$i \leftarrow i+1 \qquad \xrightarrow{i > T} \quad \text{END}$$

$$\downarrow i \leq T$$

S662a
$$я_i \leftarrow R_i^{b'_i} \bmod N^2$$

S663
$$r'_i \xleftarrow{R} \mathbb{Z}_N$$

S664
$$o_i \leftarrow r'_i{}^N \bmod N^2$$

S665b
$$R'_i \leftarrow я_i o_i \bmod N^2$$

# Fig. 55

S710 — ENCRYPTED BIOMETRIC INFORMATION EXTRACTION STEP

S730
$$i \leftarrow 0$$

S731
$$i \leftarrow i+1 \qquad \xrightarrow{i > T} \quad \text{END}$$

$$\downarrow i \leq T$$

S732
$$\kappa_i \leftarrow R_{1,i}^{-1}$$

S733a
$$c'_i \leftarrow R'_i{}^{\kappa_i} \bmod N^2$$

# Fig. 56

# Fig. 57

# Fig. 58

EP 2 680 488 B1

# Fig. 59

SECOND RESPONSE
GENERATION STEP

S561a

$$\lambda^{-1}$$

S566a

$$y \leftarrow \frac{\hat{c}^{\lambda}-1 \bmod N^2}{N}$$

$$z' \leftarrow y\lambda^{-1} \bmod N$$

S560

$$i \leftarrow 0, Z \leftarrow z'$$

S563a  S716

$$y_i \leftarrow \frac{\hat{c}_i{}^{\lambda}-1 \bmod N^2}{N}$$

$$z_i \leftarrow y_i \lambda^{-1} \bmod N$$

S564

$$z'_i \leftarrow z_i{}^2 \bmod N$$

S565a

$$Z \leftarrow Z + z'_i \bmod N$$

S562

$$i \leftarrow i+1$$

$$i \leq T$$

$$i > T$$

END

# Fig. 60

PLAINTEXT SIMILARITY
DEGREE CALCULATION STEP

S719

S692a

$$d \leftarrow Z - s_1 \bmod N$$

END

# Fig. 61

```
SIMILARITY DEGREE CALCULATION PROCEDURE
```

S712
$$\boldsymbol{\delta_j} \leftarrow \pm(\boldsymbol{b_i} - \boldsymbol{b'_i})$$
$$\boldsymbol{\delta^*} \leftarrow \boldsymbol{s_1}$$

S716
$$\boldsymbol{\zeta} \leftarrow \sum_{i=1}^{T}[\boldsymbol{\delta_i^2}] + \boldsymbol{\delta^*}$$

S719
$$\boldsymbol{d} \leftarrow \boldsymbol{\zeta} - \boldsymbol{s_1}$$

```
END
```

# Fig. 62

304

312
ENCRYPTED DATA
STORAGE UNIT

334
EXPONENTIATION
CALCULATION UNIT

102

303
RANDOM
NUMBER
GENERATION
UNIT

311
FIRST CHALLENGE
TRANSMITTING
UNIT

336
INTEGER
COMBINING
UNIT

332
ZERO
GENERATION
UNIT

# Fig. 63

S701

FIRST CHALLENGE GENERATION STEP

S729
$$i \leftarrow 0$$

S721
$$i \leftarrow i+1$$

$i > T$

END

$i \leq T$

S722
$$R_{1,i}, R_{2,i} \xleftarrow{R} \mathbb{Z}_N$$

S724
$$я'_i \leftarrow c_i^{R_{1,i}} \bmod N^2$$

S725
$$o'_i \leftarrow R_{2,i}^N \bmod N^2$$

S726
$$R_i \leftarrow я'_i o'_i \bmod N^2$$

# Fig. 64

# Fig. 65

# Fig. 66

# Fig. 67

SECOND RESPONSE GENERATION STEP

S561a
$$\lambda^{-1}$$

S566a
$$y \leftarrow \frac{\hat{c}^{\lambda} - 1 \bmod N^2}{N}$$
$$z' \leftarrow y\lambda^{-1} \bmod N$$

S560
$$i \leftarrow 0, Z \leftarrow z'$$

S563a
$$y_i \leftarrow \frac{\hat{c}_i{}^{\lambda} - 1 \bmod N^2}{N}$$
$$z_i \leftarrow y_i\lambda^{-1} \bmod N$$

S565a
$$Z \leftarrow Z + z_i \bmod N$$

S562
$$i \leftarrow i+1$$

S716

$i > T$

$i \leq T$

END

# Fig. 68

SIMILARITY DEGREE
CALCULATION PROCEDURE

S707
$$\rho_i \leftarrow b_i b'_i$$

S712
$$\delta_j \leftarrow \rho_i \qquad \delta^* \leftarrow s_1$$

S716
$$\zeta \leftarrow \sum_{i=1}^{T} \delta_i + \delta^*$$

S719
$$d \leftarrow \zeta - s_1$$

END

# Fig. 69

102

305
ENCRYPTED DATA
EXTRACTION UNIT

314

386
INTEGER
COMBINING
UNIT

321
SECOND CHALLENGE
TRANSMITTIG UNIT

303
RANDOM NUMBER
GENERATION UNIT

362
DISTURBANCE
VECTOR
GENERATION UNIT

# Fig. 70

S712

SECOND CHALLENGE
GENERATION STEP

S740

$$i \leftarrow 0 \, , \, s_1 \leftarrow 0$$

S741

$$i \leftarrow i+1$$

$i > T$ → END

$i \leq T$

S743

$$t_{1,i}, t_{2,i} \xleftarrow{\text{R}} \mathbb{Z}_N$$
$$s_1 \leftarrow s_1 + t_{1,i} \bmod N$$

S744

$$t_i \leftarrow t_{2,i}{}^N (1 + t_{1,i} N) \bmod N^2$$

S760

$$\hat{c}_i \leftarrow c'_i \, t_i \bmod N^2$$

# Fig. 71

SECOND RESPONSE
GENERATION STEP

S561a

$$\lambda^{-1}$$

S560

$$i \leftarrow 0, Z \leftarrow 0$$

S563a

$$y_i \leftarrow \frac{\hat{c}_i{}^\lambda - 1 \bmod N^2}{N}$$
$$z_i \leftarrow y_i \, \lambda^{-1} \bmod N$$

S716

S565a

$$Z \leftarrow Z + z_i \bmod N$$

S562

$$i \leftarrow i+1$$

$i > T$

$i \leq T$

END

# Fig. 72

$$\text{SIMILARITY DEGREE} \\ \text{CALCULATION PROCEDURE}$$

S707
$$\boldsymbol{\rho_i} \leftarrow \boldsymbol{b_i}\boldsymbol{b'_i}$$

S712
$$\boldsymbol{\delta_i} \leftarrow \boldsymbol{\rho_i} + \boldsymbol{t}_{1,i}$$

S716
$$\zeta \leftarrow \sum_{i=1}^{T} \delta_i$$

S719
$$\boldsymbol{d} \leftarrow \zeta - \sum_{i=1}^{T} \boldsymbol{t}_{1,i}$$

END

# Fig. 73

102

314

305
ENCRYPTED DATA
EXTRACTION UNIT

386
INTEGER
COMBINING
UNIT

321
SECOND CHALLENGE
TRNASMITTING UNIT

303
RANDOM NUMBER
GENERATION UNIT

366
ENCRYPTION KEY
GENERATION
UNIT

# Fig. 74

S712

SECOND CHALLENGE GENERATION STEP

S749

$$s_1, s_2 \xleftarrow{R} \mathbb{Z}_N$$

S752

$$\pi \leftarrow s_2^{N}(1 + s_1 N) \bmod N^2$$

S760

$$\hat{C} \leftarrow \hat{C} c'_i \bmod N^2$$

S740

$$i \leftarrow 0, \hat{C} \leftarrow \pi$$

S741

$$i \leftarrow i+1$$

$$i \leq T$$

$$i > T$$

END

# Fig. 75

103

404

402

SECOND CHALLENGE RECEIVING UNIT

482

DECRYPTED INTEGER CALCULATION UNIT

481

INVERSE NUMBER CALCULATION UNIT

413

SECRET KEY STORAGE UNIT

412

SECOND RESPONSE TRANSMITTING UNIT

# Fig. 76

SECOND RESPONSE GENERATION STEP    S716

S561a

$$\lambda^{-1}$$

S563a

$$y \leftarrow \frac{\hat{C}^{\lambda} - 1 \bmod N^2}{N}$$

$$Z \leftarrow y\,\lambda^{-1} \bmod N$$

END

# Fig. 77

SIMILARITY DEGREE
CALCULATION PROCEDURE

S707

$$\rho_i \leftarrow b_i b'_i$$

S712

$$\delta \leftarrow \sum_{i=1}^{T} \rho_i + s_1$$

S716

$$\zeta \leftarrow \delta$$

S719

$$d \leftarrow \zeta - s_1,$$

END

# Fig. 78

# Fig. 79

# Fig. 80

EP 2 680 488 B1

111

215

212

218

| RANDOM NUMBER GENERATION UNIT | PUBLIC KEY STORAGE UNIT | PUBLIC KEY RECEIVING UNIT |

219

214

216

222

| IMAGE INPUT UNIT | FEATURE VECTOR FORMATION UNIT | ENCRYPTED DATA GENERATION UNIT | ENCRYPTED DATA TRANSMITTING UNIT |

224

223

| RESULT OUTPUTTING UNIT | RESULT RECEIVING UNIT |

# Fig. 81

ENCRYPTED DATA RECEIVING UNIT (301) → ENCRYPTED DATA STORAGE UNIT (312) → PUBLIC KEY STORAGE UNIT (302) ← PUBLIC KEY RECEIVING UNIT (308)   102

ENCRYPTED DATA RECEIVING UNIT (325) → ENCRYPTED RANDOM SIMILARITY DEGREE CALCULATION UNIT (314) → SECOND CHALLENGE TRANSMITTING UNIT (321)

RANDOM NUMBER GENERATION UNIT (303) → RANDOM NUMBER STORAGE UNIT (322)

RESULT TRANSMITTING UNIT (323) ← DETERMINATION UNIT (306) ← PLAINTEXT SIMILARITY DEGREE EXTRACTION UNIT (315) ← SECOND RESPONSE RECEIVING UNIT (341)

EP 2 680 488 B1

**EP 2 680 488 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2237474 A1
- EP 2278750 A1
- WO 2006054208 A1
- WO 2005015462 A1
- JP 2008521025 A
- JP 2009129210 A
- JP 2010054875 A
- JP 2006262333 A
- JP 2001007802 A

### Non-patent literature cited in the description

- **HATTORI M et al.** Secure Biometric Authentication Using 2-DNF Homomorphic Encryption. *IEICE TECHNICAL RE, DENSHI JOUHOU TSUUSHIN GAKKAI,* 05 November 2009, vol. 109 (272), ISSN 0913-5685
- **ANTHONY VETRO et al.** Securing Biometric Data TR2009-002. MITSUBISHI ELECTRIC RESEARCH LABORATORIES, 01 April 2009
- **MANEESH UPMANYU et al.** IEEE TRANSACTIONS ON INFORMATION FORENSICS AND SECURITY. IEEE, 01 June 2010, vol. 5
- **MITSUHIRO HATTORI ; YOICHI SHIBATA ; TAKASHI ITO ; NORI MATSUDA ; KATSUYUKI TAKASHIMA ; TAKESHI YONEDA.** Secure Biometric Authentication Using 2-DNF Homomorphic Encryption. *IEICE Technical report,* 2009, vol. 109 (272), 113-120
- Evaluating 2-DNF Fomulas on Ciphertests. **D. BONEH ; E. -J. GOH ; K, NISSIM.** Theory of Cryptography Conference. Lecture Notes in Computer Science, 2005, vol. 3378, 325-341
- **C. GENRTY.** Fully Homomorphic Encryption Using Ideal Lattices. *ACM Symposium on Theory of Computing,* 2009, 169-178
- **M. UPMANYU ; A. M. NAMBOODIRI ; K. SRINATHAN ; C. V. JAWAHAR.** Blind Authentication: A Secure Crypto-Biometric Verification Protocol. *IEEE Transactions on Information Forensics and Security,* 2010, vol. 5 (2